(19) Europäisches Patentamt / European Patent Office / Office européen des brevets

(11) **EP 2 571 956 B1**

(12) **EUROPEAN PATENT SPECIFICATION**

(45) Date of publication and mention
of the grant of the patent:
**13.01.2016 Bulletin 2016/02**

(21) Application number: **11728912.4**

(22) Date of filing: **20.05.2011**

(51) Int Cl.:
*C09K 3/30* *(2006.01)*   *C09K 5/04* *(2006.01)*
*A23L 1/221* *(0000.00)*   *C08J 9/06* *(2006.01)*
*C11D 7/50* *(2006.01)*

(86) International application number:
**PCT/GB2011/000772**

(87) International publication number:
**WO 2011/144909 (24.11.2011 Gazette 2011/47)**

(54) **HEAT TRANSFER COMPOSITIONS**

WÄRMEÜBERTRAGUNGSZUSAMMENSETZUNGEN

COMPOSITIONS DE TRANSFERT DE CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.02.2011 GB 201102556
06.12.2010 GB 201020624
16.06.2010 GB 201010057
20.05.2010 GB 201008438**

(43) Date of publication of application:
**27.03.2013 Bulletin 2013/13**

(73) Proprietor: **Mexichem Fluor S.A. de C.V.
San Luis Potosi, S.L.P. (MX)**

(72) Inventor: **LOW, Robert, E.
Runcom, Cheshire WA7 4QF (GB)**

(74) Representative: **Potter Clarkson LLP
The Belgrave Centre
Talbot Street
Nottingham NG1 5GG (GB)**

(56) References cited:
**EP-A1- 1 832 640      US-A1- 2006 043 331
US-A1- 2008 099 190   US-A1- 2009 253 820
US-A1- 2010 025 619   US-A1- 2010 044 619**

EP 2 571 956 B1

**Description**

The invention relates to heat transfer compositions, and in particular to heat transfer compositions which may be suitable as replacements for existing refrigerants such as R-134a, R-152a, R-1234yf, R-22, R-410A, R-407A, R-407B, R-407C, R507 and R-404a.

The listing or discussion of a prior-published document or any background in the specification should not necessarily be taken as an acknowledgement that a document or background is part of the state of the art or is common general knowledge.

Mechanical refrigeration systems and related heat transfer devices such as heat pumps and air-conditioning systems are well known. In such systems, a refrigerant liquid evaporates at low pressure taking heat from the surrounding zone. The resulting vapour is then compressed and passed to a condenser where it condenses and gives off heat to a second zone, the condensate being returned through an expansion valve to the evaporator, so completing the cycle. Mechanical energy required for compressing the vapour and pumping the liquid is provided by, for example, an electric motor or an internal combustion engine.

In addition to having a suitable boiling point and a high latent heat of vaporisation, the properties preferred in a refrigerant include low toxicity, non-flammability, non-corrosivity, high stability and freedom from objectionable odour. Other desirable properties are ready compressibility at pressures below 25 bars, low discharge temperature on compression, high refrigeration capacity, high efficiency (high coefficient of performance) and an evaporator pressure in excess of 1 bar at the desired evaporation temperature.

Dichlorodifluoromethane (refrigerant R-12) possesses a suitable combination of properties and was for many years the most widely used refrigerant. Due to international concern that fully and partially halogenated chlorofluorocarbons were damaging the earth's protective ozone layer, there was general agreement that their manufacture and use should be severely restricted and eventually phased out completely. The use of dichlorodifluoromethane was phased out in the 1990's.

Chlorodifluoromethane (R-22) was introduced as a replacement for R-12 because of its lower ozone depletion potential. Following concerns that R-22 is a potent greenhouse gas, its use is also being phased out.

Whilst heat transfer devices of the type to which the present invention relates are essentially closed systems, loss of refrigerant to the atmosphere can occur due to leakage during operation of the equipment or during maintenance procedures. It is important, therefore, to replace fully and partially halogenated chlorofluorocarbon refrigerants by materials having zero ozone depletion potentials.

In addition to the possibility of ozone depletion, it has been suggested that significant concentrations of halocarbon refrigerants in the atmosphere might contribute to global warming (the so-called greenhouse effect). It is desirable, therefore, to use refrigerants which have relatively short atmospheric lifetimes as a result of their ability to react with other atmospheric constituents such as hydroxyl radicals, or as a result of ready degradation through photolytic processes.

R-410A and R-407 refrigerants (including R-407A, R-407B and R-407C) have been introduced as a replacement refrigerant for R-22. However, R-22, R-410A and the R-407 refrigerants all have a high global warming potential (GWP, also known as greenhouse warming potential).

1,1,1,2-tetrafluoroethane (refrigerant R-134a) was introduced as a replacement refrigerant for R-12. R-134a is an energy efficient refrigerant, used currently for automotive air conditioning. However it is a greenhouse gas with a GWP of 1430 relative to $CO_2$ (GWP of $CO_2$ is 1 by definition). The proportion of the overall environmental impact of automotive air conditioning systems using this gas, which may be attributed to the direct emission of the refrigerant, is typically in the range 10-20%. Legislation has now been passed in the European Union to rule out use of refrigerants having GWP of greater than 150 for new models of car from 2011. The car industry operates global technology platforms, and in any event emission of greenhouse gas has global impact, thus there is a need to find fluids having reduced environmental impact (e.g. reduced GWP) compared to HFC-134a.

R-152a (1,1-difluoroethane) has been identified as an alternative to R-134a. It is somewhat more efficient than R-134a and has a greenhouse warming potential of 120. However the flammability of R-152a is judged too high, for example to permit its safe use in mobile air conditioning systems. In particular it is believed that its lower flammable limit in air is too low, its flame speeds are too high, and its ignition energy is too low.

Thus there is a need to provide alternative refrigerants having improved properties such as low flammability. Fluorocarbon combustion chemistry is complex and unpredictable. It is not always the case that mixing a non-flammable fluorocarbon with a flammable fluorocarbon reduces the flammability of the fluid or reduces the range of flammable compositions in air. For example, the inventors have found that if non-flammable R-134a is mixed with flammable R-152a, the lower flammable limit of the mixture alters in a manner which is not predictable. The situation is rendered even more complex and less predictable if ternary or quaternary compositions are considered.

There is also a need to provide alternative refrigerants that may be used in existing devices such as refrigeration devices with little or no modification.

R-1234yf (2,3,3,3-tetrafluoropropene) has been identified as a candidate alternative refrigerant to replace R-134a in certain applications, notably the mobile air conditioning or heat pumping applications. Its GWP is about 4. R-1234yf is flammable but its flammability characteristics are generally regarded as acceptable for some applications including mobile air conditioning or heat pumping. In particular, when compared with R-152a, its lower flammable limit is higher, its minimum ignition energy is higher and the flame speed in air is significantly lower than that of R-152a.

The environmental impact of operating an air conditioning or refrigeration system, in terms of the emissions of greenhouse gases, should be considered with reference not only to the so-called "direct" GWP of the refrigerant, but also with reference to the so-called "indirect" emissions, meaning those emissions of carbon dioxide resulting from consumption of electricity or fuel to operate the system. Several metrics of this total GWP impact have been developed, including those known as Total Equivalent Warming Impact (TEWI) analysis, or Life-Cycle Carbon Production (LCCP) analysis. Both of these measures include estimation of the effect of refrigerant GWP and energy efficiency on overall warming impact. Emissions of carbon dioxide associated with manufacture of the refrigerant and system equipment should also be considered.

The energy efficiency and refrigeration capacity of R-1234yf have been found to be significantly lower than those of R-134a and in addition the fluid has been found to exhibit increased pressure drop in system pipework and heat exchangers. A consequence of this is that to use R-1234yf and achieve energy efficiency and cooling performance equivalent to R-134a, increased complexity of equipment and increased size of pipework is required, leading to an increase in indirect emissions associated with equipment. Furthermore, the production of R-1234yf is thought to be more complex and less efficient in its use of raw materials (fluorinated and chlorinated) than R-134a. Current projections of long term pricing for R-1234yf is in the range 10-20 times greater than R-134a. This price differential and the need for extra expenditure on hardware will limit the rate at which refrigerants are changed and hence limit the rate at which the overall environmental impact of refrigeration or air conditioning may be reduced. In summary, the adoption of R-1234yf to replace R-134a will consume more raw materials and result in more indirect emissions of greenhouse gases than does R-134a.

Some existing technologies designed for R-134a may not be able to accept even the reduced flammability of some heat transfer compositions (any composition having a GWP of less than 150 is believed to be flammable to some extent).

US 2009/253820 is directed to blowing agent compositions comprising: (a) trans-1,1,1,3-tetrafluoropropene (R-1234ze(E)); and (b) at least one compound selected from the group consisting of: fluoroalkenes other than R-1234ze(E); hydrocarbons; hydrofluorocarbons (HFCs), ethers, alcohols, aldehydes, ketones, methyl formate, formic acid, water, trans-1,2-dichloroethylene, carbon dioxide and combinations of any two or more of these.

US 2010/044619 is directed to a heat transfer composition comprising: (a) a first component comprising difluoromethane (R-32); (b) a second component selected from $C_2$-$C_5$ multifluorinated olefins; and (c) optionally at least one third component selected from $C_2$-$C_3$ fluorinated alkanes, $CF_3I$, and combinations of these.

US 2010/025619 is directed to a method for heating or cooling with a refrigerant composition comprising one or more compounds A of the general formula (I): $C_xF_y$-O-CF=CFW, which compositions can additionally contain unsaturated fluorocarbons, $C_{1-6}$ hydrofluorocarbons and carbon dioxide.

US 2006/043331 is directed to a composition comprising from about 1 to about 40 percent by weight of carbon dioxide ($CO_2$) and from about 60 to about 99 percent by weight of one or more compounds of Formula (I): $XCF_zR_{3-z}$, where X is a $C_2$ or a $C_3$ unsaturated, substituted or unsubstituted, alkyl radical, each R is independently Cl, F, Br, I or H, and z is 1 to 3.

EP1832640 is directed to a method for generating global warming potential (GWP) credits comprising (a) replacing, or using in place of, a fluorocarbon compound or fluorocarbon-containing composition of higher GWP, a mixture of halogenated hydrocarbons or a mixture of halogenated hydrocarbons with $CO_2$ wherein the mixtures have a lower GWP, and (b) obtaining an allocation of GWP warming credit for doing so.

US 2008/099190 is directed to a method of transferring heat to or from a body comprising causing heat to be transferred to or from a composition comprising at least R-1234ze(E) and into or from said body by heat transfer contact between said composition and the body.

A principal object of the present invention is therefore to provide a heat transfer composition which is usable in its own right or suitable as a replacement for existing refrigeration usages which should have a reduced GWP, yet have a capacity and energy efficiency (which may be conveniently expressed as the "Coefficient of Performance") ideally within 10% of the values, for example of those attained using existing refrigerants (e.g. R-134a, R-152a, R-1234yf, R-22, R-410A, R-407A, R-407B, R-407C, R507 and R-404a), and preferably within less than 10% (e.g. about 5%) of these values. It is known in the art that differences of this order between fluids are usually resolvable by redesign of equipment and system operational features. The composition should also ideally have reduced toxicity and acceptable flammability.

The subject invention addresses the above deficiencies by the provision of a heat transfer composition comprising (i) from about 10 to about 95% by weight *trans*-1,3,3,3-tetrafluoropropene (R-1234ze(E)); (ii) from about 4 to about 30% by weight carbon dioxide ($CO_2$ or R-744); and (iii) from about 3 to about 60% by weight of a third component comprising difluoromethane (R-32), and having a critical temperature of greater than about 70 °C.

All of the chemicals herein described are commercially available. For example, the fluorochemicals may be obtained from Apollo Scientific (UK).

The compositions of the invention contain *trans*-1,3,3,3-tetrafluoropropene (R-1234ze(E)). The majority of the compositions described herein contain R-1234ze(E).

Typically, the compositions of the invention contain at least about 5 % by weight R-1234ze(E), preferably at least about 15 % by weight. In one embodiment, the compositions of the invention contain at least about 45 % by weight R-1234ze(E), for example from about 50 to about 98 % by weight.

The preferred amounts and choice of components for the invention are determined by a combination of properties:

(a) Flammability: non-flammable or weakly flammable compositions are preferred.
(b) Effective operating temperature of the refrigerant in an air conditioning system evaporator.
(c) Temperature "glide" of the mixture and its effect on heat exchanger performance.
(d) Critical temperature of the composition. This should be higher than the maximum expected condenser temperature.

The effective operating temperature in an air conditioning cycle, especially automotive air conditioning, is limited by the need to avoid ice formation on the air-side surface of the refrigerant evaporator. Typically air conditioning systems must cool and dehumidify humid air; so liquid water will be formed on the air-side surface. Most evaporators (without exception for the automotive application) have finned surfaces with narrow fin spacing. If the evaporator is too cold then ice can be formed between the fins, restricting the flow of air over the surface and reducing overall performance by reducing the working area of the heat exchanger.

It is known for automotive air-conditioning applications (Modern Refrigeration and Air Conditioning by AD Althouse et al, 1988 edition, Chapter 27, which is incorporated herein by reference) that refrigerant evaporation temperatures of -2 °C or higher are preferred to ensure that the problem of ice formation is thereby avoided.

It is also known that non-azeotropic refrigerant mixtures exhibit temperature "glide" in evaporation or condensation. In other words, as the refrigerant is progressively vaporised or condensed at constant pressure, the temperature rises (in evaporation) or drops (in condensation), with the total temperature difference (inlet to outlet) being referred to as the temperature glide. The effect of glide on evaporation and condensation temperature must also be considered.

The critical temperature of a heat transfer composition should be higher than the maximum expected condenser temperature. This is because the cycle efficiency drops as critical temperature is approached. As this happens, the latent heat of the refrigerant is reduced and so more of the heat rejection in the condenser takes place by cooling gaseous refrigerant; this requires more area per unit heat transferred.

R-410A is commonly used in building and domestic heat pump systems and by way of illustration its critical temperature of about 71 °C is higher than the highest normal condensing temperature required to deliver useful warm air at about 50 °C. The automotive duty requires air at about 50 °C so the critical temperature of the fluids of the invention should be higher than this if a conventional vapour compression cycle is to be utilised. Critical temperature is preferably at least 15K higher than the maximum air temperature.

The compositions of the invention have a critical temperature of greater than about 70 °C.

The carbon dioxide content of the compositions of the invention is limited primarily by considerations (b) and/or (c) and/or (d) above. Conveniently, the compositions of the invention typically contain up to about 35 % by weight R-744, preferably up to about 30 % by weight.

The compositions of the invention contain from about 4 to about 30 % R-744 by weight, preferably from about 4 to about 28 % by weight, or from about 8 to about 30 % by weight, or from about 10 to about 30 % by weight.

The content of the third component, which includes flammable refrigerants such as R-32, is selected so that even in the absence of the carbon dioxide element of the composition, the residual fluorocarbon mixture has a lower flammable limit in air at ambient temperature (e.g. 23°C) (as determined in the ASHRAE-34 12 litre flask test apparatus) which is greater than 5% v/v, preferably greater than 6% v/v, most preferably such that the mixture is non-flammable. The issue of flammability is discussed further later in this specification.

Typically, the compositions of the invention contain up to about 60 % by weight of the third component. Preferably, the compositions of the invention contain up to about 50 % by weight of the third component. Conveniently, the compositions of the invention contain up to about 45 % by weight of the third component. In one aspect, the compositions of the invention contain from about 1 to about 40 % by weight of the third component.

The compositions of the invention comprise from about 10 to about 95 % R-1234ze(E) by weight, from about 4 to about 30 % by weight R-744, and from about 3 to about 60 % by weight of the third component.

As used herein, all % amounts mentioned in compositions herein, including in the claims, are by weight based on the total weight of the compositions, unless otherwise stated.

For the avoidance of doubt, it is to be understood that the stated upper and lower values for ranges of amounts of components in the compositions of the invention described herein may be interchanged in any way, provided that the resulting ranges fall within the broadest scope of the invention.

In one embodiment, the compositions of the invention consist essentially of (or consist of) the first component (e.g. R-1234ze(E)), R-744 and the third component.

By the term "consist essentially of", we mean that the compositions of the invention contain substantially no other components, particularly no further (hydro)(fluoro)compounds (e.g. (hydro)(fluoro)alkanes or (hydro)(fluoro)alkenes) known to be used in heat transfer compositions. We include the term "consist of" within the meaning of "consist essentially of".

For the avoidance of doubt, any of the compositions of the invention described herein, including those with specifically defined compounds and amounts of compounds or components, may consist essentially of (or consist of) the compounds or components defined in those compositions.

Also described herein are compositions where the third component is selected from R-32, R-134a and mixtures thereof.

In one aspect also described herein, the third component contains only one of the listed components. For example, the third component may contain only one of difluoromethane (R-32) or 1,1,1,2-tetrafluoroethane (R-134a) Thus, the compositions may be ternary blends of R-1234ze(E), R-744 and one of the listed third components (e.g. R-32 or R-134a).

However, mixtures of R-32 and R-134a can be used as the third component. R-134a typically is included to reduce the flammability of the equivalent composition that does not contain R-134a.

The invention contemplates compositions in which additional compounds are included in the third component. Examples of such compounds include 2,3,3,3-tetrafluoropropene (R-1234yf), 3,3,3-trifluoropropene (R1243zf), 1,1-difluoroethane (R-152a), fluoroethane (R-161), 1,1,1-trifluoropropane (R-263fb), 1,1,1,2,3-pentafluoropropane (R-245eb), propylene (R-1270), propane (R-290), n-butane (R-600), isobutane (R-600a), ammonia (R-717) and mixtures thereof.

Preferably, the compositions of the invention which contain R-134a are non-flammable at a test temperature of 60°C using the ASHRAE-34 methodology. Advantageously, the mixtures of vapour that exist in equilibrium with the compositions of the invention at any temperature between about -20°C and 60°C are also non-flammable.

In one preferred embodiment, the third component further comprises R-134a. Also described herein are compositions where the third component may consist essentially of (or consist of) R-134a.

Described herein are compositions which contain R-134a, typically in an amount of from about 2 to about 50 % by weight, for example from about 5 to about 40 % by weight.

Compositions described herein containing R-134a comprise from about 20 to about 93 % by weight R-1234ze(E), from about 2 to about 30 % by weight R-744 and from about 5 to about 50 % by weight R-134a.

A relatively low GWP composition described herein containing R-134a comprises from about 60 to about 92 % R-1234ze(E), from about 4 to about 30 % by weight R-744 and from about 4 to about 10 % by weight R-134a. A preferred such composition comprises from about 62 to about 86 % R-1234ze(E), from about 10 to about 28 % by weight R-744 and from about 4 to about 10 % by weight R-134a.

A higher GWP composition described herein containing R-134a comprises from about 20 to about 86 % R-1234ze(E), from about 4 to about 30 % by weight R-744 and from about 10 to about 50 % by weight R-134a. A preferred such composition comprises from about 22 to about 80 % R-1234ze(E), from about 10 to about 28 % by weight R-744 and from about 10 to about 50 % by weight R-134a.

The third component comprises R-32. The third component may consist essentially of (or consist of) R-32.

Compositions of the invention which contain R-32 typically contain it in an amount of from about 2 to about 30 % by weight, conveniently in an amount of from about 2 to about 25 % by weight, for example from about 5 to about 20 % by weight.

Typical compositions of the invention containing R-32 comprise from about 60 to about 91 % by weight R-1234ze(E), from about 4 to about 30 % by weight R-744 and from about 5 to about 30 % by weight R-32.

A preferred composition comprises from about 58 to about 85 % R-1234ze(E), from about 10 to about 28 % by weight R-744 and from about 5 to about 30 % by weight R-32.

Further advantageous compositions of the invention containing R-32 comprise from about 50 to about 88 % by weight R-1234ze(E), from about 4 to about 30 % by weight R-744 and from about 2 to about 20 % by weight R-32.

In one embodiment, the third component comprises R-32 and R-134a. The third component may consist essentially of (or consist of) R-32 and R-134a. Compositions of the invention containing R-32 and R-134a typically contain from about 5 to about 95 % by weight R-1234ze(E), from about 4 to about 30 % by weight R-744, from about 2 to about 30 % by weight R-32 and from about 2 to about 50 by weight R-134a.

Preferred compositions comprise from about 5 to about 92 % by weight R-1234ze(E), from about 4 to about 30 % by weight R-744, from about 2 to about 25 % by weight R-32 and from about 2 to about 40 % by weight R-134a.

Advantageous compositions which have a relatively low GWP comprise from about 30 to about 81 % by weight R-1234ze(E), from about 10 to about 30 % by weight R-744, from about 5 to about 30 % by weight R-32 and from about 4 to about 10 by weight R-134a. Preferably such compositions contain from about 37 to about 81 % by weight R-1234ze(E), from about 10 to about 28 % by weight R-744, from about 5 to about 25 % by weight R-32 and from about 4 to about 10 by weight R-134a.

Yet further compositions of the invention containing R-32 and R-134a, and having a higher GWP, comprise from about 5 to about 75 % by weight R-1234ze(E), from about 10 to about 30 % by weight R-744, from about 5 to about 25 % by weight R-32 and from about 10 to about 50 by weight R-134a. Preferred such compositions comprise from about 7 to about 75 % by weight R-1234ze(E), from about 10 to about 28 % by weight R-744, from about 5 to about 25 % by weight R-32 and from about 10 to about 40 by weight R-134a.

Compositions according to the invention conveniently comprise substantially no R-1225 (pentafluoropropene), conveniently substantially no R-1225ye (1,2,3,3,3-pentafluoropropene) or R-1225zc (1,1,3,3,3-pentafluoropropene), which compounds may have associated toxicity issues.

By "substantially no", we include the meaning that the compositions of the invention contain 0.5% by weight or less of the stated component, preferably 0.1 % or less, based on the total weight of the composition.

Certain compositions of the invention may contain substantially no:

(i) 2,3,3,3-tetrafluoropropene (R-1234yf),
(ii) *cis*-1,3,3,3-tetrafluoropropene (R-1234ze(Z)), and/or
(iii) 3,3,3-trifluoropropene (R-1243zf).

The compositions of the invention have zero ozone depletion potential.

Typically, the compositions of the invention have a GWP that is less than 1300, preferably less than 1000, more preferably less than 800, 500, 400, 300 or 200, especially less than 150 or 100, even less than 50 in some cases. Unless otherwise stated, IPCC (Intergovernmental Panel on Climate Change) TAR (Third Assessment Report) values of GWP have been used herein.

Advantageously, the compositions are of reduced flammability hazard when compared to the third component(s) alone, e.g. R-32. Preferably, the compositions are of reduced flammability hazard when compared to R-1234yf.

In one aspect, the compositions have one or more of (a) a higher lower flammable limit; (b) a higher ignition energy; or (c) a lower flame velocity compared to the third component(s), such as R-32, or compared to R-1234yf. In a preferred embodiment, the compositions of the invention are non-flammable. Advantageously, the mixtures of vapour that exist in equilibrium with the compositions of the invention at any temperature between about -20°C and 60°C are also non-flammable.

Flammability may be determined in accordance with ASHRAE Standard 34 incorporating the ASTM Standard E-681 with test methodology as per Addendum 34p dated 2004, the entire content of which is incorporated herein by reference.

In some applications it may not be necessary for the formulation to be classed as non-flammable by the ASHRAE-34 methodology; it is possible to develop fluids whose flammability limits will be sufficiently reduced in air to render them safe for use in the application, for example if it is physically not possible to make a flammable mixture by leaking the refrigeration equipment charge into the surrounds.

R-1234ze(E) is non-flammable in air at 23°C, although it exhibits flammability at higher temperatures in humid air. We have determined by experimentation that mixtures of R-1234ze(E) with flammable fluorocarbons such as R-32, R-152a or R-161 will remain non-flammable in air at 23 °C if the "fluorine ratio" $R_f$ of the mixture is greater than about 0.57, where $R_f$ is defined per gram-mole of the overall refrigerant mixture as:

$$R_f = \text{(gram-moles of fluorine)/(gram-moles fluorine + gram-moles hydrogen)}$$

Thus for R-161, $R_f$ = 1/(1+5) = 1/6 (0.167) and it is flammable, in contrast R-1234ze(E) has $R_f$ = 4/6 (0.667) and it is non-flammable. We found by experiment that a 20% v/v mixture of R-161 in R-1234ze(E) was similarly non-flammable. The fluorine ratio of this non-flammable mixture is 0.2*(1/6) + 0.8*(4/6) = 0.567.

The validity of this relationship between flammability and fluorine ratio of 0.57 or higher has thusfar been experimentally proven for HFC-32, HFC-152a and mixtures of HFC-32 with HFC-152a.

Takizawa et al, Reaction Stoichiometry for Combustion of Fluoroethane Blends, ASHRAE Transactions 112(2) 2006 (which is incorporated herein by reference), shows that there exists a near-linear relationship between this ratio and the flame speed of mixtures comprising R-152a, with increasing fluorine ratio resulting in lower flame speeds. The data in this reference teach that the fluorine ratio needs to be greater than about 0.65 for the flame speed to drop to zero, in other words, for the mixture to be non-flammable.

Similarly, Minor et al (Du Pont Patent Application WO2007/053697) provide teaching on the flammability of many hydrofluoroolefins, showing that such compounds could be expected to be non-flammable if the fluorine ratio is greater than about 0.7.

In view of this prior art teaching, it is unexpected that that mixtures of R-1234ze(E) with flammable fluorocarbons such as R-32 will remain non-flammable in air at 23 °C if the fluorine ratio $R_f$ of the mixture is greater than about 0.57.

Furthermore, we identified that if the fluorine ratio is greater than about 0.46 then the composition can be expected to have a lower flammable limit in air of greater than 6% v/v at room temperature.

By producing low- or non-flammable R-744/third component/R-1234ze(E) blends containing unexpectedly low amounts of R-1234ze(E), the amounts of the third component, in particular, in such compositions are increased. This is believed to result in heat transfer compositions exhibiting increased cooling capacity and/or decreased pressure drop, compared to equivalent compositions containing higher amounts of (e.g. almost 100 %) R-1234ze(E).

Thus, the compositions of the invention exhibit a completely unexpected combination of low-/non-flammability, low GWP and improved refrigeration performance properties. Some of these refrigeration performance properties are explained in more detail below.

Temperature glide, which can be thought of as the difference between bubble point and dew point temperatures of a zeotropic (non-azeotropic) mixture at constant pressure, is a characteristic of a refrigerant; if it is desired to replace a fluid with a mixture then it is often preferable to have similar or reduced glide in the alternative fluid. In an embodiment, the compositions of the invention are zeotropic.

Advantageously, the volumetric refrigeration capacity of the compositions of the invention is at least 85% of the existing refrigerant fluid it is replacing, preferably at least 90% or even at least 95%.

The compositions of the invention typically have a volumetric refrigeration capacity that is at least 90% of that of R-1234yf. Preferably, the compositions of the invention have a volumetric refrigeration capacity that is at least 95% of that of R-1234yf, for example from about 95% to about 120% of that of R-1234yf.

In one embodiment, the cycle efficiency (Coefficient of Performance, COP) of the compositions of the invention is within about 5% or even better than the existing refrigerant fluid it is replacing

Conveniently, the compressor discharge temperature of the compositions of the invention is within about 15K of the existing refrigerant fluid it is replacing, preferably about 10K or even about 5K.

The compositions of the invention preferably have energy efficiency at least 95% (preferably at least 98%) of R-134a under equivalent conditions, while having reduced or equivalent pressure drop characteristics and cooling capacity at 95% or higher of R-134a values. Advantageously the compositions have higher energy efficiency and lower pressure drop characteristics than R-134a under equivalent conditions. The compositions also advantageously have better energy efficiency and pressure drop characteristics than R-1234yf alone.

The heat transfer compositions of the invention are suitable for use in existing designs of equipment, and are compatible with all classes of lubricant currently used with established HFC refrigerants. They may be optionally stabilized or compatibilized with mineral oils by the use of appropriate additives.

Preferably, when used in heat transfer equipment, the composition of the invention is combined with a lubricant.

Conveniently, the lubricant is selected from the group consisting of mineral oil, silicone oil, polyalkyl benzenes (PABs), polyol esters (POEs), polyalkylene glycols (PAGs), polyalkylene glycol esters (PAG esters), polyvinyl ethers (PVEs), poly (alpha-olefins) and combinations thereof.

Advantageously, the lubricant further comprises a stabiliser.

Preferably, the stabiliser is selected from the group consisting of diene-based compounds, phosphates, phenol compounds and epoxides, and mixtures thereof.

Conveniently, the composition of the invention may be combined with a flame retardant.

Advantageously, the flame retardant is selected from the group consisting of tri-(2-chloroethyl)-phosphate, (chloropropyl) phosphate, tri-(2,3-dibromopropyl)-phosphate, tri-(1,3-dichloropropyl)-phosphate, diammonium phosphate, various halogenated aromatic compounds, antimony oxide, aluminium trihydrate, polyvinyl chloride, a fluorinated iodocarbon, a fluorinated bromocarbon, trifluoro iodomethane, perfluoroalkyl amines, bromo-fluoroalkyl amines and mixtures thereof.

Preferably, the heat transfer composition is a refrigerant composition.

In one embodiment, the invention provides a heat transfer device comprising a composition of the invention.

Preferably, the heat transfer device is a refrigeration device.

Conveniently, the heat transfer device is selected from the group consisting of automotive air conditioning systems, residential air conditioning systems, commercial air conditioning systems, residential refrigerator systems, residential freezer systems, commercial refrigerator systems, commercial freezer systems, chiller air conditioning systems, chiller refrigeration systems, and commercial or residential heat pump systems. Preferably, the heat transfer device is a refrigeration device or an air-conditioning system.

The compositions of the invention are particularly suitable for use in mobile air-conditioning applications, such as automotive air-conditioning systems (e.g. heat pump cycle for automotive air-conditioning).

Advantageously, the heat transfer device contains a centrifugal-type compressor.

The invention also provides the use of a composition of the invention in a heat transfer device as herein described.

According to a further aspect of the invention, there is provided a blowing agent comprising a composition of the invention.

According to another aspect of the invention, there is provided a foamable composition comprising one or more components capable of forming foam and a composition of the invention.

Preferably, the one or more components capable of forming foam are selected from polyurethanes, thermoplastic polymers and resins, such as polystyrene, and epoxy resins.

According to a further aspect of the invention, there is provided a foam obtainable from the foamable composition of the invention.

Preferably the foam comprises a composition of the invention.

According to another aspect of the invention, there is provided a sprayable composition comprising a material to be sprayed and a propellant comprising a composition of the invention.

According to a further aspect of the invention, there is provided a method for cooling an article which comprises condensing a composition of the invention and thereafter evaporating said composition in the vicinity of the article to be cooled.

According to another aspect of the invention, there is provided a method for heating an article which comprises condensing a composition of the invention in the vicinity of the article to be heated and thereafter evaporating said composition.

According to a further aspect of the invention, there is provided a method for extracting a substance from biomass comprising contacting the biomass with a solvent comprising a composition of the invention, and separating the substance from the solvent.

According to another aspect of the invention, there is provided a method of cleaning an article comprising contacting the article with a solvent comprising a composition of the invention.

According to a further aspect of the invention, there is provided a method for extracting a material from an aqueous solution comprising contacting the aqueous solution with a solvent comprising a composition of the invention, and separating the material from the solvent.

According to another aspect of the invention, there is provided a method for extracting a material from a particulate solid matrix comprising contacting the particulate solid matrix with a solvent comprising a composition of the invention, and separating the material from the solvent.

According to a further aspect of the invention, there is provided a mechanical power generation device containing a composition of the invention.

Preferably, the mechanical power generation device is adapted to use a Rankine Cycle or modification thereof to generate work from heat.

According to another aspect of the invention, there is provided a method of retrofitting a heat transfer device comprising the step of removing an existing heat transfer fluid, and introducing a composition of the invention. Preferably, the heat transfer device is a refrigeration device or (a static) air conditioning system. Advantageously, the method further comprises the step of obtaining an allocation of greenhouse gas (e.g. carbon dioxide) emission credit.

In accordance with the retrofitting method described above, an existing heat transfer fluid can be fully removed from the heat transfer device before introducing a composition of the invention. An existing heat transfer fluid can also be partially removed from a heat transfer device, followed by introducing a composition of the invention.

In another embodiment wherein the existing heat transfer fluid is R-134a, and the composition of the invention contains R134a, R-1234ze(E), R-744, the third component and any R-125 present (and optional components such as a lubricant, a stabiliser or an additional flame retardant), R-1234ze(E) and R-744, etc, can be added to the R-134a in the heat transfer device, thereby forming the compositions of the invention, and the heat transfer device of the invention, *in situ.* Some of the existing R-134a may be removed from the heat transfer device prior to adding the R-1234ze(E), R-744, etc, to facilitate providing the components of the compositions of the invention in the desired proportions.

Thus, the invention provides a method for preparing a composition and/or heat transfer device of the invention comprising introducing R-1234ze(E), R-744, the third component, any R-125 desired, and optional components such as a lubricant, a stabiliser or an additional flame retardant, into a heat transfer device containing an existing heat transfer fluid which is R-134a. Optionally, at least some of the R-134a is removed from the heat transfer device before introducing the R-1234ze(E), R-744, etc.

Of course, the compositions of the invention may also be prepared simply by mixing the R-1234ze(E), R-744, the third component, any R-125 desired (and optional components such as a lubricant, a stabiliser or an additional flame retardant) in the desired proportions. The compositions can then be added to a heat transfer device (or used in any other way as defined herein) that does not contain R-134a or any other existing heat transfer fluid, such as a device from which R-134a or any other existing heat transfer fluid have been removed.

In a further aspect of the invention, there is provided a method for reducing the environmental impact arising from operation of a product comprising an existing compound or composition, the method comprising replacing at least partially the existing compound or composition with a composition of the invention. Also described herein is such a method comprising the step of obtaining an allocation of greenhouse gas emission credit.

By environmental impact we include the generation and emission of greenhouse warming gases through operation of the product.

As mentioned above, this environmental impact can be considered as including not only those emissions of compounds or compositions having a significant environmental impact from leakage or other losses, but also including the emission of carbon dioxide arising from the energy consumed by the device over its working life. Such environmental impact may be quantified by the measure known as Total Equivalent Warming Impact (TEWI). This measure has been used in quantification of the environmental impact of certain stationary refrigeration and air conditioning equipment, including for example supermarket refrigeration systems (see, for example, http://en.wikipedia.org/wiki/Total equivalent warming impact).

The environmental impact may further be considered as including the emissions of greenhouse gases arising from the synthesis and manufacture of the compounds or compositions. In this case the manufacturing emissions are added to the energy consumption and direct loss effects to yield the measure known as Life-Cycle Carbon Production (LCCP, see for example http://www.sae.org/events/aars/presentations/2007papasavva.pdf). The use of LCCP is common in assessing environmental impact of automotive air conditioning systems.

Emission credit(s) are awarded for reducing pollutant emissions that contribute to global warming and may, for example, be banked, traded or sold. They are conventionally expressed in the equivalent amount of carbon dioxide. Thus if the emission of 1 kg of R-134a is avoided then an emission credit of 1x1300 = 1300 kg $CO_2$ equivalent may be awarded.

Also described herein is a method for generating greenhouse gas emission credit(s) comprising (i) replacing an existing compound or composition with a composition of the invention, wherein the composition of the invention has a lower GWP than the existing compound or composition; and (ii) obtaining greenhouse gas emission credit for said replacing step.

In a preferred embodiment, the use of the composition of the invention results in the equipment having a lower Total Equivalent Warming Impact, and/or a lower Life-Cycle Carbon Production than that which would be attained by use of the existing compound or composition.

These methods may be carried out on any suitable product, for example in the fields of air-conditioning, refrigeration (e.g. low and medium temperature refrigeration), heat transfer, blowing agents, aerosols or sprayable propellants, gaseous dielectrics, cryosurgery, veterinary procedures, dental procedures, fire extinguishing, flame suppression, solvents (e.g. carriers for flavorings and fragrances), cleaners, air horns, pellet guns, topical anesthetics, and expansion applications. Preferably, the field is air-conditioning or refrigeration.

Examples of suitable products include heat transfer devices, blowing agents, foamable compositions, sprayable compositions, solvents and mechanical power generation devices. In a preferred embodiment, the product is a heat transfer device, such as a refrigeration device or an air-conditioning unit.

The existing compound or composition has an environmental impact as measured by GWP and/or TEWI and/or LCCP that is higher than the composition of the invention which replaces it. The existing compound or composition may comprise a fluorocarbon compound, such as a perfluoro-, hydrofluoro-, chlorofluoro- or hydrochlorofluoro-carbon compound or it may comprise a fluorinated olefin

Preferably, the existing compound or composition is a heat transfer compound or composition such as a refrigerant. Examples of refrigerants that may be replaced include R-134a, R-152a, R-1234yf, R-410A, R-407A, R-407B, R-407C, R507, R-22 and R-404A. The compositions of the invention are particularly suited as replacements for R-134a, R-152a or R-1234yf, especially R-134a or R-1234yf.

Any amount of the existing compound or composition may be replaced so as to reduce the environmental impact. This may depend on the environmental impact of the existing compound or composition being replaced and the environmental impact of the replacement composition of the invention. Preferably, the existing compound or composition in the product is fully replaced by the composition of the invention.

The invention is illustrated by the following non-limiting examples.

Examples

*Flammability*

The flammability of certain compositions of the invention in air at atmospheric pressure and controlled humidity was studied in a flame tube test as follows.

The test vessel was an upright glass cylinder having a diameter of 2 inches. The ignition electrodes were placed 60 mm above the bottom of the cylinder. The cylinder was fitted with a pressure-release opening. The apparatus was shielded to restrict any explosion damage. A standing induction spark of 0.5 second duration was used as the ignition source.

The test was performed at 23 or 35 °C (see below). A known concentration of fuel in air was introduced into the glass cylinder. A spark was passed through the mixture and it was observed whether or not a flame detached itself from the ignition source and propagated independently. The gas concentration was increased in steps of 1 % vol. until ignition occurred (if at all). The results are shown below (all compositions are v/v basis unless otherwise stated).

| Fuel | Temperature (°C) | Humidity | Results[b] |
|---|---|---|---|
| R134a/R1234ze(E) 10/90 | 23 | 50%RH/23°C | Non flammable |
| CO2/R134a/R1234ze 10/10/80[a] | 23 | 50%RH/23°C | Non flammable |
| R134a/R1234yf 10/90 | 35 | 50%RH/23°C | LFL 6% UPL 11% |
| R134a/R1234ze(E) 10/90 | 35 | 50%RH/23°C | LFL 8% UFL 12% |
| CO2/R134a/R1234ze 10/10/80[a] | 35 | 50%RH/23°C | LFL 10% UFL 11%[c] |

[a] This corresponds to about 4 % $CO_2$, 10 % R-134a and 86 % R-1234ze(E) by weight.
[b] LFL = lower flammable limit and UFL = upper flammable limit
[c] Incomplete propagation

The ternary composition 4 % $CO_2$, 10 % R-134a and 86 % R-1234ze(E) by weight was shown to be non-flammable at 23 °C. At 35 °C, it was significantly less flammable than corresponding R134a/R1234yf and R134a/R1234ze(E) mixtures.

***Modelled Performance Data***

Generation of accurate physical property model

The physical properties of R-1234yf and R-1234ze(E) required to model refrigeration cycle performance, namely critical point, vapour pressure, liquid and vapour enthalpy, liquid and vapour density and heat capacities of vapour and liquid were accurately determined by experimental methods over the pressure range 0-200bar and temperature range -40 to 200°C, and the resulting data used to generate Helmholtz free energy equation of state models of the Span-Wagner type for the fluid in the NIST REFPROP Version 8.0 software, which is more fully described in the user guide www.nist.gov/srd/PDFfiles/REFPROP8.PDF, and is incorporated herein by reference. The variation of ideal gas enthalpy of both fluids with temperature was estimated using molecular modelling software Hyperchem v7.5 (which is incorporated herein by reference) and the resulting ideal gas enthalpy function was used in the regression of the equation of state for these fluids. The predictions of this model for R1234yf and R1234ze(E) were compared to the predictions yielded by use of the standard files for R1234yf and R1234ze(E) included in REFPROP Version 9.0 (incorporated herein by reference). It was found that close agreement was obtained for each fluid's properties.

The vapour liquid equilibrium behaviour of R-1234ze(E) was studied in a series of binary pairs with carbon dioxide, R-32, R-125, R-134a, R-152a, R-161, propane and propylene over the temperature range -40 to +60°C, which encompasses the practical operating range of most refrigeration and air conditioning systems. The composition was varied over the full compositional space for each binary in the experimental programme, Mixture parameters for each binary pair were regressed to the experimentally obtained data and the parameters were also incorporated into the REFPROP software model. The academic literature was next searched for data on the vapour liquid equilibrium behaviour of carbon dioxide with the hydrofluorocarbons R-32, R-125, R-152a, R-161 and R-152a. The VLE data obtained from sources referenced in the article Applications of the simple multi-fluid model to correlations of the vapour-liquid equilibrium of refrigerant mixtures containing carbon dioxide, by R. Akasaka, Journal of Thermal Science and Technology, 159-168, 4, 1, 2009 (which is incorporated herein by reference) were then used to generate mixing parameters for the relevant binary mixtures and these were then also incorporated into the REFPROP model. The standard REFPROP mixing parameters for carbon dioxide with propane and propylene were also incorporated to this model.

The resulting software model was used to compare the performance of selected fluids of the invention with R-134a in a heat pumping cycle application.

Heat pumping cycle comparison

In a first comparison the behaviour of the fluids was assessed for a simple vapour compression cycle with conditions typical of automotive heat pumping duty in low winter ambient temperatures. In this comparison pressure drop effects were included in the model by assignation of a representative expected pressure drop to the reference fluid (R-134a) followed by estimation of the equivalent pressure drop for the mixed refrigerant of the invention in the same equipment at the same heating capacity. The comparison was made on the basis of equal heat exchanger area for the reference fluid (R-134a) and for the mixed fluids of the invention. The methodology used for this model was derived using the assumptions of equal effective overall heat transfer coefficient for refrigerant condensation, refrigerant evaporation, refrigerant liquid subcooling and refrigerant vapour superheating processes to derive a so-called *UA model* for the process. The derivation of such a model for nonazeotropic refrigerant mixtures in heat pump cycles is more fully explained in the reference text Vapor Compression Heat Pumps with refrigerant mixtures by R Radermacher & Y Hwang (pub Taylor & Francis 2005) Chapter 3, which is incorporated herein by reference.

Briefly, the model starts with an initial estimate of the condensing and evaporating pressures for the refrigerant mixture and estimates the corresponding temperatures at the beginning and end of the condensation process in the condenser and the evaporation process in the evaporator. These temperatures are then used in conjunction with the specified changes in air temperatures over condenser and evaporator to estimate a required overall heat exchanger area for each of the condenser and evaporator. This is an iterative calculation: the condensing and evaporating pressures are adjusted to ensure that the overall heat exchanger areas are the same for reference fluid and for the mixed refrigerant.

For the comparison the worst case for heat pumping in automotive application was assumed with the following assumptions for air temperature and for R-134a cycle conditions.

**Cycle conditions**

| | |
|---|---|
| Ambient air temperature on to condenser and evaporator | -15°C |
| Air temperature leaving evaporator: | -25°C |
| Air temperature leaving condenser (passenger air) | +45°C |
| R134a evaporating temperature | -30°C |
| R-134a condensing temperature | +50°C |
| Subcooling of refrigerant in condenser | 1K |
| Superheating of refrigerant in evaporator | 5K |
| Compressor suction temperature | 0°C |
| Compressor isentropic efficiency | 66% |
| Passenger air heating load | 2kW |
| Pressure drop in evaporator for R-134a | 0.03bar |
| Pressure drop in condenser for R-134a | 0.03bar |
| Pressure drop in suction line for R-134a | 0.03bar |

The model assumed countercurrent flow for each heat exchanger in its calculation of effective temperature differences for each of the heat transfer processes.

Condensing and evaporating temperatures for compositions was adjusted to give equivalent usage of heat exchange area as reference fluid. The following input parameters were used.

| Parameter | | Reference |
|---|---|---|
| Refrigerant | | R134a |
| Mean condenser temperature | °C | 50 |
| Mean evaporator temperature | °C | -30 |
| Condenser subcooling | K | 1 |
| Evaporator superheat | K | 5 |
| Suction diameter | mm | 16.2 |
| Heating capacity | kW | 2 |
| Evaporator pressure drop | bar | 0.03 |
| Suction line pressure drop | bar | 0.03 |
| Condenser pressure drop | bar | 0.03 |
| Compressor suction temperature | °C | 0 |
| Isentropic efficiency | | 66% |

(continued)

| Parameter | | Reference |
|---|---|---|
| Evaporator air on | °C | -15.00 |
| Evaporator air off | °C | -25.00 |
| Condenser air on | °C | -15.00 |
| Condenser air off | °C | 45.00 |
| Condenser area | 100.0% | 100.0% |
| Evaporator area | 100.0% | 100.0% |

Using the above model, the performance data for the reference R-134a is shown below.

| | | |
|---|---|---|
| COP (heating) | | 2.11 |
| COP (heating) relative to Reference | | 100.0% |
| Volumetric heating capacity at suction | kJ/m³ | 879 |
| Capacity relative to Reference | | 100.0% |
| | | |
| Critical temperature | °C | 101.06 |
| Critical pressure | bar | 40.59 |
| | | |
| Condenser enthalpy change | kJ/kg | 237.1 |
| Pressure ratio | | 16.36 |
| Refrigerant mass flow | kg/hr | 30.4 |
| Compressor discharge temperature | °C | 125.5 |
| Evaporator inlet pressure | bar | 0.86 |
| Condenser inlet pressure | bar | 13.2 |
| Evaporator inlet temperature | °C | -29.7 |
| Evaporator dewpoint | °C | -30.3 |
| Evaporator exit gas temperature | °C | -25.3 |
| Evaporator mean temperature | °C | -30.0 |
| Evaporator glide (out-in) | K | -0.6 |
| Compressor suction pressure | bar | 0.81 |
| Compressor discharge pressure | bar | 13.2 |
| Suction line pressure drop | Pa/m | 292 |
| Pressure drop relative to reference | | 100.0% |
| Condenser dew point | °C | 50.0 |
| Condenser bubble point | °C | 50.0 |
| Condenser exit liquid temperature | °C | 49.0 |
| Condenser mean temperature | °C | 50.0 |
| Condenser glide (in-out) | K | 0.1 |

The generated performance data for selected compositions of the invention is set out in the following Tables. The tables show key parameters of the heat pump cycle, including operating pressures, volumetric heating capacity, energy efficiency (expressed as coefficient of performance for heating COP) compressor discharge temperature and pressure drops in pipework. The volumetric heating capacity of a refrigerant is a measure of the amount of heating which can be obtained for a given size of compressor operating at fixed speed. The coefficient of performance (COP) is the ratio of the amount of heat energy delivered in the condenser of the heat pump cycle to the amount of work consumed by the compressor.

The performance of R-134a is taken as the reference point for comparison of heating capacity, energy efficiency and pressure drop. This fluid is used as a reference for comparison of the ability of the fluids of the invention to be used in the heat pump mode of an automotive combined air conditioning and heat pump system.

It should be noted in passing that the utility of fluids of the invention is not limited to automotive systems. Indeed these fluids can be used in so-called stationary (residential or commercial) equipment. Currently the main fluids used in such stationary equipment are R-410A (having a GWP of 2100) or R22 (having a GWP of 1800 and an ozone depletion potential of 0.05). The use of the fluids of the invention in such stationary equipment offers the ability to realise similar utility but with fluids having no ozone depletion potential and significantly reduced GWP compared to R410A.

It is evident that fluids of the invention can provide improved energy efficiency compared to R-134a or R-410A. It is unexpectedly found that the addition of carbon dioxide to the refrigerants of the invention can increase the COP of the resulting cycle above that of R-134a, even in case where admixture of the other mixture components would result in a fluid having worse energy efficiency than R-134a.

It is further found for all the fluids of the invention that compositions up to about 30% w/w of $CO_2$ can be used which yield refrigerant fluids whose critical temperature is about 70 °C or higher. This is particularly significant for stationary heat pumping applications where R-410A is currently used. The fundamental thermodynamic efficiency of a vapour compression process is affected by proximity of the critical temperature to the condensing temperature. R-410A has gained acceptance and can be considered an acceptable fluid for this application; its critical temperature is 71 °C. It has unexpectedly been found that significant quantities of $CO_2$ (critical temperature 31 °C) can be incorporated in fluids of the invention to yield mixtures having similar or higher critical temperature to R-410A. Preferred compositions of the invention therefore have critical temperatures are about 70 °C or higher.

The heating capacity of the preferred fluids of the invention typically exceeds that of R134a. It is thought that R-134a alone, operated in an automotive a/c and heat pump system, cannot provide all of the potential passenger air heating demand in heat pump mode. Therefore higher heating capacities than R-134a are preferred for potential use in an automotive a/c and heat pump application. The fluids of the invention offer the ability to optimise fluid capacity and energy efficiency for both air conditioning and cooling modes so as to provide an improved overall energy efficiency for both duties.

For reference, the heating capacity of R-410A in the same cycle conditions was estimated at about 290% of the R-134a value and the corresponding energy efficiency was found to be about 106% of the R-134a reference value.

It is evident by inspection of the tables that fluids of the invention have been discovered having comparable heating capacities and energy efficiencies to R-410A, allowing adaption of existing R-410A technology to use the fluids of the invention if so desired.

Some further benefits of the fluids of the invention are described in more detail below.

At equivalent cooling capacity the compositions of the invention offer reduced pressure drop compared to R-134a. This reduced pressure drop characteristic is believed to result in further improvement in energy efficiency (through reduction of pressure losses) in a real system. Pressure drop effects are of particular significance for automotive air conditioning and heat pump applications so these fluids offer particular advantage for this application.

The compositions containing $CO_2$/R-134a/R-1234ze(E) are especially attractive since they have non-flammable liquid and vapour phases at 23°C and selected compositions are also wholly non-flammable at 60°C.

The performance of fluids of the invention were compared to binary mixtures of $CO_2$/R1234ze(E). For all the ternary and quaternary compositions of the invention apart from $CO_2$/R1234yf/R1234ze(E) the energy efficiency of the ternary or quaternary mixtures was increased relative to the binary mixture having equivalent $CO_2$ content. These mixtures therefore represent an improved solution relative to the $CO_2$/R1234ze(E) binary refrigerant mixture, at least for $CO_2$ content less than 30% w/w.

**Table 1: Theoretical Performance Data of Selected R-744/R-134a/R-1234ze(E) blends containing 0-14 % R-744 and 5 % R-134**

| Composition $CO_2$/R-134a/R-1234ze(E) % by weight ▶ | | 0/5/95 | 2/5/93 | 4/5/91 | 6/5/89 | 8/5/87 | 10/5/85 | 12/5/83 | 14/5/81 |
|---|---|---|---|---|---|---|---|---|---|
| COP (heating) | | 2.00 | 2.06 | 2.10 | 2.14 | 2.16 | 2.18 | 2.20 | 2.21 |
| COP (heating) relative to Reference | | 94.8% | 97.7% | 99.8% | 101.4% | 102.7% | 103.6% | 104.3% | 104.9% |
| Volumetric heating capacity at suction | $kJ/m^3$ | 634 | 715 | 799 | 886 | 976 | 1069 | 1166 | 1265 |
| Capacity relative to Reference | | 72.1% | 81.3% | 90.9% | 100.8% | 111.1% | 121.7% | 132.7% | 143.9% |
| | | | | | | | | | |
| Critical temperature | °C | 109.40 | 105.47 | 101.78 | 98.30 | 95.02 | 91.91 | 88.98 | 86.19 |
| Critical pressure | bar | 37.08 | 37.84 | 38.60 | 39.36 | 40.12 | 40.88 | 41.64 | 42.39 |
| | | | | | | | | | |
| Condenser enthalpy change | kJ/kg | 211.5 | 224.7 | 235.8 | 245.4 | 253.6 | 261.0 | 267.5 | 273.5 |
| Pressure ratio | | 18.55 | 18.78 | 18.82 | 18.71 | 18.47 | 18.15 | 17.77 | 17.36 |
| Refrigerant mass flow | kg/hr | 34.0 | 32.0 | 30.5 | 29.3 | 28.4 | 27.6 | 26.9 | 26.3 |
| Compressor discharge temperature | °C | 113.3 | 117.6 | 121.5 | 125.1 | 128.3 | 131.3 | 134.1 | 136.8 |
| Evaporator inlet pressure | bar | 0.67 | 0.71 | 0.76 | 0.82 | 0.89 | 0.97 | 1.05 | 1.14 |
| Condenser inlet pressure | bar | 10.9 | 12.1 | 13.3 | 14.5 | 15.7 | 16.9 | 18.0 | 19.2 |
| Evaporator inlet temperature | °C | -29.0 | -29.7 | -30.4 | -31.1 | -31.9 | -32.7 | -33.6 | -34.5 |
| Evaporator dewpoint | °C | -30.2 | -29.6 | -29.0 | -28.2 | -27.4 | -26.6 | -25.8 | -25.1 |
| Evaporator exit gas temperature | °C | -25.2 | -24.6 | -24.0 | -23.2 | -22.4 | -21.6 | -20.8 | -20.1 |
| Evaporator mean temperature | °C | -29.6 | -29.7 | -29.7 | -29.7 | -29.7 | -29.7 | -29.7 | -29.8 |
| Evaporator glide (out-in) | K | -1.2 | 0.1 | 1.4 | 2.9 | 4.5 | 6.1 | 7.8 | 9.5 |
| Compressor suction pressure | bar | 0.59 | 0.64 | 0.71 | 0.77 | 0.85 | 0.93 | 1.01 | 1.10 |
| Compressor discharge pressure | bar | 10.9 | 12.1 | 13.3 | 14.5 | 15.7 | 16.9 | 18.0 | 19.2 |
| Suction line pressure drop | Pa/m | 447 | 378 | 327 | 286 | 253 | 226 | 204 | 185 |
| Pressure drop relative to reference | | 152.9% | 129.6% | 111.8% | 97.9% | 86.6% | 77.4% | 69.7% | 63.2% |
| Condenser dew point | °C | 53.1 | 55.0 | 56.5 | 57.8 | 58.8 | 59.6 | 60.2 | 60.5 |
| Condenser bubble point | °C | 52.7 | 47.0 | 42.5 | 39.0 | 36.2 | 34.0 | 32.1 | 30.6 |
| Condenser exit liquid temperature | °C | 51.7 | 46.0 | 41.5 | 38.0 | 35.2 | 33.0 | 31.1 | 29.6 |
| Condenser mean temperature | °C | 52.9 | 51.0 | 49.5 | 48.4 | 47.5 | 46.8 | 46.1 | 45.6 |
| Condenser glide (in-out) | K | 0.4 | 7.9 | 14.0 | 18.8 | 22.6 | 25.7 | 28.1 | 29.9 |

**Table 2: Theoretical Performance Data of Selected R-744/R-134a/R-1234ze(E) blends containing 16-30 % R-744 and 5 % R-134a**

| Composition CO$_2$/R-134a/R-1234ze(E) % by weight ▶ | | 16/5/79 | 18/5/77 | 20/5/75 | 22/5/73 | 24/5/71 | 26/5/69 | 28/5/67 | 30/5/65 |
|---|---|---|---|---|---|---|---|---|---|
| COP (heating) | | 2.22 | 2.23 | 2.24 | 2.24 | 2.24 | 2.24 | 2.24 | 2.24 |
| COP (heating) relative to Reference | | 105.4% | 105.8% | 106.0% | 106.2% | 106.3% | 106.4% | 106.4% | 106.3% |
| Volumetric heating capacity at suction | kJ/m$^3$ | 1366 | 1469 | 1575 | 1681 | 1789 | 1897 | 2007 | 2116 |
| Capacity relative to Reference | | 155.5% | 167.2% | 179.2% | 191.3% | 203.6% | 215.9% | 228.4% | 240.8% |
| | | | | | | | | | |
| Critical temperature | °C | 83.54 | 81.03 | 78.63 | 76.35 | 74.17 | 72.09 | 70.10 | 68.20 |
| Critical pressure | bar | 43.15 | 43.91 | 44.66 | 45.42 | 46.17 | 46.93 | 47.68 | 48.43 |
| | | | | | | | | | |
| Condenser enthalpy change | kJ/kg | 279.0 | 284.2 | 289.1 | 293.7 | 298.2 | 302.6 | 306.8 | 310.9 |
| Pressure ratio | | 16.93 | 16.51 | 16.09 | 15.68 | 15.29 | 14.92 | 14.57 | 14.24 |
| Refrigerant mass flow | kg/hr | 25.8 | 25.3 | 24.9 | 24.5 | 24.1 | 23.8 | 23.5 | 23.2 |
| Compressor discharge temperature | °C | 139.3 | 141.7 | 144.0 | 146.3 | 148.6 | 150.8 | 153.0 | 155.2 |
| Evaporator inlet pressure | bar | 1.23 | 1.32 | 1.42 | 1.53 | 1.63 | 1.74 | 1.85 | 1.97 |
| Condenser inlet pressure | bar | 20.3 | 21.4 | 22.5 | 23.6 | 24.6 | 25.7 | 26.7 | 27.7 |
| Evaporator inlet temperature | °C | -35.5 | -36.5 | -37.5 | -38.6 | -39.6 | -40.6 | -41.7 | -42.6 |
| Evaporator dewpoint | °C | -24.4 | -23.7 | -23.1 | -22.6 | -22.1 | -21.6 | -21.3 | -21.0 |
| Evaporator exit gas temperature | °C | -19.4 | -18.7 | -18.1 | -17.6 | -17.1 | -16.6 | -16.3 | -16.0 |
| Evaporator mean temperature | °C | -29.9 | -30.1 | -30.3 | -30.6 | -30.8 | -31.1 | -31.5 | -31.8 |
| Evaporator glide (out-in) | K | 11.1 | 12.8 | 14.4 | 16.0 | 17.5 | 19.0 | 20.4 | 21.7 |
| Compressor suction pressure | bar | 1.20 | 1.30 | 1.40 | 1.50 | 1.61 | 1.72 | 1.83 | 1.95 |
| Compressor discharge pressure | bar | 20.3 | 21.4 | 22.5 | 23.6 | 24.6 | 25.7 | 26.7 | 27.7 |
| Suction line pressure drop | Pa/m | 168 | 154 | 142 | 132 | 122 | 114 | 107 | 100 |
| Pressure drop relative to reference | | 57.6% | 52.8% | 48.7% | 45.1% | 41.9% | 39.0% | 36.5% | 34.3% |
| Condenser dew point | °C | 60.7 | 60.8 | 60.7 | 60.6 | 60.3 | 59.9 | 59.5 | 59.0 |
| Condenser bubble point | °C | 29.3 | 28.3 | 27.4 | 26.6 | 25.9 | 25.4 | 24.9 | 24.4 |
| Condenser exit liquid temperature | °C | 28.3 | 27.3 | 26.4 | 25.6 | 24.9 | 24.4 | 23.9 | 23.4 |
| Condenser mean temperature | °C | 45.0 | 44.5 | 44.0 | 43.6 | 43.1 | 42.6 | 42.2 | 41.7 |
| Condenser glide (in-out) | K | 31.4 | 32.5 | 33.4 | 34.0 | 34.3 | 34.6 | 34.6 | 34.6 |

**Table 3: Theoretical Performance Data of Selected R-744/R-134a/R-1234ze(E) blends containing 0-14 % R-744 and 10 % R-134a**

| Composition $CO_2$/R-134a/R-1234ze(E) % by weight ▶ | | 0/10/90 | 2/10/88 | 4/10/86 | 6/10/84 | 8/10/82 | 10/10/80 | 12/10/78 | 14/10/76 |
|---|---|---|---|---|---|---|---|---|---|
| COP (heating) | | 2.01 | 2.07 | 2.11 | 2.14 | 2.17 | 2.19 | 2.20 | 2.21 |
| COP (heating) relative to Reference | | 95.1% | 97.9% | 100.0% | 101.6% | 102.8% | 103.7% | 104.4% | 105.0% |
| Volumetric heating capacity at suction | kJ/m³ | 652 | 734 | 819 | 906 | 998 | 1092 | 1190 | 1290 |
| Capacity relative to Reference | | 74.2% | 83.5% | 93.2% | 103.2% | 113.6% | 124.3% | 135.4% | 146.8% |
| | | | | | | | | | |
| Critical temperature | °C | 108.91 | 105.03 . | 101.37 | 97.92 | 94.66 | 91.58 | 88.67 | 85.90 |
| Critical pressure | bar | 37.56 | 38.31 | 39.07 | 39.82 | 40.58 | 41.33 | 42.09 | 42.84 |
| | | | | | | | | | |
| Condenser enthalpy change | kJ/kg | 212.7 | 225.6 | 236.6 | 246.0 | 254.2 | 261.4 | 268.0 | 273.9 |
| Pressure ratio | | 18.37 | 18.57 | 18.61 | 18.49 | 18.24 | 17.93 | 17.55 | 17.15 |
| Refrigerant mass flow | kg/hr | 33.9 | 31.9 | 30.4 | 29.3 | 28.3 | 27.5 | 26.9 | 26.3 |
| Compressor discharge temperature | °C | 113.9 | 118.1 | 121.9 | 125.5 | 128.7 | 131.7 | 134.5 | 137.1 |
| Evaporator inlet pressure | bar | 0.68 | 0.73 | 0.78 | 0.84 | 0.91 | 0.99 | 1.07 | 1.16 |
| Condenser inlet pressure | bar | 11.1 | 12.3 | 13.5 | 14.7 | 15.9 | 17.1 | 18.2 | 19.4 |
| Evaporator inlet temperature | °C | -29.1 | -29.8 | -30.5 | -31.2 | -31.9 | -32.8 | -33.6 | -34.5 |
| Evaporator dewpoint | °C | -30.1 | -29.6 | -28.9 | -28.2 | -27.4 | -26.6 | -25.8 | -25.1 |
| Evaporator exit gas temperature | °C | -25.1 | -24.6 | -23.9 | -23.2 | -22.4 | -21.6 | -20.8 | -20.1 |
| Evaporator mean temperature | °C | -29.6 | -29.7 | -29.7 | -29.7 | -29.7 | -29.7 | -29.7 | -29.8 |
| Evaporator glide (out-in) | K | -1.0 | 0.2 | 1.6 | 3.0 | 4.6 | 6.2 | 7.8 | 9.4 |
| Compressor suction pressure | bar | 0.61 | 0.66 | 0.73 | 0.80 | 0.87 | 0.95 | 1.04 | 1.13 |
| Compressor discharge pressure | bar | 11.1 | 12.3 | 13.5 | 14.7 | 15.9 | 17.1 | 18.2 | 19.4 |
| Suction line pressure drop | Pa/m | 432 | 367 | 318 | 279 | 247 | 221 | 199 | 181 |
| Pressure drop relative to reference | | 147.9% | 125.8% | 108.8% | 95.4% | 84.6% | 75.7% | 68.2% | 61.9% |
| Condenser dew point | °C | 53.0 | 54.8 | 56.3 | 57.6 | 58.5 | 59.3 | 59.8 | 60.1 |
| Condenser bubble point | °C | 52.4 | 46.9 | 42.5 | 39.1 | 36.3 | 34.1 | 32.3 | 30.8 |
| Condenser exit liquid temperature | °C | 51.4 | 45.9 | 41.5 | 38.1 | 35.3 | 33.1 | 31.3 | 29.8 |
| Condenser mean temperature | °C | 52.7 | 50.9 | 49.4 | 48.3 | 47.4 | 46.7 | 46.0 | 45.5 |
| Condenser glide (in-out) | K | 0.6 | 7.9 | 13.8 | 18.5 | 22.2 | 25.2 | 27.5 | 29.3 |

**Table 4: Theoretical Performance Data of Selected R-744/R-134a/R-1234ze(E) blends containing 16-30 % R-744 and 10 % R-134a**

| Composition CO$_2$/R-134a/R-1234ze(E) % by weight ▶ | | 16/10/74 | 18/10/72 | 20/10/70 | 22/10/68 | 24/10/66 | 26/10/64 | 28/10/62 | 30/10/60 |
|---|---|---|---|---|---|---|---|---|---|
| COP (heating) | | 2.22 | 2.23 | 2.24 | 2.24 | 2.24 | 2.24 | 2.24 | 2.24 |
| COP (heating) relative to Reference | | 105.5% | 105.8% | 106.1% | 106.3% | 106.4% | 106.4% | 106.4% | 106.4% |
| Volumetric heating capacity at suction | kJ/m$^3$ | 1393 | 1498 | 1604 | 1712 | 1822 | 1933 | 2044 | 2156 |
| Capacity relative to Reference | | 158.5% | 170.4% | 182.6% | 194.9% | 207.4% | 219.9% | 232.6% | 245.4% |
| | | | | | | | | | |
| Critical temperature | °C | 83.28 | 80.78 | 78.40 | 76.13 | 73.97 | 71.90 | 69.93 | 68.03 |
| Critical pressure | bar | 43.59 | 44.35 | 45.10 | 45.85 | 46.61 | 47.36 | 48.11 | 48.86 |
| | | | | | | | | | |
| Condenser enthalpy change | kJ/kg | 279.4 | 284.5 | 289.3 | 293.9 | 298.4 | 302.7 | 306.8 | 310.9 |
| Pressure ratio | | 16.73 | 16.31 | 15.89 | 15.49 | 15.10 | 14.74 | 14.39 | 14.06 |
| Refrigerant mass flow | kg/hr | 25.8 | 25.3 | 24.9 | 24.5 | 24.1 | 23.8 | 23.5 | 23.2 |
| Compressor discharge temperature | °C | 139.6 | 142.0 | 144.3 | 146.6 | 148.8 | 151.0 | 153.2 | 155.4 |
| Evaporator inlet pressure | bar | 1.25 | 1.35 | 1.45 | 1.56 | 1.67 | 1.78 | 1.89 | 2.01 |
| Condenser inlet pressure | bar | 20.5 | 21.6 | 22.7 | 23.8 | 24.9 | 25.9 | 27.0 | 28.0 |
| Evaporator inlet temperature | °C | -35.5 | -36.5 | -37.5 | -38.5 | -39.5 | -40.5 | -41.4 | -42.4 |
| Evaporator dewpoint | °C | -24.4 | -23.7 | -23.2 | -22.6 | -22.1 | -21.7 | -21.4 | -21.1 |
| Evaporator exit gas temperature | °C | -19.4 | -18.7 | -18.2 | -17.6 | -17.1 | -16.7 | -16.4 | -16.1 |
| Evaporator mean temperature | °C | -29.9 | -30.1 | -30.3 | -30.5 | -30.8 | -31.1 | -31.4 | -31.7 |
| Evaporator glide (out-in) | K | 11.1 | 12.7 | 14.3 | 15.8 | 17.3 | 18.8 | 20.1 | 21.3 |
| Compressor suction pressure | bar | 1.23 | 1.33 | 1.43 | 1.54 | 1.65 | 1.76 | 1.87 | 1.99 |
| Compressor discharge pressure | bar | 20.5 | 21.6 | 22.7 | 23.8 | 24.9 | 25.9 | 27.0 | 28.0 |
| Suction line pressure drop | Pa/m | 165 | 151 | 139 | 129 | 120 | 112 | 105 | 98 |
| Pressure drop relative to reference | | 56.5% | 51.8% | 47.8% | 44.2% | 41.1% | 38.3% | 35.9% | 33.7% |
| Condenser dew point | °C | 60.3 | 60.4 | 60.3 | 60.1 | 59.8 | 59.5 | 59.0 | 58.5 |
| Condenser bubble point | °C | 29.5 | 28.5 | 27.6 | 26.8 | 26.2 | 25.6 | 25.1 | 24.7 |
| Condenser exit liquid temperature | °C | 28.5 | 27.5 | 26.6 | 25.8 | 25.2 | 24.6 | 24.1 | 23.7 |
| Condenser mean temperature | °C | 44.9 | 44.4 | 44.0 | 43.5 | 43.0 | 42.6 | 42.1 | 41.6 |
| Condenser glide (in-out) | K | 30.8 | 31.9 | 32.7 | 33.3 | 33.6 | 33.8 | 33.9 | 33.8 |

**Table 5: Theoretical Performance Data of Selected R-744/R-134a/R-1234ze(E) blends containing 0-14 % R-744 and 15 % R-134a**

| Composition CO$_2$/R-134a/R-1234ze(E) % by weight ▶ | | 0/15/85 | 2/15/83 | 4/15/81 | 6/15/79 | 8/15/77 | 10/15/75 | 12/15/73 | 14/15/71 |
|---|---|---|---|---|---|---|---|---|---|
| COP (heating) | | 2.01 | 2.07 | 2.11 | 2.14 | 2.17 | 2.19 | 2.20 | 2.22 |
| COP (heating) relative to Reference | | 95.5% | 98.2% | 100.2% | 101.7% | 102.9% | 103.8% | 104.5% | 105.1% |
| Volumetric heating capacity at suction | kJ/m$^3$ | 670 | 753 | 838 | 927 | 1020 | 1115 | 1214 | 1315 |
| Capacity relative to Reference | | 76.3% | 85.7% | 95.4% | 105.5% | 116.0% | 126.9% | 138.1% | 149.7% |
| | | | | | | | | | |
| Critical temperature | °C | 108.44 | 104.58 | 100.96 | 97.54 | 94.31 | 91.26 | 88.36 | 85.62 |
| Critical pressure | bar | 38.00 | 38.75 | 39.50 | 40.25 | 41.00 | 41.76 | 42.51 | 43.26 |
| | | | | | | | | | |
| Condenser enthalpy change | kJ/kg | 213.8 | 226.6 | 237.4 | 246.7 | 254.8 | 262.0 | 268.5 | 274.3 |
| Pressure ratio | | 18.19 | 18.38 | 18.40 | 18.28 | 18.03 | 17.72 | 17.35 | 16.95 |
| Refrigerant mass flow | kg/hr | 33.7 | 31.8 | 30.3 | 29.2 | 28.3 | 27.5 | 26.8 | 26.2 |
| Compressor discharge temperature | °C | 114.4 | 118.6 | 122.4 | 125.9 | 129.1 | 132.1 | 134.9 | 137.5 |
| Evaporator inlet pressure | bar | 0.69 | 0.74 | 0.80 | 0.86 | 0.93 | 1.01 | 1.10 | 1.18 |
| Condenser inlet pressure | bar | 11.3 | 12.5 | 13.7 | 14.9 | 16.1 | 17.3 | 18.4 | 19.6 |
| Evaporator inlet temperature | °C | -29.2 | -29.8 | -30.5 | -31.2 | -32.0 | -32.8 | -33.6 | -34.5 |
| Evaporator dewpoint | °C | -30.1 | -29.5 | -28.9 | -28.1 | -27.4 | -26.6 | -25.8 | -25.1 |
| Evaporator exit gas temperature | °C | -25.1 | -24.5 | -23.9 | -23.1 | -22.4 | -21.6 | -20.8 | -20.1 |
| Evaporator mean temperature | °C | -29.6 | -29.7 | -29.7 | -29.7 | -29.7 | -29.7 | -29.7 | -29.8 |
| Evaporator glide (out-in) | K | -0.9 | 0.3 | 1.6 | 3.1 | 4.6 | 6.2 | 7.8 | 9.4 |
| Compressor suction pressure | bar | 0.62 | 0.68 | 0.74 | 0.81 | 0.89 | 0.97 | 1.06 | 1.15 |
| Compressor discharge pressure | bar | 11.3 | 12.5 | 13.7 | 14.9 | 16.1 | 17.3 | 18.4 | 19.6 |
| Suction line pressure drop | Pa/m | 419 | 357 | 310 | 272 | 241 | 216 | 195 | 177 |
| Pressure drop relative to reference | | 143.4% | 122.3% | 106.0% | 93.1% | 82.6% | 74.0% | 66.8% | 60.6% |
| Condenser dew point | °C | 52.9 | 54.6 | 56.1 | 57.3 | 58.2 | 58.9 | 59.4 | 59.8 |
| Condenser bubble point | °C | 52.2 | 46.8 | 42.5 | 39.2 | 36.4 | 34.3 | 32.5 | 31.0 |
| Condenser exit liquid temperature | °C | 51.2 | 45.8 | 41.5 | 38.2 | 35.4 | 33.3 | 31.5 | 30.0 |
| Condenser mean temperature | °C | 52.5 | 50.7 | 49.3 | 48.2 | 47.3 | 46.6 | 46.0 | 45.4 |
| Condenser qlide (in-out) | K | 0.8 | 7.8 | 13.6 | 18.1 | 21.8 | 24.7 | 27.0 | 28.8 |

**Table 6: Theoretical Performance Data of Selected R-744/R-134a/R-1234ze(E) blends containing 16-30 % R-744 and 15 % R-134a**

| Composition CO$_2$/R-134a/R-1234ze(E) % by weight | | 16/15/69 | 18/15/67 | 20/15/65 | 22/15/63 | 24/15/61 | 26/15/59 | 28/15/57 | 30/15/55 |
|---|---|---|---|---|---|---|---|---|---|
| COP (heating) | | 2.22 | 2.23 | 2.24 | 2.24 | 2.24 | 2.25 | 2.24 | 2.24 |
| COP (heating) relative to Reference | | 105.5% | 105.9% | 106.1% | 106.3% | 106.4% | 106.5% | 106.5% | 106.4% |
| Volumetric heating capacity at suction | kJ/m$^3$ | 1419 | 1525 | 1633 | 1743 | 1855 | 1967 | 2081 | 2196 |
| Capacity relative to Reference | | 161.5% | 173.6% | 185.9% | 198.4% | 211.1% | 223.9% | 236.8% | 249.9% |
| Critical temperature | °C | 83.01 | 80.53 | 78.17 | 75.92 | 73.77 | 71.71 | 69.75 | 67.87 |
| Critical pressure | bar | 44.01 | 44.76 | 45.52 | 46.27 | 47.02 | 47.77 | 48.52 | 49.27 |
| Condenser enthalpy change | kJ/kg | 279.8 | 284.9 | 289.7 | 294.2 | 298.6 | 302.8 | 306.9 | 310.9 |
| Pressure ratio | | 16.54 | 16.12 | 15.71 | 15.31 | 14.93 | 14.56 | 14.21 | 13.88 |
| Refrigerant mass flow | kg/hr | 25.7 | 25.3 | 24.9 | 24.5 | 24.1 | 23.8 | 23.5 | 23.2 |
| Compressor discharge temperature | °C | 140.0 | 142.3 | 144.6 | 146.9 | 149.1 | 151.3 | 153.4 | 155.5 |
| Evaporator inlet pressure | bar | 1.28 | 1.38 | 1.48 | 1.59 | 1.70 | 1.81 | 1.93 | 2.05 |
| Condenser inlet pressure | bar | 20.7 | 21.8 | 22.9 | 24.0 | 25.1 | 26.2 | 27.2 | 28.3 |
| Evaporator inlet temperature | °C | -35.4 | -36.4 | -37.4 | -38.3 | -39.3 | -40.3 | -41.2 | -42.2 |
| Evaporator dewpoint | °C | -24.4 | -23.8 | -23.2 | -22.7 | -22.2 | -21.8 | -21.4 | -21.1 |
| Evaporator exit gas temperature | °C | -19.4 | -18.8 | -18.2 | -17.7 | -17.2 | -16.8 | -16.4 | -16.1 |
| Evaporator mean temperature | °C | -29.9 | -30.1 | -30.3 | -30.5 | -30.8 | -31.0 | -31.3 | -31.6 |
| Evaporator glide (out-in) | K | 11.0 | 12.6 | 14.2 | 15.7 | 17.1 | 18.5 | 19.8 | 21.0 |
| Compressor suction pressure | bar | 1.25 | 1.35 | 1.46 | 1.57 | 1.68 | 1.80 | 1.91 | 2.04 |
| Compressor discharge pressure | bar | 20.7 | 21.8 | 22.9 | 24.0 | 25.1 | 26.2 | 27.2 | 28.3 |
| Suction line pressure drop | Pa/m | 162 | 148 | 137 | 127 | 118 | 110 | 103 | 97 |
| Pressure drop relative to reference | | 55.4% | 50.8% | 46.9% | 43.4% | 40.3% | 37.6% | 35.2% | 33.1% |
| Condenser dew point | °C | 59.9 | 60.0 | 59.9 | 59.7 | 59.4 | 59.0 | 58.6 | 58.1 |
| Condenser bubble point | °C | 29.7 | 28.7 | 27.8 | 27.1 | 26.4 | 25.9 | 25.4 | 25.0 |
| Condenser exit liquid temperature | °C | 28.7 | 27.7 | 26.8 | 26.1 | 25.4 | 24.9 | 24.4 | 24.0 |
| Condenser mean temperature | °C | 44.8 | 44.3 | 43.9 | 43.4 | 42.9 | 42.5 | 42.0 | 41.6 |
| Condenser glide (in-out) | K | 30.2 | 31.3 | 32.1 | 32.6 | 33.0 | 33.2 | 33.2 | 33.1 |

**Table 7: Theoretical Performance Data of Selected R-744/R-134a/R-1234ze(E) blends containing 0-14 % R-744 and 20 % R-134a**

| Composition CO$_2$/R-134a/R-1234ze(E) % by weight ▶ | | 0/20/80 | 0/20/80 | 2/20/78 | 4/20/76 | 6/20/74 | 8/20/72 | 10/20/70 | 12/20/68 | 14/20/66 |
|---|---|---|---|---|---|---|---|---|---|---|
| COP (heating) | | | 2.02 | 2.08 | 2.12 | 2.15 | 2.17 | 2.19 | 2.20 | 2.22 |
| COP (heating) relative to Reference | | | 95.8% | 98.4% | 100.4% | 101.8% | 103.0% | 103.9% | 104.6% | 105.1% |
| Volumetric heating capacity at suction | kJ/m$^3$ | | 688 | 771 | 857 | 947 | 1041 | 1137 | 1237 | 1339 |
| Capacity relative to Reference | | | 78.3% | 87.7% | 97.6% | 107.8% | 118.4% | 129.4% | 140.7% | 152.4% |
| | | | | | | | | | | |
| Critical temperature | °C | | 107.96 | 104.14 | 100.55 | 97.16 | 93.96 | 90.93 | 88.06 | 85.34 |
| Critical pressure | bar | | 38.40 | 39.15 | 39.90 | 40.65 | 41.40 | 42.15 | 42.91 | 43.66 |
| | | | | | | | | | | |
| Condenser enthalpy change | kJ/kg | | 215.0 | 227.5 | 238.2 | 247.5 | 255.5 | 262.6 | 269.0 | 274.9 |
| Pressure ratio | | | 18.02 | 18.19 | 18.21 | 18.08 | 17.84 | 17.53 | 17.16 | 16.76 |
| Refrigerant mass flow | kg/hr | | 33.5 | 31.6 | 30.2 | 29.1 | 28.2 | 27.4 | 26.8 | 26.2 |
| Compressor discharge temperature | °C | | 114.9 | 119.1 | 122.9 | 126.4 | 129.6 | 132.5 | 135.3 | 137.9 |
| Evaporator inlet pressure | bar | | 0.71 | 0.76 | 0.81 | 0.88 | 0.95 | 1.03 | 1.12 | 1.21 |
| Condenser inlet pressure | bar | | 11.5 | 12.7 | 13.9 | 15.1 | 16.3 | 17.5 | 18.6 | 19.8 |
| Evaporator inlet temperature | °C | | -29.2 | -29.9 | -30.5 | -31.3 | -32.0 | -32.8 | -33.6 | -34.5 |
| Evaporator dewpoint | °C | -30.0 | -29.5 | -29.5 | -28.8 | -28.1 | -27.4 | -26.6 | -25.9 | -25.2 |
| Evaporator exit gas temperature | °C | | -25.0 | -24.5 | -23.8 | -23.1 | -22.4 | -21.6 | -20.9 | -20.2 |
| Evaporator mean temperature | °C | | -29.6 | -29.7 | -29.7 | -29.7 | -29.7 | -29.7 | -29.7 | -29.8 |
| Evaporator glide (out-in) | K | | -0.8 | 0.4 | 1.7 | 3.1 | 4.6 | 6.2 | 7.8 | 9.3 |
| Compressor suction pressure | bar | | 0.64 | 0.70 | 0.76 | 0.83 | 0.91 | 1.00 | 1.08 | 1.18 |
| Compressor discharge pressure | bar | | 11.5 | 12.7 | 13.9 | 15.1 | 16.3 | 17.5 | 18.6 | 19.8 |
| Suction line pressure drop | Pa/m | | 406 | 348 | 302 | 266 | 236 | 212 | 191 | 174 |
| Pressure drop relative to reference | | | 139.1% | 119.0% | 103.4% | 91.0% . | 80.8% | 72.5% | 65.4% | 59.4% |
| Condenser dew point | °C | | 52.8 | 54.5 | 55.9 | 57.0 | 57.9 | 58.6 | 59.1 | 59.4 |
| Condenser bubble point | °C | | 52.0 | 46.7 | 42.5 | 39.2 | 36.5 | 34.4 | 32.6 | 31.1 |
| Condenser exit liquid temperature | °C | | 51.0 | 45.7 | 41.5 | 38.2 | 35.5 | 33.4 | 31.6 | 30.1 |
| Condenser mean temperature | °C | | 52.4 | 50.6 | 49.2 | 48.1 | 47.2 | 46.5 | 45.9 | 45.3 |
| Condenser glide (in-out) | K | | 0.8 | 7.7 | 13.3 | 17.8 | 21.4 | 24.2 | 26.5 | 28.2 |

**Table 8: Theoretical Performance Data of Selected R-744/R-134a/R-1234ze(E) blends containing 16-30 % R-744 and 20 % R-134a**

| Composition $CO_2$/R-134a/R-1234ze(E) % by weight ▶ | | 16/20/64 | 18/20/62 | 20/20/60 | 22/20/58 | 24/20/56 | 26/20/54 | 28/20/52 | 30/20/50 |
|---|---|---|---|---|---|---|---|---|---|
| COP (heating) | | 2.23 | 2.23 | 2.24 | 2.24 | 2.25 | 2.25 | 2.25 | 2.25 |
| COP (heating) relative to Reference | | 105.6% | 105.9% | 106.2% | 106.4% | 106.5% | 106.5% | 106.5% | 106.5% |
| Volumetric heating capacity at suction | kJ/m³ | 1445 | 1552 | 1662 | 1774 | 1887 | 2002 | 2117 | 2235 |
| Capacity relative to Reference | | 164.4% | 176.7% | 189.2% | 201.9% | 214.8% | 227.8% | 241.0% | 254.3% |
| | | | | | | | | | |
| Critical temperature | °C | 82.75 | 80.29 | 77.94 | 75.70 | 73.57 | 71.53 | 69.57 | 67.70 |
| Critical pressure | bar | 44.41 | 45.16 | 45.91 | 46.66 | 47.41 | 48.16 | 48.91 | 49.66 |
| | | | | | | | | | |
| Condenser enthalpy change | kJ/kg | 280.3 | 285.3 | 290.1 | 294.6 | 298.9 | 303.1 | 307.1 | 311.1 |
| Pressure ratio | | 16.36 | 15.94 | 15.54 | 15.14 | 14.76 | 14.40 | 14.05 | 13.72 |
| Refrigerant mass flow | kg/hr | 25.7 | 25.2 | 24.8 | 24.4 | 24.1 | 23.8 | 23.4 | 23.1 |
| Compressor discharge temperature | °C | 140.3 | 142.7 | 145.0 | 147.2 | 149.4 | 151.5 | 153.7 | 155.7 |
| Evaporator inlet pressure | bar | 1.31 | 1.41 | 1.51 | 1.62 | 1.73 | 1.85 | 1.97 | 2.09 |
| Condenser inlet pressure | bar | 20.9 | 22.0 | 23.1 | 24.2 | 25.3 | 26.4 | 27.5 | 28.5 |
| Evaporator inlet temperature | °C | -35.4 | -36.3 | -37.3 | -38.2 | -39.2 | -40.1 | -41.0 | -41.9 |
| Evaporator dewpoint | °C | -24.5 | -23.8 | -23.3 | -22.7 | -22.3 | -21.9 | -21.5 | -21.2 |
| Evaporator exit gas temperature | °C | -19.5 | -18.8 | -18.3 | -17.7 | -17.3 | -16.9 | -16.5 | -16.2 |
| Evaporator mean temperature | °C | -29.9 | -30.1 | -30.3 | -30.5 | -30.7 | -31.0 | -31.3 | -31.6 |
| Evaporator glide (out-in) | K | 10.9 | 12.5 | 14.0 | 15.5 | 16.9 | 18.3 | 19.5 | 20.7 |
| Compressor suction pressure | bar | 1.28 | 1.38 | 1.49 | 1.60 | 1.71 | 1.83 | 1.95 | 2.08 |
| Compressor discharge pressure | bar | 20.9 | 22.0 | 23.1 | 24.2 | 25.3 | 26.4 | 27.5 | 28.5 |
| Suction line pressure drop | Pa/m | 159 | 146 | 134 | 124 | 116 | 108 | 101 | 95 |
| Pressure drop relative to reference | | 54.3% | 49.9% | 46.0% | 42.6% | 39.6% | 37.0% | 34.6% | 32.5% |
| Condenser dew point | °C | 59.5 | 59.6 | 59.5 | 59.3 | 59.0 | 58.6 | 58.2 | 57.7 |
| Condenser bubble point | °C | 29.9 | 28.9 | 28.0 | 27.3 | 26.7 | 26.1 | 25.6 | 25.2 |
| Condenser exit liquid temperature | °C | 28.9 | 27.9 | 27.0 | 26.3 | 25.7 | 25.1 | 24.6 | 24.2 |
| Condenser mean temperature | °C | 44.7 | 44.2 | 43.8 | 43.3 | 42.8 | 42.4 | 41.9 | 41.5 |
| Condenser glide (in-out) | K | 29.6 | 30.7 | 31.5 | 32.0 | 32.3 | 32.5 | 32.5 | 32.4 |

**Table 9: Theoretical Performance Data of Selected R-744/R-134a/R-1234ze(E) blends containing 0-14 % R-744 and 30 % R-134a**

| Composition CO$_2$/R-134a/R-1234ze(E) % by weight ▶ | | 0/30/70 | 2/30/68 | 4/30/66 | 6/30/64 | 8/30/62 | 10/30/60 | 12/30/58 | 14/30/56 |
|---|---|---|---|---|---|---|---|---|---|
| COP (heating) | | 2.03 | 2.08 | 2.12 | 2.15 | 2.18 | 2.19 | 2.21 | 2.22 |
| COP (heating) relative to Reference | | 96.4% | 98.9% | 100.7% | 102.1% | 103.2% | 104.1% | 104.7% | 105.3% |
| Volumetric heating capacity at suction | kJ/m³ | 721 | 806 | 894 | 985 | 1081 | 1179 | 1281 | 1387 |
| Capacity relative to Reference | | 82.1% | 91.7% | 101.7% | 112.1% | 123.0% | 134.2% | 145.8% | 157.8% |
| | | | | | | | | | |
| Critical temperature | °C | 107.03 | 103.28 | 99.75 | 96.42 | 93.27 | 90.29 | 87.47 | 84.78 |
| Critical pressure | bar | 39.11 | 39.86 | 40.61 | 41.37 | 42.12 | 42.87 | 43.62 | 44.37 |
| | | | | | | | | | |
| Condenser enthalpy change | kJ/kg | 217.3 | 229.6 | 240.1 | 249.1 | 257.0 | 264.1 | 270.4 | 276.1 |
| Pressure ratio | | 17.70 | 17.85 | 17.86 | 17.73 | 17.49 | 17.18 | 16.82 | 16.43 |
| Refrigerant mass flow | kg/hr | 33.1 | 31.4 | 30.0 | 28.9 | 28.0 | 27.3 | 26.6 | 26.1 |
| Compressor discharge temperature | °C | 116.0 | 120.2 | 123.9 | 127.4 | 130.5 | 133.5 | 136.2 | 138.8 |
| Evaporator inlet pressure | bar | 0.74 | 0.79 | 0.85 | 0.91 | 0.99 | 1.07 | 1.16 | 1.25 |
| Condenser inlet pressure | bar | 11.9 | 13.0 | 14.2 | 15.4 | 16.6 | 17.8 | 19.0 | 20.1 |
| Evaporator inlet temperature | °C | -29.3 | -30.0 | -30.6 | -31.3 | -32.0 | -32.8 | -33.6 | -34.4 |
| Evaporator dewpoint | °C | -30.0 | -29.5 | -28.8 | -28.1 | -27.4 | -26.7 | -25.9 | -25.2 |
| Evaporator exit gas temperature | °C | -25.0 | -24.5 | -23.8 | -23.1 | -22.4 | -21.7 | -20.9 | -20.2 |
| Evaporator mean temperature | °C | -29.7 | -29.7 | -29.7 | -29.7 | -29.7 | -29.7 | -29.8 | -29.8 |
| Evaporator glide (out-in) | K | -0.7 | 0.5 | 1.8 | 3.2 | 4.6 | 6.1 | 7.6 | 9.2 |
| Compressor suction pressure | bar | 0.67 | 0.73 | 0.80 | 0.87 | 0.95 | 1.04 | 1.13 | 1.23 |
| Compressor discharge pressure | bar | 11.9 | 13.0 | 14.2 | 15.4 | 16.6 | 17.8 | 19.0 | 20.1 |
| Suction line pressure drop | Pa/m | 384 | 330 | 288 | 254 | 226 | 203 | 184 | 167 |
| Pressure drop relative to reference | | 131.6% | 113.1% | 98.6% | 87.0% | 77.5% | 69.6% | 62.9% | 57.2% |
| Condenser dew point | °C | 52.5 | 54.1 | 55.4 | 56.5 | 57.3 | 58.0 | 58.4 | 58.7 |
| Condenser bubble point | °C | 51.6 | 46.6 | 42.5 | 39.3 | 36.7 | 34.6 | 32.9 | 31.4 |
| Condenser exit liquid temperature | °C | 50.6 | 45.6 | 41.5 | 38.3 | 35.7 | 33.6 | 31.9 | 30.4 |
| Condenser mean temperature | °C | 52.1 | 50.3 | 49.0 | 47.9 | 47.0 | 46.3 | 45.6 | 45.1 |
| Condenser glide (in-out) | K | 0.9 | 7.5 | 12.9 | 17.2 | 20.6 | 23.4 | 25.6 | 27.3 |

**Table 10: Theoretical Performance Data of Selected R-744/R-134a/R-1234ze(E) blends containing 16-30 % R-744 and 30 % R-134a**

| Composition CO$_2$/R-134a/R-1234ze(E) % by weight ▶ | | 16/30154 | 18/30/52 | 20/30/50 | 22/30/48 | 24/30/46 | 26/30/44 | 28/30/42 | 30/30/40 |
|---|---|---|---|---|---|---|---|---|---|
| COP (heating) | | 2.23 | 2.24 | 2.24 | 2.25 | 2.25 | 2.25 | 2.25 | 2.25 |
| COP (heating) relative to Reference | | 105.7% | 106.0% | 106.3% | 106.5% | 106.6% | 106.7% | 106.7% | 106.6% |
| Volumetric heating capacity at suction | kJ/m$^3$ | 1494 | 1605 | 1718 | 1833 | 1949 | 2068 | 2188 | 2309 |
| Capacity relative to Reference | | 170.1% | 182.7% | 195.5% | 208.6% | 221.9% | 235.3% | 249.0% | 262.8% |
| | | | | | | | | | |
| Critical temperature | °C | 82.23 | 79.80 | 77.49 | 75.28 | 73.17 | 71.16 | 69.23 | 67.38 |
| Critical pressure | bar | 45.12 | 45.88 | 46.63 | 47.38 | 48.13 | 48.88 | 49.63 | 50.38 |
| | | | | | | | | | |
| Condenser enthalpy change | kJ/kg | 281.5 | 286.4 | 291.1 | 295.5 | 299.8 | 303.8 | 307.8 | 311.6 |
| Pressure ratio | | 16.03 | 15.63 | 15.23 | 14.84 | 14.46 | 14.10 | 13.75 | 13.42 |
| Refrigerant mass flow | kg/hr | 25.6 | 25.1 | 24.7 | 24.4 | 24.0 | 23.7 | 23.4 | 23.1 |
| Compressor discharge temperature | °C | 141.2 | 143.5 | 145.8 | 148.0 | 150.1 | 152.2 | 154.2 | 156.3 |
| Evaporator inlet pressure | bar | 1.35 | 1.46 | 1.57 | 1.68 | 1.80 | 1.92 | 2.05 | 2.18 |
| Condenser inlet pressure | bar | 21.3 | 22.4 | 23.5 | 24.6 | 25.7 | 26.8 | 27.9 | 29.0 |
| Evaporator inlet temperature | °C | -35.3 | -36.2 | -37.1 | -38.0 | -38.9 | -39.8 | -40.7 | -41.5 |
| Evaporator dewpoint | °C | -24.6 | -24.0 | -23.4 | -22.9 | -22.4 | -22.0 | -21.6 | -21.3 |
| Evaporator exit gas temperature | °C | -19.6 | -19.0 | -18.4 | -17.9 | -17.4 | -17.0 | -16.6 | -16.3 |
| Evaporator mean temperature | °C | -29.9 | -30.1 | -30.2 | -30.4 | -30.7 | -30.9 | -31.2 | -31.4 |
| Evaporator glide (out-in) | K | 10.7 | 12.2 | 13.7 | 15.1 | 16.5 | 17.8 | 19.0 | 20.2 |
| Compressor suction pressure | bar | 1.33 | 1.43 | 1.55 | 1.66 | 1.78 | 1.90 | 2.03 | 2.16 |
| Compressor discharge pressure | bar | 21.3 | 22.4 | 23.5 | 24.6 | 25.7 | 26.8 | 27.9 | 29.0 |
| Suction line pressure drop | Pa/m | 153 | 140 | 130 | 120 | 112 | 104 | 98 | 92 |
| Pressure drop relative to reference | | 52.3% | 48.1% | 44.4% | 41.1% | 38.3% | 35.7% | 33.4% | 31.4% |
| Condenser dew point | °C | 58.8 | 58.8 | 58.7 | 58.5 | 58.2 | 57.9 | 57.4 | 56.9 |
| Condenser bubble point | °C | 30.2 | 29.2 | 28.4 | 27.6 | 27.0 | 26.5 | 26.0 | 25.7 |
| Condenser exit liquid temperature | °C | 29.2 | 28.2 | 27.4 | 26.6 | 26.0 | 25.5 | 25.0 | 24.7 |
| Condenser mean temperature | °C | 44.5 | 44.0 | 43.6 | 43.1 | 42.6 | 42.2 | 41.7 | 41.3 |
| Condenser glide (in-out) | K | 28.6 | 29.6 | 30.4 | 30.9 | 31.2 | 31.4 | 31.4 | 31.3 |

**Table 11: Theoretical Performance Data of Selected R-744/R-134a/R-1234ze(E) blends containing 0-14 % R-744 and 40 % R-134a**

| Composition CO$_2$/R-134a/R-1234ze(E) % by weight ▶ | | 0/40/60 | 2/40/58 | 4/40/56 | 6/40/54 | 8/40/52 | 10/40/50 | 12/40/48 | 14/40/46 |
|---|---|---|---|---|---|---|---|---|---|
| COP (heating) | | 2.04 | 2.09 | 2.13 | 2.16 | 2.18 | 2.20 | 2.21 | 2.22 |
| COP (heating) relative to Reference | | 96.9% | 99.3% | 101.1% | 102.4% | 103.4% | 104.3% | 104.9% | 105.4% |
| Volumetric heating capacity at suction | kJ/m$^3$ | 752 | 838 | 928 | 1021 | 1118 | 1220 | 1323 | 1431 |
| Capacity relative to Reference | | 85.6% | 95.4% | 105.6% | 116.2% | 127.3% | 138.8% | 150.6% | 162.8% |
| | | | | | | | | | |
| Critical temperature | °C | 106.12 | 102.44 | 98.97 | 95.70 | 92.60 | 89.66 | 86.88 | 84.24 |
| Critical pressure | bar | 39.69 | 40.45 | 41.21 | 41.96 | 42.72 | 43.48 | 44.23 | 44.99 |
| | | | | | | | | | |
| Condenser enthalpy change | kJ/kg | 219.7 | 231.7 | 242.1 | 251.0 | 258.9 | 265.8 | 272.1 | 277.8 |
| Pressure ratio | | 17.41 | 17.56 | 17.56 | 17.42 | 17.19 | 16.88 | 16.53 | 16.15 |
| Refrigerant mass flow | kg/hr | 32.8 | 31.1 | 29.7 | 28.7 | 27.8 | 27.1 | 26.5 | 25.9 |
| Compressor discharge temperature | °C | 117.2 | 121.3 | 125.1 | 128.5 | 131.6 | 134.5 | 137.2 | 139.8 |
| Evaporator inlet pressure | bar | 0.76 | 0.81 | 0.88 | 0.95 | 1.02 | 1.11 | 1.20 | 1.30 |
| Condenser inlet pressure | bar | 12.2 | 13.3 | 14.6 | 15.8 | 17.0 | 18.2 | 19.3 | 20.5 |
| Evaporator inlet temperature | °C | -29.4 | -30.0 | -30.6 | -31.3 | -32.0 | -32.7 | -33.5 | -34.3 |
| Evaporator dewpoint | °C | -30.0 | -29.5 | -28.9 | -28.2 | -27.5 | -26.7 | -26.0 | -25.3 |
| Evaporator exit gas temperature | °C | -25.0 | -24.5 | -23.9 | -23.2 | -22.5 | -21.7 | -21.0 | -20.3 |
| Evaporator mean temperature | °C | -29.7 | -29.7 | -29.8 | -29.7 | -29.7 | -29.7 | -29.8 | -29.8 |
| Evaporator glide (out-in) | K | -0.6 | 0.5 | 1.8 | 3.1 | 4.6 | 6.0 | 7.5 | 9.0 |
| Compressor suction pressure | bar | 0.70 | 0.76 | 0.83 | 0.90 | 0.99 | 1.08 | 1.17 | 1.27 |
| Compressor discharge pressure | bar | 12.2 | 13.3 | 14.6 | 15.8 | 17.0 | 18.2 | 19.3 | 20.5 |
| Suction line pressure drop | Pa/m | 366 | 315 | 276 | 244 | 217 | 196 | 177 | 161 |
| Pressure drop relative to reference | | 125.2% | 108.0% | 94.4% | 83.5% | 74.5% | 66.9% | 60.6% | 55.2% |
| Condenser dew point | °C | 52.2 | 53.7 | 54.9 | 56.0 | 56.8 | 57.4 | 57.8 | 58.1 |
| Condenser bubble point | °C | 51.4 | 46.4 | 42.5 | 39.3 | 36.8 | 34.7 | 33.0 | 31.6 |
| Condenser exit liquid temperature | °C | 50.4 | 45.4 | 41.5 | 38.3 | 35.8 | 33.7 | 32.0 | 30.6 |
| Condenser mean temperature | °C | 51.8 | 50.1 | 48.7 | 47.7 | 46.8 | 46.1 | 45.4 | 44.8 |
| Condenser glide (in-out) | K | 0.8 | 7.2 | 12.4 | 16.6 | 20.0 | 22.7 | 24.8 | 26.5 |

**Table 12: Theoretical Performance Data of Selected R-744/R-134a/R-1234ze(E) blends containing 16-30 % R-744 and 40 % R-134a**

| Composition $CO_2$/R-134a/R-1234ze(E) % by weight ▶ | | 16/40/44 | 18/40/42 | 20/40/40 | 22/40/38 | 24/40/36 | 26/40/34 | 28/40/32 | 30/40/30 |
|---|---|---|---|---|---|---|---|---|---|
| COP (heating) | | . 2.23 | 2.24 | 2.24 | 2.25 | 2.25 | 2.25 | 2.25 | 2.25 |
| COP (heating) relative to Reference | | 105.9% | 106.2% | 106.4% | 106.6% | 106.7% | 106.8% | 106.8% | 106.8% |
| Volumetric heating capacity at suction | $kJ/m^3$ | 1541 | 1654 | 1770 | 1888 | 2008 | 2130 | 2253 | 2379 |
| Capacity relative to Reference | | 175.4% | 188.3% | 201.5% | 214.9% | 228.5% | 242.4% | 256.5% | 270.7% |
| | | | | | | | | | |
| Critical temperature | °C | 81.72 | 79.33 | 77.05 | 74.87 | 72.78 | 70.79 | 68.89 | 67.06 |
| Critical pressure | bar | 45.74 | 46.50 | 47.26 | 48.01 | 48.77 | 49.52 | 50.27 | 51.03 |
| | | | | | | | | | |
| Condenser enthalpy change | kJ/kg | 283.0 | 287.9 | 292.5 | 296.9 | 301.0 | 305.0 | 308.8 | 312.5 |
| Pressure ratio | | 15.76 | 15.36 | 14.97 | 14.58 | 14.21 | 13.85 | 13.50 | 13.17 |
| Refrigerant mass flow | kg/hr | 25.4 | 25.0 | 24.6 | 24.3 | 23.9 | 23.6 | 23.3 | 23.0 |
| Compressor discharge temperature | °C | 142.2 | 144.5 | 146.7 | 148.8 | 150.9 | 153.0 | 155.0 | 157.0 |
| Evaporator inlet pressure | bar | 1.40 | 1.51 | 1.62 | 1.74 | 1.86 | 1.98 | 2.11 | 2.25 |
| Condenser inlet pressure | bar | 21.6 | 22.8 | 23.9 | 25.0 | 26.1 | 27.2 | 28.3 | 29.4 |
| Evaporator inlet temperature | °C | -35.2 | -36.1 | -36.9 | -37.8 | -38.7 | -39.6 | -40.4 | -41.2 |
| Evaporator dewpoint | °C | -24.7 | -24.1 | -23.5 | -23.0 | -22.5 | -22.1 | -21.8 | -21.5 |
| Evaporator exit gas temperature | °C | -19.7 | -19.1 | -18.5 | -18.0 | -17.5 | -17.1 | -16.8 | -16.5 |
| Evaporator mean temperature | °C | -29.9 | -30.1 | -30.2 | -30.4 | -30.6 | -30.8 | -31.1 | -31.3 |
| Evaporator glide (out-in) | K | 10.5 | 12.0 | 13.4 | 14.8 | 16.1 | 17.4 | 18.6 | 19.7 |
| Compressor suction pressure | bar | 1.37 | 1.48 | 1.60 | 1.72 | 1.84 | 1.97 | 2.10 | 2.23 |
| Compressor discharge pressure | bar | 21.6 | 22.8 | 23.9 | 25.0 | 26.1 | 27.2 | 28.3 | 29.4 |
| Suction line pressure drop | Pa/m | 148 | 136 | 125 | 116 | 108 | 101 | 95 | 89 |
| Pressure drop relative to reference | | 50.5% | 46.5% | 42.9% | 39.8% | 37.0% | 34.6% | 32.4% | 30.4% |
| Condenser dew point | °C | 58.2 | 58.2 | 58.1 | 57.9 | 57.6 | 57.2 | 56.8 | 56.3 |
| Condenser bubble point | °C | 30.4 | 29.4 | 28.6 | 27.9 | 27.3 | 26.8 | 26.3 | 26.0 |
| Condenser exit liquid temperature | °C | 29.4 | 28.4 | 27.6 | 26.9 | 26.3 | 25.8 | 25.3 | 25.0 |
| Condenser mean temperature | °C | 44.3 | 43.8 | 43.3 | 42.9 | 42.4 | 42.0 | 41.6 | 41.1 |
| Condenser glide (in-out) | K | 27.8 | 28.8 | 29.5 | 30.0 | 30.3 | 30.4 | 30.4 | 30.3 |

**Table 13: Theoretical Performance Data of Selected R-744/R-134a/R-1234ze(E) blends containing 0-14 % R-744 and 50 % R-134a**

| Composition CO$_2$/R-134a/R-1234ze(E) % by weight ▶ | | 0/50/50 | 2/50/48 | 4/50/46 | 6/50/44 | 8/50/42 | 10/50/40 | 12/50/38 | 14/50/36 |
|---|---|---|---|---|---|---|---|---|---|
| COP (heating) | | 2.05 | 2.10 | 2.14 | 2.17 | 2.19 | 2.20 | 2.22 | 2.23 |
| COP (heating) relative to Reference | | 97.5% | 99.7% | 101.4% | 102.7% | 103.7% | 104.5% | 105.1% | 105.6% |
| Volumetric heating capacity at suction | kJ/m$^3$ | 780 | 868 | 959 | 1054 | 1153 | 1256 | 1362 | 1472 |
| Capacity relative to Reference | | 88.8% | 98.7% | 109.1% | 120.0% | 131.2% | 143.0% | 155.0% | 167.5% |
| | | | | | | | | | |
| Critical temperature | °C | 105.23 | 101.62 | 98.21 | 94.99 | 91.94 | 89.05 | 86.31 | 83.70 |
| Critical pressure | bar | 40.15 | 40.91 | 41.68 | 42.45 | 43.21 | 43.98 | 44.74 | 45.51 |
| | | | | | | | | | |
| Condenser enthalpy change | kJ/kg | 222.2 | 234.1 | 244.4 | 253.2 | 261.0 | 267.9 | 274.1 | 279.7 |
| Pressure ratio | | 17.16 | 17.30 | 17.30 | 17.17 | 16.94 | 16.64 | 16.30 | 15.92 |
| Refrigerant mass flow | kg/hr | 32.4 | 30.8 | 29.5 | 28.4 | 27.6 | 26.9 | 26.3 | 257 |
| Compressor discharge temperature | °C | 118.4 | 122.5 | 126.3 | 129.7 | 132.8 | 135.7 | 138.4 | 140.9 |
| Evaporator inlet pressure | bar | 0.78 | 0.84 | 0.90 | 0.97 | 1.05 | 1.14 | 1.23 | 1.33 |
| Condenser inlet pressure | bar | 12.4 | 13.6 | 14.8 | 16.1 | 17.3 | 18.5 | 19.6 | 20.8 |
| Evaporator inlet temperature | °C | -29.5 | -30.1 | -30.7 | -31.3 | -32.0 | -32.7 | -33.5 | -34.3 |
| Evaporator dewpoint | °C | -30.0 | -29.5 | -28.9 | -28.2 | -27.5 | -26.8 | -26.1 | -25.4 |
| Evaporator exit gas temperature | °C | -25.0 | -24.5 | -23.9 | -23.2 | -22.5 | -21.8 | -21.1 | -20.4 |
| Evaporator mean temperature | °C | -29.7 | -29.8 | -29.8 | -29.8 | -29.8 | -29.8 | -29.8 | -29.9 |
| Evaporator glide (out-in) | K | -0.6 | 0.5 | 1.8 | 3.1 | 4.5 | 5.9 | 7.4 | 8.9 |
| Compressor suction pressure | bar | 0.72 | 0.79 | 0.86 | 0.93 | 1.02 | 1.11 | 1.21 | 1.31 |
| Compressor discharge pressure | bar | 12.4 | 13.6 | 14.8 | 16.1 | 17.3 | 18.5 | 19.6 | 20.8 |
| Suction line pressure drop | Pa/m | 349 | 302 | 265 | 235 | 210 | 189 | 171 | 156 |
| Pressure drop relative to reference | | 119.7% | 103.5% | 90.7% | 80.3% | 71.8% | 64.6% | 58.6% | 53.4% |
| Condenser dew point | °C | 51.8 | 53.2 | 54.5 | 55.5 | 56.3 | 56.9 | 57.3 | 57.5 |
| Condenser bubble point | °C | 51.1 | 46.3 | 42.4 | 39.3 | 36.8 | 34.8 | 33.1 | 31.7 |
| Condenser exit liquid temperature | °C | 50.1 | 45.3 | 41.4 | 38.3 | 35.8 | 33.8 | 32.1 | 30.7 |
| Condenser mean temperature | °C | 51.5 | 49.8 | 48.5 | 47.4 | 46.5 | 45.8 | 45.2 | 44.6 |
| Condenser glide (in-out) | K | 0.7 | 6.9 | 12.1 | 16.2 | 19.5 | 22.1 | 24.2 | 25.9 |

**Table 14: Theoretical Performance Data of Selected R-744/R-134a/R-1234ze(E) blends containing 16-30 % R-744 and 50 % R-134a**

| Composition CO$_2$/R-134a/R-1234ze(E) % by weight ▶ | | 16/50/34 | 18/50/32 | 20/50/32 | 22/50/28 | 24/50/26 | 26/50/24 | 28/50/22 | 30/50/20 |
|---|---|---|---|---|---|---|---|---|---|
| COP (heating) | | 2.24 | 2.24 | 2.25 | 2.25 | 2.25 | 2.26 | 2.26 | 2.26 |
| COP (heating) relative to Reference | | 106.1% | 106.4% | 106.6% | 106.8% | 106.9% | 107.0% | 107.0% | 107.0% |
| Volumetric heating capacity at suction | kJ/m$^3$ | 1585 | 1700 | 1818 | 1939 | 2061 | 2186 | 2312 | 2441 |
| Capacity relative to Reference | | 180.3% | 193.5% | 206.9% | 220.7% | 234.6% | 248.8% | 263.2% | 277.8% |
| | | | | | | | | | |
| Critical temperature | °C | 81.22 | 78.86 | 76.61 | 74.46 | 72.40 | 70.44 | 68.55 | 66.75 |
| Critical pressure | bar | 46.27 | 47.03 | 47.80 | 48.56 | 49.32 | 50.08 | 50.84 | 51.60 |
| | | | | | | | | | |
| Condenser enthalpy change | kJ/kg | 284.9 | 289.7 | 294.3 | 298.6 | 302.7 | 306.6 | 310.4 | 314.0 |
| Pressure ratio | | 15.53 | 15.14 | 14.75 | 14.37 | 14.00 | 13.64 | 13.30 | 12.97 |
| Refrigerant mass flow | kg/hr | 25.3 | 24.9 | 24.5 | 24.1 | 23.8 | 23.5 | 23.2 | 22.9 |
| Compressor discharge temperature | °C | 143.3 | 145.6 | 147.7 | 149.9 | 151.9 | 153.9 | 155.9 | 157.9 |
| Evaporator inlet pressure | bar | 1.44 | 1.55 | 1.67 | 1.79 | 1.91 | 2.04 | 2.17 | 2.31 |
| Condenser inlet pressure | bar | 22.0 | 23.1 | 24.3 | 25.4 | 26.5 | 27.6 | 28.7 | 29.8 |
| Evaporator inlet temperature | °C | -35.1 | -36.0 | -36.8 | -37.7 | -38.5 | -39.4 | -40.2 | -41.0 |
| Evaporator dewpoint | °C | -24.8 | -24.2 | -23.6 | -23.1 | -22.6 | -22.2 | -21.9 | -21.6 |
| Evaporator exit gas temperature | °C | -19.8 | -19.2 | -18.6 | -18.1 | -17.6 | -17.2 | -16.9 | -16.6 |
| Evaporator mean temperature | °C | -29.9 | -30.1 | -30.2 | -30.4 | -30.6 | -30.8 | -31.0 | -31.3 |
| Evaporator glide (out-in) | K | 10.3 | 11.8 | 13.2 | 14.6 | 15.9 | 17.2 | 18.3 | 19.4 |
| Compressor suction pressure | bar | 1.41 | 1.53 | 1.64 | 1.77 | 1.89 | 2.02 | 2.16 | 2.30 |
| Compressor discharge pressure | bar | 22.0 | 23.1 | 24.3 | 25.4 | 26.5 | 27.6 | 28.7 | 29.8 |
| Suction line pressure drop | Pa/m | 143 | 131 | 121 | 113 | 105 | 98 | 92 | 86 |
| Pressure drop relative to reference | | 48.9% | 45.0% | 41.6% | 38.6% | 35.9% | 33.6% | 31.4% | 29.5% |
| Condenser dew point | °C | 57.7 | 57.7 | 57.5 | 57.3 | 57.0 | 56.7 | 56.2 | 55.8 |
| Condenser bubble point | °C | 30.5 | 29.5 | 28.7 | 28.0 | 27.4 | 26.9 | 26.5 | 26.2 |
| Condenser exit liquid temperature | °C | 29.5 | 28.5 | 27.7 | 27.0 | 26.4 | 25.9 | 25.5 | 25.2 |
| Condenser mean temperature | °C | 44.1 | 43.6 | 43.1 | 42.7 | 42.2 | 41.8 | 41.4 | 41.0 |
| Condenser glide (in-out) | K | 27.1 | 28.1 | 28.8 | 29.3 | 29.6 | 29.7 | 29.7 | 29.6 |

EP 2 571 956 B1

**Table 15: Theoretical Performance Data of Selected R-744/R-32/R-1234ze(E) blends containing 0-14 % R-744 and 5 % R-32**

| Composition $CO_2$/R-32/R-1234ze(E) % by weight ▶ | | 0/5/95 | 2/5/93 | 4/5/91 | 6/5/89 | 8/5/87 | 10/5/85 | 12/5/83 | 14/5/81 |
|---|---|---|---|---|---|---|---|---|---|
| COP (heating) | | 2.07 | 2.11 | 2.15 | 2.17 | 2.19 | 2.21 | 2.22 | 2.23 |
| COP (heating) relative to Reference | | 98.0% | 100.2% | 101.8% | 103.1% | 104.0% | 104.8% | 105.4% | 105.9% |
| Volumetric heating capacity at suction | kJ/m3 | 729 | 813 | 900 | 990 | 1083 | 1179 | 1278 | 1379 |
| Capacity relative to Reference | | 83.0% | 92.5% | 102.4% | 112.7% | 123.3% | 134.2% | 145.4% | 156.9% |
| | | | | | | | | | |
| Critical temperature | °C | 106.60 | 103.13 | 99.78 | 96.58 | 93.54 | 90.65 | 87.91 | 85.29 |
| Critical pressure | bar | 39.06 | 39.91 | 40.71 | 41.47 | 42.23 | 42.98 | 43.73 | 44.48 |
| | | | | | | | | | |
| Condenser enthalpy change | kJ/kg | 226.5 | 237.7 | 247.3 | 255.7 | 263.2 | 269.9 | 276.1 | 281.7 |
| Pressure ratio | | 17.96 | 17.98 | 17.89 | 17.68 | 17.40 | 17.07 | 16.71 | 16.33 |
| Refrigerant mass flow | kg/hr | 31.8 | 30.3 | 29.1 | 28.2 | 27.4 | 26.7 | 26.1 | 25.6 |
| Compressor discharge temperature | °C | 118.1 | 121.9 | 125.4 | 128.6 | 131.6 | 134.4 | 137.1 | 139.6 |
| Evaporator inlet pressure | bar | 0.73 | 0.78 | 0.84 | 0.91 | 0.99 | 1.07 | 1.15 | 1.25 |
| Condenser inlet pressure | bar | 12.0 | 13.1 | 14.2 | 15.4 | 16.5 | 17.7 | 18.8 | 19.9 |
| Evaporator inlet temperature | °C | -29.9 | -30.5 | -31.3 | -32.1 | -32.9 | -33.7 | -34.6 | -35.6 |
| Evaporator dewpoint | °C | -29.4 | -28.8 | -28.1 | -27.3 | -26.5 | -25.8 | -25.1 | -24.4 |
| Evaporator exit gas temperature | °C | -24.4 | -23.8 | -23.1 | -22.3 | -21.5 | -20.8 | -20.1 | -19.4 |
| Evaporator mean temperature | °C | -29.6 | -29.7 | -29.7 | -29.7 | -29.7 | -29.8 | -29.9 | -30.0 |
| Evaporator glide (out-in) | K | 0.4 | 1.8 | 3.2 | 4.8 | 6.3 | 8.0 | 9.6 | 11.2 |
| Compressor suction pressure | bar | 0.67 | 0.73 | 0.80 | 0.87 | 0.95 | 1.03 | 1.12 | 1.22 |
| Compressor discharge pressure | bar | 12.0 | 13.1 | 14.2 | 15.4 | 16.5 | 17.7 | 18.8 | 19.9 |
| Suction line pressure drop | Pa/m | 368 | 319 | 280 | 248 | 222 | 200 | 181 | 166 |
| Pressure drop relative to reference | | 126.2% | 109.2% | 95.8% | 84.9% | 75.9% | 68.4% | 62.1% | 56.7% |
| Condenser dew point | °C | 53.8 | 55.3 | 56.6 | 57.6 | 58.3 | 58.9 | 59.3 | 59.5 |
| Condenser bubble point | °C | 48.6 | 44.2 | 40.6 | 37.8 | 35.4 | 33.5 | 31.9 | 30.5 |
| Condenser exit liquid temperature | °C | 47.6 | 43.2 | 39.6 | 36.8 | 34.4 | 32.5 | 30.9 | 29.5 |
| Condenser mean temperature | °C | 51.2 | 49.7 | 48.6 | 47.7 | 46.9 | 46.2 | 45.6 | 45.0 |
| Condenser qlide (in-out) | K | 5.2 | 11.1 | 15.9 | 19.8 | 22.9 | 25.4 | 27.4 | 29.0 |

**Table 16: Theoretical Performance Data of Selected R-744/R-32/R-1234ze(E) blends containing 16-30 % R-744 and 5 % R-32**

| Composition $CO_2$/R-32/R-1234ze(E) % by weight ▶ | | 16/5/79 | 18/5/77 | 20/5/75 | 22/5/73 | 24/5/71 | 26/5/69 | 28/5/67 | 30/5/65 |
|---|---|---|---|---|---|---|---|---|---|
| COP (heating) | | 2.24 | 2.25 | 2.25 | 2.25 | 2.25 | 2.25 | 2.25 | 2.25 |
| COP (heating) relative to Reference | | 106.3% | 106.6% | 106.8% | 106.9% | 106.9% | 106.9% | 106.9% | 106.8% |
| Volumetric heating capacity at suction | kJ/m3 | 1482 | 1586 | 1692 | 1799 | 1907 | 2015 | 2125 | 2236 |
| Capacity relative to Reference | | 168.6% | 180.5% | 192.5% | 204.7% | 217.0% | 229.4% | 241.8% | 254.4% |
| Critical temperature | °C | 82.80 | 80.43 | 78.16 | 75.99 | 73.92 | 71.94 | 70.04 | 68.22 |
| Critical pressure | bar | 45.22 | 45.96 | 46.71 | 47.45 | 48.19 | 48.93 | 49.66 | 50.40 |
| Condenser enthalpy change | kJ/kg | 287.1 | 292.1 | 296.9 | 301.5 | 306.0 | 310.3 | 314.5 | 318.6 |
| Pressure ratio | | 15.95 | 15.57 | 15.21 | 14.86 | 14.52 | 14.20 | 13.89 | 13.59 |
| Refrigerant mass flow | kg/hr | 25.1 | 24.6 | 24.2 | 23.9 | 23.5 | 23.2 | 22.9 | 22.6 |
| Compressor discharge temperature | °C | 142.1 | 144.5 | 146.8 | 149.1 | 151.3 | 153.6 | 155.8 | 158.0 |
| Evaporator inlet pressure | bar | 1.34 | 1.44 | 1.54 | 1.65 | 1.75 | 1.86 | 1.98 | 2.09 |
| Condenser inlet pressure | bar | 21.0 | 22.0 | 23.1 | 24.2 | 25.2 | 26.2 | 27.2 | 28.2 |
| Evaporator inlet temperature | °C | -36.5 | -37.5 | -38.5 | -39.5 | -40.4 | -41.4 | -42.3 | -43.1 |
| Evaporator dewpoint | °C | -23.7 | -23.2 | -22.6 | -22.2 | -21.8 | -21.4 | -21.1 | -20.9 |
| Evaporator exit gas temperature | °C | -18.7 | -18.2 | -17.6 | -17.2 | -16.8 | -16.4 | -16.1 | -15.9 |
| Evaporator mean temperature | °C | -30.1 | -30.3 | -30.6 | -30.8 | -31.1 | -31.4 | -31.7 | -32.0 |
| Evaporator glide (out-in) | K | 12.8 | 14.4 | 15.9 | 17.3 | 18.7 | 20.0 | 21.1 | 22.2 |
| Compressor suction pressure | bar | 1.31 | 1.42 | 1.52 | 1.63 | 1.73 | 1.85 | 1.96 | 2.08 |
| Compressor discharge pressure | bar | 21.0 | 22.0 | 23.1 | 24.2 | 25.2 | 26.2 | 27.2 | 28.2 |
| Suction line pressure drop | Pa/m | 152 | 140 | 130 | 121 | 113 | 105 | 99 | 93 |
| Pressure drop relative to reference | | 52.0% | 48.0% | 44.4% | 41.3% | 38.5% | 36.1% | 33.9% | 31.9% |
| Condenser dew point | °C | 59.6 | 59.6 | 59.5 | 59.3 | 59.0 | 58.6 | 58.1 | 57.6 |
| Condenser bubble point | °C | 29.4 | 28.4 | 27.6 | 26.9 | 26.3 | 25.7 | 25.3 | 24.9 |
| Condenser exit liquid temperature | °C | 28.4 | 27.4 | 26.6 | 25.9 | 25.3 | 24.7 | 24.3 | 23.9 |
| Condenser mean temperature | °C | 44.5 | 44.0 | 43.5 | 43.1 | 42.6 | 42.1 | 41.7 | 41.2 |
| Condenser glide (in-out) | K | 30.2 | 31.2 | 31.9 | 32.4 | 32.7 | 32.8 | 32.9 | 32.8 |

**Table 17: Theoretical Performance Data of Selected R-744/R-32/R-1234ze(E) blends containing 0-14 % R-744 and 10 % R-32**

| Composition CO$_2$/R-32/R-1234ze(E) % by weight ▶ | | 0/10/90 | 2/10/88 | 4/10/86 | 6/10/84 | 8/10/82 | 10/10/80 | 12/10/78 | 14/10/76 |
|---|---|---|---|---|---|---|---|---|---|
| COP (heating) | | 2.12 | 2.16 | 2.18 | 2.20 | 2.22 | 2.23 | 2.24 | 2.25 |
| COP (heating) relative to Reference | | 100.6% | 102.3% | 103.5% | 104.5% | 105.3% | 106.0% | 106.4% | 106.8% |
| Volumetric heating capacity at suction | kJ/m3 | 847 | 934 | 1024 | 1118 | 1215 | 1314 | 1415 | 1518 |
| Capacity relative to Reference | | 96.3% | 106.3% | 116.6% | 127.3% | 138.2% | 149.5% | 161.0% | 172.8% |
| | | | | | | | | | |
| Critical temperature | °C | 103.66 | 100.50 | 97.45 | 94.53 | 91.74 | 89.08 | 86.53 | 84.10 |
| Critical pressure | bar | 41.28 | 42.13 | 42.93 | 43.70 | 44.47 | 45.22 | 45.97 | 46.71 |
| | | | | | | | | | |
| Condenser enthalpy change | kJ/kg | 240.3 | 249.9 | 258.3 | 265.9 | 272.8 | 279.1 | 284.9 | 290.4 |
| Pressure ratio | | 17.03 | 16.94 | 16.77 | 16.52 | 16.25 | 15.93 | 15.61 | 15.27 |
| Refrigerant mass flow | kg/hr | 30.0 | 28.8 | 27.9 | 27.1 | 26.4 | 25.8 | 25.3 | 24.8 |
| Compressor discharge temperature | °C | 122.7 | 126.1 | 129.3 | 132.3 | 135.2 | 137.8 | 140.4 | 142.9 |
| Evaporator inlet pressure | bar | 0.82 | 0.88 | 0.95 | 1.03 | 1.11 | 1.20 | 1.29 | 1.38 |
| Condenser inlet pressure | bar | 13.1 | 14.2 | 15.3 | 16.4 | 17.5 | 18.6 | 19.7 | 20.8 |
| Evaporator inlet temperature | °C | -30.7 | -31.4 | -32.2 | -33.0 | -33.8 | -34.7 | -35.5 | -36.4 |
| Evaporator dewpoint | °C | -28.6 | -27.9 | -27.2 | -26.5 | -25.8 | -25.1 | -24.5 | -23.9 |
| Evaporator exit gas temperature | °C | -23.6 | -22.9 | -22.2 | -21.5 | -20.8 | -20.1 | -19.5 | -18.9 |
| Evaporator mean temperature | °C | -29.7 | -29.7 | -29.7 | -29.7 | -29.8 | -29.9 | -30.0 | -30.2 |
| Evaporator glide (out-in) | K | 2.1 | 3.5 | 5.0 | 6.5 | 8.0 | 9.6 | 11.1 | 12.5 |
| Compressor suction pressure | bar | 0.77 | 0.84 | 0.91 | 0.99 | 1.08 | 1.17 | 1.26 | 1.36 |
| Compressor discharge pressure | bar | 13.1 | 14.2 | 15.3 | 16.4 | 17.5 | 18.6 | 19.7 | 20.8 |
| Suction line pressure drop | Pa/m | 304 | 267 | 238 | 213 | 193 | 175 | 160 | 147 |
| Pressure drop relative to reference | | 104.0% | 91.6% | 81.4% | 73.0% | 65.9% | 59.9% | 54.8% | 50.3% |
| Condenser dew point | °C | 53.9 | 55.0 | 56.0 | 56.8 | 57.3 | 57.7 | 58.0 | 58.1 |
| Condenser bubble point | °C | 45.9 | 42.3 | 39.4 | 37.0 | 35.1 | 33.4 | 32.0 | 30.8 |
| Condenser exit liquid temperature | °C | 44.9 | 41.3 | 38.4 | 36.0 | 34.1 | 32.4 | 31.0 | 29.8 |
| Condenser mean temperature | °C | 49.9 | 48.7 | 47.7 | 46.9 | 46.2 | 45.6 | 45.0 | 44.4 |
| Condenser glide (in-out) | K | 8.0 | 12.7 | 16.6 | 19.7 | 22.3 | 24.3 | 26.0 | 27.3 |

**Table 18: Theoretical Performance Data of Selected R-744/R-32/R-1234ze(E) blends containing 16-30 % R-744 and 10 % R-32**

| Composition CO$_2$/R-32/R-1234ze(E) % by weight ▶ | 16/10/74 | 16/10/74 | 18/10/72 | 20/10/70 | 22/10/68 | 24/10/66 | 26/10/64 | 28/10/62 | 30/10/60 |
|---|---|---|---|---|---|---|---|---|---|
| COP (heating) | | | 2.26 | 2.27 | 2.27 | 2.27 | 2.27 | 2.26 | 2.26 |
| COP (heating) relative to Reference | | 107.1% | 107.3% | 107.4% | 107.5% | 107.5% | 107.5% | 107.4% | 107.3% |
| Volumetric heating capacity at suction | kJ/m3 | 1623 | 1730 | 1838 | 1947 | 2057 | 2169 | 2283 | 2397 |
| Capacity relative to Reference | | 184.7% | 196.9% | 209.1% | 221.6% | 234.1% | 246.8% | 259.8% | 272.8% |
| Critical temperature | °C | 81.78 | 79.56 | 77.44 | 75.40 | 73.45 | 71.58 | 69.78 | 68.05 |
| Critical pressure | bar | 47.46 | 48.20 | 48.93 | 49.67 | 50.41 | 51.14 | 51.88 | 52.61 |
| Condenser enthalpy change | kJ/kg | 295.5 | 300.4 | 305.1 | 309.6 | 314.0 | 318.2 | 322.3 | 326.2 |
| Pressure ratio | | 14.94 | 14.62 | 14.30 | 13.99 | 13.69 | 13.40 | 13.12 | 12.85 |
| Refrigerant mass flow | kg/hr | 24.4 | 24.0 | 23.6 | 23.3 | 22.9 | 22.6 | 22.3 | 22.1 |
| Compressor discharge temperature | °C | 145.3 | 147.6 | 149.9 | 152.1 | 154.4 | 156.6 | 158.7 | 160.8 |
| Evaporator inlet pressure | bar | 1.48 | 1.59 | 1.69 | 1.80 | 1.91 | 2.03 | 2.15 | 2.27 |
| Condenser inlet pressure | bar | 21.8 | 22.9 | 23.9 | 24.9 | 26.0 | 27.0 | 28.0 | 29.0 |
| Evaporator inlet temperature | °C | -37.3 | -38.2 | -39.1 | -39.9 | -40.8 | -41.5 | -42.3 | -43.0 |
| Evaporator dewpoint | °C | -23.3 | -22.9 | -22.4 | -22.0 | -21.7 | -21.4 | -21.1 | -20.9 |
| Evaporator exit gas temperature | °C | -18.3 | -17.9 | -17.4 | -17.0 | -16.7 | -16.4 | -16.1 | -15.9 |
| Evaporator mean temperature | °C | -30.3 | -30.5 | -30.7 | -31.0 | -31.2 | -31.5 | -31.7 | -31.9 |
| Evaporator glide (out-in) | K | 14.0 | 15.4 | 16.7 | 17.9 | 19.1 | 20.1 | 21.1 | 22.0 |
| Compressor suction pressure | bar | 1.46 | 1.56 | 1.67 | 1.78 | 1.90 | 2.01 | 2.13 | 2.26 |
| Compressor discharge pressure | bar | 21.8 | 22.9 | 23.9 | 24.9 | 26.0 | 27.0 | 28.0 | 29.0 |
| Suction line pressure drop | Pa/m | 136 | 126 | 117 | 109 | 102 | 96 | 90 | 85 |
| Pressure drop relative to reference | | 46.4% | 43.1% | 40.1% | 37.4% | 35.0% | 32.9% | 31.0% | 29.2% |
| Condenser dew point | °C | 58.1 | 58.0 | 57.8 | 57.6 | 57.2 | 56.8 | 56.3 | 55.8 |
| Condenser bubble point | °C | 29.7 | 28.9 | 28.1 | 27.4 | 26.9 | 26.4 | 25.9 | 25.6 |
| Condenser exit liquid temperature | °C | 28.7 | 27.9 | 27.1 | 26.4 | 25.9 | 25.4 | 24.9 | 24.6 |
| Condenser mean temperature | °C | 43.9 | 43.4 | 43.0 | 42.5 | 42.0 | 41.6 | 41.1 | 40.7 |
| Condenser glide (in-out) | K | 28.4 | 29.1 | 29.7 | 30.1 | 30.3 | 30.4 | 30.4 | 30.3 |

**Table 19: Theoretical Performance Data of Selected R-744/R-32/R-1234ze(E) blends containing 0-14 % R-744 and 15 % R-32**

| Composition CO$_2$/R-32/R-1234ze(E) % by weight ▶ | | 0/15/85 | 2/15/83 | 4/15/81 | 6/15/79 | 8/15/77 | 10/15/75 | 12/15/73 | 14/15/71 |
|---|---|---|---|---|---|---|---|---|---|
| COP (heating) | | 2.17 | 2.19 | 2.21 | 2.23 | 2.24 | 2.25 | 2.26 | 2.27 |
| COP (heating) relative to Reference | | 102.7% | 104.0% | 105.0% | 105.8% | 106.4% | 106.9% | 107.3% | 107.6% |
| Volumetric heating capacity at suction | kJ/m3 | 965 | 1056 | 1150 | 1247 | 1346 | 1447 | 1551 | 1656 |
| Capacity relative to Reference | | 109.9% | 120.2% | 130.9% | 141.9% | 153.2% | 164.7% | 176.5% | 188.5% |
| | | | | | | | | | |
| Critical temperature | °C | 101.02 | 98.12 | 95.32 | 92.63 | 90.05 | 87.59 | 85.23 | 82.97 |
| Critical pressure | bar | 43.26 | 44.09 | 44.90 | 45.68 | 46.45 | 47.21 | 47.96 | 48.71 |
| | | | | | | | | | |
| Condenser enthalpy change | kJ/kg | 252.5 | 261.1 | 268.8 | 275.8 | 282.2 | 288.2 | 293.8 | 299.1 |
| Pressure ratio | | 16.11 | 15.97 | 15.76 | 15.52 | 15.25 | 14.97 | 14.68 | 14.38 |
| Refrigerant mass flow | kg/hr | 28.5 | 27.6 | 26.8 | 26.1 | 25.5 | 25.0 | 24.5 | 24.1 |
| Compressor discharge temperature | °C | 126.9 | 130.1 | 133.1 | 135.9 | 138.6 | 141.2 | 143.7 | 146.2 |
| Evaporator inlet pressure | bar | 0.92 | 0.99 | 1.07 | 1.15 | 1.24 | 1.33 | 1.42 | 1.52 |
| Condenser inlet pressure | bar | 14.1 | 15.2 | 16.3 | 17.3 | 18.4 | 19.5 | 20.5 | 21.6 |
| Evaporator inlet temperature | °C | -31.6 | -32.3 | -33.0 | -33.8 | -34.6 | -35.4 | -36.2 | -37.0 |
| Evaporator dewpoint | °C | -27.9 | -27.2 | -26.5 | -25.9 | -25.2 | -24.6 | -24.1 | -23.6 |
| Evaporator exit gas temperature | °C | -22.9 | -22.2 | -21.5 | -20.9 | -20.2 | -19.6 | -19.1 | -18.6 |
| Evaporator mean temperature | °C | -29.7 | -29.7 | -29.8 | -29.8 | -29.9 | -30.0 | -30.2 | -30.3 |
| Evaporator glide (out-in) | K | 3.7 | 5.1 | 6.5 | 7.9 | 9.4 | 10.7 | 12.1 | 13.4 |
| Compressor suction pressure | bar | 0.88 | 0.95 | 1.03 | 1.12 | 1.21 | 1.30 | 1.40 | 1.50 |
| Compressor discharge pressure | bar | 14.1 | 15.2 | 16.3 | 17.3 | 18.4 | 19.5 | 20.5 | 21.6 |
| Suction line pressure drop | Pa/m | 257 | 229 | 206 | 186 | 169 | 155 | 143 | 132 |
| Pressure drop relative to reference | | 87.9% | 78.4% | 70.4% | 63.7% | 58.0% | 53.1% | 48.8% | 45.1% |
| Condenser dew point | °C | 53.6 | 54.5 | 55.2 | 55.8 | 56.2 | 56.5 | 56.6 | 56.6 |
| Condenser bubble point | °C | 44.1 | 41.1 | 38.7 | 36.6 | 34.9 | 33.4 | 32.1 | 31.1 |
| Condenser exit liquid temperature | °C | 43.1 | 40.1 | 37.7 | 35.6 | 33.9 | 32.4 | 31.1 | 30.1 |
| Condenser mean temperature | °C | 48.8 | 47.8 | 47.0 | 46.2 | 45.5 | 44.9 | 44.4 | 43.9 |
| Condenser glide (in-out) | K | 9.5 | 13.4 | 16.5 | 19.1 | 21.3 | 23.0 | 24.5 | 25.6 |

**Table 20: Theoretical Performance Data of Selected R-744/R-32/R-1234ze(E) blends containing 16-30 % R-744 and 15 % R-32**

| Composition $CO_2$/R-32/R-1234ze(E) % by weight ▶ | | 30/15/55 | 28/15/67 | 26/15/59 | 24/15/61 | 22/15/63 | 20/15/65 | 18/15167 | 16/15/69 |
|---|---|---|---|---|---|---|---|---|---|
| COP (heating) | | 2.27 | 2.28 | 2.28 | 2.28 | 2.28 | 2.28 | 2.28 | 2.27 |
| COP (heating) relative to Reference | | 107.8% | 107.9% | 108.0% | 108.0% | 108.1% | 108.0% | 107.9% | 107.8% |
| Volumetric heating capacity at suction | kJ/m3 | 2562 | 2442 | 2324 | 2209 | 2095 | 1983 | 1872 | 1763 |
| Capacity relative to Reference | | 291.5% | 277.9% | 264.5% | 251.4% | 238.4% | 225.6% | 213.1% | 200.7% |
| Critical temperature | °C | 67.88 | 69.51 | 71.21 | 72.98 | 74.82 | 76.73 | 78.72 | 80.80 |
| Critical pressure | bar | 54.63 | 53.90 | 53.16 | 52.42 | 51.68 | 50.94 | 50.20 | 49.46 |
| Condenser enthalpy change | kJ/kg | 333.8 | 330.0 | 326.1 | 322.0 | 317.8 | 313.4 | 308.9 | 304.1 |
| Pressure ratio | | 12.19 | 12.44 | 12.70 | 12.96 | 13.23 | 13.52 | 13.80 | 14.09 |
| Refrigerant mass flow | kg/hr | 21.6 | 21.8 | 22.1 | 22.4 | 22.7 | 23.0 | 23.3 | 23.7 |
| Compressor discharge temperature | °C | 163.6 | 161.6 | 159.5 | 157.4 | 155.2 | 153.1 | 150.8 | 148.5 |
| Evaporator inlet pressure | bar | 2.45 | 2.32 | 2.20 | 2.08 | 1.96 | 1.84 | 1.73 | 1.63 |
| Condenser inlet pressure | bar | 29.7 | 28.7 | 27.7 | 26.7 | 25.7 | 24.7 | 23.6 | 22.6 |
| Evaporator inlet temperature | °C | -42.5 | -42.0 | -41.4 | -40.7 | -40.1 | -39.3 | -38.6 | -37.8 |
| Evaporator dewpoint | °C | -21.1 | -21.3 | -21.5 | -21.7 | -22.0 | -22.3 | -22.7 | -23.1 |
| Evaporator exit gas temperature | °C | -16.1 | -16.3 | -16.5 | -16.7 | -17.0 | -17.3 | -17.7 | -18.1 |
| Evaporator mean temperature | °C | -31.8 | -31.6 | -31.4 | -31.2 | -31.0 | -30.8 | -30.6 | -30.5 |
| Evaporator glide (out-in) | K | 21.4 | 20.7 | 19.9 | 19.0 | 18.0 | 17.0 | 15.9 | 14.7 |
| Compressor suction pressure | bar | 2.44 | 2.31 | 2.18 | 2.06 | 1.94 | 1.83 | 1.71 | 1.61 |
| Compressor discharge pressure | bar | 29.7 | 28.7 | 27.7 | 26.7 | 25.7 | 24.7 | 23.6 | 22.6 |
| Suction line pressure drop | Pa/m | 78 | 83 | 88 | 93 | 100 | 106 | 114 | 122 |
| Pressure drop relative to reference | | 26.9% | 28.4% | 30.1% | 32.0% | 34.1% | 36.4% | 39.0% | 41.9% |
| Condenser dew point | °C | 54.1 | 54.6 | 55.1 | 55.5 | 55.9 | 56.2 | 56.4 | 56.6 |
| Condenser bubble point | °C | 26.3 | 26.6 | 27.0 | 27.5 | 28.0 | 28.6 | 29.3 | 30.1 |
| Condenser exit liquid temperature | °C | 25.3 | 25.6 | 26.0 | 26.5 | 27.0 | 27.6 | 28.3 | 29.1 |
| Condenser mean temperature | °C | 40.2 | 40.6 | 41.1 | 41.5 | 41.9 | 42.4 | 42.9 | 43.4 |
| Condenser glide (in-out) | K | 27.9 | 28.0 | 28.1 | 28.1 | 27.9 | 27.6 | 27.1 | 26.5 |

**Table 21: Theoretical Performance Data of Selected R-744/R-32/R-1234ze(E) blends containing 0-14 % R-744 and 20 % R-32**

| Composition CO$_2$/R-32/R-1234ze(E) % by weight ▶ | | 0/20/80 | 2/20/78 | 4/20/76 | 6/20/74 | 8/20/72 | 10/20/70 | 12/20/68 | 14/20/66 |
|---|---|---|---|---|---|---|---|---|---|
| COP (heating) | | 2.20 | 2.22 | 2.24 | 2.25 | 2.26 | 2.27 | 2.28 | 2.28 |
| COP (heating) relative to Reference | | 104.4% | 105.4% | 106.2% | 106.8% | 107.3% | 107.7% | 108.0% | 108.2% |
| Volumetric heating capacity at suction | kJ/m3 | 1085 | 1179 | 1275 | 1375 | 1476 | 1580 | 1685 | 1793 |
| Capacity relative to Reference | | 123.5% | 134.1% | 145.1% | 156.4% | 168.0% | 179.8% | 191.8% | 204.1% |
| Critical temperature | °C | 98.64 | 95.95 | 93.36 | 90.88 | 88.49 | 86.20 | 84.00 | 81.89 |
| Critical pressure | bar | 45.03 | 45.86 | 46.66 | 47.44 | 48.22 | 48.98 | 49.75 | 50.50 |
| Condenser enthalpy change | kJ/kg | 263.9 | 271.7 | 278.9 | 285.5 | 291.6 | 297.4 | 302.8 | 307.9 |
| Pressure ratio | | 15.25 | 15.09 | 14.88 | 14.65 | 14.40 | 14.15 | 13.88 | 13.62 |
| Refrigerant mass flow | kg/hr | 27.3 | 26.5 | 25.8 | 25.2 | 24.7 | 24.2 | 23.8 | 23.4 |
| Compressor discharge temperature | °C | 130.9 | 134.0 | 136.8 | 139.6 | 142.2 | 144.7 | 147.1 | 149.5 |
| Evaporator inlet pressure | bar | 1.03 | 1.10 | 1.18 | 1.27 | 1.36 | 1.46 | 1.56 | 1.66 |
| Condenser inlet pressure | bar | 15.1 | 16.1 | 17.2 | 18.2 | 19.3 | 20.3 | 21.3 | 22.4 |
| Evaporator inlet temperature | °C | -32.3 | -33.0 | -33.7 | -34.4 | -35.2 | -35.9 | -36.6 | -37.3 |
| Evaporator dewpoint | °C | -27.2 | -26.6 | -26.0 | -25.4 | -24.9 | -24.4 | -23.9 | -23.5 |
| Evaporator exit gas temperature | °C | -22.2 | -21.6 | -21.0 | -20.4 | -19.9 | -19.4 | -18.9 | -18.5 |
| Evaporator mean temperature | °C | -29.8 | -29.8 | -29.9 | -29.9 | -30.0 | -30.1 | -30.3 | -30.4 |
| Evaporator glide (out-in) | K | 5.1 | 6.4 | 7.7 | 9.0 | 10.3 | 11.5 | 12.7 | 13.9 |
| Compressor suction pressure | bar | 0.99 | 1.07 | 1.15 | 1.24 | 1.34 | 1.43 | 1.54 | 1.64 |
| Compressor discharge pressure | bar | 15.1 | 16.1 | 17.2 | 18.2 | 19.3 | 20.3 | 21.3 | 22.4 |
| Suction line pressure drop | Pa/m | 221 | 199 | 180 | 164 | 151 | 139 | 128 | 119 |
| Pressure drop relative to reference | | 75.6% | 68.1% | 61.7% | 56.3% | 51.6% | 47.5% | 43.9% | 40.8% |
| Condenser dew point | °C | 53.0 | 53.7 | 54.3 | 54.7 | 55.0 | 55.2 | 55.2 | 55.2 |
| Condenser bubble point | °C | 42.9 | 40.3 | 38.2 | 36.4 | 34.8 | 33.5 | 32.4 | 31.4 |
| Condenser exit liquid temperature | °C | 41.9 | 39.3 | 37.2 | 35.4 | 33.8 | 32.5 | 31.4 | 30.4 |
| Condenser mean temperature | °C | 47.9 | 47.0 | 46.2 | 45.5 | 44.9 | 44.3 | 43.8 | 43.3 |
| Condenser glide (in-out) | K | 10.2 | 13.4 | 16.1 | 18.3 | 20.1 | 21.6 | 22.9 | 23.8 |

**Table 22: Theoretical Performance Data of Selected R-744/R-32/R-1234ze(E) blends containing 16-30 % R-744 and 20 % R-32**

| Composition $CO_2$/R-32/R-1234ze(E) % by weight ▶ | | 16/20/64 | 18/20/62 | 20/20/60 | 22/20/58 | 24/20/56 | 26/20/54 | 28/20/52 | 30/20/50 |
|---|---|---|---|---|---|---|---|---|---|
| COP (heating) | | 2.29 | 2.29 | 2.29 | 2.29 | 2.29 | 2.29 | 2.29 | 2.28 |
| COP (heating) relative to Reference | | 108.4% | 108.5% | 108.5% | 108.6% | 108.5% | 108.5% | 108.4% | 108.3% |
| Volumetric heating capacity at suction | kJ/m3 | 1903 | 2014 | 2127 | 2243 | 2360 | 2481 | 2603 | 2729 |
| Capacity relative to Reference | | 216.5% | 229.2% | 242.1% | 255.2% | 268.6% | 282.3% | 296.3% | 310.6% |
| | | | | | | | | | |
| Critical temperature | °C | 79.87 | 77.92 | 76.05 | 74.25 | 72.52 | 70.86 | 69.25 | 67.70 |
| Critical pressure | bar | 51.26 | 52.01 | 52.76 | 53.51 | 54.25 | 55.00 | 55.75 | 56.49 |
| | | | | | | | | | |
| Condenser enthalpy change | kJ/kg | 312.7 | 317.4 | 321.8 | 326.1 | 330.1 | 334.0 | 337.8 | 341.3 |
| Pressure ratio | | 13.36 | 13.09 | 12.84 | 12.58 | 12.33 | 12.08 | 11.84 | 11.60 |
| Refrigerant mass flow | kg/hr | 23.0 | 22.7 | 22.4 | 22.1 | 21.8 | 21.6 | 21.3 | 21.1 |
| Compressor discharge temperature | °C | 151.8 | 154.0 | 156.2 | 158.4 | 160.4 | 162.5 | 164.5 | 166.4 |
| Evaporator inlet pressure | bar | 1.77 | 1.88 | 2.00 | 2.12 | 2.24 | 2.37 | 2.50 | 2.64 |
| Condenser inlet pressure | bar | 23.4 | 24.4 | 25.4 | 26.4 | 27.4 | 28.4 | 29.5 | 30.5 |
| Evaporator inlet temperature | °C | -38.0 | -38.7 | -39.3 | -39.9 | -40.5 | -41.0 | -41.4 | -41.8 |
| Evaporator dewpoint | °C | -23.1 | -22.7 | -22.4 | -22.1 | -21.9 | -21.7 | -21.5 | -21.3 |
| Evaporator exit gas temperature | °C | -18.1 | -17.7 | -17.4 | -17.1 | -16.9 | -16.7 | -16.5 | -16.3 |
| Evaporator mean temperature | °C | -30.5 | -30.7 | -30.9 | -31.0 | -31.2 | -31.3 | -31.5 | -31.6 |
| Evaporator glide (out-in) | K | 14.9 | 16.0 | 16.9 | 17.8 | 18.6 | 19.3 | 19.9 | 20.5 |
| Compressor suction pressure | bar | 1.75 | 1.86 | 1.98 | 2.10 | 2.23 | 2.35 | 2.49 | 2.63 |
| Compressor discharge pressure | bar | 23.4 | 24.4 | 25.4 | 26.4 | 27.4 | 28.4 | 29.5 | 30.5 |
| Suction line pressure drop | Pa/m | 111 | 104 | 97 | 91 | 86 | 81 | 77 | 72 |
| Pressure drop relative to reference | | 38.0% | 35.5% | 33.2% | 31.2% | 29.4% | 27.7% | 26.2% | 24.8% |
| Condenser dew point | °C | 55.1 | 54.9 | 54.6 | 54.3 | 53.9 | 53.5 | 53.0 | 52.5 |
| Condenser bubble point | °C | 30.5 | 29.8 | 29.1 | 28.5 | 28.0 | 27.6 | 27.3 | 27.0 |
| Condenser exit liquid temperature | °C | 29.5 | 28.8 | 28.1 | 27.5 | 27.0 | 26.6 | 26.3 | 26.0 |
| Condenser mean temperature | °C | 42.8 | 42.3 | 41.9 | 41.4 | 41.0 | 40.6 | 40.2 | 39.8 |
| Condenser glide (in-out) | K | 24.6 | 25.1 | 25.5 | 25.8 | 25.9 | 25.9 | 25.8 | 25.6 |

**Table 23: Theoretical Performance Data of Selected R-744/R-32/R-1234ze(E) blends containing 0-14 % R-744 and 25 % R-32**

| Composition CO$_2$/R-32/R-1234ze(E) % by weight ▶ | | 0/25/75 | 2/25173 | 4/25/71 | 6/25/69 | 8/25/67 | 10/25/65 | 12/25/63 | 14/25/61 |
|---|---|---|---|---|---|---|---|---|---|
| COP (heating) | | 2.23 | 2.25 | 2.26 | 2.27 | 2.28 | 2.29 | 2.29 | 2.29 |
| COP (heating) relative to Reference | | 105.7% | 106.5% | 107.2% | 107.7% | 108.1% | 108.4% | 108.6% | 108.8% |
| Volumetric heating capacity at suction | kJ/m3 | 1205 | 1301 | 1399 | 1500 | 1604 | 1710 | 1818 | 1928 |
| Capacity relative to Reference | | 137.1% | 148.0% | 159.2% | 170.8% | 182.5% | 194.6% | 206.9% | 219.4% |
| | | | | | | | | | |
| Critical temperature | °C | 96.47 | 93.97 | 91.57 | 89.26 | 87.04 | 84.91 | 82.86 | 80.89 |
| Critical pressure | bar | 46.62 | 47.44 | 48.24 | 49.03 | 49.81 | 50.59 | 51.36 | 52.13 |
| | | | | | | | | | |
| Condenser enthalpy change | kJ/kg | 274.8 | 282.1 | 288.9 | 295.2 | 301.1 | 306.6 | 311.8 | 316.8 |
| Pressure ratio | | 14.48 | 14.31 | 14.12 | 13.91 | 13.68 | 13.45 | 13.21 | 12.96 |
| Refrigerant mass flow | kg/hr | 26.2 | 25.5 | 24.9 | 24.4 | 23.9 | 23.5 | 23.1 | 22.7 |
| Compressor discharge temperature | °C | 134.9 | 137.8 | 140.5 | 143.2 | 145.7 | 148.2 | 150.6 | 152.9 |
| Evaporator inlet pressure | bar | 1.14 | 1.22 | 1.30 | 1.39 | 1.49 | 1.59 | 1.69 | 1.80 |
| Condenser inlet pressure | bar | 16.0 | 17.0 | 18.0 | 19.0 | 20.1 | 21.1 | 22.1 | 23.1 |
| Evaporator inlet temperature | °C | -32.9 | -33.6 | -34.2 | -34.9 | -35.5 | -36.2 | -36.8 | -37.4 |
| Evaporator dewpoint | °C | -26.8 | -26.2 | -25.7 | -25.2 | -24.7 | -24.3 | -23.9 | -23.5 |
| Evaporator exit gas temperature | °C | -21.8 | -21.2 | -20.7 | -20.2 | -19.7 | -19.3 | -18.9 | -18.5 |
| Evaporator mean temperature | °C | -29.8 | -29.9 | -30.0 | -30.0 | -30.1 | -30.2 | -30.3 | -30.4 |
| Evaporator glide (out-in) | K | 6.1 | 7.3 | 8.5 | 9.7 | 10.8 | 11.9 | 12.9 | 13.9 |
| Compressor suction pressure | bar | 1.10 | 1.19 | 1.28 | 1.37 | 1.47 | 1.57 | 1.67 | 1.78 |
| Compressor discharge pressure | bar | 16.0 | 17.0 | 18.0 | 19.0 | 20.1 | 21.1 | 22.1 | 23.1 |
| Suction line pressure drop | Pa/m | 193 | 175 | 160 | 147 | 135 | 125 | 116 | 108 |
| Pressure drop relative to reference | | 66.1% | 60.0% | 54.8% | 50.3% | 46.4% | 42.9% | 39.8% | 37.1% |
| Condenser dew point | °C | 52.3 | 52.8 | 53.2 | 53.5 | 53.7 | 53.8 | 53.8 | 53.8 |
| Condenser bubble point | °C | 42.0 | 39.8 | 37.9 | 36.3 | 34.9 | 33.7 | 32.6 | 31.7 |
| Condenser exit liquid temperature | °C | 41.0 | 38.8 | 36.9 | 35.3 | 33.9 | 32.7 | 31.6 | 30.7 |
| Condenser mean temperature | °C | 47.2 | 46.3 | 45.6 | 44.9 | 44.3 | 43.8 | 43.2 | 42.7 |
| Condenser glide (in-out) | K | 10.3 | 13.0 | 15.3 | 17.3 | 18.9 | 20.2 | 21.2 | 22.1 |

**Table 24: Theoretical Performance Data of Selected R-744/R-32/R-1234ze(E) blends containing 16-30 % R-744 and 25 % R-32**

| Composition CO$_2$/R-32/R-1234ze(E) % by weight ▶ | | 16/25/59 | 18/25/57 | 20/25/55 | 22/25/53 | 24/25/51 | 26/25/49 | 28/25/47 | 30/25/45 |
|---|---|---|---|---|---|---|---|---|---|
| COP (heating) | | 2.30 | 2.30 | 2.30 | 2.30 | 2.30 | 2.30 | 2.30 | 2.29 |
| COP (heating) relative to Reference | | 108.9% | 109.0% | 109.0% | 109.0% | 109.0% | 108.9% | 108.9% | 108.8% |
| Volumetric heating capacity at suction | kJ/m3 | 2040 | 2155 | 2272 | 2391 | 2513 | 2638 | 2766 | 2898 |
| Capacity relative to Reference | | 232.2% | 245.2% | 258.5% | 272.1% | 286.0% | 300.3% | 314.8% | 329.8% |
| | | | | | | | | | |
| Critical temperature | °C | 78.99 | 77.17 | 75.41 | 73.72 | 72.08 | 70.51 | 68.99 | 67.53 |
| Critical pressure | bar | 52.89 | 53.65 | 54.41 | 55.17 | 55.93 | 56.69 | 57.45 | 58.20 |
| | | | | | | | | | |
| Condenser enthalpy change | kJ/kg | 321.5 | 326.0 | 330.3 | 334.4 | 338.3 | 342.0 | 345.5 | 348.9 |
| Pressure ratio | | 12.72 | 12.48 | 12.24 | 12.00 | 11.76 | 11.53 | 11.29 | 11.06 |
| Refrigerant mass flow | kg/hr | 22.4 | 22.1 | 21.8 | 21.5 | 21.3 | 21.1 | 20.8 | 20.6 |
| Compressor discharge temperature | °C | 155.1 | 157.3 | 159.4 | 161.5 | 163.5 | 165.4 | 167.3 | 169.1 |
| Evaporator inlet pressure | bar | 1.91 | 2.03 | 2.15 | 2.28 | 2.41 | 2.54 | 2.68 | 2.83 |
| Condenser inlet pressure | bar | 24.1 | 25.1 | 26.1 | 27.1 | 28.1 | 29.1 | 30.2 | 31.2 |
| Evaporator inlet temperature | °C | -38.0 | -38.5 | -39.1 | -39.6 | -40.0 | -40.4 | -40.8 | -41.1 |
| Evaporator dewpoint | °C | -23.1 | -22.8 | -22.6 | -22.3 | -22.1 | -21.9 | -21.8 | -21.7 |
| Evaporator exit gas temperature | °C | -18.1 | -17.8 | -17.6 | -17.3 | -17.1 | -16.9 | -16.8 | -16.7 |
| Evaporator mean temperature | °C | -30.6 | -30.7 | -30.8 | -30.9 | -31.1 | -31.2 | -31.3 | -31.4 |
| Evaporator glide (out-in) | K | 14.8 | 15.7 | 16.5 | 17.2 | 17.9 | 18.5 | 19.0 | 19.4 |
| Compressor suction pressure | bar | 1.90 | 2.01 | 2.14 | 2.26 | 2.39 | 2.53 | 2.67 | 2.82 |
| .Compressor discharge pressure | bar | 24.1 | 25.1 | 26.1 | 27.1 | 28.1 | 29.1 | 30.2 | 31.2 |
| Suction line pressure drop | Pa/m | 101 | 95 | 89 | 84 | 79 | 75 | 71 | 67 |
| Pressure drop relative to reference | | 34.7% | 32.5% | 30.5% | 28.7% | 27.1% | 25.6% | 24.2% | 23.0% |
| Condenser dew point | °C | 53.6 | 53.4 | 53.1 | 52.8 | 52.4 | 52.0 | 51.5 | 51.0 |
| Condenser bubble point | °C | 30.9 | 30.2 | 29.6 | 29.1 | 28.6 | 28.2 | 27.9 | 27.6 |
| Condenser exit liquid temperature | °C | 29.9 | 29.2 | 28.6 | 28.1 | 27.6 | 27.2 | 26.9 | 26.6 |
| Condenser mean temperature | °C | 42.3 | 41.8 | 41.4 | 40.9 | 40.5 | 40.1 | 39.7 | 39.3 |
| Condenser glide (in-out) | K | 22.7 | 23.2 | 23.5 | 23.7 | 23.8 | 23.7 | 23.6 | 23.4 |

**Table 25: Theoretical Performance Data of Selected R-744/R-32/R-1234ze(E) blends containing 0-14 % R-744 and 30 % R-32**

| Composition CO$_2$/R-32/R-1234ze(E) % by weight ▶ | | 0/30/70 | 2/30/68 | 4/30/66 | 6/30/64 | 8/30/62 | 10/30/60 | 2/30/58 | 14/30/56 |
|---|---|---|---|---|---|---|---|---|---|
| COP (heating) | | 2.25 | 2.27 | 2.28 | 2.29 | 2.29 | 2.30 | 2.30 | 2.30 |
| COP (heating) relative to Reference | | 106.8% | 107.5% | 108.0% | 108.4% | 108.7% | 109.0% | 109.2% | 109.3% |
| Volumetric heating capacity at suction | kJ/m3 | 1323 | 1421 | 1522 | 1625 | 1730 | 1838 | 1949 | 2062 |
| Capacity relative to Reference | | 150.5% | 161.7% | 173.2% | 184.9% | 196.9% | 209.2% | 221.8% | 234.7% |
| | | | | | | | | | |
| Critical temperature | °C | 94.49 | 92.17 | 89.93 | 87.77 | 85.70 | 83.71 | 81.79 | 79.95 |
| Critical pressure | bar | 48.05 | 48.86 | 49.66 | 50.46 | 51.25 | 52.03 | 52.82 | 53.60 |
| | | | | | | | | | |
| Condenser enthalpy change | kJ/kg | 285.4 | 292.4 | 298.9 | 304.9 | 310.6 | 315.9 | 321.0 | 325.8 |
| Pressure ratio | | 13.81 | 13.64 | 13.46 | 13.26 | 13.05 | 12.84 | 12.61 | 12.39 . |
| Refrigerant mass flow | kg/hr | 25.2 | 24.6 | 24.1 | 23.6 | 23.2 | 22.8 | 22.4 | 22.1 |
| Compressor discharge temperature | °C | 138.8 | 141.6 | 144.3 | 146.8 | 149.3 | 151.7 | 154.1 | 156.3 |
| Evaporator inlet pressure | bar | 1.25 | 1.33 | 1.42 | 1.52 | 1.62 | 1.72 | 1.83 | 1.94 |
| Condenser inlet pressure | bar | 16.8 | 17.8 | 18.8 | 19.8 | 20.8 | 21.8 | 22.8 | 23.8 |
| Evaporator inlet temperature | °C | -33.3 | -33.9 | -34.5 | -35.1 | -35.7 | -36.2 | -36.8 | -37.3 |
| Evaporator dewpoint | °C | -26.5 | -26.0 | -25.6 | -25.1 | -24.7 | -24.3 | -24.0 | -23.6 |
| Evaporator exit gas temperature | °C | -21.5 | -21.0 | -20.6 | -20.1 | -19.7 | -19.3 | -19.0 | -18.6 |
| Evaporator mean temperature | °C | -29.9 | -30.0 | -30.0 | -30.1 | -30.2 | -30.3 | -30.4 | -30.5 |
| Evaporator glide (out-in) | K | 6.8 | 7.9 | 9.0 | 10.0 | 11.0 | 11.9 | 12.8 | 13.7 |
| Compressor suction pressure | bar | 1.22 | 1.30 | 1.40 | 1.49 | 1.59 | 1.70 | 1.81 | 1.92 |
| Compressor discharge pressure | bar | 16.8 | 17.8 | 18.8 | 19.8 | 20.8 | 21.8 | 22.8 | 23.8 |
| Suction line pressure drop | Pa/m | 171 | 156 | 144 | 132 | 123 | 114 | 106 | 99 |
| Pressure drop relative to reference | | 58.5% | 53.5% | 49.1% | 45.3% | 42.0% | 39.0% | 36.4% | 34.0% |
| Condenser dew point | °C | 51.4 | 51.8 | 52.2 | 52.4 | 52.5 | 52.5 | 52.5 | 52.4 |
| Condenser bubble point | °C | 41.4 | 39.4 | 37.7 | 36.3 | 35.0 | 33.9 | 32.9 | 32.0 |
| Condenser exit liquid temperature | °C | 40.4 | 38.4 | 36.7 | 35.3 | 34.0 | 32.9 | 31.9 | 31.0 |
| Condenser mean temperature | °C | 46.4 | 45.6 | 44.9 | 44.3 | 43.7 | 43.2 | 42.7 | 42.2 |
| Condenser glide (in-out) | K | 10.0 | 12.4 | 14.4 | 16.1 | 17.5 | 18.7 | 19.6 | 20.4 |

**Table 26: Theoretical Performance Data of Selected R-744/R-32/R-1234ze(E) blends containing 16-30 % R-744 and 30 % R-32**

| Composition $CO_2$/R-32/R-1234ze(E) % by weight ▶ | | 16/30/54 | 18/30/52 | 20/3/50 | 22/30/48 | 24/30/46 | 26/30/44 | 28/30/42 | 30/30/40 |
|---|---|---|---|---|---|---|---|---|---|
| COP (heating) | | 2.31 | 2.31 | 2.31 | 2.31 | 2.31 | 2.31 | 2.31 | 2.30 |
| COP (heating) relative to Reference | | 109.4% | 109.4% | 109.5% | 109.5% | 109.4% | 109.4% | 109.4% | 109.3% |
| Volumetric heating capacity at suction | kJ/m3 | 2177 | 2296 | 2416 | 2540 | 2667 | 2797 | 2931 | 3068 |
| Capacity relative to Reference | | 247.8% | 261.3% | 275.0% | 289.1% | 303.5% | 318.3% | 333.5% | 349.2% |
| | | | | | | | | | |
| Critical temperature | °C | 78.17 | 76.45 | 74.80 | 73.21 | 71.67 | 70.18 | 68.75 | 67.36 |
| Critical pressure | bar | 54.37 | 55.15 | 55.92 | 56.70 | 57.47 | 58.24 | 59.01 | 59.78 |
| | | | | | | | | | |
| Condenser enthalpy change | kJ/kg | 330.3 | 334.7 | 338.8 | 342.7 | 346.4 | 350.0 | 353.3 | 356.5 |
| Pressure ratio | | 12.16 | 11.93 | 11.70 | 11.48 | 11.25 | 11.03 | 10.80 | 10.58 . |
| Refrigerant mass flow | kg/hr | 21.8 | 21.5 | 21.3 | 21.0 | 20.8 | 20.6 | 20.4 | 20.2 |
| Compressor discharge temperature | °C | 158.5 | 160.6 | 162.6 | 164.6 | 166.5 | 168.3 | 170.1 | 171.7 |
| Evaporator inlet pressure | bar | 2.06 | 2.18 | 2.31 | 2.44 | 2.57 | 2.72 | 2.87 | 3.02 |
| Condenser inlet pressure | bar | 24.8 | 25.8 | 26.8 | 27.8 | 28.8 | 29.8 | 30.8 | 31.9 |
| Evaporator inlet temperature | °C | -37.8 | -38.2 | -38.7 | -39.1 | -39.4 | -39.7 | -40.0 | -40.2 |
| Evaporator dewpoint | °C | -23.3 | -23.1 | -22.8 | -22.6 | -22.4 | -22.3 | -22.2 | -22.1 |
| Evaporator exit gas temperature | °C | -18.3 | -18.1 | -17.8 | -17.6 | -17.4 | -17.3 | -17.2 | -17.1 |
| Evaporator mean temperature | °C | -30.6 | -30.7 | -30.8 | -30.8 | -30.9 | -31.0 | -31.1 | -31.1 |
| Evaporator glide (out-in) | K | 14.4 | 15.2 | 15.8 | 16.4 | 17.0 | 17.4 | 17.8 | 18.2 |
| Compressor suction pressure | bar | 2.04 | 2.16 | 2.29 | 2.42 | 2.56 | 2.71 | 2.86 | 3.01 |
| Compressor discharge pressure | bar | 24.8 | 25.8 | 26.8 | 27.8 | 28.8 | 29.8 | 30.8 | 31.9 |
| Suction line pressure drop | Pa/m | 93 | 87 | 82 | 78 | 73 | 69 | 66 | 62 |
| Pressure drop relative to reference | | 31.9% | 29.9% | 28.2% | 26.6% | 25.1% | 23.7% | 22.5% | 21.3% |
| Condenser dew point | °C | 52.2 | 52.0 | 51.7 | 51.3 | 51.0 | 50.5 | 50.1 | 49.6 |
| Condenser bubble point | °C | 31.3 | 30.6 | 30.1 | 29.6 | 29.2 | 28.8 | 28.5 | 28.3 |
| Condenser exit liquid temperature | °C | 30.3 | 29.6 | 29.1 | 28.6 | 28.2 | 27.8 | 27.5 | 27.3 |
| Condenser mean temperature | °C | 41.7 | 41.3 | 40.9 | 40.5 | 40.1 | 39.7 | 39.3 | 38.9 |
| Condenser glide (in-out) | K | 20.9 | 21.3 | 21.6 | 21.7 | 21.8 | 21.7 | 21.6 | 21.3 |

**Table 27: Theoretical Performance Data of Selected R-744/R-32/R-134a/R-1234ze(E) blends containing 0-14 % R-744, 5 % R-32 and 5 % R-134a**

| Composition CO$_2$/R-32/R-134a/R-1234ze(E) % by weight ▶ | | 0/5/5/90 | 2/5/5/88 | 4/5/5/86 | 6/5/5/84 | 8/5/5/82 | 10/5/5/80 | 12/5/5/78 | 14/5/5/76 |
|---|---|---|---|---|---|---|---|---|---|
| COP (heating) | | 2.07 | 2.12 | 2.15 | 2.18 | 2.20 | 2.21 | 2.22 | 2.23 |
| COP (heating) relative to Reference | | 98.2% | 100.3% | 101.9% | 103.2% | 104.1% | 104.9% | 105.5% | 106.0% |
| Volumetric heating capacity at suction | kJ/m³ | 748 | 833 | 920 | 1012 | 1106 | 1203 | 1302 | 1405 |
| Capacity relative to Reference | | 85.2% | 94.8% | 104.7% | 115.1% | 125.8% | 136.9% | 148.2% | 159.8% |
| Critical temperature | °C | 106.20 | 102.70 | 99.37 | 96.19 | 93.18 | 90.31 | 87.59 | 84.99 |
| Critical pressure | bar | 39.52 | 40.32 | 41.10 | 41.86 | 42.62 | 43.37 | 44.11 | 44.86 |
| Condenser enthalpy change | kJ/kg | 227.4 | 238.4 | 247.9 | 256.2 | 263.7 | 270.3 | 276.5 | 282.1 |
| Pressure ratio | | 17.76 | 17.77 | 17.68 | 17.47 | 17.19 | 16.87 | 16.51 | 16.14 |
| Refrigerant mass flow | kg/hr | 31.7 | 30.2 | 29.0 | 28.1 | 27.3 | 26.6 | 26.0 | 25.5 |
| Compressor discharge temperature | °C | 118.5 | 122.3 | 125.8 | 129.0 | 132.0 | 134.8 | 137.5 | 140.0 |
| Evaporator inlet pressure | bar | 0.75 | 0.80 | 0.86 | 0.93 | 1.01 | 1.09 | 1.18 | 1.27 |
| Condenser inlet pressure | bar | 12.1 | 13.3 | 14.4 | 15.6 | 16.7 | 17.9 | 19.0 | 20.1 |
| Evaporator inlet temperature | °C | -29.9 | -30.6 | -31.3 | -32.1 | -32.9 | -33.7 | -34.6 | -35.5 |
| Evaporator dewpoint | °C | -29.4 | -28.7 | -28.0 | -27.3 | -26.5 | -25.8 | -25.1 | -24.4 |
| Evaporator exit gas temperature | °C | -24.4 | -23.7 | -23.0 | -22.3 | -21.5 | -20.8 | -20.1 | -19.4 |
| Evaporator mean temperature | °C | -29.6 | -29.7 | -29.7 | -29.7 | -29.7 | -29.8 | -29.9 | -30.0 |
| Evaporator glide (out-in) | K | 0.5 | 1.9 | 3.3 | 4.8 | 6.3 | 7.9 | 9.5 | 11.1 |
| Compressor suction pressure | bar | 0.68 | 0.75 | 0.82 | 0.89 | 0.97 | 1.06 | 1.15 | 1.24 |
| Compressor discharge pressure | bar | 12.1 | 13.3 | 14.4 | 15.6 | 16.7 | 17.9 | 19.0 | 20.1 |
| Suction line pressure drop | Pa/m | 358 | 311 | 273 | 242 | 217 | 196 | 178 | 162 |
| Pressure drop relative to reference | | 122.7% | 106.4% | 93.5% | 83.0% | 74.3% | 67.0% | 60.9% | 55.6% |
| Condenser dew point | °C | 53.6 | 55.1 | 56.3 | 57.2 | 58.0 | 58.5 | 58.9 | 59.1 |
| Condenser bubble point | °C | 48.6 | 44.2 | 40.7 | 37.9 | 35.6 | 33.7 | 32.1 | 30.8 |
| Condenser exit liquid temperature | °C | 47.6 | 43.2 | 39.7 | 36.9 | 34.6 | 32.7 | 31.1 | 29.8 |
| Condenser mean temperature | °C | 51.1 | 49.7 | 48.5 | 47.6 | 46.8 | 46.1 | 45.5 | 44.9 |
| Condenser glide (in-out) | K | 5.0 | 10.8 | 15.5 | 19.3 | 22.4 | 24.9 | 26.8 | 28.4 |

**Table 28: Theoretical Performance Data of Selected R-744/R-32/R-134a/R-1234ze(E) blends containing 16-30 % R-744, 5 % R-32 and 5 % R-134a**

| Composition $CO_2$/R-32/R-134a/R-1234ze(E) % by weight ► | | 16/5/5/74 | 18/5/5/72 | 20/5/5/70 | 22/5/5/68 | 24/5/5/66 | 26/5/5/64 | 28/5/5/62 | 30/5/5/60 |
|---|---|---|---|---|---|---|---|---|---|
| COP (heating) | | 2.24 | 2.25 | 2.25 | 2.25 | 2.26 | 2.26 | 2.25 | 2.25 |
| COP (heating) relative to Reference | | 106.3% | 106.6% | 106.8% | 106.9% | 107.0% | 107.0% | 106.9% | 106.8% |
| Volumetric heating capacity at suction | kJ/m³ | 1509 | 1615 | 1722 | 1831 | 1941 | 2052 | 2164 | 2277 |
| Capacity relative to Reference | | 171.7% | 183.7% | 196.0% | 208.4% | 220.9% | 233.5% | 246.2% | 259.1% |
| Critical temperature | °C | 82.52 | 80.17 | 77.92 | 75.76 | 73.71 | 71.74 | 69.85 | 68.04 |
| Critical pressure | bar | 45.60 | 46.34 | 47.08 | 47.82 | 48.56 | 49.30 | 50.04 | 50.78 |
| Condenser enthalpy change | kJ/kg | 287.4 | 292.4 | 297.2 | 301.7 | 306.1 | 310.4 | 314.5 | 318.5 |
| Pressure ratio | | 15.77 | 15.40 | 15.03 | 14.68 | 14.35 | 14.02 | 13.72 | 13.42 |
| Refrigerant mass flow | kg/hr | 25.1 | 24.6 | 24.2 | 23.9 | 23.5 | 23.2 | 22.9 | 22.6 |
| Compressor discharge temperature | °C | 142.4 | 144.8 | 147.1 | 149.3 | 151.6 | 153.8 | 155.9 | 158.1 |
| Evaporator inlet pressure | bar | 1.37 | 1.47 | 1.57 | 1.68 | 1.79 | 1.90 | 2.02 | 2.14 |
| Condenser inlet pressure | bar | 21.2 | 22.2 | 23.3 | 24.4 | 25.4 | 26.5 | 27.5 | 28.5 |
| Evaporator inlet temperature | °C | -36.5 | -37.4 | -38.4 | -39.3 | -40.2 | -41.1 | -42.0 | -42.8 |
| Evaporator dewpoint | °C | -23.8 | -23.2 | -22.7 | -22.3 | -21.9 | -21.5 | -21.2 | -21.0 |
| Evaporator exit gas temperature | °C | -18.8 | -18.2 | -17.7 | -17.3 | -16.9 | -16.5 | -16.2 | -16.0 |
| Evaporator mean temperature | °C | -30.1 | -30.3 | -30.5 | -30.8 | -31.0 | -31.3 | -31.6 | -31.9 |
| Evaporator glide (out-in) | K | 12.7 | 14.2 | 15.6 | 17.0 | 18.4 | 19.6 | 20.8 | 21.8 |
| Compressor suction pressure | bar | 1.34 | 1.45 | 1.55 | 1.66 | 1.77 | 1.89 | 2.00 | 2.12 |
| Compressor discharge pressure | bar | 21.2 | 22.2 | 23.3 | 24.4 | 25.4 | 26.5 | 27.5 | 28.5 |
| Suction line pressure drop | Pa/m | 149 | 137 | 127 | 118 | 111 | 103 | 97 | 91 |
| Pressure drop relative to reference | | 51.0% | 47.1% | 43.6% | 40.5% | 37.8% | 35.4% | 33.3% | 31.3% |
| Condenser dew point | °C | 59.2 | 59.2 | 59.0 | 58.8 | 58.5 | 58.1 | 57.7 | 57.2 |
| Condenser bubble point | °C | 29.6 | 28.7 | 27.9 | 27.1 | 26.5 | 26.0 | 25.5 | 25.2 |
| Condenser exit liquid temperature | °C | 28.6 | 27.7 | 26.9 | 26.1 | 25.5 | 25.0 | 24.5 | 24.2 |
| Condenser mean temperature | °C | 44.4 | 43.9 | 43.5 | 43.0 | 42.5 | 42.1 | 41.6 | 41.2 |
| Condenser glide (in-out) | K | 29.6 | 30.5 | 31.2 | 31.7 | 32.0 | 32.1 | 32.1 | 32.0 |

**Table 29: Theoretical Performance Data of Selected R-744/R-32/R-134a/R-1234ze(E) blends containing 0-14 % R-744, 5 % R-32 and 10 % R-134a**

| Composition CO$_2$/R-32/R-134a/R-1234ze(E) % by weight ▶ | | 0/5/10/85 | 2/5/10/83 | 4/5/10/81 | 6/5/10/79 | 8/5/10/77 | 10/5/10/75 | 12/5/10/73 | 14/5/10/71 |
|---|---|---|---|---|---|---|---|---|---|
| COP (heating) | | 2.08 | 2.12 | 2.15 | 2.18 | 2.20 | 2.21 | 2.23 | 2.24 |
| COP (heating) relative to Reference | | 98.5% | 100.5% | 102.0% | 103.3% | 104.2% | 105.0% | 105.5% | 106.0% |
| Volumetric heating capacity at suction | kJ/m$^3$ | 766 | 852 | 940 | 1032 | 1127 | 1226 | 1326 | 1430 |
| Capacity relative to Reference | | 87.2% | 96.9% | 107.0% | 117.5% | 128.3% | 139.5% | 151.0% | 162.7% |
| | | | | | | | | | |
| Critical temperature | °C | 105.78 | 102.29 | 98.97 | 95.82 | 92.83 | 89.99 | 87.28 | 84.71 |
| Critical pressure | bar | 39.92 | 40.71 | 41.48 | 42.23 | 42.99 | 43.73 | 44.48 | 45.22 |
| | | | | | | | | | |
| Condenser enthalpy change | kJ/kg | 228.3 | 239.1 | 248.6 | 256.8 | 264.2 | 270.9 | 276.9 | 282.5 |
| Pressure ratio | | 17.57 | 17.58 | 17.48 | 17.27 | 17.00 | 16.68 | 16.33 | 15.97 |
| Refrigerant mass flow | kg/hr | 31.5 | 30.1 | 29.0 | 28.0 | 27.3 | 26.6 | 26.0 | 25.5 |
| Compressor discharge temperature | °C | 119.0 | 122.7 | 126.2 | 129.4 | 132.4 | 135.2 | 137.8 | 140.3 |
| Evaporator inlet pressure | bar | 0.76 | 0.82 | 0.88 | 0.95 | 1.03 | 1.11 | 1.20 | 1.30 |
| Condenser inlet pressure | bar | 12.3 | 13.5 | 14.6 | 15.8 | 16.9 | 18.0 | 19.2 | 20.3 |
| Evaporator inlet temperature | °C | -30.0 | -30.6 | -31.4 | -32.1 | -32.9 | -33.7 | -34.6 | -35.5 |
| Evaporator dewpoint | °C | -29.4 | -28.7 | -28.0 | -27.3 | -26.6 | -25.8 | -25.1 | -24.5 |
| Evaporator exit gas temperature | °C | -24.4 | -23.7 | -23.0 | -22.3 | -21.6 | -20.8 | -20.1 | -19.5 |
| Evaporator mean temperature | °C | -29.7 | -29.7 | -29.7 | -29.7 | -29.7 | -29.8 | -29.9 | -30.0 |
| Evaporator glide (out-in) | K | 0.6 | 1.9 | 3.3 | 4.8 | 6.3 | 7.9 | 9.4 | 11.0 |
| Compressor suction pressure | bar | 0.70 | 0.77 | 0.84 | 0.91 | 0.99 | 1.08 | 1.17 | 1.27 |
| Compressor discharge pressure | bar | 12.3 | 13.5 | 14.6 | 15.8 | 16.9 | 18.0 | 19.2 | 20.3 |
| Suction line pressure drop | Pa/m | 349 | 303 | 267 | 237 | 212 | 192 | 174 | 159 |
| Pressure drop relative to reference | | 119.4% | 103.8% | 91.3% | 81.1% | 72.7% | 65.7% | 59.7% | 54.5% |
| Condenser dew point | °C | 53.4 | 54.8 | 56.0 | 56.9 | 57.6 | 58.2 | 58.5 | 58.7 |
| Condenser bubble point | °C | 48.6 | 44.3 | 40.8 | 38.0 | 35.7 | 33.9 | 32.3 | 31.0 |
| Condenser exit liquid temperature | °C | 47.6 | 43.3 | 39.8 | 37.0 | 34.7 | 32.9 | 31.3 | 30.0 |
| Condenser mean temperature | °C | 51.0 | 49.6 | 48.4 | 47.5 | 46.7 | 46.0 | 45.4 | 44.8 |
| Condenser glide (in-out) | K | 4.9 | 10.5 | 15.2 | 18.9 | 21.9 | 24.3 | 26.2 | 27.8 |

**Table 30: Theoretical Performance Data of Selected R-744/R-32/R-134a/R-1234ze(E) blends containing 16-30 % R-744, 5 % R-32 and 10 % R-134a**

| Composition CO$_2$/R-32/R-134a/R-1234ze(E) % by weight ▶ | | 16/5/10/69 | 18/5/10/67 | 20/5/10/65 | 22/5/10/63 | 24/5/10/61 | 26/5/10/59 | 28/5/10/57 | 30/5/10/55 |
|---|---|---|---|---|---|---|---|---|---|
| COP (heating) | | 2.24 | 2.25 | 2.25 | 2.26 | 2.26 | 2.26 | 2.26 | 2.25 |
| COP (heating) relative to Reference | | 106.4% | 106.7% | 106.8% | 107.0% | 107.0% | 107.0% | 107.0% | 106.9% |
| Volumetric heating capacity at suction | kJ/m$^3$ | 1535 | 1643 | 1752 | 1862 | 1974 | 2088 | 2202 | 2318 |
| Capacity relative to Reference | | 174.7% | 187.0% | 199.4% | 212.0% | 224.7% | 237.6% | 250.6% | 263.8% |
| | | | | | | | | | |
| Critical temperature | °C | 82.25 | 79.91 | 77.68 | 75.54 | 73.50 | 71.55 | 69.67 | 67.87 |
| Critical pressure | bar | 45.96 | 46.71 | 47.45 | 48.19 | 48.93 | 49.67 | 50.40 | 51.14 |
| | | | | | | | | | |
| Condenser enthalpy change | kJ/kg | 287.8 | 292.8 | 297.5 | 302.0 | 306.3 | 310.5 | 314.6 | 318.5 |
| Pressure ratio | | 15.60 | 15.23 | 14.87 | 14.52 | 14.18 | 13.86 | 13.55 | 13.25 |
| Refrigerant mass flow | kg/hr | 25.0 | 24.6 | 24.2 | 23.8 | 23.5 | 23.2 | 22.9 | 22.6 |
| Compressor discharge temperature | °C | 142.8 | 145.1 | 147.4 | 149.6 | 151.8 | 154.0 | 156.1 | 158.2 |
| Evaporator inlet pressure | bar | 1.40 | 1.50 | 1.60 | 1.71 | 1.83 | 1.94 | 2.06 | 2.19 |
| Condenser inlet pressure | bar | 21.4 | 22.5 | 23.5 | 24.6 | 25.6 | 26.7 | 27.7 | 28.8 |
| Evaporator inlet temperature | °C | -36.4 | -37.3 | -38.2 | -39.1 | -40.0 | -40.9 | -41.7 | -42.5 |
| Evaporator dewpoint | °C | -23.9 | -23.3 | -22.8 | -22.4 | -22.0 | -21.6 | -21.3 | -21.1 |
| Evaporator exit gas temperature | °C | -18.9 | -18.3 | -17.8 | -17.4 | -17.0 | -16.6 | -16.3 | -16.1 |
| Evaporator mean temperature | °C | -30.1 | -30.3 | -30.5 | -30.7 | -31.0 | -31.2 | -31.5 | -31.8 |
| Evaporator glide (out-in) | K | 12.5 | 14.0 | 15.4 | 16.8 | 18.1 | 19.3 | 20.4 | 21.4 |
| Compressor suction pressure | bar | 1.37 | 1.47 | 1.58 | 1.69 | 1.81 | 1.93 | 2.05 | 2.17 |
| Compressor discharge pressure | bar | 21.4 | 22.5 | 23.5 | 24.6 | 25.6 | 26.7 | 27.7 | 28.8 |
| Suction line pressure drop | Pa/m | 146 | 135 | 125 | 116 | 109 | 102 | 95 | 90 |
| Pressure drop relative to reference | | 50.1% | 46.2% | 42.8% | 39.8% | 37.2% | 34.8% | 32.7% | 30.7% |
| Condenser dew point | °C | 58.8 | 58.8 | 58.6 | 58.4 | 58.1 | 57.7 | 57.2 | 56.7 |
| Condenser bubble point | °C | 29.9 | 28.9 | 28.1 | 27.4 | 26.8 | 26.3 | 25.8 | 25.4 |
| Condenser exit liquid temperature | °C | 28.9 | 27.9 | 27.1 | 26.4 | 25.8 | 25.3 | 24.8 | 24.4 |
| Condenser mean temperature | °C | 44.3 | 43.8 | 43.4 | 42.9 | 42.4 | 42.0 | 41.5 | 41.1 |
| Condenser glide (in-out) | K | 29.0 | 29.9 | 30.5 | 31.0 | 31.3 | 31.4 | 31.4 | 31.3 |

**Table 31: Theoretical Performance Data of Selected R-744/R-32/R-134a/R-1234ze(E) blends containing 0-14 % R-744, 5 % R-32 and 20 % R-134a**

| Composition $CO_2$/R-32/R-134a/R-1234ze(E) % by weight ▶ | | 0/5/20/75 | 2/5/20/73 | 4/5/20/71 | 6/5/20/69 | 8/5/20/67 | 10/5/20/65 | 12/5/20/63 | 14/5/20/61 |
|---|---|---|---|---|---|---|---|---|---|
| COP (heating) | | 2.08 | 2.13 | 2.16 | 2.18 | 2.20 | 2.22 | 2.23 | 2.24 |
| COP (heating) relative to Reference | | 98.9% | 100.8% | 102.3% | 103.5% | 104.4% | 105.1% | 105.7% | 106.1% |
| Volumetric heating capacity at suction | $kJ/m^3$ | 801 | 888 | 978 | 1072 | 1170 | 1270 | 1373 . | 1479 |
| Capacity relative to Reference | | 91.2% | 101.1% | 111.3% | 122.0% | 133.1% | 144.5% | 156.2% | 168.3% |
| | | | | | | | | | |
| Critical temperature | °C | 104.94 | 101.49 | 98.21 | 95.11 | 92.16 | 89.36 | 86.70 | 84.16 |
| Critical pressure | bar | 40.64 | 41.40 | 42.16 | 42.91 | 43.66 | 44.41 | 45.15 | 45.90 |
| | | | | | | | | | |
| Condenser enthalpy change | kJ/kg | 230.1 | 240.7 | 250.0 | 258.2 | 265.5 | 272.1 | 278.1 | 283.6 |
| Pressure ratio | | 17.21 | 17.22 | 17.12 | 16.93 | 16.65 | 16.35 | 16.00 | 15.65 |
| Refrigerant mass flow | kg/hr | 31.3 | 29.9 | 28.8 | 27.9 | 27.1 | 26.5 | 25.9 | 25.4 |
| Compressor discharge temperature | °C | 120.0 | 123.7 | 127.1 | 130.3 | 133.3 | 136.1 | 138.7 | 141.2 |
| Evaporator inlet pressure | bar | 0.79 | 0.85 | 0.92 | 0.99 | 1.07 | 1.16 | 1.25 | 1.35 |
| Condenser inlet pressure | bar | 12.7 | 13.8 | 14.9 | 16.1 | 17.3 | 18.4 | 19.5 | 20.6 |
| Evaporator inlet temperature | °C | -30.0 | -30.7 | -31.4 | -32.1 | -32.8 | -33.6 | -34.5 | -35.3 . |
| Evaporator dewpoint | °C | -29.3 | -28.7 | -28.1 | -27.3 | -26.6 | -25.9 | -25.3 | -24.6 |
| Evaporator exit gas temperature | °C | -24.3 | -23.7 | -23.1 | -22.3 | -21.6 | -20.9 | -20.3 | -19.6 |
| Evaporator mean temperature | °C | -29.7 | -29.7 | -29.7 | -29.7 | -29.7 | -29.8 | -29.9 | -30.0 |
| Evaporator glide (out-in) | K | 0.7 | 2.0 | 3.3 | 4.7 | 6.2 | 7.7 | 9.2 | 10.7 |
| Compressor suction pressure | bar | 0.74 | 0.80 | 0.87 | 0.95 | 1.04 | 1.13 | 1.22 | 1.32 |
| Compressor discharge pressure | bar | 12.7 | 13.8 | 14.9 | 16.1 | 17.3 | 18.4 | 19.5 | 20.6 |
| Suction line pressure drop | Pa/m | 332 | 289 | 255 | 227 | 204 | 185 | 168 | 154 |
| Pressure drop relative to reference | | 113.6% | 99.0% | 87.4% | 77.8% | 69.9% | 63.2% | 57.5% | 52.6% |
| Condenser dew point | °C | 53.0 | 54.3 | 55.4 | 56.3 | 57.0 | 57.5 | 57.8 | 58.0 |
| Condenser bubble point | °C | 48.5 | 44.4 | 41.0 | 38.3 | 36.0 | 34.2 | 32.6 | 31.3 |
| Condenser exit liquid temperature | °C | 47.5 | 43.4 | 40.0 | 37.3 | 35.0 | 33.2 | 31.6 | 30.3 |
| Condenser mean temperature | °C | 50.8 | 49.3 | 48.2 | 47.3 | 46.5 | 45.8 | 45.2 | 44.7 |
| Condenser glide (in-out) | K | 4.5 | 9.9 | 14.4 | 18.0 | 20.9 | 23.3 | 25.2 | 26.7 |

EP 2 571 956 B1

44

**Table 32: Theoretical Performance Data of Selected R-744/R-32/R-134a/R-1234ze(E) blends containing 16-30 % R-744, 5 % R-32 and 20 % R-134a**

| Composition CO$_2$/R-32/R-134a/R-1234ze(E) % by weight ▶ | | 16/5/20/59 | 18/5/20/57 | 20/5/20/55 | 22/5/20/53 | 2415/20/51 | 26/5/20/49 | 28/5/20/47 | 30/5/20/45 |
|---|---|---|---|---|---|---|---|---|---|
| COP (heating) | | 2.24 | 2.25 | 2.25 | 2.26 | 2.26 | 2.26 | 2.26 | 2.26 |
| COP (heating) relative to Reference | | 106.5% | 106.7% | 106.9% | 107.1% | 107.1% | 107.2% | 107.1% | 107.1% |
| Volumetric heating capacity at suction | kJ/m$^3$ | 1587 | 1697 | 1810 | 1924 | 2040 | 2158 | 2277 | 2398 |
| Capacity relative to Reference | | 180.6% | 193.2% | 206.0% | 219.0% | 232.2% | 245.6% | 259.1% | 272.9% |
| Critical temperature | °C | 81.74 | 79.43 | 77.23 | 75.12 | 73.11 | 71.18 | 69.32 | 67.55 |
| Critical pressure | bar | 46.64 | 47.38 | 48.12 | 48.86 | 49.61 | 50.35 | 51.09 | 51.83 |
| Condenser enthalpy change | kJ/kg | 288.8 | 293.7 | 298.3 | 302.7 | 307.0 | 311.0 | 315.0 | 318.8 |
| Pressure ratio | | 15.28 | 14.92 | 14.57 | 14.22 | 13.89 | 13.56 | 13.25 | 12.95 |
| Refrigerant mass flow | kg/hr | 24.9 | 24.5 | 24.1 | 23.8 | 23.5 | 23.1 | 22.9 | 22.6 |
| Compressor discharge temperature | °C | 143.6 | 145.9 | 148.1 | 150.3 | 152.4 | 154.5 | 156.6 | 158.6 |
| Evaporator inlet pressure | bar | 1.45 | 1.55 | 1.66 | 1.78 | 1.90 | 2.02 | 2.14 | 2.27 |
| Condenser inlet pressure | bar | 21.7 | 22.8 | 23.9 | 25.0 | 26.1 | 27.1 | 28.2 | 29.2 |
| Evaporator inlet temperature | °C | -36.2 | -37.0 | -37.9 | -38.8 | -39.6 | -40.4 | -41.2 | -41.9 |
| Evaporator dewpoint | °C | -24.0 | -23.5 | -23.0 | -22.5 | -22.1 | -21.8 | -21.5 | -21.2 |
| Evaporator exit gas temperature | °C | -19.0 | -18.5 | -18.0 | -17.5 | -17.1 | -16.8 | -16.5 | -16.2 |
| Evaporator mean temperature | °C | -30.1 | -30.3 | -30.4 | -30.6 | -30.9 | -31.1 | -31.3 | -31.6 |
| Evaporator glide (out-in) | K | 12.1 | 13.5 | 14.9 | 16.2 | 17.4 | 18.6 | 19.7 | 20.7 |
| Compressor suction pressure | bar | 1.42 | 1.53 | 1.64 | 1.76 | 1.88 | 2.00 | 2.13 | 2.26 |
| Compressor discharge pressure | bar | 21.7 | 22.8 | 23.9 | 25.0 | 26.1 | 27.1 | 28.2 | 29.2 |
| Suction line pressure drop | Pa/m | 141 | 130 | 121 | 112 | 105 | 98 | 92 | 87 |
| Pressure drop relative to reference | | 48.3% | 44.6% | 41.4% | 38.5% | 35.9% | 33.6% | 31.6% | 29.7% |
| Condenser dew point | °C | 58.0 | 58.0 | 57.8 | 57.6 | 57.3 | 56.9 | 56.4 | 55.9 |
| Condenser bubble point | °C | 30.2 | 29.3 | 28.5 | 27.8 | 27.2 | 26.7 | 26.3 | 25.9 |
| Condenser exit liquid temperature | °C | 29.2 | 28.3 | 27.5 | 26.8 | 26.2 | 25.7 | 25.3 | 24.9 |
| Condenser mean temperature | °C | 44.1 | 43.6 | 43.2 | 42.7 | 42.3 | 41.8 | 41.4 | 40.9 |
| Condenser glide (in-out) | K | 27.8 | 28.7 | 29.4 | 29.8 | 30.1 | 30.2 | 30.2 | 30.0 |

**Table 33: Theoretical Performance Data of Selected R-744/R-32/R-134a/R-1234ze(E) blends containing 0-14 % R-744, 5 % R-32 and 30 % R-134a**

| Composition $CO_2$/R-32/R-134a/R-1234ze(E) % by weight ▶ | | 0/5/30/65 | 2/5/30/63 | 4/5/30/61 | 6/5/30/59 | 8/5/30/57 | 10/2/30/55 | 12/5/30/53 | 14/5/30/51 |
|---|---|---|---|---|---|---|---|---|---|
| COP (heating) | | 2.09 | 2.13 | 2.16 | 2.19 | 2.20 | 2.22 | 2.23 | 2.24 |
| COP (heating) relative to Reference | | 99.2% | 101.1% | 102.5% | 103.7% | 104.5% | 105.2% | 105.8% | 106.2% |
| Volumetric heating capacity at suction | $kJ/m^3$ | 833 | 922 | 1014 | 1109 | 1209 | 1311 | 1417 | 1525 |
| Capacity relative to Reference | | 94.9% | 104.9% | 115.4% | 126.3% | 137.6% | 149.2% | 161.2% | 173.6% |
| | | | | | | | | | |
| Critical temperature | °C | 104.11 | 100.71 | 97.48 | 94.43 | 91.52 | 88.76 | 86.14 | 83.64 |
| Critical pressure | bar | 41.22 | 41.98 | 42.74 | 43.49 | 44.24 | 44.99 | 45.74 | 46.49 |
| | | | | | | | | | |
| Condenser enthalpy change | kJ/kg | 232.0 | 242.5 | 251.7 | 259.9 | 267.1 | 273.6 | 279.5 | 285.0 |
| Pressure ratio | | 16.90 | 16.91 | 16.81 | 16.63 | 16.36 | 16.06 | 15.72 | 15.37 |
| Refrigerant mass flow | kg/hr | 31.0 | 29.7 | 28.6 | 27.7 | 27.0 | 26.3 | 25.8 | 25.3 |
| Compressor discharge temperature | °C | 121.0 | 124.7 | 128.2 | 131.3 | 134.3 | 137.0 | 139.6 | 142.1 |
| Evaporator inlet pressure | bar | 0.82 | 0.88 | 0.95 | 1.03 | 1.11 | 1.20 | 1.29 | 1.39 |
| Condenser inlet pressure | bar | 13.0 | 14.1 | 15.3 | 16.4 | 17.6 | 18.7 | 19.9 | 21.0 |
| Evaporator inlet temperature | °C | -30.1 | -30.7 | -31.4 | -32.1 | -32.8 | -33.5 | -34.3 | -35.1 |
| Evaporator dewpoint | °C | -29.4 | -28.8 | -28.1 | -27.4 | -26.7 | -26.1 | -25.4 | -24.8 |
| Evaporator exit gas temperature | °C | -24.4 | -23.8 | -23.1 | -22.4 | -21.7 | -21.1 | -20.4 | -19.8 |
| Evaporator mean temperature | °C | -29.7 | -29.7 | -29.7 | -29.7 | -29.8 | -29.8 | -29.9 | -30.0 |
| Evaporator glide (out-in) | K | 0.7 | 1.9 | 3.2 | 4.6 | 6.0 | 7.5 | 8.9 | 10.4 |
| Compressor suction pressure | bar | 0.77 | 0.83 | 0.91 | 0.99 | 1.07 | 1.17 | 1.26 | 1.37 |
| Compressor discharge pressure | bar | 13.0 | 14.1 | 15.3 | 16.4 | 17.6 | 18.7 | 19.9 | 21.0 |
| Suction line pressure drop | Pa/m | 317 | 277 | 245 | 219 | 197 | 178 | 162 | 148 |
| Pressure drop relative to reference | | 108.5% | 94.9% | 83.9% | 74.8% | 67.3% | 60.9% | 55.5% | 50.8% |
| Condenser dew point | °C | 52.6 | 53.8 | 54.9 | 55.7 | 56.3 | 56.8 | 57.1 | 57.3 |
| Condenser bubble point | °C | 48.5 | 44.4 | 41.1 | 38.4 | 36.2 | 34.4 | 32.9 | 31.6 |
| Condenser exit liquid temperature | °C | 47.5 | 43.4 | 40.1 | 37.4 | 35.2 | 33.4 | 31.9 | 30.6 |
| Condenser mean temperature | °C | 50.5 | 49.1 | 48.0 | 47.1 | 46.3 | 45.6 | 45.0 | 44.4 |
| Condenser glide (in-out) | K | 4.1 | 9.4 | 13.7 | 17.3 | 20.1 | 22.4 | 24.3 | 25.7 |

**Table 34: Theoretical Performance Data of Selected R-744/R-32/R-134a/R-1234ze(E) blends containing 16-30 % R-744, 5 % R-32 and 30 % R-134a**

| Composition $CO_2$/R-32/R-134a/R-1234ze(E) % by weight ▶ | | 16/5/30/49 | 18/5/30/47 | 20/5/30/45 | 22/5/30/43 | 24/5/30/41 | 26/5/30/39 | 28/5/30/37 | 30/5/30/35 |
|---|---|---|---|---|---|---|---|---|---|
| COP (heating) | | 2.25 | 2.25 | 2.26 | 2.26 | 2.26 | 2.26 | 2.26 | 2.26 |
| COP (heating) relative to Reference | | 106.6% | 106.9% | 107.1% | 107.2% | 107.3% | 107.3% | 107.3% | 107.3% |
| Volumetric heating capacity at suction | $kJ/m^3$ | 1636 | 1749 | 1865 | 1983 | 2102 | 2224 | 2347 | 2473 |
| Capacity relative to Reference | | 186.2% | 199.1% | 212.3% | 225.6% | 239.3% | 253.1% | 267.1% | 281.4% |
| | | | | | | | | | |
| Critical temperature | °C | 81.25 | 78.98 | 76.80 | 74.72 | 72.73 | 70.82 | 68.99 | 67.24 |
| Critical pressure | bar | 47.24 | 47.98 | 48.73 | 49.47 | 50.22 | 50.96 | 51.71 | 52.45 |
| | | | | | | | | | |
| Condenser enthalpy change | kJ/kg | 290.1 | 294.9 | 299.5 | 303.8 | 308.0 | 311.9 | 315.7 | 319.4 |
| Pressure ratio | | 15.02 | 14.66 | 14.31 | 13.96 | 13.63 | 13.30 | 12.99 | 12.69 |
| Refrigerant mass flow | kg/hr | 24.8 | 24.4 | 24.0 | 23.7 | 23.4 | 23.1 | 22.8 | 22.5 |
| Compressor discharge temperature | °C | 144.5 | 146.7 | 148.9 | 151.1 | 153.1 | 155.2 | 157.2 | 159.2 |
| Evaporator inlet pressure | bar | 1.50 | 1.61 | 1.72 | 1.84 | 1.96 | 2.09 | 2.22 | 2.35 |
| Condenser inlet pressure | bar | 22.1 | 23.2 | 24.3 | 25.4 | 26.5 | 27.6 | 28.6 | 29.7 |
| Evaporator inlet temperature | °C | -36.0 | -36.8 | -37.6 | -38.4 | -39.2 | -40.0 | -40.7 | -41.4 |
| Evaporator dewpoint | °C | -24.2 | -23.7 | -23.2 | -22.7 | -22.3 | -22.0 | -21.7 | -21.4 |
| Evaporator exit gas temperature | °C | -19.2 | -18.7 | -18.2 | -17.7 | -17.3 | -17.0 | -16.7 | -16.4 |
| Evaporator mean temperature | °C | -30.1 | -30.2 | -30.4 | -30.6 | -30.8 | -31.0 | -31.2 | -31.4 |
| Evaporator glide (out-in) | K | 11.8 | 13.1 | 14.4 | 15.7 | 16.9 | 18.0 | 19.1 | 20.0 |
| Compressor suction pressure | bar | 1.47 | 1.58 | 1.70 | 1.82 | 1.94 | 2.07 | 2.20 | 2.34 |
| Compressor discharge pressure | bar | 22.1 | 23.2 | 24.3 | 25.4 | 26.5 | 27.6 | 28.6 | 29.7 |
| Suction line pressure drop | Pa/m | 136 | 126 | 117 | 109 | 102 | 95 | 89 | 84 |
| Pressure drop relative to reference | | 46.7% | 43.2% | 40.0% | 37.2% | 34.8% | 32.6% | 30.6% | 28.8% |
| Condenser dew point | °C | 57.4 | 57.3 | 57.1 | 56.9 | 56.6 | 56.2 | 55.8 | 55.2 |
| Condenser bubble point | °C | 30.5 | 29.6 | 28.8 | 28.1 | 27.6 | 27.1 | 26.7 | 26.3 |
| Condenser exit liquid temperature | °C | 29.5 | 28.6 | 27.8 | 27.1 | 26.6 | 26.1 | 25.7 | 25.3 |
| Condenser mean temperature | °C | 43.9 | 43.4 | 43.0 | 42.5 | 42.1 | 41.6 | 41.2 | 40.8 |
| Condenser glide (in-out) | K | 26.9 | 27.7 | 28.3 | 28.8 | 29.0 | 29.1 | 29.1 | 28.9 |

**Table 35: Theoretical Performance Data of Selected R-744/R-32/R-134a/R-1234ze(E) blends containing 0-14 % R-744, 5 % R-32 and 40 % R-134a**

| Composition $CO_2$/R-32/R-134a/R-1234ze(E) % by weight ▶ | | 0/5/40/55 | 2/5/40/53 | 4/5/40/51 | 6/5/40/49 | 8/5/40/47 | 10/5/40/45 | 12/5/40/43 | 14/5/40/41 |
|---|---|---|---|---|---|---|---|---|---|
| COP (heating) | | 2.10 | 2.14 | 2.17 | 2.19 | 2.21 | 2.22 | 2.23 | 2.24 |
| COP (heating) relative to Reference | | 99.6% | 101.4% | 102.8% | 103.9% | 104.7% | 105.4% | 106.0% | 106.4% |
| Volumetric heating capacity at suction | kJ/m$^3$ | 863 | 953 | 1047 | 1144 | 1245 | 1350 | 1457 | 1568 |
| Capacity relative to Reference | | 98.2% | 108.5% | 119.1% | 130.2% | 141.7% | 153.7% | 165.9% | 178.5% |
| | | | | | | | | | |
| Critical temperature | °C | 103.30 | 99.95 | 96.78 | 93.77 | 90.91 | 88.19 | 85.60 | 83.14 |
| Critical pressure | bar | 41.67 | 42.44 | 43.21 | 43.97 | 44.73 | 45.49 | 46.24 | 47.00 |
| | | | | | | | | | |
| Condenser enthalpy change | kJ/kg | 234.1 | 244.6 | 253.7 | 261.8 | 269.0 | 275.4 | 281.3 | 286.8 |
| Pressure ratio | | 16.63 | 16.64 | 16.55 | 16.37 | 16.11 | 15.81 | 15.49 | 15.14 |
| Refrigerant mass flow | kg/hr | 30.8 | 29.4 | 28.4 | 27.5 | 26.8 | 26.1 | 25.6 | 25.1 |
| Compressor discharge temperature | °C | 122.1 | 125.8 | 129.3 | 132.5 | 135.4 | 138.1 | 140.7 | 143.1 |
| Evaporator inlet pressure | bar | 0.85 | 0.91 | 0.98 | 1.06 | 1.14 | 1.23 | 1.33 | 1.43 |
| Condenser inlet pressure | bar | 13.2 | 14.4 | 15.5 | 16.7 | 17.9 | 19.0 | 20.2 | 21.3 |
| Evaporator inlet temperature | °C | -30.1 | -30.7 | -31.3 | -32.0 | -32.7 | -33.4 | -34.2 | -35.0 |
| Evaporator dewpoint | °C | -29.4 | -28.9 | -28.2 | -27.6 | -26.9 | -26.2 | -25.5 | -24.9 |
| Evaporator exit gas temperature | °C | -24.4 | -23.9 | -23.2 | -22.6 | -21.9 | -21.2 | -20.5 | -19.9 |
| Evaporator mean temperature | °C | -29.8 | -29.8 | -29.8 | -29.8 | -29.8 | -29.8 | -29.9 | -30.0 |
| Evaporator glide (out-in) | K | 0.7 | 1.8 | 3.1 | 4.5 | 5.8 | 7.2 | 8.6 | 10.0 |
| Compressor suction pressure | bar | 0.79 | 0.86 | 0.94 | 1.02 | 1.11 | 1.20 | 1.30 | 1.41 |
| Compressor discharge pressure | bar | 13.2 | 14.4 | 15.5 | 16.7 | 17.9 | 19.0 | 20.2 | 21.3 |
| Suction line pressure drop | Pa/m | 304 | 266 | 236 | 211 | 190 | 172 | 157 | 144 |
| Pressure drop relative to reference | | 104.0% | 91.2% | 80.8% | 72.2% | 65.0% | 58.9% | 53.7% | 49.2% |
| Condenser dew point | °C | 52.1 | 53.3 | 54.3 | 55.1 | 55.8 | 56.2 | 56.5 | 56.7 |
| Condenser bubble point | °C | 48.5 | 44.5 | 41.2 | 38.5 | 36.4 | 34.5 | 33.0 | 31.8 |
| Condenser exit liquid temperature | °C | 47.5 | 43.5 | 40.2 | 37.5 | 35.4 | 33.5 | 32.0 | 30.8 |
| Condenser mean temperature | °C | 50.3 | 48.9 | 47.8 | 46.8 | 46.1 | 45.4 | 44.8 | 44.2 |
| Condenser glide (in-out) | K | 3.6 | 8.8 | 13.1 | 16.6 | 19.4 | 21.7 | 23.5 | 24.9 |

**Table 36: Theoretical Performance Data of Selected R-744/R-32/R-134a/R-1234ze(E) blends containing 16-30 % R-744, 5 % R-32 and 40 % R-134a**

| Composition $CO_2$/R-32/R-134a/R-1234ze(E) % by weight ▶ | | 16/5/40/39 | 18/5/40/37 | 20/5/40/35 | 22/5/40/33 | 24/5/40/31 | 26/5/40/29 | 28/5/40/27 | 30/5/40/25 |
|---|---|---|---|---|---|---|---|---|---|
| COP (heating) | | 2.25 | 2.26 | 2.26 | 2.26 | 2.27 | 2.27 | 2.27 | 2.27 |
| COP (heating) relative to Reference | | 106.7% | 107.0% | 107.2% | 107.3% | 107.4% | 107.5% | 107.5% | 107.4% |
| Volumetric heating capacity at suction | $kJ/m^3$ | 1682 | 1798 | 1916 | 2037 | 2160 | 2284 | 2411 | 2540 |
| Capacity relative to Reference | | 191.4% | 204.6% | 218.1% | 231.8% | 245.8% | 260.0% | 274.4% | 289.1% |
| Critical temperature | °C | 80.79 | 78.54 | 76.39 | 74.34 | 72.38 | 70.49 | 68.68 | 66.95 |
| Critical pressure | bar | 47.75 | 48.51 | 49.26 | 50.01 | 50.76 | 51.51 | 52.26 | 53.01 |
| Condenser enthalpy change | kJ/kg | 291.8 | 296.6 | 301.0 | 305.3 | 309.4 | 313.2 | 317.0 | 320.6 |
| Pressure ratio | | 14.79 | 14.44 | 14.09 | 13.74 | 13.41 | 13.09 | 12.78 | 12.48 |
| Refrigerant mass flow | kg/hr | 24.7 | 24.3 | 23.9 | 23.6 | 23.3 | 23.0 | 22.7 | 22.5 |
| Compressor discharge temperature | °C | 145.5 | 147.7 | 149.9 | 152.0 | 154.0 | 156.0 | 158.0 | 159.9 |
| Evaporator inlet pressure | bar | 1.54 | 1.65 | 1.77 | 1.89 | 2.02 | 2.15 | 2.29 | 2.43 |
| Condenser inlet pressure | bar | 22.4 | 23.6 | 24.7 | 25.8 | 26.9 | 27.9 | 29.0 | 30.1 |
| Evaporator inlet temperature | °C | -35.8 | -36.6 | -37.4 | -38.2 | -38.9 | -39.7 | -40.4 | -41.1 |
| Evaporator dewpoint | °C | -24.4 | -23.8 | -23.3 | -22.9 | -22.5 | -22.1 | -21.8 | -21.6 |
| Evaporator exit gas temperature | °C | -19.4 | -18.8 | -18.3 | -17.9 | -17.5 | -17.1 | -16.8 | -16.6 |
| Evaporator mean temperature | °C | -30.1 | -30.2 | -30.4 | -30.5 | -30.7 | -30.9 | -31.1 | -31.3 |
| Evaporator glide (out-in) | K | 11.4 | 12.8 | 14.1 | 15.3 | 16.5 | 17.6 | 18.6 | 19.5 |
| Compressor suction pressure | bar | 1.52 | 1.63 | 1.75 | 1.87 | 2.00 | 2.13 | 2.27 | 2.41 |
| Compressor discharge pressure | bar | 22.4 | 23.6 | 24.7 | 25.8 | 26.9 | 27.9 | 29.0 | 30.1 |
| Suction line pressure drop | Pa/m | 132 | 122 | 113 | 106 | 99 | 92 | 87 | 82 |
| Pressure drop relative to reference | | 45.3% | 41.8% | 38.8% | 36.1% | 33.7% | 31.6% | 29.7% | 27.9% |
| Condenser dew point | °C | 56.7 | 56.7 | 56.5 | 56.3 | 56.0 | 55.6 | 55.2 | 54.7 |
| Condenser bubble point | °C | 30.7 | 29.8 | 29.0 | 28.3 | 27.8 | 27.3 | 26.9 | 26.6 |
| Condenser exit liquid temperature | °C | 29.7 | 28.8 | 28.0 | 27.3 | 26.8 | 26.3 | 25.9 | 25.6 |
| Condenser mean temperature | °C | 43.7 | 43.2 | 42.8 | 42.3 | 41.9 | 41.5 | 41.0 | 40.6 |
| Condenser glide (in-out) | K | 26.1 | 26.9 | 27.5 | 28.0 | 28.2 | 28.3 | 28.3 | 28.1 |

**Table 37: Theoretical Performance Data of Selected R-744/R-32/R-134a/R-1234ze(E) blends containing 0-14 % R-744, 5 % R-32 and 50 % R-134a**

| Composition $CO_2$/R-32/R-134a/R-1234ze(E) % by weight ▶ | | 0/5/50/45 | 2/5/50/43 | 4/5/50/41 | 6/5/50/39 | 8/5/50/37 | 10/5/50/35 | 12/5/50/33 | 14/5/50/31 |
|---|---|---|---|---|---|---|---|---|---|
| COP (heating) | | 2.11 | 2.15 | 2.17 | 2.20 | 2.21 | 2.23 | 2.24 | 2.25 |
| COP (heating) relative to Reference | | 100.0% | 101.7% | 103.1% | 104.1% | 105.0% | 105.6% | 106.2% | 106.6% |
| Volumetric heating capacity at suction | kJ/m$^3$ | 890 | 981 | 1076 | 1176 | 1278 | 1385 | 1495 | 1607 |
| Capacity relative to Reference | | 101.3% | 111.7% | 122.5% | 133.8% | 145.5% | 157.6% | 170.1% | 182.9% |
| | | | | | | | | | |
| Critical temperature | °C | 102.50 | 99.21 | 96.09 | 93.13 | 90.31 | 87.63 | 85.09 | 82.66 |
| Critical pressure | bar | 42.02 | 42.80 | 43.58 | 44.35 | 45.12 | 45.89 | 46.66 | 47.43 |
| | | | | | | | | | |
| Condenser enthalpy change | kJ/kg | 236.4 | 246.8 | 256.0 | 264.0 | 271.2 | 277.6 | 283.5 | 288.9 |
| Pressure ratio | | 16.40 | 16.42 | 16.33 | 16.15 | 15.91 | 15.61 | 15.30 | 14.95 |
| Refrigerant mass flow | kg/hr | 30.5 | 29.2 | 28.1 | 27.3 | 26.6 | 25.9 | 25.4 | 24.9 |
| Compressor discharge temperature | °C | 123.3 | 127.1 | 130.5 | 133.7 | 136.6 | 139.3 | 141.9 | 144.3 |
| Evaporator inlet pressure | bar | 0.87 | 0.93 | 1.01 | 1.08 | 1.17 | 1.26 | 1.36 | 1.47 |
| Condenser inlet pressure | bar | 13.4 | 14.6 | 15.8 | 17.0 | 18.1 | 19.3 | 20.5 | 21.6 |
| Evaporator inlet temperature | °C | -30.1 | -30.7 | -31.3 | -32.0 | -32.6 | -33.3 | -34.1 | -34.9 |
| Evaporator dewpoint | °C | -29.5 | -29.0 | -28.3 | -27.7 | -27.0 | -26.3 | -25.7 | -25.1 |
| Evaporator exit gas temperature | °C | -24.5 | -24.0 | -23.3 | -22.7 | -22.0 | -21.3 | -20.7 | -20.1 |
| Evaporator mean temperature | °C | -29.8 | -29.8 | -29.8 | -29.8 | -29.8 | -29.8 | -29.9 | -30.0 |
| Evaporator glide (out-in) | K | 0.6 | 1.7 | 3.0 | 4.3 | 5.6 | 7.0 | 8.4 | 9.8 |
| Compressor suction pressure | bar | 0.82 | 0.89 | 0.97 | 1.05 | 1.14 | 1.24 | 1.34 | 1.44 |
| Compressor discharge pressure | bar | 13.4 | 14.6 | 15.8 | 17.0 | 18.1 | 19.3 | 20.5 | 21.6 |
| Suction line pressure drop | Pa/m | 293 | 257 | 228 | 204 | 184 | 167 | 152 | 139 |
| Pressure drop relative to reference | | 100.2% | 87.9% | 78.0% | 69.8% | 62.9% | 57.0% | 52.0% | 47.7% |
| Condenser dew point | °C | 51.6 | 52.8 | 53.8 | 54.6 | 55.3 | 55.7 | 56.0 | 56.2 |
| Condenser bubble point | °C | 48.5 | 44.5 | 41.2 | 38.6 | 36.4 | 34.6 | 33.1 | 31.8 |
| Condenser exit liquid temperature | °C | 47.5 | 43.5 | 40.2 | 37.6 | 35.4 | 33.6 | 32.1 | 30.8 |
| Condenser mean temperature | °C | 50.0 | 48.6 | 47.5 | 46.6 | 45.8 | 45.1 | 44.5 | 44.0 |
| Condenser glide (in-out) | K | 3.2 | 8.3 | 12.6 | 16.1 | 18.9 | 21.1 | 22.9 | 24.4 |

**Table 38: Theoretical Performance Data of Selected R-744/R-32/R-134a/R-1234ze(E) blends containing 16-30 % R-744, 5 % R-32 and 50 % R-134a**

| Composition CO$_2$/R-32/R-134a/R-1234ze(E) % by weight ▶ | | 16/5/50/29 | 18/5/50/27 | 20/5/50/25 | 22/5/50/23 | 24/5/50/21 | 26/5/50/19 | 28/5/50/17 | 30/5/50/15 |
|---|---|---|---|---|---|---|---|---|---|
| COP (heating) | | 2.25 | 2.26 | 2.26 | 2.27 | 2.27 | 2.27 | 2.27 | 2.27 |
| COP (heating) relative to Reference | | 106.9% | 107.2% | 107.4% | 107.5% | 107.6% | 107.7% | 107.7% | 107.6% |
| Volumetric heating capacity at suction | kJ/m$^3$ | 1723 | 1841 | 1962 | 2085 | 2211 | 2338 | 2467 | 2599 |
| Capacity relative to Reference | | 196.1% | 209.6% | 223.3% | 237.3% | 251.6% | 266.1% | 280.8% | 295.8% |
| | | | | | | | | | |
| Critical temperature | °C | 80.34 | 78.12 | 76.00 | 73.98 | 72.04 | 70.17 | 68.39 | 66.67 |
| Critical pressure | bar | 48.19 | 48.96 | 49.72 | 50.48 | 51.24 | 52.00 | 52.76 | 53.52 |
| | | | | | | | | | |
| Condenser enthalpy change | kJ/kg | 293.9 | 298.6 | 303.0 | 307.2 | 311.2 | 315.1 | 318.7 | 322.3 |
| Pressure ratio | | 14.61 | 14.26 | 13.91 | 13.57 | 13.24 | 12.93 | 12.62 | 12.32 |
| Refrigerant mass flow | kg/hr | 24.5 | 24.1 | 23.8 | 23.4 | 23.1 | 22.9 | 22.6 | 22.3 |
| Compressor discharge temperature | °C | 146.6 | 148.9 | 151.0 | 153.1 | 155.1 | 157.1 | 159.0 | 160.9 |
| Evaporator inlet pressure | bar | 1.58 | 1.69 | 1.81 | 1.94 | 2.07 | 2.20 | 2.34 | 2.48 |
| Condenser inlet pressure | bar | 22.7 | 23.9 | 25.0 | 26.1 | 27.2 | 28.3 | 29.4 | 30.4 |
| Evaporator inlet temperature | °C | -35.6 | -36.4 | -37.2 | -38.0 | -38.8 | -39.5 | -40.2 | -40.9 |
| Evaporator dewpoint | °C | -24.5 | -23.9 | -23.4 | -23.0 | -22.6 | -22.2 | -21.9 | -21.6 |
| Evaporator exit gas temperature | °C | -19.5 | -18.9 | -18.4 | -18.0 | -17.6 | -17.2 | -16.9 | -16.6 |
| Evaporator mean temperature | °C | -30.1 | -30.2 | -30.3 | -30.5 | -30.7 | -30.9 | -31.1 | -31.3 |
| Evaporator glide (out-in) | K | 11.2 | 12.5 | 13.8 | 15.0 | 16.2 | 17.3 | 18.3 | 19.2 |
| Compressor suction pressure | bar | 1.56 | 1.67 | 1.80 | 1.92 | 2.05 | 2.19 | 2.33 | 2.47 |
| Compressor discharge pressure | bar | 22.7 | 23.9 | 25.0 | 26.1 | 27.2 | 28.3 | 29.4 | 30.4 |
| Suction line pressure drop | Pa/m | 128 | 119 | 110 | 103 | 96 | 90 | 84 | 79 |
| Pressure drop relative to reference | | 43.9% | 40.6% | 37.7% | 35.1% | 32.8% | 30.7% | 28.9% | 27.2% |
| Condenser dew point | °C | 56.2 | 56.2 | 56.0 | 55.8 | 55.5 | 55.1 | 54.7 | 54.2 |
| Condenser bubble point | °C | 30.8 | 29.9 | 29.1 | 28.4 | 27.9 | 27.4 | 27.0 | 26.7 |
| Condenser exit liquid temperature | °C | 29.8 | 28.9 | 28.1 | 27.4 | 26.9 | 26.4 | 26.0 | 25.7 |
| Condenser mean temperature | °C | 43.5 | 43.0 | 42.6 | 42.1 | 41.7 | 41.3 | 40.9 | 40.4 |
| Condenser glide (in-out) | K | 25.5 | 26.3 | 26.9 | 27.4 | 27.6 | 27.7 | 27.7 | 27.5 |

**Table 39: Theoretical Performance Data of Selected R-744/R-32/R-134a/R-1234ze(E) blends containing 0-14 % R-744, 10 % R-32 and 5 % R-134a**

| Composition $CO_2$/R-32/R-134a/R-1234ze(E) % by weight ▶ | | 0/10/5/85 | 2/10/5/83 | 4/10/5/81 | 6/10/5/79 | 8/10/5/77 | 10/10/5/75 | 12/10/5/73 | 14/10/5/71 |
|---|---|---|---|---|---|---|---|---|---|
| COP (heating) | | 2.13 | 2.16 | 2.18 | 2.21 | 2.22 | 2.23 | 2.25 | 2.25 |
| COP (heating) relative to Reference | | 100.8% | 102.4% | 103.6% | 104.6% | 105.4% | 106.0% | 106.5% | 106.9% |
| Volumetric heating capacity at suction | $kJ/m^3$ | 865 | 953 | 1044 | 1139 | 1237 | 1337 | 1439 | 1544 |
| Capacity relative to Reference | | 98.4% | 108.5% | 118.9% | 129.7% | 140.7% | 152.1% | 163.8% | 175.7% |
| | | | | | | | | | |
| Critical temperature | °C | 103.31 | 100.13 | 97.08 | 94.18 | 91.40 | 88.76 | 86.23 | 83.82 |
| Critical pressure | bar | 41.66 | 42.48 | 43.26 | 44.03 | 44.79 | 45.54 | 46.28 | 47.03 |
| | | | | | | | | | |
| Condenser enthalpy change | kJ/kg | 240.9 | 250.5 | 258.9 | 266.5 | 273.3 | 279.6 | 285.4 | 290.8 |
| Pressure ratio | | 16.85 | 16.76 | 16.59 | 16.35 | 16.07 | 15.77 | 15.44 | 15.12 |
| Refrigerant mass flow | kg/hr | 29.9 | 28.7 | 27.8 | 27.0 | 26.3 | 25.8 | 25.2 | 24.8 |
| Compressor discharge temperature | °C | 123.1 | 126.5 | 129.7 | 132.7 | 135.6 | 138.2 | 140.8 | 143.2 |
| Evaporator inlet pressure | bar | 0.84 | 0.90 | 0.97 | 1.05 | 1.13 | 1.22 | 1.31 | 1.41 |
| Condenser inlet pressure | bar | 13.2 | 14.3 | 15.5 | 16.6 | 17.7 | 18.8 | 19.9 | 20.9 |
| Evaporator inlet temperature | °C | -30.8 | -31.5 | -32.2 | -33.0 | -33.8 | -34.6 | -35.4 | -36.3 |
| Evaporator dewpoint | °C | -28.6 | -27.9 | -27.2 | -26.5 | -25.8 | -25.2 | -24.6 | -24.0 |
| Evaporator exit gas temperature | °C | -23.6 | -22.9 | -22.2 | -21.5 | -20.8 | -20.2 | -19.6 | -19.0 |
| Evaporator mean temperature | °C | -29.7 | -29.7 | -29.7 | -29.7 | -29.8 | -29.9 | -30.0 | -30.1 |
| Evaporator glide (out-in) | K | 2.2 | 3.5 | 5.0 | 6.4 | 7.9 | 9.4 | 10.9 | 12.3 |
| Compressor suction pressure | bar | 0.79 | 0.86 | 0.93 | 1.01 | 1.10 | 1.19 | 1.29 | 1.39 |
| Compressor discharge pressure | bar | 13.2 | 14.3 | 15.5 | 16.6 | 17.7 | 18.8 | 19.9 | 20.9 |
| Suction line pressure drop | Pa/m | 297 | 262 | 233 | 209 | 189 | 172 | 157 | 144 |
| Pressure drop relative to reference | | 101.6% | 89.6% | 79.7% | 71.5% | 64.7% | 58.8% | 53.8% | 49.4% |
| Condenser dew point | °C | 53.6 | 54.7 | 55.7 | 56.4 | 56.9 | 57.3 | 57.6 | 57.7 |
| Condenser bubble point | °C | 46.0 | 42.5 | 39.6 | 37.2 | 35.2 | 33.6 | 32.2 | 31.0 |
| Condenser exit liquid temperature | °C | 45.0 | 41.5 | 38.6 | 36.2 | 34.2 | 32.6 | 31.2 | 30.0 |
| Condenser mean temperature | °C | 49.8 | 48.6 | 47.6 | 46.8 | 46.1 | 45.5 | 44.9 | 44.3 |
| Condenser glide (in-out) | K | 7.7 | 12.3 | 16.1 | 19.2 | 21.7 | 23.7 | 25.4 | 26.7 |

**Table 40: Theoretical Performance Data of Selected R-744/R-32/R-134a/R-1234ze(E) blends containing 16-30 % R-744, 10 % R-32 and 5 % R-134a**

| Composition CO$_2$/R-32/R-134a/R-1234ze(E) % by weight ▶ | | 16/10/5/69 | 18/10/5/67 | 20/10/5/65 | 22/10/5/63 | 24/10/5161 | 26/10/5/59 | 28/10/5/57 | 30/10/5/55 |
|---|---|---|---|---|---|---|---|---|---|
| COP (heating) | | 2.26 | 2.26 | 2.27 | 2.27 | 2.27 | 2.27 | 2.27 | 2.26 |
| COP (heating) relative to Reference | | 107.1% | 107.3% | 107.5% | 107.5% | 107.6% | 107.5% | 107.5% | 107.4% |
| Volumetric heating capacity y at suction | kJ/m$^3$ | 1650 | 1758 | 1868 | 1979 | 2092 | 2206 | 2323 | 2440 |
| Capacity relative to Reference | | 187.8% | 200.1% | 212.6% | 225.3% | 238.1% | 251.1% | 264.3% | 277.7% |
| | | | | | | | | | |
| Critical temperature | °C | 81.51 | 79.31 | 77.20 | 75.17 | 73.24 | 71.38 | 69.59 | 67.88 |
| Critical pressure | bar | 47.77 | 48.51 | 49.25 | 49.99 | 50.72 | 51.46 | 52.19 | 52.93 |
| | | | | | | | | | |
| Condenser enthalpy change | kJ/kg | 295.9 | 300.8 | 305.4 | 309.9 | 314.1 | 318.3 | 322.3 | 326.1 |
| Pressure ratio | | 14.79 | 14.46 | 14.14 | 13.84 | 13.54 | 13.25 | 12.96 | 12.69 |
| Refrigerant mass flow | kg/hr | 24.3 | 23.9 | 23.6 | 23.2 | 22.9 | 22.6 | 22.3 | 22.1 |
| Compressor discharge temperature | °C | 145.6 | 147.9 | 150.2 | 152.4 | 154.6 | 156.7 | 158.8 | 160.9 |
| Evaporator inlet pressure | bar | 1.51 | 1.62 | 1.72 | 1.84 | 1.95 | 2.07 | 2.19 | 2.32 |
| Condenser inlet pressure | bar | 22.0 | 23.1 | 24.1 | 25.1 | 26.2 | 27.2 | 28.2 | 29.3 |
| Evaporator inlet temperature | °C | -37.2 | -38.0 | -38.9 | -39.7 | -40.5 | -41.2 | -41.9 | -42.6 |
| Evaporator dewpoint | °C | -23.4 | -23.0 | -22.5 | -22.1 | -21.8 | -21.5 | -21.3 | -21.0 |
| Evaporator exit gas temperature | °C | -18.4 | -18.0 | -17.5 | -17.1 | -16.8 | -16.5 | -16.3 | -16.0 |
| Evaporator mean temperature | °C | -30.3 | -30.5 | -30.7 | -30.9 | -31.1 | -31.4 | -31.6 | -31.8 |
| Evaporator glide (out-in) | K | 13.7 | 15.1 | 16.3 | 17.5 | 18.7 | 19.7 | 20.7 | 21.5 |
| Compressor suction pressure | bar | 1.49 | 1.59 | 1.70 | 1.82 | 1.93 | 2.05 | 2.18 | 2.30 |
| Compressor discharge pressure | bar | 22.0 | 23.1 | 24.1 | 25.1 | 26.2 | 27.2 | 28.2 | 29.3 |
| Suction line pressure drop | Pa/m | 133 | 124 | 115 | 107 | 101 | 94 | 89 | 84 |
| Pressure drop relative to reference | | 45.6% | 42.3% | 39.4% | 36.8% | 34.4% | 32.3% | 30.4% | 28.7% |
| Condenser dew point | °C | 57.7 | 57.6 | 57.4 | 57.1 | 56.8 | 56.4 | 55.9 | 55.4 |
| Condenser bubble point | °C | 30.0 | 29.1 | 28.3 | 27.7 | 27.1 | 26.6 | 26.2 | 25.9 |
| Condenser exit liquid temperature | °C | 29.0 | 28.1 | 27.3 | 26.7 | 26.1 | 25.6 | 25.2 | 24.9 |
| Condenser mean temperature | °C | 43.8 | 43.3 | 42.9 | 42.4 | 42.0 | 41.5 | 41.1 | 40.6 |
| Condenser glide (in-out) | K | 27.7 | 28.5 | 29.1 | 29.4 | 29.7 | 29.7 | 29.7 | 29.5 |

**Table 41: Theoretical Performance Data of Selected R-744/R-32/R-134a/R-1234ze(E) blends containing 0-14 % R-744, 10 % R-32 and 10 % R-134a**

| Composition $CO_2$/R-32/R-134a/R-1234ze(E) % by weight ▶ | | 0/10/10/80 | 2/10/10/78 | 4/10/10/76 | 6/10/10/74 | 8/10/10/72 | 10/10/10/70 | 12/10/10/68 | 14/10/10/66 |
|---|---|---|---|---|---|---|---|---|---|
| COP (heating) | | 2.13 | 2.16 | 2.19 | 2.21 | 2.22 | 2.24 | 2.25 | 2.25 |
| COP (heating) relative to Reference | | 100.9% | 102.5% | 103.7% | 104.7% | 105.4% | 106.0% | 106.5% | 106.9% |
| Volumetric heating capacity at suction | $kJ/m^3$ | 883 | 972 | 1064 | 1160 | 1258 | 1359 | 1463 | 1569 |
| Capacity relative to Reference | | 100.5% | 110.6% | 121.1% | 132.0% | 143.2% | 154.7% | 166.5% | 178.6% |
| | | | | | | | | | |
| Critical temperature | °C | 102.94 | 99.76 | 96.73 | 93.84 | 91.08 | 88.45 | 85.94 | 83.55 |
| Critical pressure | bar | 42.01 | 42.80 | 43.57 | 44.34 | 45.09 | 45.84 | 46.59 | 47.33 |
| | | | | | | | | | |
| Condenser enthalpy change | kJ/kg | 241.7 | 251.1 | 259.6 | 267.1 | 273.9 | 280.1 | 285.9 | 291.3 |
| Pressure ratio | | 16.67 | 16.58 | 16.42 | 16.18 | 15.91 | 15.61 | 15.29 | 14.97 |
| Refrigerant mass flow | kg/hr | 29.8 | 28.7 | 27.7 | 27.0 | 26.3 | 25.7 | 25.2 | 24.7 |
| Compressor discharge temperature | °C | 123.6 | 127.0 | 130.2 | 133.2 | 136.0 | 138.6 | 141.2 | 143.6 |
| Evaporator inlet pressure | bar | 0.85 | 0.92 | 0.99 | 1.07 | 1.15 | 1.24 | 1.34 | 1.44 |
| Condenser inlet pressure | bar | 13.4 | 14.5 | 15.6 | 16.7 | 17.8 | 18.9 | 20.0 | 21.1 |
| Evaporator inlet temperature | °C | -30.8 | -31.5 | -32.2 | -32.9 | -33.7 | -34.5 | -35.3 | -36.2 |
| Evaporator dewpoint | °C | -28.6 | -28.0 | -27.3 | -26.6 | -25.9 | -25.3 | -24.7 | -24.1 |
| Evaporator exit gas temperature | °C | -23.6 | -23.0 | -22.3 | -21.6 | -20.9 | -20.3 | -19.7 | -19.1 |
| Evaporator mean temperature | °C | -29.7 | -29.7 | -29.7 | -29.8 | -29.8 | -29.9 | -30.0 | -30.1 |
| Evaporator glide (out-in) | K | 2.2 | 3.5 | 4.9 | 6.3 | 7.8 | 9.2 | 10.7 | 12.1 |
| Compressor suction pressure | bar | 0.80 | 0.87 | 0.95 | 1.03 | 1.12 | 1.21 | 1.31 | 1.41 |
| Compressor discharge pressure | bar | 13.4 | 14.5 | 15.6 | 16.7 | 17.8 | 18.9 | 20.0 | 21.1 |
| Suction line pressure drop | Pa/m | 290 | 256 | 228 | 205 | 185 | 169 | 154 | 142 |
| Pressure drop relative to reference | | 99.3% | 87.7% | 78.1% | 70.1% | 63.4% | 57.7% | 52.8% | 48.6% |
| Condenser dew point | °C | 53.4 | 54.4 | 55.3 | 56.0 | 56.6 | 57.0 | 57.2 | 57.3 |
| Condenser bubble point | °C | 46.1 | 42.6 | 39.7 | 37.4 | 35.4 | 33.8 | 32.4 | 31.2 |
| Condenser exit liquid temperature | °C | 45.1 | 41.6 | 38.7 | 36.4 | 34.4 | 32.8 | 31.4 | 30.2 |
| Condenser mean temperature | °C | 49.7 | 48.5 | 47.5 | 46.7 | 46.0 | 45.4 | 44.8 | 44.2 |
| Condenser glide (in-out) | K | 7.3 | 11.9 | 15.6 | 18.7 | 21.2 | 23.2 | 24.8 | 26.1 |

**Table 42: Theoretical Performance Data of Selected R-744/R-32/R-134a/R-1234ze(E) blends containing 16-30 % R-744, 10 % R-32 and 10 % R-134a**

| Composition $CO_2$/R-32/R-134a/R-1234ze(E) % by weight ▶ | | 16/10/10/64 | 18/10/10/62 | 20/10/10/60 | 22/10/10/58 | 24/10/10/56 | 26/10/10/54 | 28/10/10/52 | 30/10/10/50 |
|---|---|---|---|---|---|---|---|---|---|
| COP (heating) | | 2.26 | 2.26 | 2.27 | 2.27 | 2.27 | 2.27 | 2.27 | 2.27 |
| COP (heating) relative to Reference | | 107.2% | 107.4% | 107.5% | 107.6% | 107.6% | 107.6% | 107.6% | 107.5% |
| Volumetric heating capacity at suction | kJ/m³ | 1677 | 1787 | 1898 | 2011 | 2126 | 2243 | 2362 | 2483 |
| Capacity relative to Reference | | 190.8% | 203.3% | 216.0% | 228.9% | 242.0% | 255.3% | 268.8% | 282.5% |
| | | | | | | | | | |
| Critical temperature | °C | 81.26 | 79.07 | 76.97 | 74.96 | 73.03 | 71.19 | 69.41 | 67.71 |
| Critical pressure | bar | 48.07 | 48.81 | 49.55 | 50.29 | 51.03 | 51.76 | 52.50 | 53.23 |
| | | | | | | | | | |
| Condenser enthalpy change | kJ/kg | 296.3 | 301.2 | 305.8 | 310.2 | 314.4 | 318.5 | 322.4 | 326.2 |
| Pressure ratio | | 14.64 | 14.32 | 14.00 | 13.69 | 13.39 | 13.10 | 12.81 | 12.54 |
| Refrigerant mass flow | kg/hr | 24.3 | 23.9 | 23.5 | 23.2 | 22.9 | 22.6 | 22.3 | 22.1 |
| Compressor discharge temperature | °C | 146.0 | 148.3 | 150.5 | 152.7 | 154.9 | 157.0 | 159.0 | 161.1 |
| Evaporator inlet pressure | bar | 1.54 | 1.64 | 1.76 | 1.87 | 1.99 | 2.11 | 2.24 | 2.37 |
| Condenser inlet pressure | bar | 22.2 | 23.3 | 24.3 | 25.4 | 26.4 | 27.4 | 28.5 | 29.5 |
| Evaporator inlet temperature | °C | -37.0 | -37.8 | -38.6 | -39.4 | -40.2 | -40.9 | -41.6 | -42.2 |
| Evaporator dewpoint | °C | -23.6 | -23.1 | -22.6 | -22.3 | -21.9 | -21.6 | -21.4 | -21.2 |
| Evaporator exit gas temperature | °C | -18.6 | -18.1 | -17.6 | -17.3 | -16.9 | -16.6 | -16.4 | -16.2 |
| Evaporator mean temperature | °C | -30.3 | -30.5 | -30.6 | -30.8 | -31.1 | -31.3 | -31.5 | -31.7 |
| Evaporator glide (out-in) | K | 13.5 | 14.8 | 16.0 | 17.2 | 18.3 | 19.3 | 20.2 | 21.1 |
| Compressor suction pressure | bar | 1.52 | 1.62 | 1.74 | 1.85 | 1.97 | 2.09 | 2.22 | 2.35 |
| Compressor discharge pressure | bar | 22.2 | 23.3 | 24.3 | 25.4 | 26.4 | 27.4 | 28.5 | 29.5 |
| Suction line pressure drop | Pa/m | 131 | 122 | 113 | 106 | 99 | 93 | 87 | 82 |
| Pressure drop relative to reference | | 44.9% | 41.6% | 38.7% | 36.1% | 33.8% | 31.8% | 29.9% | 28.2% |
| Condenser dew point | °C | 57.3 | 57.2 | 57.0 | 56.7 | 56.4 | 56.0 | 55.5 | 55.0 |
| Condenser bubble point | °C | 30.2 | 29.3 | 28.6 | 27.9 | 27.4 | 26.9 | 26.5 | 26.1 |
| Condenser exit liquid temperature | °C | 29.2 | 28.3 | 27.6 | 26.9 | 26.4 | 25.9 | 25.5 | 25.1 |
| Condenser mean temperature | °C | 43.7 | 43.3 | 42.8 | 42.3 | 41.9 | 41.4 | 41.0 | 40.6 |

(continued)

| Composition CO$_2$/R-32/R-134a/R-1234ze(E) % by weight ▶ | | 16/10/10/64 | 18/10/10/62 | 20/10/10/60 | 22/10/10/58 | 24/10/10/56 | 26/10/10/54 | 28/10/10/52 | 30/10/10/50 |
|---|---|---|---|---|---|---|---|---|---|
| Condenser glide (in-out) | K | 27.1 | 27.9 | 28.4 | 28.8 | 29.0 | 29.1 | 29.0 | 28.9 |

**Table 43: Theoretical Performance Data of Selected R-744/R-321R-134a/R-1234ze(E) blends containing 0-14 % R-744, 10 % R-32 and 20 % R-134a**

| Composition CO$_2$/R-32/R-134a/R-1234ze(E) % by weight ▶ | | 0/10/20/70 | 2/10/20/68 | 4/10/20/66 | 6/10/20/64 | 8/10/20/62 | 10/10/20/60 | 12/10/20/58 | 14/10/20/56 |
|---|---|---|---|---|---|---|---|---|---|
| COP (heating) | | 2.13 | 2.17 | 2.19 | 2.21 | 2.23 | 2.24 | 2.25 | 2.26 |
| COP (heating) relative to Reference | | 101.2% | 102.7% | 103.9% | 104.8% | 105.6% | 106.2% | 106.6% | 107.0% |
| Volumetric heating capacity at suction | kJ/m$^3$ | 917 | 1007 | 1101 | 1198 | 1299 | 1403 | 1509 | 1617 |
| Capacity relative to Reference | | 104.3% | 114.6% | 125.3% | 136.4% | 147.9% | 159.7% | 171.7% | 184.1% |
| | | | | | | | | | |
| Critical temperature | °C | 102.20 | 99.05 | 96.05 | 93.19 | 90.47 | 87.87 | 85.40 | 83.03 |
| Critical pressure | bar | 42.60 | 43.37 | 44.14 | 44.89 | 45.65 | 46.39 | 47.14 | 47.89 |
| | | | | | | | | | |
| Condenser enthalpy change | kJ/kg | 243.2 | 252.7 | 261.0 | 268.5 | 275.2 | 281.4 | 287.1 | 292.5 |
| Pressure ratio | | 16.35 | 16.27 | 16.12 | 15.89 | 15.62 | 15.33 | 15.02 | 14.70 |
| Refrigerant mass flow | kg/hr | 29.6 | 28.5 | 27.6 | 26.8 | 26.2 | 25.6 | 25.1 | 24.6 |
| Compressor discharge temperature | °C | 124.5 | 127.9 | 131.1 | 134.1 | 136.9 | 139.5 | 142.1 | 144.5 |
| Evaporator inlet pressure | bar | 0.89 | 0.95 | 1.03 | 1.11 | 1.19 | 1.29 | 1.38 | 1.48 |
| Condenser inlet pressure | bar | 13.7 | 14.8 | 15.9 | 17.0 | 18.2 | 19.3 | 20.4 | 21.5 |
| Evaporator inlet temperature | °C | -30.8 | -31.4 | -32.1 | -32.8 | -33.6 | -34.3 | -35.1 | -35.9 |
| Evaporator dewpoint | °C | -28.7 | -28.0 | -27.4 | -26.7 | -26.1 | -25.4 | -24.8 | -24.3 |
| Evaporator exit gas temperature | °C | -23.7 | -23.0 | -22.4 | -21.7 | -21.1 | -20.4 | -19.8 | -19.3 |
| Evaporator mean temperature | °C | -29.7 | -29.7 | -29.8 | -29.8 | -29.8 | -29.9 | -30.0 | -30.1 |
| Evaporator glide (out-in) | K | 2.1 | 3.4 | 4.7 | 6.1 | 7.5 | 8.9 | 10.3 | 11.6 |
| Compressor suction pressure | bar | 0.84 | 0.91 | 0.99 | 1.07 | 1.16 | 1.26 | 1.36 | 1.46 |
| Compressor discharge pressure | bar | 13.7 | 14.8 | 15.9 | 17.0 | 18.2 | 19.3 | 20.4 | 21.5 |
| Suction line pressure drop | Pa/m | 278 | 246 | 220 | 197 | 179 | 163 | 149 | 137 |
| Pressure drop relative to reference | | 95.2% | 84.2% | 75.2% | 67.6% | 61.2% | 55.8% | 51.1% | 47.0% |
| Condenser dew point | °C | 52.8 | 53.9 | 54.7 | 55.4 | 55.9 | 56.2 | 56.5 | 56.6 |
| Condenser bubble point | °C | 46.2 | 42.8 | 40.0 | 37.7 | 35.7 | 34.1 | 32.7 | 31.5 |
| Condenser exit liquid temperature | °C | 45.2 | 41.8 | 39.0 | 36.7 | 34.7 | 33.1 | 31.7 | 30.5 |
| Condenser mean temperature | °C | 49.5 | 48.3 | 47.4 | 46.5 | 45.8 | 45.2 | 44.6 | 44.1 |
| Condenser glide (in-out) | K | 6.6 | 11.0 | 14.7 | 17.7 | 20.2 | 22.2 | 23.8 | 25.0 |

**Table 44: Theoretical Performance Data of Selected R-7441R-32IR-134alR-1234ze(E) blends containing 16-30 % R-744, 10 % R-32 and 20 % R-134a**

| Composition CO$_2$/R-32/R-134a/R-1234ze(E) % by weight ▶ | | 16/10/20/54 | 18/10/20/52 | 20/10/20/50 | 22/10/20148 | 24/10/20/46 | 26/10/20/44 | 28/10/20/42 | 30/10/20/40 |
|---|---|---|---|---|---|---|---|---|---|
| COP (heating) | | 2.26 | 2.27 | 2.27 | 2.27 | 2.27 | 2.27 | 2.27 | 2.27 |
| COP (heating) relative to Reference | | 107.3% | 107.5% | 107.6% | 107.7% | 107.7% | 107.7% | 107.7% | 107.7% |
| Volumetric heating capacity at suction | kJ/m$^3$ | 1728 | 1841 | 1956 | 2073 | 2193 | 2314 | 2438 | 2563 |
| Capacity relative to Reference | | 196.7% | 209.5% | 222.6% | 236.0% | 249.5% | 263.3% | 277.4% | 291.7% |
| Critical temperature | °C | 80.77 | 78.61 | 76.54 | 74.56 | 72.66 | 70.83 | 69.08 | 67.39 |
| Critical pressure | bar | 48.63 | 49.37 | 50.12 | 50.86 | 51.60 | 52.34 | 53.08 | 53.82 |
| Condenser enthalpy change | kJ/kg | 297.5 | 302.2 | 306.7 | 311.0 | 315.1 | 319.1 | 322.9 | 326.5 |
| Pressure ratio | | 14.38 | 14.06 | 13.74 | 13.43 | 13.13 | 12.84 | 12.55 | 12.27 |
| Refrigerant mass flow | kg/hr | 24.2 | 23.8 | 23.5 | 23.2 | 22.8 | 22.6 | 22.3 | 22.1 |
| Compressor discharge temperature | °C | 146.8 | 149.1 | 151.3 | 153.4 | 155.5 | 157.5 | 159.5 | 161.5 |
| Evaporator inlet pressure | bar | 1.59 | 1.70 | 1.82 | 1.94 | 2.06 | 2.19 | 2.32 | 2.46 |
| Condenser inlet pressure | bar | 22.6 | 23.6 | 24.7 | 25.8 | 26.8 | 27.9 | 28.9 | 30.0 |
| Evaporator inlet temperature | °C | -36.7 | -37.5 | -38.2 | -39.0 | -39.7 | -40.4 | -41.0 | -41.6 |
| Evaporator dewpoint | °C | -23.8 | -23.3 | -22.9 | -22.5 | -22.1 | -21.9 | -21.6 | -21.4 |
| Evaporator exit gas temperature | °C | -18.8 | -18.3 | -17.9 | -17.5 | -17.1 | -16.9 | -16.6 | -16.4 |
| Evaporator mean temperature | °C | -30.2 | -30.4 | -30.6 | -30.7 | -30.9 | -31.1 | -31.3 | -31.5 |
| Evaporator glide (out-in) | K | 12.9 | 14.2 | 15.4 | 16.5 | 17.6 | 18.5 | 19.4 | 20.2 |
| Compressor suction pressure | bar | 1.57 | 1.68 | 1.80 | 1.92 | 2.04 | 2.2.17 | 2.30 | 2.44 |
| Compressor discharge pressure | bar | 22.6 | 23.6 | 24.7 | 25.8 | 26.8 | 27.9 | 28.9 | 30.0 |
| Suction line pressure drop | Pa/m | 127 | 118 | 109 | 102 | 96 | 90 | 85 | 80 |
| Pressure drop relative to reference | | 43.4% | 40.3% | 37.5% | 35.0% | 32.8% | 30.8% | 28.9% | 27.3% |
| Condenser dew point | °C | 56.6 | 56.4 | 56.3 | 56.0 | 55.6 | 55.2 | 54.8 | 54.3 |
| Condenser bubble point | °C | 30.5 | 29.7 | 28.9 | 28.3 | 27.8 | 27.3 | 26.9 | 26.6 |
| Condenser exit liquid temperature | °C | 29.5 | 28.7 | 27.9 | 27.3 | 26.8 | 26.3 | 25.9 | 25.6 |
| Condenser mean temperature | °C | 43.5 | 43.1 | 42.6 | 42.1 | 41.7 | 41.3 | 40.8 | 40.4 |

(continued)

| Composition CO$_2$/R-32/R-134a/R-1234ze(E) % by weight ► | | 16/10/20/54 | 18/10/20/52 | 20/10/20/50 | 22/10/20148 | 24/10/20/46 | 26/10/20/44 | 28/10/20/42 | 30/10/20/40 |
|---|---|---|---|---|---|---|---|---|---|
| Condenser glide (in-out) | K | 26.0 | 26.8 | 27.3 | 27.7 | 27.9 | 27.9 | 27.9 | 27.7 |

EP 2 571 956 B1

59

**Table 45: Theoretical Performance Data of Selected R-744/R-32/R-134a/R-1234ze(E) blends containing 0-14 % R-744, 10 % R-32 and 30 % R-134a**

| Composition $CO_2$/R-32/R-134a/R-1234ze(E) % by weight ▶ | | 01/10/30/60 | 2/10/30/58 | 4/10/30/56 | 6/10/30/54 | 8/10/30/52 | 10/10/30/50 | 12/10/30/48 | 14/10/30/46 |
|---|---|---|---|---|---|---|---|---|---|
| COP (heating) | | 2.14 | 2.17 | 2.19 | 2.21 | 2.23 | 2.24 | 2.25 | 2.26 |
| COP (heating) relative to Reference | | 101.5% | 102.9% | 104.1% | 105.0% | 105.7% | 106.3% | 106.7% | 107.1% |
| Volumetric heating capacity at suction | kJ/m³ | 948 | 1040 | 1135 | 1234 | 1337 | 1443 | 1551 | 1662 |
| Capacity relative to Reference | | 107.8% | 118.3% | 129.2% | 140.5% | 152.2% | 164.2% | 176.5% | 189.2% |
| Critical temperature | °C | 101.47 | 98.35 | 95.39 | 92.57 | 89.89 | 87.33 | 84.88 | 82.55 |
| Critical pressure | bar | 43.07 | 43.84 | 44.60 | 45.36 | 46.12 | 46.87 | 47.63 | 48.38 |
| Condenser enthalpy change | kJ/kg | 245.0 | 254.4 | 262.7 | 270.2 | 276.9 | 283.0 | 288.7 | 294.0 |
| Pressure ratio | | 16.08 | 16.00 | 15.85 | 15.64 | 15.38 | 15.09 | 14.79 | 14.47 |
| Refrigerant mass flow | kg/hr | 29.4 | 28.3 | 27.4 | 26.6 | 26.0 | 25.4 | 24.9 | 24.5 |
| Compressor discharge temperature | °C | 125.6 | 129.0 | 132.2 | 135.2 | 137.9 | 140.6 | 143.1 | 145.5 |
| Evaporator inlet pressure | bar | 0.91 | 0.98 | 1.06 | 1.14 | 1.23 | 1.32 | 1.42 | 1.53 |
| Condenser inlet pressure | bar | 14.0 | 15.1 | 16.2 | 17.3 | 18.5 | 19.6 | 20.7 | 21.8 |
| Evaporator inlet temperature | °C | -30.8 | -31.4 | -32.0 | -32.7 | -33.4 | -34.1 | -34.9 | -35.6 |
| Evaporator dewpoint | °C | -28.8 | -28.2 | -27.5 | -26.9 | -26.3 | -25.6 | -25.0 | -24.5 |
| Evaporator exit gas temperature | °C | -23.8 | -23.2 | -22.5 | -21.9 | -21.3 | -20.6 | -20.0 | -19.5 |
| Evaporator mean temperature | °C | -29.8 | -29.8 | -29.8 | -29.8 | -29.8 | -29.9 | -30.0 | -30.1 |
| Evaporator glide (out-in) | K | 2.0 | 3.2 | 4.5 | 5.8 | 7.2 | 8.5 | 9.8 | 11.2 |
| Compressor suction pressure | bar | 0.87 | 0.94 | 1.02 | 1.11 | 1.20 | 1.30 | 1.40 | 1.51 |
| Compressor discharge pressure | bar | 14.0 | 15.1 | 16.2 | 17.3 | 18.5 | 19.6 | 20.7 | 21.8 |
| Suction line pressure drop | Pa/m . | 267 | 237 | 212 | 191 | 173 | 158 | 144 | 133 |
| Pressure drop relative to reference | | 91.6% | 81.1% | 72.5% | 65.3% | 59.2% | 54.0% | 49.5% | 45.5% |
| Condenser dew point | °C | 52.3 | 53.3 | 54.1 | 54.8 | 55.3 | 55.6 | 55.8 | 55.9 |
| Condenser bubble point | °C | 46.4 | 43.0 | 40.2 | 37.9 | 35.9 | 34.3 | 33.0 | 31.8 |
| Condenser exit liquid temperature | °C | 45.4 | 42.0 | 39.2 | 36.9 | 34.9 | 33.3 | 32.0 | 30.8 |
| Condenser mean temperature | °C | 49.3 | 48.1 | 47.2 | 46.3 | 45.6 | 45.0 | 44.4 | 43.8 |
| Condenser glide (in-out) | K | 5.9 | 10.3 | 13.9 | 16.9 | 19.3 | 21.3 | 22.9 | 24.1 |

**Table 46: Theoretical Performance Data of Selected R-744/R-32/R-134a/R-1234ze(E) blends containing 16-30 % R-744, 10 % R-32 and 30 % R-134a**

| Composition CO$_2$/R-32/R-134a/R-1234ze(E) % by weight ▶ | | 16/10/30/44 | 18/10/30/42 | 20/10/30/40 | 22/10/30/38 | 24/10/30/36 | 26/10/30/34 | 28/10/30/32 | 30/10/30/30 |
|---|---|---|---|---|---|---|---|---|---|
| COP (heating) | | 2.26 | 2.27 | 2.27 | 2.27 | 2.27 | 2.28 | 2.27 | 2.27 |
| COP (heating) relative to Reference | | 1074% | 107.6% | 107.7% | 107.8% | 107.9% | 107.9% | 107.9% | 107.8% |
| Volumetric heating capacity at suction | kJ/m$^3$ | 1776 | 1892 | 2011 | 2131 | 2254 | 2379 | 2507 | 2637 |
| Capacity relative to Reference | | 202.1% | 215.4% | 228.8% | 242.6% | 256.5% | 270.8% | 285.3% | 300.1% |
| Critical temperature | °C | 80.32 | 78.19 | 76.15 | 74.19 | 72.31 | 70.50 | 68.77 | 67.11 |
| Critical pressure | bar | 49.13 | 49.88 | 50.62 | 51.37 | 52.12 | 52.87 | 53.61 | 54.36 |
| Condenser enthalpy change | kJ/kg | 298.9 | 303.6 | 308.0 | 312.2 | 316.3 | 320.1 | 323.8 | 327.3 |
| Pressure ratio | | 14.15 | 13.83 | 13.52 | 13.21 | 12.91 | 12.61 | 12.33 | 12.05 |
| Refrigerant mass flow | kg/hr | 24.1 | 23.7 | 23.4 | 23.1 | 22.8 | 22.5 | 22.2 | 22.0 |
| Compressor discharge temperature | °C | 147.8 | 150.0 | 152.1 | 154.2 | 156.3 | 158.2 | 160.2 | 162.1 |
| Evaporator inlet pressure | bar | 1.64 | 1.75 | 1.87 | 1.99 | 2.12 | 2.26 | 2.39 | 2.54 |
| Condenser inlet pressure | bar | 22.9 | 24.0 | 25.0 | 26.1 | 27.2 | 28.3 | 29.3 | 30.4 |
| Evaporator inlet temperature | °C | -36.4 | -37.1 | -37.9 | -38.6 | -39.3 | -39.9 | -40.5 | -41.1 |
| Evaporator dewpoint | °C | -24.0 | -23.5 | -23.1 | -22.7 | -22.4 | -22.1 | -21.8 | -21.6 |
| Evaporator exit gas temperature | °C | -19.0 | -18.5 | -18.1 | -17.7 | -17.4 | -17.1 | -16.8 | -16.6 |
| Evaporator mean temperature | °C | -30.2 | -30.3 | -30.5 | -30.6 | -30.8 | -31.0 | -31.2 | -31.3 |
| Evaporator glide (out-in) | K | 12.4 | 13.6 | 14.8 | 15.9 | 16.9 | 17.9 | 18.8 | 19.5 |
| Compressor suction pressure | bar | 1.62 | 1.73 | 1.85 | 1.98 | 2.11 | 2.24 | 2.38 | 2.52 |
| Compressor discharge pressure | bar | 22.9 | 24.0 | 25.0 | 26.1 | 27.2 | 28.3 | 29.3 | 30.4 |
| Suction line pressure drop | Pa/m | 123 | 114 | 106 | 99 | 93 | 87 | 82 | 77 |
| Pressure drop relative to reference | | 42.1% | 39.0% | 36.3% | 33.9% | 31.8% | 29.8% | 28.1% | 26.5% |
| Condenser dew point | °C | 55.9 | 55.8 | 55.6 | 55.3 | 55.0 | 54.6 | 54.2 | 53.7 |
| Condenser bubble point | °C | 30.8 | 29.9 | 29.2 | 28.6 | 28.1 | 27.6 | 27.2 | 26.9 |
| Condenser exit liquid temperature | °C | 29.8 | 28.9 | 28.2 | 27.6 | 27.1 | 26.6 | 26.2 | 25.9 |
| Condenser mean temperature | °C | 43.3 | 42.9 | 42.4 | 42.0 | 41.5 | 41.1 | 40.7 | 40.3 |
| Condenser glide (in-out) | K | 25.1 | 25.8 | 26.4 | 26.7 | 26.9 | 27.0 | 26.9 | 26.8 |

**Table 47: Theoretical Performance Data of Selected R-744/R-32/R-134a/R-1234ze(E) blends containing 0-14 % R-744, 10 % R-32 and 40 % R-134a**

| Composition $CO_2$/R-32/R-134a/R-1234ze(E) % by weight ► | | 0/10/40/50 | 2/10/40/48 | 4/10/40/46 | 6/10/40/44 | 8/10/40/42 | 10/10/40/40 | 12/10/40/38 | 14/10/40/36 |
|---|---|---|---|---|---|---|---|---|---|
| COP (heating) | | 2.14 | 2.17 | 2.20 | 2.22 | 2.23 | 2.24 | 2.25 | 2.26 |
| COP (heating) relative to Reference | | 101.7% | 103.2% | 104.3% | 105.1% | 105.9% | 106.4% | 106.9% | 107.2% |
| Volumetric heating capacity at suction | $kJ/m^3$ | 976 | 1069 | 1167 | 1267 | 1372 | 1480 | 1591 | 1704 |
| Capacity relative to Reference | | 111.1% | 121.7% | 132.8% | 144.2% | 156.1% | 168.4% | 181.1% | 193.9% |
| | | | | | | | | | |
| Critical temperature | °C | 100.75 | 97.68 | 94.76 | 91.98 | 89.33 | 86.81 | 84.40 | 82.10 |
| Critical pressure | bar | 43.42 | 44.20 | 44.97 | 45.74 | 46.51 | 47.27 | 48.04 | 48.80 |
| | | | | | | | | | |
| Condenser enthalpy change | kJ/kg | 247.0 | 256.4 | 264.8 | 272.2 | 278.9 | 285.0 | 290.6 | 295.9 |
| Pressure ratio | | 15.84 | 15.77 | 15.63 | 15.43 | 15.18 | 14.89 | 14.59 | 14.28 |
| Refrigerant mass flow | kg/hr | 29.1 | 28.1 | 27.2 | 26.5 | 25.8 | 25.3 | 24.8 | 24.3 |
| Compressor discharge temperature | °C | 126.7 | 130.1 | 133.3 | 136.3 | 139.1 | 141.7 | 144.2 | 146.6 |
| Evaporator inlet pressure | bar | 0.94 | 1.01 | 1.09 | 1.17 | 1.26 | 1.36 | 1.46 | 1.57 |
| Condenser inlet pressure | bar | 14.2 | 15.3 | 16.4 | 17.6 | 18.7 | 19.8 | 21.0 | 22.1 |
| Evaporator inlet temperature | °C | -30.7 | -31.3 | -31.9 | -32.6 | -33.3 | -34.0 | -34.7 | -35.4 |
| Evaporator dewpoint | °C | -28.9 | -28.3 | -27.7 | -27.1 | -26.4 | -25.8 | -25.2 | -24.7 |
| Evaporator exit gas temperature | °C | -23.9 | -23.3 | -22.7 | -22.1 | -21.4 | -20.8 | -20.2 | -19.7 |
| Evaporator mean temperature | °C | -29.8 | -29.8 | -29.8 | -29.8 | -29.9 | -29.9 | -30.0 | -30.1 |
| Evaporator glide (out-in) | K | -.8 | 3.0 | 4.2 | 5.5 | 6.9 | 8.2 | 9.5 | 10.8 |
| Compressor suction pressure | bar | 0.90 | 0.97 | 1.05 | 1.14 | 1.23 | 1.33 | 1.44 | 1.55 |
| Compressor discharge pressure | bar | 14.2 | 15.3 | 16.4 | 17.6 | 18.7 | 19.8 | 21.0 | 22.1 |
| Suction line pressure drop | Pa/m | 258 | 229 | 205 | 185 | 168 | 153 | 140 | 129 |
| Pressure drop relative to reference | | 88.4% | 78.4% | 70.2% | 63.3% | 57.4% | 52.3% | 48.0% | 44.2% |
| Condenser dew point | °C | 51.7 | 52.7 | 53.5 | 54.2 | 54.7 | 55.0 | 55.2 | 55.3 |
| Condenser bubble point | °C | 46.5 | 43.1 | 40.3 | 38.0 | 36.1 | 34.5 | 33.1 | 31.9 |
| Condenser exit liquid temperature | °C | 45.5 | 42.1 | 39.3 | 37.0 | 35.1 | 33.5 | 32.1 | 30.9 |
| Condenser mean temperature | °C | 49.1 | 47.9 | 46.9 | 46.1 | 45.4 | 44.7 | 44.2 | 43.6 |
| Condenser glide (in-out) | K | 5.3 | 9.6 | 13.2 | 16.2 | 18.6 | 20.6 | 22.1 | 23.4 |

**Table 48: Theoretical Performance Data of Selected R-744/R-32/R-134a/R-1234ze(E) blends containing 16-30 % R-744, 10 % R-32 and 40 % R-134a**

| Composition $CO_2$/R-32/R-134a/R-1234ze(E) % by weight ► | | 16N0/40/34 | 18/10/40/32 | 20/10/40/30 | 22/10/40/28 | 24/10/40/26 | 26/10/40/24 | 28/10/40/22 | 30/10/40/20 |
|---|---|---|---|---|---|---|---|---|---|
| COP (heating) | | 2.27 | 2.27 | 2.27 | 2.28 | 2.28 | 2.28 | 2.28 | 2.28 |
| COP (heating) relative to Reference | | 107.5% | 107.7% | 107.9% | 108.0% | 108.1% | 108.1% | 108.1% | 108.0% |
| Volumetric heating capacity at suction | $kJ/m^3$ | 1820 | 1939 | 2060 | 2184 | 2309 | 2437 | 2569 | 2701 |
| Capacity relative to Reference | | 207.2% | 220.7% | 234.5% | 248.5% | 262.8% | 277.4% | 292.3% | 307.4% |
| Critical temperature | °C | 79.90 | 77.79 | 75.77 | 73.84 | 71.98 | 70.20 | 68.49 | 66.84 |
| Critical pressure | bar | 49.56 | 50.32 | 51.07 | 51.83 | 52.59 | 53.34 | 54.10 | 54.85 |
| Condenser enthalpy change | kJ/kg | 300.8 | 305.4 | 309.8 | 313.9 | 317.9 | 321.6 | 325.2 | 328.7 |
| Pressure ratio | | 13.97 | 13.65 | 13.34 | 13.03 | 12.73 | 12.44 | 12.15 | 11.87 |
| Refrigerant mass flow | kg/hr | 23.9 | 23.6 | 23.2 | 22.9 | 22.7 | 22.4 | 22.1 | 21.9 |
| Compressor discharge temperature | °C | 148.8 | 151.0 | 153.1 | 155.2 | 157.2 | 159.2 | 161.0 | 162.9 |
| Evaporator inlet pressure | bar | 1.68 | 1.80 | 1.92 | 2.05 | 2.18 | 2.31 | 2.46 | 2.60 |
| Condenser inlet pressure | bar | 23.2 | 24.3 | 25.4 | 26.5 | 27.5 | 28.6 | 29.7 | 30.8 |
| Evaporator inlet temperature | °C | -36.2 | -36.9 | -37.6 | -38.3 | -39.0 | -39.6 | -40.2 | -40.8 |
| Evaporator dewpoint | °C | -24.2 | -23.7 | -23.3 | -22.9 | -22.5 | -22.2 | -21.9 | -21.7 |
| Evaporator exit gas temperature | °C | -19.2 | -18.7 | -18.3 | -17.9 | -17.5 | -17.2 | -16.9 | -16.7 |
| Evaporator mean temperature | °C | -30.2 | -30.3 | -30.4 | -30.6 | -30.8 | -30.9 | -31.1 | -31.2 |
| Evaporator glide (out-in) | K | 12.0 | 13.2 | 14.3 | 15.4 | 16.5 | 17.4 | 18.3 | 19.1 |
| Compressor suction pressure | bar | 1.66 | 1.78 | 1.90 | 2.03 | 2.16 | 2.30 | 2.44 | 2.59 |
| Compressor discharge pressure | bar | 23.2 | 24.3 | 25.4 | 26.5 | 27.5 | 28.6 | 29.7 | 30.8 |
| Suction line pressure drop | Pa/m | 119 | 111 | 103 | 96 | 90 | 85 | 80 | 75 |
| Pressure drop relative to reference | | 40.9% | 37.9% | 35.3% | 33.0% | 30.9% | 29.0% | 27.3% | 25.8% |
| Condenser dew point | °C | 55.3 | 55.2 | 55.1 | 54.8 | 54.5 | 54.1 | 53.6 | 53.2 |
| Condenser bubble point | °C | 31.0 | 30.1 | 29.4 | 28.8 | 28.3 | 27.8 | 27.4 | 27.1 |
| Condenser exit liquid temperature | °C | 30.0 | 29.1 | 28.4 | 27.8 | 27.3 | 26.8 | 26.4 | 26.1 |
| Condenser mean temperature | °C | 43.1 | 42.7 | 42.2 | 41.8 | 41.4 | 40.9 | 40.5 | 40.1 |

EP 2 571 956 B1

(continued)

| Composition $CO_2$/R-32/R-134a/R-1234ze(E) % by weight ▶ | | 16N0/40/34 | 18/10/40/32 | 20/10/40/30 | 22/10/40/28 | 24/10/40/26 | 26/10/40/24 | 28/10/40/22 | 30/10/40/20 |
|---|---|---|---|---|---|---|---|---|---|
| Condenser glide (in-out) | K | 24.4 | 25.1 | 25.7 | 26.0 | 26.2 | 26.3 | 26.2 | 26.1 |

**Table 49: Theoretical Performance Data of Selected R-744/R-32/R-134a/R-1234ze(E) blends containing 0-14 % R-T44, 10 % R-32 and 50 % R-134a**

| Composition CO$_2$/R-32/R-134a/R-1234ze(E) % by weight ▶ | | 0/10/50/40 | 2/10/60/38 | 4/10/60/36 | 6/10/50/34 | 8/10/60/32 | 10/10/50/30 | 12/10160/28 | 14/10/60/26 |
|---|---|---|---|---|---|---|---|---|---|
| COP (heating) | | 2.15 | 2.18 | 2.20 | 2.22 | 2.24 | 2.25 | 2.26 | 2.26 |
| COP (heating) relative to Reference | | 102.0% | 103.4% | 104.5% | 105.4% | 106.1% | 106.6% | 107.1% | 107.4% |
| Volumetric heating capacity at suction | kJ/m$^3$ | 1001 | 1096 | 1195 | 1297 | 1403 | 1513 | 1626 | 1741 |
| Capacity relative to Reference | | 113.9% | 124.7% | 136.0% | 147.6% | 159.7% | 172.2% | 185.0% | 198.1% |
| | | | | | | | | | |
| Critical temperature | °C | 100.04 | 97.02 | 94.14 | 91.41 | 88.80 | 86.31 | 83.94 | 81.67 |
| Critical pressure | bar | 43.67 | 44.47 | 45.25 | 46.04 | 46.82 | 47.60 | 48.37 | 49.15 |
| | | | | | | | | | |
| Condenser enthalpy change | kJ/kg | 249.3 | 258.7 | 267.1 | 274.5 | 281.2 | 287.3 | 293.0 | 298.2 |
| Pressure ratio | | 15.64 | 15.58 | 15.45 | 15.26 | 15.01 | 14.74 | 14.44 | 14.13 |
| Refrigerant mass flow | kg/hr | 28.9 | 27.8 | 27.0 | 26.2 | 25.6 | 25.1 | 24.6 | 24.1 |
| Compressor discharge temperature | °C | 127.9 | 131.4 | 134.6 | 137.6 | 140.4 | 143.0 | 145.4 | 147.8 |
| Evaporator inlet pressure | bar | 0.96 | 1.03 | 1.11 | 1.20 | 1.29 | 1.39 | 1.49 | 1.60 |
| Condenser inlet pressure | bar | 14.4 | 15.5 | 16.6 | 17.8 | 18.9 | 20.1 | 21.2 | 22.3 |
| Evaporator inlet temperature | °C | -30.7 | -31.3 | -31.9 | -32.5 | -33.2 | -33.9 | -34.6 | -35.3 |
| Evaporator dewpoint | °C | -29.0 | -28.5 | -27.8 | -27.2 | -26.6 | -26.0 | -25.4 | -24.8 |
| Evaporator exit gas temperature | °C | -24.0 | -23.5 | -22.8 | -22.2 | -21.6 | -21.0 | -20.4 | -19.8 |
| Evaporator mean temperature | °C | -29.9 | -29.9 | -29.9 | -29.9 | -29.9 | -29.9 | -30.0 | -30.1 |
| Evaporator glide (out-in) | K | 1.6 | 2.8 | 4.0 | 5.3 | 6.6 | 7.9 | 9.2 | 10.4 |
| Compressor suction pressure | bar | 0.92 | 0.99 | 1.08 | 1.17 | 1.26 | 1.36 | 1.47 | 1.58 |
| Compressor discharge pressure | bar | 14.4 | 15.5 | 16.6 | 17.8 | 18.9 | 20.1 | 21.2 | 22.3 |
| Suction line pressure drop | Pa/m | 250 | 222 | 199 | 179 | 163 | 149 | 136 | 126 |
| Pressure drop relative to reference | | 85.6% | 76.0% | 68.1% | 61.4% | 55.8% | 50.9% | 46.7% | 43.0% |
| Condenser dew point | °C | 51.2 | 52.2 | 53.0 | 53.7 | 54.2 | 54.5 | 54.8 | 54.9 |
| Condenser bubble point | °C | 46.6 | 43.2 | 40.4 | 38.1 | 36.1 | 34.5 | 33.1 | 32.0 |
| Condenser exit liquid temperature | °C | 46.6 | 42.2 | 39.4 | 37.1 | 35.1 | 33.5 | 32.1 | 31.0 |
| Condenser mean temperature | °C | 48.9 | 47.7 | 46.7 | 45.9 | 45.2 | 44.5 | 43.9 | 43.4 |
| Condenser glide (in-out) | K | 4.7 | 9.0 | 12.7 | 15.6 | 18.1 | 20.0 | 21.6 | 22.9 |

**Table 50: Theoretical Performance Data of Selected R-744/R-32/R-134a/R-1234ze(E) blends containing 16-30 % R-744, 10 % R-and 50 % R-134a**

| Composition CO$_2$/R-32/R-134a/R-1234ze(E) % by weight ▶ | | 16/10/50/24 | 18/10/50/22 | 20/10/50/20 | 22/10/50/18 | 24/10/50/16 | 26/10/60/14 | 28/10/60/12 | 30/10/50/10 |
|---|---|---|---|---|---|---|---|---|---|
| COP (heating) | | 2.27 | 2.28 | 2.28 | 2.28 | 2.28 | 2.28 | 2.28 | 2.28 |
| COP (heating) relative to Reference | | 107.7% | 107.9% | 108.1% | 108.2% | 108.2% | 108.3% | 108.3% | 108.2% |
| Volumetric heating capacity at suction | kJ/m$^3$ | 1859 | 1980 | 2103 | 2229 | 2357 | 2487 | 2620 | 2755 |
| Capacity relative to Reference | | 211.6% | 225.4% | 239.4% | 253.7% | 268.2% | 283.1% | 298.2% | 313.5% |
| | | | | | | | | | |
| Critical temperature | °C | 79.50 | 77.42 | 75.43 | 73.52 | 71.69 | 69.93 | 68.24 | 66.61 |
| Critical pressure | bar | 49.92 | 50.69 | 51.46 | 52.23 | 53.00 | 53.77 | 54.53 | 55.30 |
| | | | | | | | | | |
| Condenser enthalpy change | kJ/kg | 303.0 | 307.6 | 311.9 | 316.0 | 320.0 | 323.7 | 327.3 | 330.7 |
| Pressure ratio | | 13.82 | 13.50 | 13.19 | 12.89 | 12.59 | 12.31 | 12.02 | 11.75 |
| Refrigerant mass flow | kg/hr | 23.8 | 23.4 | 23.1 | 22.8 | 22.5 | 22.2 | 22.0 | 21.8 |
| Compressor discharge temperature | °C | 150.1 | 152.2 | 154.3 | 156.4 | 158.3 | 160.3 | 162.1 | 164.0 |
| Evaporator inlet pressure | bar | 1.72 | 1.84 | 1.96 | 2.09 | 2.22 | 2.36 | 2.51 | 2.66 |
| Condenser inlet pressure | bar | 23.4 | 24.5 | 25.6 | 26.7 | 27.8 | 28.9 | 30.0 | 31.1 |
| Evaporator inlet temperature | °C | -36.0 | -36.7 | -37.4 | -38.1 | -38.8 | -39.4 | -40.0 | -40.6 |
| Evaporator dewpoint | °C | -24.3 | -23.8 | -23.4 | -23.0 | -22.6 | -22.3 | -22.0 | -21.8 |
| Evaporator exit gas temperature | °C | -19.3 | -18.8 | -18.4 | -18.0 | -17.6 | -17.3 | -17.0 | -16.8 |
| Evaporator mean temperature | °C | -30.2 | -30.3 | -30.4 | -30.6 | -30.7 | -30.9 | -31.0 | -31.2 |
| Evaporator glide (out-in) | K | 11.7 | 12.9 | 14.0 | 15.1 | 16.2 | 17.1 | 18.0 | 18.8 |
| Compressor suction pressure | bar | 1.70 | 1.82 | 1.94 | 2.07 | 2.21 | 2.35 | 2.49 | 2.64 |
| Compressor discharge pressure | bar | 23.4 | 24.5 | 25.6 | 26.7 | 27.8 | 28.9 | 30.0 | 31.1 |
| Suction line pressure drop | Pa/m | 116 | 108 | 101 | 94 | 88 | 83 | 78 | 73 |
| Pressure drop relative to reference | | 39.8% | 36.9% | 34.4% | 32.2% | 30.1% | 28.3% | 26.7% | 25.2% |
| Condenser dew point | °C | 54.9 | 54.8 | 54.6 | 54.4 | 54.0 | 53.7 | 53.2 | 52.8 |
| Condenser bubble point | °C | 31.0 | 30.2 | 29.4 | 28.8 | 28.3 | 27.9 | 27.5 | 27.2 |
| Condenser exit liquid temperature | °C | 30.0 | 29.2 | 28.4 | 27.8 | 27.3 | 26.9 | 26.5 | 26.2 |
| Condenser mean temperature | °C | 42.9 | 42.5 | 42.0 | 41.6 | 41.2 | 40.8 | 40.4 | 40.0 |

(continued)

| Composition CO$_2$/R-32/R-134a/R-1234ze(E) % by weight ▲ | | 16/10/50/24 | 18/10/50/22 | 20/10/50/20 | 22/10/50/18 | 24/10/50/16 | 26/10/60/14 | 28/10/60/12 | 30/10/50/10 |
|---|---|---|---|---|---|---|---|---|---|
| Condenser glide (in-out) | K | 23.9 | 24.6 | 25.2 | 25.5 | 25.7 | 25.8 | 25.8 | 25.6 |

**Table 51: Theoretical Performance Data of Selected R-744/R-32/R-134a/R-1234ze(E) blends containing 0-14 % R-744, 15 % R-32 and 5 % R-134a**

| Composition CO₂/R-32/R-134a/R-1234ze(E) % by weight ► | | 0/15/5/80 | 2/15/5/78 | 4/15/5/76 | 6/15/5/74 | 8/15/5/72 | 10/15/5/70 | 12/15/5/68 | 14/15/5/66 |
|---|---|---|---|---|---|---|---|---|---|
| COP (heating) | | 2.17 | 2.19 | 2.21 | 2.23 | 2.24 | 2.26 | 2.26 | 2.27 |
| COP (heating) relative to Reference | | 102.8% | 104.0% | 105.0% | 105.8% | 106.5% | 107.0% | 107.3% | 107.6% |
| Volumetric heating capacity at suction | kJ/m³ | 983 | 1075 | 1170 | 1267 | 1368 | 1471 | 1575 | 1682 |
| Capacity relative to Reference | | 111.9% | 122.3% | 133.1% | 144.2% | 155.7% | 167.4% | 179.2% | 191.4% |
| Critical temperature | °C | 100.70 | 97.79 | 94.99 | 92.31 | 89.74 | 87.29 | 84.94 | 82.70 |
| Critical pressure | bar | 43.58 | 44.39 | 45.17 | 45.95 | 46.71 | 47.47 | 48.22 | 48.97 |
| Condenser enthalpy change | kJ/kg | 253.1 | 261.7 | 269.4 | 276.4 | 282.8 | 288.7 | 294.3 | 299.5 |
| Pressure ratio | | 15.94 | 15.80 | 15.61 | 15.37 | 15.11 | 14.82 | 14.54 | 14.25 |
| Refrigerant mass flow | kg/hr | 28.4 | 27.5 | 26.7 | 26.1 | 25.5 | 24.9 | 24.5 | 24.0 |
| Compressor discharge temperature | °C | 127.4 | 130.5 | 133.5 | 136.4 | 139.1 | 141.6 | 144.1 | 146.5 |
| Evaporator inlet pressure | bar | 0.94 | 1.01 | 1.09 | 1.17 | 1.26 | 1.35 | 1.45 | 1.55 |
| Condenser inlet pressure | bar | 14.3 | 15.3 | 16.4 | 17.5 | 18.6 | 19.6 | 20.7 | 21.8 |
| Evaporator inlet temperature | °C | -31.5 | -32.2 | -33.0 | -33.7 | -34.5 | -35.3 | -36.0 | -36.8 |
| Evaporator dewpoint | °C | -27.9 | -27.2 | -26.6 | -26.0 | -25.3 | -24.8 | -24.2 | -23.7 |
| Evaporator exit gas temperature | °C | -22.9 | -22.2 | -21.6 | -21.0 | -20.3 | -19.8 | -19.2 | -18.7 |
| Evaporator mean temperature | °C | -29.7 | -29.7 | -29.8 | -29.8 | -29.9 | -30.0 | -30.1 | -30.3 |
| Evaporator glide (out-in) | K | 3.7 | 5.0 | 6.4 | 7.8 | 9.1 | 10.5 | 11.8 | 13.1 |
| Compressor suction pressure | bar | 0.89 | 0.97 | 1.05 | 1.14 | 1.23 | 1.32 | 1.42 | 1.53 |
| Compressor discharge pressure | bar | 14.3 | 15.3 | 16.4 | 17.5 | 18.6 | 19.6 | 20.7 | 21.8 |
| Suction line pressure drop | Pa/m | 251 | 224 | 202 | 183 | 166 | 152 | 140 | 130 |
| Pressure drop relative to reference | | 86.1% | 76.8% | 69.1% | 62.6% | 57.0% | 52.2% | 48.0% | 44.4% |
| Condenser dew point | °C | 53.3 | 54.2 | 54.9 | 55.4 | 55.8 | 56.1 | 56.2 | 56.2 |
| Condenser bubble point | °C | 44.2 | 41.3 | 38.9 | 36.8 | 35.1 | 33.6 | 32.4 | 31.3 |
| Condenser exit liquid temperature | °C | 43.2 | 40.3 | 37.9 | 35.8 | 34.1 | 32.6 | 31.4 | 30.3 |
| Condenser mean temperature | °C | 48.8 | 47.7 | 46.9 | 46.1 | 45.4 | 44.8 | 44.3 | 43.8 |
| Condenser glide (in-out) | K | 9.0 | 12.8 | 16.0 | 18.6 | 20.7 | 22.5 | 23.9 | 25.0 |

**Table 52: Theoretical Performance Data of Selected R-744/R-32/R-134a/R-1234ze(E) blends containing 16-30 % R-744, 15 % R-32 and 5 % R-134a**

| Composition $CO_2$/R-32/R-134a/R-1234ze(E) % by weight ▶ | | 16/15/5/64 | 18/15/5/62 | 20/15/5/60 | 22/15/5/58 | 24/15/5/56 | 26/15/5/54 | 28/15/5/52 | 30/15/5/50 |
|---|---|---|---|---|---|---|---|---|---|
| COP (heating) | | 2.27 | 2.28 | 2.28 | 2.28 | 2.28 | 2.28 | 2.28 | 2.28 |
| COP (heating) relative to Reference | | 107.8% | 108.0% | 108.1% | 108.1% | 108.1% | 108.1% | 108.0% | 107.9% |
| Volumetric heating capacity at suction | $kJ/m^3$ | 1790 | 1901 | 2014 | 2128 | 2244 | 2362 | 2483 | 2606 |
| Capacity relative to Reference | | 203.8% | 216.4% | 229.2% | 242.2% | 255.4% | 268.9% | 282.6% | 296.5% |
| | | | | | | | | | |
| Critical temperature | °C | 80.54 | 78.48 | 76.50 | 74.60 | 72.77 | 71.02 | 69.33 | 67.70 |
| Critical pressure | bar | 49.71 | 50.46 | 51.20 | 51.94 | 52.68 | 53.42 | 54.16 | 54.90 |
| | | | | | | | | | |
| Condenser enthalpy change | kJ/kg | 304.5 | 309.2 | 313.7 | 318.1 | 322.2 | 326.2 | 330.1 | 333.8 |
| Pressure ratio | | 13.96 | 13.67 | 13.38 | 13.10 | 12.83 | 12.56 | 12.30 | 12.05 |
| Refrigerant mass flow | kg/hr | 23.6 | 23.3 | 22.9 | 22.6 | 22.3 | 22.1 | 21.8 | 21.6 |
| Compressor discharge temperature | °C | 148.9 | 151.1 | 153.3 | 155.5 | 157.6 | 159.7 | 161.7 | 163.7 |
| Evaporator inlet pressure | bar | 1.65 | 1.76 | 1.88 | 1.99 | 2.11 | 2.24 | 2.37 | 2.50 |
| Condenser inlet pressure | bar | 22.8 | 23.8 | 24.9 | 25.9 | 26.9 | 27.9 | 29.0 | 30.0 |
| Evaporator inlet temperature | °C | -37.6 | -38.3 | -39.1 | -39.8 | -40.4 | -41.0 | -41.6 | -42.1 |
| Evaporator dewpoint | °C | -23.3 | -22.8 | -22.5 | -22.1 | -21.9 | -21.6 | -21.4 | -21.2 |
| Evaporator exit gas temperature | °C | -18.3 | -17.8 | -17.5 | -17.1 | -16.9 | -16.6 | -16.4 | -16.2 |
| Evaporator mean temperature | °C | -30.4 | -30.6 | -30.8 | -30.9 | -31.1 | -31.3 | -31.5 | -31.7 |
| Evaporator glide (out-in) | K | 14.3 | 15.5 | 16.6 | 17.6 | 18.5 | 19.4 | 20.2 | 20.9 |
| Compressor suction pressure | bar | 1.63 | 1.74 | 1.86 | 1.98 | 2.10 | 2.22 | 2.35 | 2.49 |
| Compressor discharge pressure | bar | 22.8 | 23.8 | 24.9 | 25.9 | 26.9 | 27.9 | 29.0 | 30.0 |
| Suction line pressure drop | Pa/m | 120 | 112 | 105 | 98 | 92 | 87 | 82 | 77 |
| Pressure drop relative to reference | | 41.2% | 38.3% | 35.8% | 33.5% | 31.5% | 29.6% | 28.0% | 26.4% |
| Condenser dew point | °C | 56.2 | 56.0 | 55.8 | 55.5 | 55.1 | 54.7 | 54.3 | 53.7 |
| Condenser bubble point | °C | 30.3 | 29.5 | 28.8 | 28.2 | 27.7 | 27.3 | 26.9 | 26.5 |
| Condenser exit liquid temperature | °C | 29.3 | 28.5 | 27.8 | 27.2 | 26.7 | 26.3 | 25.9 | 25.5 |
| Condenser mean temperature °C | °C | 43.3 | 42.8 | 42.3 | 41.9 | 41.4 | 41.0 | 40.6 | 40.1 |
| Condenser glide (in-out) | K | 25.8 | 26.5 | 27.0 | 27.3 | 27.4 | 27.5 | 27.4 | 27.2 |

**Table 53: Theoretical Performance Data of Selected R-744/R-32/R-134a/R-1234ze(E) blends containing 0-14 % R-744, 15 % R-32 and 10 % R-134a**

| Composition CO₂/R-32/R-134a/R-1234ze(E) % by weight ▶ | | 0/15/10/75 | 2/15/10/73 | 4/15/10/71 | 6/15/10/69 | 8/15/10/67 | 10/15/10/65 | 12/15/10/63 | 14/15/10/61 |
|---|---|---|---|---|---|---|---|---|---|
| COP (heating) | | 2.17 | 2.20 | 2.22 | 2.23 | 2.25 | 2.26 | 2.26 | 2.27 |
| COP (heating) relative to Reference | | 102.9% | 104.1% | 105.1% | 105.9% | 106.5% | 107.0% | 107.4% | 107.7% |
| Volumetric heating capacity at suction | kj/m³ | 1001 | 1093 | 1188 | 1287 | 1389 | 1493 | 1599 | 1707 |
| Capacity relative to Reference | | 113.9% | 124.4% | 135.2% | 146.5% | 158.0% | 169.9% | 182.0% | 194.3% |
| Critical temperature | °C | 100.38 | 97.46 | 94.67 | 92.00 | 89.45 | 87.01 | 84.68 | 82.44 |
| Critical pressure | bar | 43.87 | 44.66 | 45.43 | 46.20 | 46.96 | 47.71 | 48.47 | 49.22 |
| Condenser enthalpy change | kJ/kg | 253.8 | 262.3 | 270.0 | 277.0 | 283.4 | 289.3 | 294.9 | 300.1 |
| Pressure ratio | | 15.79 | 15.65 | 15.47 | 15.24 | 14.97 | 14.70 | 14.41 | 14.12 |
| Refrigerant mass flow | kg/hr | 28.4 | 27.4 | 26.7 | 26.0 | 25.4 | 24.9 | 24.4 | 24.0 |
| Compressor discharge temperature | °C | 127.8 | 131.0 | 134.0 | 136.8 | 139.5 | 142.1 | 144.5 | 146.9 |
| Evaporator inlet pressure | bar | 0.95 | 1.03 | 1.10 | 1.19 | 1.28 | 1.37 | 1.47 | 1.57 |
| Condenser inlet pressure | bar | 14.4 | 15.5 | 16.6 | 17.6 | 18.7 | 19.8 | 20.9 | 21.9 |
| Evaporator inlet temperature | °C | -31.5 | -32.2 | -32.9 | -33.6 | -34.4 | -35.1 | -35.9 | -36.6 |
| Evaporator dewpoint | °C | -28.0 | -27.3 | -26.7 | -26.1 | -25.5 | -24.9 | -24.3 | -23.8 |
| Evaporator exit gas temperature | °C | -23.0 | -22.3 | -21.7 | -21.1 | -20.5 | -19.9 | -19.3 | -18.8 |
| Evaporator mean temperature | °C | -29.7 | -29.8 | -29.8 | -29.8 | -29.9 | -30.0 | -30.1 | -30.2 |
| Evaporator glide (out-in) | K | 3.6 | 4.9 | 6.2 | 7.6 | 8.9 | 10.2 | 11.5 | 12.8 |
| Compressor suction pressure | bar | 0.91 | 0.99 | 1.07 | 1.16 | 1.25 | 1.35 | 1.45 | 1.55 |
| Compressor discharge pressure | bar | 14.4 | 15.5 | 16.6 | 17.6 | 18.7 | 19.8 | 20.9 | 21.9 |
| Suction line pressure drop | Pa/m | 247 | 220 | 198 | 180 | 164 | 150 | 138 | 128 |
| Pressure drop relative to reference | | 84.5% | 75.4% | 67.9% | 61.5% | 56.0% | 51.3% | 47.2% | 43.7% |
| Condenser dew point | °C | 53.0 | 53.8 | 54.5 | 55.0 | 55.4 | 55.7 | 55.8 | 55.9 |
| Condenser bubble point | °C | 44.4 | 41.5 | 39.0 | 37.0 | 35.3 | 33.8 | 32.5 | 31.5 |
| Condenser exit liquid temperature | °C | 43.4 | 40.5 | 38.0 | 36.0 | 34.3 | 32.8 | 31.5 | 30.5 |
| Condenser mean temperature | °C | 48.7 | 47.6 | 46.8 | 46.0 | 45.4 | 44.7 | 44.2 | 43.7 |
| Condenser glide (in-out) | K | 8.6 | 12.3 | 15.5 | 18.0 | 20.2 | 21.9 | 23.3 | 24.4 |

70

**Table 54: Theoretical Performance Data of Selected R-744/R-32/R-134a/R-1234ze(E) blends containing 16-30 % R-T44, 15 % R-32 and 10 % R-134a**

| Composition CO₂/R-32/R-134 1234ze(E) % by weight ▶ | | 16/15/10/69 | 18/15/10/67 | 20/15/10/55 | 22/15/10/53 | 24/15/10/51 | 26/15/10/49 | 28/15/10/47 | 30/15/10/45 |
|---|---|---|---|---|---|---|---|---|---|
| COP (heating) | | 2.27 | 2.28 | 2.28 | 2.28 | 2.28 | 2.28 | 2.28 | 2.28 |
| COP (heating) relative to Reference | | 107.9% | 108.0% | 108.1% | 108.2% | 108.2% | 108.1% | 108.1% | 108.0% |
| Volumetric heating capacity at suction | kJ/m³ | 1817 | 1930 | 2044 | 2161 | 2279 | 2400 | 2523 | 2648 |
| Capacity relative to Reference | | 206.8% | 219.6% | 232.7% | 245.9% | 259.4% | 273.1% | 287.1% | 301.4% |
| Critical temperature | °C | 80.30 | 78.25 | 76.28 | 74.40 | 72.58 | 70.84 | 69.16 | 67.54 |
| Critical pressure | bar | 49.96 | 50.71 | 51.45 | 52.19 | 52.94 | 53.68 | 54.42 | 55.16 |
| Condenser enthalpy change | kJ/kg | 305.0 | 309.7 | 314.1 | 318.4 | 322.5 | 326.4 | 330.2 | 333.8 |
| Pressure ratio | | 13.83 | 13.54 | 13.25 | 12.97 | 12.70 | 12.43 | 12.17 | 11.91 |
| Refrigerant mass flow | kg/hr | 23.6 | 23.3 | 22.9 | 22.6 | 22.3 | 22.1 | 21.8 | 21.6 |
| Compressor discharge temperature | °C | 149.3 | 151.5 | 153.7 | 155.8 | 157.9 | 159.9 | 161.9 | 163.9 |
| Evaporator inlet pressure | bar | 1.68 | 1.79 | 1.91 | 2.03 | 2.15 | 2.28 | 2.41 | 2.55 |
| Condenser inlet pressure | bar | 23.0 | 24.0 | 25.1 | 26.1 | 27.1 | 28.2 | 29.2 | 30.2 |
| Evaporator inlet temperature | °C | -37.4 | -38.1 | -38.8 | -39.5 | -40.1 | -40.7 | -41.2 | -41.7 |
| Evaporator dewpoint | °C | -23.4 | -23.0 | -22.6 | -22.3 | -22.0 | -21.7 | -21.5 | -21.4 |
| Evaporator exit gas temperature | °C | -18.4 | -18.0 | -17.6 | -17.3 | -17.0 | -16.7 | -16.5 | -16.4 |
| Evaporator mean temperature | °C | -30.4 | -30.5 | -30.7 | -30.9 | -31.1 | -31.2 | -31.4 | -31.5 |
| Evaporator glide (out-in) | K | 14.0 | 15.1 | 16.2 | 17.2 | 18.1 | 18.9 | 19.7 | 20.4 |
| Compressor suction pressure | bar | 1.66 | 1.77 | 1.89 | 2.01 | 2.14 | 2.27 | 2.40 | 2.54 |
| Compressor discharge pressure | bar | 23.0 | 24.0 | 25.1 | 26.1 | 27.1 | 28.2 | 29.2 | 30.2 |
| Suction line pressure drop | Pa/m | 118 | 110 | 103 | 96 | 90 | 85 | 80 | 76 |
| Pressure drop relative to reference | | 40.5% | 37.7% | 35.2% | 33.0% | 31.0% | 29.2% | 27.5% | 26.0% |
| Condenser dew point | °C | 55.8 | 55.6 | 55.4 | 55.1 | 54.8 | 54.3 | 53.9 | 53.4 |
| Condenser bubble point | °C | 30.5 | 29.7 | 29.0 | 28.4 | 27.9 | 27.5 | 27.1 | 26.8 |
| Condenser exit liquid temperature | °C | 29.5 | 28.7 | 28.0 | 27.4 | 26.9 | 26.5 | 26.1 | 25.8 |
| Condenser mean temperature | °C | 43.2 | 42.7 | 42.2 | 41.8 | 41.3 | 40.9 | 40.5 | 40.1 |

EP 2 571 956 B1

(continued)

| Composition CO$_2$/R-32/R-134 1234ze(E) % by weight ▶ | | 16/15/10/69 | 18/15/10/67 | 20/15/10/55 | 22/15/10/53 | 24/15/10/51 | 26/15/10/49 | 28/15/10/47 | 30/15/10/45 |
|---|---|---|---|---|---|---|---|---|---|
| Condenser glide (in-out) | K | 25.3 | 25.9 | 26.4 | 26.7 | 26.8 | 26.9 | 26.8 | 26.6 |

**Table 55: Theoretical Performance Data of Selected R-744/R-32/R-134a/R-1234ze(E) blends containing 0-14 % R-744, 15 % R-32 and 20 % R-134a**

| Composition $CO_2$/R-32/R-134a/R-1234ze(E) % by weight ▶ | | 0/15/20/65 | 2/15/20/63 | 4/15/20/61 | 6/15/20/59 | 8/15/20/57 | 10/15/20/55 | 12/15/20/53 | 14/15/20/51 |
|---|---|---|---|---|---|---|---|---|---|
| COP (heating) | | 2.17 | 2.20 | 2.22 | 2.23 | 2.25 | 2.26 | 2.27 | 2.27 |
| COP (heating) relative to Reference | | 103.1% | 104.3% | 105.2% | 106.0% | 106.6% | 107.1% | 107.4% | 107.7% |
| Volumetric heating capacity at suction | kJ/m$^3$ | 1033 | 1127 | 1224 | 1325 | 1428 | 1534 | 1643 | 1755 |
| Capacity relative to Reference | | 117.6% | 128.3% | 139.3% | 150.7% | 162.5% | 174.6% | 187.0% | 199.7% |
| | | | | | | | | | |
| Critical temperature | °C | 99.72 | 96.82 | 94.05 | 91.41 | 88.89 | 86.48 | 84.18 | 81.97 |
| Critical pressure | bar | 44.35 | 45.12 | 45.89 | 46.65 | 47.41 | 48.17 | 48.92 | 49.67 |
| | | | | | | | | | |
| Condenser enthalpy change | kJ/kg | 255.3 | 263.9 | 271.6 | 278.5 | 284.9 | 290.8 | 296.3 | 301.4 |
| Pressure ratio | | 15.52 | 15.39 | 15.22 | 14.99 | 14.74 | 14.46 | 14.18 | 13.89 |
| Refrigerant mass flow | kg/hr | 28.2 | 27.3 | 26.5 | 25.9 | 25.3 | 24.8 | 24.3 | 23.9 |
| Compressor discharge temperature | °C | 128.8 | 132.0 | 135.0 | 137.8 | 140.5 | 143.0 | 145.5 | 147.8 |
| Evaporator inlet pressure | bar | 0.99 | 1.06 | 1.14 | 1.23 | 1.32 | 1.41 | 1.52 | 1.62 |
| Condenser inlet pressure | bar | 14.7 | 15.7 | 16.8 | 17.9 | 19.0 | 20.1 | 21.2 | 22.2 |
| Evaporator inlet temperature | °C | -31.4 | -32.1 | -32.8 | -33.4 | -34.1 | -34.8 | -35.6 | -36.3 |
| Evaporator dewpoint | °C | -28.1 | -27.5 | -26.9 | -26.3 | -25.7 | -25.1 | -24.6 | -24.1 |
| Evaporator exit gas temperature | °C | -23.1 | -22.5 | -21.9 | -21.3 | -20.7 | -20.1 | -19.6 | -19.1 |
| Evaporator mean temperature | °C | -29.8 | -29.8 | -29.8 | -29.9 | -29.9 | -30.0 | -30.1 | -30.2 |
| Evaporator glide (out-in) | K | 3.3 | 4.6 | 5.9 | 7.2 | | 9.7 | 11.0 | 12.2 |
| Compressor suction pressure | bar | 0.94 | 1.02 | 1.11 | 1.20 | 1.29 | 1.39 | 1.49 | 1.60 |
| Compressor discharge pressure | bar | 14.7 | 15.7 | 16.8 | 17.9 | 19.0 | 20.1 | 21.2 | 22.2 |
| Suction line pressure drop | Pa/m | 238 | 213 | 192 | 174 | 158 | 145 | 134 | 124 |
| Pressure drop relative to reference | | 81.4% | 72.8% | 65.6% | 59.5% | 54.3% | 49.7% | 45.8% | 42.3% |
| Condenser dew point | °C | 52.4 | 53.2 | 53.8 | 54.4 | 54.7 | 55.0 | 55.1 | 55.2 |
| Condenser bubble point | °C | 44.7 | 41.8 | 39.3 | 37.3 | 35.6 | 34.1 | 32.9 | 31.8 |
| Condenser exit liquid temperature | °C | 43.7 | 40.8 | 38.3 | 36.3 | 34.6 | 33.1 | 31.9 | 30.8 |
| Condenser mean temperature | °C | 48.5 | 47.5 | 46.6 | 45.8 | 45.2 | 44.6 | 44.0 | 43.5 |
| Condenser qlide (in-out) | K | 7.7 | 11.4 | 14.5 | 17.1 | 19.2 | 20.9 | 22.3 | 23.4 |

**Table 56: Theoretical Performance Data of Selected R-744/R-32/R-134a/R-1234ze(E) blends containing 16-30 % R-744, 15 % R-32 and 20 % R-134a**

| Composition $CO_2$/R-32/R-134a/R-1234ze(E) % by weight | Units | 16/15/20/49 | 18/15/20/47 | 20/15/20/45 | 22/15/20/43 | 24/15/20/41 | 26/15/20/39 | 28/15/20/37 | 30/15/20/35 |
|---|---|---|---|---|---|---|---|---|---|
| COP (heating) | | 2.28 | 2.28 | 2.28 | 2.28 | 2.28 | 2.28 | 2.28 | 2.28 |
| COP (heating) relative to Reference | | 108.0% | 108.1% | 108.2% | 108.3% | 108.3% | 108.3% | 108.3% | 108.2% |
| Volumetric heating capacity at suction | kJ/m³ | 1868 | 1984 | 2102 | 2222 | 2345 | 2470 | 2598 | 2729 |
| Capacity relative to Reference | | 212.6% | 225.8% | 239.2% | 252.9% | 266.9% | 281.1% | 295.7% | 310.5% |
| Critical temperature | °C | 79.86 | 77.83 | 75.88 | 74.02 | 72.22 | 70.50 | 68.84 | 67.24 |
| Critical pressure | bar | 50.42 | 51.17 | 51.92 | 52.67 | 53.42 | 54.16 | 54.91 | 55.65 |
| Condenser enthalpy change | kJ/kg | 306.2 | 310.8 | 315.2 | 319.4 | 323.4 | 327.2 | 330.8 | 334.3 |
| Pressure ratio | | 13.60 | 13.31 | 13.02 | 12.74 | 12.47 | 12.20 | 11.93 | 11.67 |
| Refrigerant mass flow | kg/hr | 23.5 | 23.2 | 22.8 | 22.5 | 22.3 | 22.0 | 21.8 | 21.5 |
| Compressor discharge temperature | °C | 150.1 | 152.3 | 154.4 | 156.5 | 158.5 | 160.5 | 162.4 | 164.3 |
| Evaporator inlet pressure | bar | 1.73 | 1.85 | 1.97 | 2.09 | 2.22 | 2.36 | 2.49 | 2.64 |
| Condenser inlet pressure | bar | 23.3 | 24.4 | 25.4 | 26.5 | 27.5 | 28.6 | 29.6 | 30.7 |
| Evaporator inlet temperature | °C | -37.0 | -37.7 | -38.3 | -39.0 | -39.6 | -40.1 | -40.6 | -41.1 |
| Evaporator dewpoint | °C | -23.7 | -23.2 | -22.9 | -22.5 | -22.3 | -22.0 | -21.8 | -21.6 |
| Evaporator exit gas temperature | °C | -18.7 | -18.2 | -17.9 | -17.5 | -17.3 | -17.0 | -16.8 | -16.6 |
| Evaporator mean temperature | °C | -30.3 | -30.5 | -30.6 | -30.8 | -30.9 | -31.1 | -31.2 | -31.3 |
| Evaporator glide (out-in) | K | 13.3 | 14.4 | 15.5 | 16.4 | 17.3 | 18.1 | 18.9 | 19.5 |
| Compressor suction pressure | bar | 1.71 | 1.83 | 1.95 | 2.08 | 2.21 | 2.34 | 2.48 | 2.63 |
| Compressor discharge pressure | bar | 23.3 | 24.4 | 25.4 | 26.5 | 27.5 | 28.6 | 29.6 | 30.7 |
| Suction line pressure drop | Pa/m | 115 | 107 | 100 | 93 | 88 | 83 | 78 | 74 |
| Pressure drop relative to reference | | 39.3% | 36.6% | 34.2% | 32.0% | 30.0% | 28.3% | 26.7% | 25.2% |
| Condenser dew point | °C | 55.1 | 54.9 | 54.7 | 54.4 | 54.1 | 53.7 | 53.2 | 52.7 |
| Condenser bubble point | °C | 30.9 | 30.1 | 29.4 | 28.8 | 28.3 | 27.9 | 27.5 | 27.2 |
| Condenser exit liquid temperature | °C | 29.9 | 29.1 | 28.4 | 27.8 | 27.3 | 26.9 | 26.5 | 26.2 |
| Condenser mean temperature | °C | 43.0 | 42.5 | 42.1 | 41.6 | 41.2 | 40.8 | 40.4 | 40.0 |

74

(continued)

| Composition CO$_2$/R-32/R-134a/R-1234ze(E) % by weight ► | | 16/15/20/49 | 18/15/20/47 | 20/15/20/45 | 22/15/20/43 | 24/15/20/41 | 26/15/20/39 | 28/15/20/37 | 30/15/20/35 |
|---|---|---|---|---|---|---|---|---|---|
| Condenser glide (in-out) | K | 24.2 | 24.9 | 25.3 | 25.6 | 25.8 | 25.8 | 25.7 | 25.5 |

**Table 57: Theoretical Performance Data of Selected R-744/R-32/R-134a/R-1234ze(E) blends containing 0-14 % R-744, 15 % R-32 and 30 % R-134a**

| Composition $CO_2$/R-32/R-134a/R-1234ze(E) % by weight ▶ | | 0/15/30/55 | 2/15/30/53 | 41/15/30/61 | 68/30/49 | 8/15/30/47 | 10/15/30/45 | 12/15/30/43 | 14/15/30/41 |
|---|---|---|---|---|---|---|---|---|---|
| COP (heating) | | 2.18 | 2.20 | 2.22 | 2.24 | 2.25 | 2.26 | 2.27 | 2.27 |
| COP (heating) relative to Reference | | 103.2% | 104.4% | 105.3% | 106.1% | 106.7% | 107.2% | 107.5% | 107.8% |
| Volumetric heating capacity at suction | kJ/m$^3$ | 1063 | 1158 | 1257 | 1359 | 1465 | 1573 | 1685 | 1799 |
| Capacity relative to Reference | | 120.9% | 131.8% | 143.1% | 154.7% | 166.7% | 179.0% | 191.7% | 204.7% |
| | | | | | | | | | |
| Critical temperature | °C | 99.07 | 96.20 | 93.47 | 90.86 | 88.37 | 85.99 | 83.71 | 81.53 |
| Critical pressure | bar | 44.72 | 45.49 | 46.26 | 47.03 | 47.79 | 48.55 | 49.31 | 50.07 |
| | | | | | | | | | |
| Condenser enthalpy change | kJ/kg | 257.1 | 265.7 | 273.4 | 280.3 | 286.7 | 292.5 | 298.0 | 303.1 |
| Pressure ratio | | 15.28 | 15.17 | 15.00 | 14.79 | 14.54 | 14.27 | 13.99 | 13.70 |
| Refrigerant mass flow | kg/hr | 28.0 | 27.1 | 26.3 | 25.7 | 25.1 | 24.6 | 24.2 | 23.8 |
| Compressor discharge temperature | °C | 129.9 | 133.1 | 136.1 | 138.9 | 141.6 | 144.1 | 146.5 | 148.9 |
| Evaporator inlet pressure | bar | 1.01 | 1.09 | 1.17 | 1.26 | 1.35 | 1.45 | 1.56 | 1.67 |
| Condenser inlet pressure | bar | 14.9 | 16.0 | 17.1 | 18.2 | 19.3 | 20.4 | 21.5 | 22.5 |
| Evaporator inlet temperature | °C | -31.3 | -32.0 | -32.6 | -33.3 | -33.9 | -34.6 | -35.3 | -36.0 |
| Evaporator dewpoint | °C | -28.3 | -27.7 | -27.1 | -26.5 | -25.9 | -25.4 | -24.8 | -24.4 |
| Evaporator exit gas temperature | °C | -23.3 | -22.7 | -22.1 | -21.5 | -20.9 | -20.4 | -19.8 | -19.4 |
| Evaporator mean temperature | °C | -29.8 | -29.8 | -29.8 | -29.9 | -29.9 | -30.0 | -30.1 | -30.2 |
| Evaporator glide (out-in) | K | 3.1 | 4.3 | 5.5 | 6.7 | 8.0 | 9.2 | 10.4 | 11.6 |
| Compressor suction pressure | bar | 0.97 | 1.05 | 1.14 | 1.23 | 1.33 | 1.43 | 1.53 | 1.65 |
| Compressor discharge pressure | bar | 14.9 | 16.0 | 17.1 | 18.2 | 19.3 | 20.4 | 21.5 | 22.5 |
| Suction line pressure drop | Pa/m | 230 | 206 | 186 | 169 | 154 | 141 | 130 | 120 |
| Pressure drop relative to reference | | 78.8% | 70.5% | 63.6% | 57.7% | 52.7% | 48.3% | 44.5% | 41.1% |
| Condenser dew point | °C | 51.8 | 52.6 | 53.2 | 53.7 | 54.1 | 54.4 | 54.5 | 54.5 |
| Condenser bubble point | °C | 44.9 | 42.0 | 39.6 | 37.5 | 35.8 | 34.3 | 33.1 | 32.0 |
| Condenser exit liquid temperature | °C | 43.9 | 41.0 | 38.6 | 36.5 | 34.8 | 33.3 | 32.1 | 31.0 |
| Condenser mean temperature | °C | 48.3 | 47.3 | 46.4 | 45.6 | 45.0 | 44.3 | 43.8 | 43.3 |
| Condenser glide (in-out) | K | 6.9 | 10.6 | 13.7 | 16.2 | 18.3 | 20.0 | 21.4 | 22.5 |

**Table 58: Theoretical Performance Data of Selected R-744/R-32/R-134a/R-1234ze(E) blends containing 16-30 % R-744, 15 % R-32 and 30 % R-134a**

| Composition CO$_2$/R-32/R-134a/R-1234ze(E) % by weight ► | | 16/15/30/39 | 18/15/30/37 | 20/15/30/35 | 22/15/30/33 | 24/15/30/31 | 26/15/30/29 | 28/15/30/27 | 30/15/30/25 |
|---|---|---|---|---|---|---|---|---|---|
| COP (heating) | | 2.28 | 2.28 | 2.28 | 2.29 | 2.29 | 2.29 | 2.29 | 2.29 |
| COP (heating) relative to Reference | | 108.1% | 108.2% | 108.4% | 108.4% | 108.5% | 108.5% | 108.4% | 108.4% |
| Volumetric heating capacity at suction | kJ/m$^3$ | 1915 | 2034 | 2155 | 2279 | 2405 | 2534 | 2665 | 2800 |
| Capacity relative to Reference | | 218.0% | 231.5% | 245.3% | 259.4% | 273.7% | 288.4% | 303.3% | 318.6% |
| Critical temperature | °C | 79.44 | 77.44 | 75.52 | 73.68 | 71.90 | 70.20 | 68.56 | 66.98 |
| Critical pressure | bar | 50.83 | 51.59 | 52.34 | 53.10 | 53.85 | 54.61 | 55.36 | 56.12 |
| Condenser enthalpy change | kJ/kg | 307.9 | 312.4 | 316.7 | 320.8 | 324.7 | 328.4 | 332.0 | 335.4 |
| Pressure ratio | | 13.41 | 13.12 | 12.83 | 12.55 | 12.28 | 12.01 | 11.74 | 11.49 |
| Refrigerant mass flow | kg/hr | 23.4 | 23.0 | 22.7 | 22.4 | 22.2 | 21.9 | 21.7 | 21.5 |
| Compressor discharge temperature | °C | 151.1 | 153.3 | 155.4 | 157.4 | 159.4 | 161.3 | 163.2 | 165.0 |
| Evaporator inlet pressure | bar | 1.78 | 1.90 | 2.02 | 2.15 | 2.28 | 2.42 | 2.57 | 2.72 |
| Condenser inlet pressure | bar | 23.6 | 24.7 | 25.8 | 26.8 | 27.9 | 28.9 | 30.0 | 31.0 |
| Evaporator inlet temperature | °C | -36.6 | -37.3 | -37.9 | -38.5 | -39.1 | -39.7 | -40.2 | -40.6 |
| Evaporator dewpoint | °C | -23.9 | -23.5 | -23.1 | -22.8 | -22.5 | -22.2 | -22.0 | -21.8 |
| Evaporator exit gas temperature | °C | -18.9 | -18.5 | -18.1 | -17.8 | -17.5 | -17.2 | -17.0 | -16.8 |
| Evaporator mean temperature | °C | -30.3 | -30.4 | -30.5 | -30.7 | -30.8 | -30.9 | -31.1 | -31.2 |
| Evaporator glide (out-in) | K | 12.7 | 13.8 | 14.8 | 15.8 | 16.7 | 17.5 | 18.2 | 18.8 |
| Compressor suction pressure | bar | 1.76 | 1.88 | 2.01 | 2.14 | 2.27 | 2.41 | 2.55 | 2.70 |
| Compressor discharge pressure | bar | 23.6 | 24.7 | 25.8 | 26.8 | 27.9 | 28.9 | 30.0 | 31.0 |
| Suction line pressure drop | Pa/m | 112 | 104 | 97 | 91 | 85 | 80 | 76 | 72 |
| Pressure drop relative to reference | | 38.2% | 35.6% | 33.2% | 31.1% | 29.2% | 27.5% | 25.9% | 24.5% |
| Condenser dew point | °C | 54.5 | 54.3 | 54.1 | 53.8 | 53.5 | 53.1 | 52.7 | 52.2 |
| Condenser bubble point | °C | 31.1 | 30.3 | 29.6 | 29.1 | 28.6 | 28.1 | 27.8 | 27.5 |
| Condenser exit liquid temperature | °C | 30.1 | 29.3 | 28.6 | 28.1 | 27.6 | 27.1 | 26.8 | 26.5 |
| Condenser mean temperature | °C | 42.8 | 42.3 | 41.9 | 41.4 | 41.0 | 40.6 | 40.2 | 39.8 |

| Composition CO$_2$/R-32/R-134a/R-1234ze(E) % by weight ▶ | | 16/15/30/39 | 18/15/30/37 | 20/15/30/35 | 22/15/30/33 | 24/15/30/31 | 26/15/30/29 | 28/15/30/27 | 30/15/30/25 |
|---|---|---|---|---|---|---|---|---|---|
| Condenser glide (in-out) | K | 23.4 | 24.0 | 24.5 | 24.8 | 25.0 | 25.0 | 24.9 | 24.7 |

**Table 59: Theoretical Performance Data of Selected R-744/R-32/R-134a/R-1234ze(E) blends containing 0-14 % R-744, 15 % R-32 and 40 % R-134a**

| Composition $CO_2$/R-32/R-134a/R-1234ze(E) % by weight ▶ | | 0/15/40/45 | 2/15/40/43 | 4/15/40/41 | 6/15/40/39 | 8/15/40/37 | 10/15/40/35 | 12/15/40/33 | 14/15/40/31 |
|---|---|---|---|---|---|---|---|---|---|
| COP (heating) | | 2.18 | 2.21 | 2.22 | 2.24 | 2.25 | 2.26 | 2.27 | 2.28 |
| COP (heating) relative to Reference | | 103.4% | 104.6% | 105.5% | 106.2% | 106.8% | 107.3% | 107.7% | 108.0% |
| Volumetric heating capacity at suction | $kJ/m^3$ | 1089 | 1186 | 1286 | 1390 | 1498 | 1608 | 1722 | 1838 |
| Capacity relative to Reference | | 124.0% | 135.0% | 146.4% | 158.2% | 170.4% | 183.0% | 196.0% | 209.2% |
| | | | | | | | | | |
| Critical temperature | °C | 98.43 | 95.60 | 92.90 | 90.33 | 87.87 | 85.52 | 83.27 | 81.12 |
| Critical pressure | bar | 44.98 | 45.76 | 46.54 | 47.32 | 48.10 | 48.87 | 49.64 | 50.41 |
| | | | | | | | | | |
| Condenser enthalpy change | kJ/kg | 259.2 | 267.8 | 275.5 | 282.5 | 288.8 | 294.7 | 300.1 | 305.1 |
| Pressure ratio | | 15.09 | 14.98 | 14.82 | 14.61 | 14.37 | 14.11 | 13.83 | 13.54 |
| Refrigerant mass flow | kg/hr | 27.8 | 26.9 | 26.1 | 25.5 | 24.9 | 24.4 | 24.0 | 23.6 |
| Compressor discharge temperature | °C | 131.0 | 134.2 | 137.3 | 140.1 | 142.8 | 145.3 | 147.7 | 150.0 |
| Evaporator inlet pressure | bar | 1.04 | 1.11 | 1.20 | 1.29 | 1.38 | 1.48 | 1.59 | 1.70 |
| Condenser inlet pressure | bar | 15.1 | 16.2 | 17.3 | 18.4 | 19.5 | 20.6 | 21.7 | 22.8 |
| Evaporator inlet temperature | °C | -31.3 | -31.8 | -32.5 | -33.1 | -33.7 | -34.4 | -35.0 | -35.7 |
| Evaporator dewpoint | °C | -28.5 | -27.9 | -27.3 | -26.7 | -26.1 | -25.6 | -25.1 | -24.6 |
| Evaporator exit gas temperature | °C | -23.5 | -22.9 | -22.3 | -21.7 | -21.1 | -20.6 | -20.1 | -19.6 |
| Evaporator mean temperature | °C | -29.9 | -29.9 | -29.9 | -29.9 | -29.9 | -30.0 | -30.1 | -30.1 |
| Evaporator glide (out-in) | K | 2.8 | 4.0 | 5.1 | 6.4 | 7.6 | 8.8 | 10.0 | 11.1 |
| Compressor suction pressure | bar | 1.00 | 1.08 | 1.17 | 1.26 | 1.36 | 1.46 | 1.57 | 1.68 |
| Compressor discharge pressure | bar | 15.1 | 16.2 | 17.3 | 18.4 | 19.5 | 20.6 | 21.7 | 22.8 |
| Suction line pressure drop | Pa/m | 223 | 200 | 180 | 164 | 150 | 137 | 126 | 117 |
| Pressure drop relative to reference | | 76.4% | 68.5% | 61.8% | 56.1% | 51.2% | 47.0% | 43.3% | 40.0% |
| Condenser dew point | °C | 51.2 | 52.0 | 52.7 | 53.2 | 53.6 | 53.8 | 54.0 | 54.0 |
| Condenser bubble point | °C | 45.0 | 42.1 | 39.7 | 37.6 | 35.9 | 34.4 | 33.2 | 32.1 |
| Condenser exit liquid temperature | °C | 44.0 | 41.1 | 38.7 | 36.6 | 34.9 | 33.4 | 32.2 | 31.1 |
| Condenser mean temperature | °C | 48.1 | 47.1 | 46.2 | 45.4 | 44.7 | 44.1 | 43.6 | 43.1 |
| Condenser glide (in-out) | K | 6.1 | 9.9 | 13.0 | 15.5 | 17.7 | 19.4 | 20.8 | 21.9 |

**Table 60: Theoretical Performance Data of Selected R-744/R-32/R-134a/R-1234ze(E) blends containing 16-30 % R-744, 15 % R-32 and 40 % R-134a**

| Composition $CO_2$/R-32/R-134a/R-1234ze(E) % by weight | | 16/15/40/29 | 18/15/40/27 | 20/15/40/25 | 22/15/40/23 | 24/15/40/21 | 26/15/40/19 | 28/15/40/17 | 30/16/40/16 |
|---|---|---|---|---|---|---|---|---|---|
| COP (heating) | | 2.28 | 2.29 | 2.29 | 2.29 | 2.29 | 2.29 | 2.29 | 2.29 |
| COP (heating) relative to Reference | | 108.2% | 108.4% | 108.5% | 108.6% | 108.6% | 108.7% | 108.6% | 108.6% |
| Volumetric heating capacity at suction | kJ/m³ | 1957 | 2078 | 2202 | 2329 | 2457 | 2589 | 2723 | 2859 |
| Capacity relative to Reference | | 222.7% | 236.5% | 250.6% | 265.0% | 279.7% | 294.6% | 309.9% | 325.4% |
| Critical temperature | °C | 79.06 | 77.08 | 75.19 | 73.36 | 71.61 | 69.93 | 68.31 | 66.75 |
| Critical pressure | bar | 51.18 | 51.95 | 52.72 | 53.48 | 54.25 | 55.02 | 55.78 | 56.54 |
| Condenser enthalpy change | kJ/kg | 309.9 | 314.4 | 318.6 | 322.6 | 326.5 | 330.2 | 333.7 | 337.1 |
| Pressure ratio | | 13.26 | 12.97 | 12.68 | 12.40 | 12.13 | 11.86 | 11.60 | 11.35 |
| Refrigerant mass flow | kg/hr | 23.2 | 22.9 | 22.6 | 22.3 | 22.1 | 21.8 | 21.6 | 21.4 |
| Compressor discharge temperature | °C | 152.2 | 154.4 | 156.4 | 158.4 | 160.4 | 162.3 | 164.1 | 165.9 |
| Evaporator inlet pressure | bar | 1.82 | 1.94 | 2.07 | 2.20 | 2.34 | 2.48 | 2.62 | 2.78 |
| Condenser inlet pressure | bar | 23.9 | 25.0 | 26.0 | 27.1 | 28.2 | 29.2 | 30.3 | 31.4 |
| Evaporator inlet temperature | °C | -36.4 | -37.0 | -37.6 | -38.3 | -38.8 | -39.4 | -39.9 | -40.3 |
| Evaporator dewpoint | °C | -24.1 | -23.7 | -23.3 | -23.0 | -22.6 | -22.4 | -22.1 | -21.9 |
| Evaporator exit gas temperature | °C | -19.1 | -18.7 | -18.3 | -18.0 | -17.6 | -17.4 | -17.1 | -16.9 |
| Evaporator mean temperature | °C | -30.2 | -30.3 | -30.5 | -30.6 | -30.7 | -30.9 | -31.0 | -31.1 |
| Evaporator glide (out-in) | K | 12.3 | 13.3 | 14.3 | 15.3 | 16.2 | 17.0 | 17.7. | 18.4 |
| Compressor suction pressure | bar | 1.80 | 1.92 | 2.05 | 2.19 | 2.32 | 2.46 | 2.61 | 2.76 |
| Compressor discharge pressure | bar | 23.9 | 25.0 | 26.0 | 27.1 | 28.2 | 29.2 | 30.3 | 31.4 |
| Suction line pressure drop | Pa/m | 109 | 101 | 95 | 89 | 83 | 78 | 74 | 70 |
| Pressure drop relative to reference | | 37.2% | 34.6% | 32.4% | 30.3% | 28.5% | 26.8% | 25.3% | 23.9% |
| Condenser dew point | °C | 54.0 | 53.8 | 53.6 | 53.4 | 53.0 | 52.7 | 52.2 | 51.8 |
| Condenser bubble point | °C | 31.2 | 30.4 | 29.8 | 29.2 | 28.7 | 28.3 | 27.9 | 27.6 |
| Condenser exit liquid temperature | °C | 30.2 | 29.4 | 28.8 | 28.2 | 27.7 | 27.3 | 26.9 | 26.6 |
| Condenser mean temperature | °C | 42.6 | 42.1 | 41.7 | 41.3 | 40.9 | 40.5 | 40.1 | 39.7 |

(continued)

| Composition CO$_2$/R-32/R-134a/R-1234ze(E) % by weight ► | | 16/15/40/29 | 18/15/40/27 | 20/15/40/25 | 22/15/40/23 | 24/15/40/21 | 26/15/40/19 | 28/15/40/17 | 30/16/40/16 |
|---|---|---|---|---|---|---|---|---|---|
| Condenser glide (in-out) | K | 22.8 | 23.4 | 23.9 | 24.2 | 24.4 | 24.4 | 24.3 | 24.1 |

**Table 61: Theoretical Performance Data of Selected R-744/R-32/R-134a/R-1234ze(E) blends containing 0-14 % R-744, 20 % R-32 and 5 % R-134a**

| Composition $CO_2$/R-32/R-134a/R-1234ze(E) % by weight ▶ | | 0/20/5/75 | 2/20/5/73 | 4/20/5/71 | 6/20/5/69 | 8/20/5/67 | 10/20/5/65 | 12/20/5/63 | 14/20/5/61 |
|---|---|---|---|---|---|---|---|---|---|
| COP (heating) | | 2.20 | 2.22 | 2.24 | 2.25 | 2.26 | 2.27 | 2.28 | 2.28 |
| COP (heating) relative to Reference | | 104.4% | 105.4% | 106.2% | 106.8% | 107.3% | 107.7% | 108.0% | 108.3% |
| Volumetric heating capacity at suction | $kJ/m^3$ | 1103 | 1197 | 1294 | 1394 | 1497 | 1602 | 1709 | 1818 |
| Capacity relative to Reference | | 125.5% | 136.2% | 147.3% | 158.7% | 170.4% | 182.3% | 194.5% | 206.9% |
| | | | | | | | | | |
| Critical temperature | °C | 98.35 | 95.65 | 93.07 | 90.59 | 88.21 | 85.93 | 83.74 | 81.64 |
| Critical pressure | bar | 45.29 | 46.10 | 46.88 | 47.66 | 48.43 | 49.20 | 49.96 | 50.71 |
| | | | | | | | | | |
| Condenser enthalpy change | kJ/kg | 264.5 | 272.4 | 279.5 | 286.1 | 292.2 | 298.0 | 303.3 | 308.4 |
| Pressure ratio | | 15.11 | 14.95 | 14.76 | 14.53 | 14.29 | 14.03 | 13.77 | 13.50 |
| Refrigerant mass flow | kg/hr | 27.2 | 26.4 | 25.8 | 25.2 | 24.6 | 24.2 | 23.7 | 23.3 |
| Compressor discharge temperature | °C | 131.4 | 134.4 | 137.3 | 140.0 | 142.6 | 145.1 | 147.5 | 149.9 |
| Evaporator inlet pressure | bar | 1.04 | 1.12 | 1.20 | 1.29 | 1.38 | 1.48 | 1.58 | 1.69 |
| Condenser inlet pressure | bar | 15.2 | 16.3 | 17.3 | 18.4 | 19.4 | 20.5 | 21.5 | 22.5 |
| Evaporator inlet temperature | °C | -32.2 | -32.9 | -33.6 | -34.3 | -35.0 | -35.7 | -36.4 | -37.1 |
| Evaporator dewpoint | °C | -27.3 | -26.7 | -26.2 | -25.6 | -25.0 | -24.5 | -24.1 | -23.6 |
| Evaporator exit gas temperature | °C | -22.3 | -21.7 | -21.2 | -20.6 | -20.0 | -19.5 | -19.1 | -18.6 |
| Evaporator mean temperature | °C | -29.8 | -29.8 | -29.9 | -29.9 | -30.0 | -30.1 | -30.2 | -30.4 |
| Evaporator glide (out-in) | K | 4.9 | 6.2 | 7.5 | 8.7 | 10.0 | 11.2 | 12.3 | 13.5 |
| Compressor suction pressure | bar | 1.01 | 1.09 | 1.17 | 1.26 | 1.36 | 1.46 | 1.56 | 1.67 |
| Compressor discharge pressure | bar | 15.2 | 16.3 | 17.3 | 18.4 | 19.4 | 20.5 | 21.5 | 22.5 |
| Suction line pressure drop | Pa/m | 217 | 196 | 177 | 162 | 148 | 137 | 126 | 117 |
| Pressure drop relative to reference | | 74.3% | 67.0% | 60.7% | 55.4% | 50.8% | 46.8% | 43.3% | 40.2% |
| Condenser dew point | °C | 52.7 | 53.4 | 53.9 | 54.3 | 54.6 | 54.8 | 54.8 | 54.8 |
| Condenser bubble point | °C | 43.0 | 40.5 | 38.4 | 36.6 | 35.0 | 33.7 | 32.6 | 31.6 |
| Condenser exit liquid temperature | °C | 42.0 | 39.5 | 37.4 | 35.6 | 34.0 | 32.7 | 31.6 | 30.6 |
| Condenser mean temperature | °C | 47.9 | 46.9 | 46.2 | 45.5 | 44.8 | 44.2 | 43.7 | 43.2 |
| Condenser glide (in-out) | K | 9.6 | 12.8 | 15.5 | 17.7 | 19.6 | 21.1 | 22.3 | 23.2 |

**Table 62: Theoretical Performance Data of Selected R-744/R-32/R-134a/R-1234ze(E) blends containing 16-30 % R-744, 20 % R-32 and 5 % R-134a**

| Composition CO$_2$/R-32/R-134a/R-1234ze(E) % by weight ▶ | | 16/20/5/59 | 18/20/5/57 | 20/2015/55 | 22/20/5/53 | 24/20/5/51 | 26/20/5/49 | 28/20/5/47 | 30/20/5/45 |
|---|---|---|---|---|---|---|---|---|---|
| COP (heating) | | 2.29 | 2.29 | 2.29 | 2.29 | 2.29 | 2.29 | 2.29 | 2.29 |
| COP (heating) relative to Reference | | 108.4% | 108.5% | 108.6% | 108.6% | 108.6% | 108.6% | 108.5% | 108.4% |
| Volumetric heating capacity at suction | kJ/m$^3$ | 1930 | 2043 | 2159 | 2276 | 2396 | 2519 | 2645 | 2773 |
| Capacity relative to Reference | | 219.6% | 232.5% | 245.7% | 259.1% | 272.7% | 286.7% | 301.0% | 315.6% |
| | | | | | | | | | |
| Critical temperature | °C | 79.63 | 77.69 | 75.84 | 74.05 | 72.33 | 70.67 | 69.07 | 67.53 |
| Critical pressure | bar | 51.47 | 52.22 | 52.97 | 53.72 | 54.47 | 55.22 | 55.96 | 56.71 |
| | | | | | | | | | |
| Condenser enthalpy change | kJ/kg | 313.2 | 317.8 | 322.2 | 326.4 | 330.4 | 334.2 | 337.9 | 341.4 |
| Pressure ratio | | 13.24 | 12.98 | 12.72 | 12.46 | 12.21 | 11.96 | 11.71 | 11.47 |
| Refrigerant mass flow | kg/hr | 23.0 | 22.7 | 22.3 | 22.1 | 21.8 | 21.5 | 21.3 | 21.1 |
| Compressor discharge temperature | °C | 152.2 | 154.4 | 156.5 | 158.6 | 160.7 | 162.7 | 164.6 | 166.5 |
| Evaporator inlet pressure | bar | 1.80 | 1.91 | 2.03 | 2.15 | 2.28 | 2.41 | 2.55 | 2.69 |
| Condenser inlet pressure | bar | 23.6 | 24.6 | 25.6 | 26.6 | 27.6 | 28.7 | 29.7 | 30.7 |
| Evaporator inlet temperature | °C | -37.8 | -38.4 | -39.0 | -39.6 | -40.1 | -40.6 | -41.1 | -41.4 |
| Evaporator dewpoint | °C | -23.2 | -22.9 | -22.6 | -22.3 | -22.0 | -21.8 | -21.6 | -21.5 |
| Evaporator exit gas temperature | °C | -18.2 | -17.9 | -17.6 | -17.3 | -17.0 | -16.8 | -16.6 | -16.5 |
| Evaporator mean temperature | °C | -30.5 | -30.6 | -30.8 | -30.9 | -31.1 | -31.2 | -31.3 | -31.5 |
| Evaporator glide (out-in) | K | 14.5 | 15.5 | 16.5 | 17.3 | 18.1 | 18.8 | 19.4 | 20.0 |
| Compressor suction pressure | bar | 1.78 | 1.89 | 2.01 | 2.14 | 2.26 | 2.40 | 2.53 | 2.68 |
| Compressor discharge pressure | bar | 23.6 | 24.6 | 25.6 | 26.6 | 27.6 | 28.7 | 29.7 | 30.7 |
| Suction line pressure drop | Pa/m | 109 | 102 | 96 | 90 | 85 | 80 | 75 | 71 |
| Pressure drop relative to reference | | 37.4% | 34.9% | 32.7% | 30.7% | 28.9% | 27.3% | 25.8% | 24.4% |
| Condenser dew point | °C | 54.7 | 54.5 | 54.3 | 53.9 | 53.6 | 53.1 | 52.7 | 52.2 |
| Condenser bubble point | °C | 30.7 | 30.0 | 29.3 | 28.8 | 28.3 | 27.9 | 27.5 | 27.2 |
| Condenser exit liquid temperature | °C | 29.7 | 29.0 | 28.3 | 27.8 | 27.3 | 26.9 | 26.5 | 26.2 |
| Condenser mean temperature | °C | 42.7 | 42.2 | 41.8 | 41.3 | 40.9 | 40.5 | 40.1 | 39.7 |
| Condenser glide (in-out) | K | 24.0 | 24.5 | 24.9 | 25.2 | 25.3 | 25.3 | 25.2 | 25.0 |

**Table 63: Theoretical Performance Data of Selected R-744/R-32/R-134a/R-1234ze(E) blends containing 0-14 % R-744, 20 % R-32 and 10 % R-134a**

| Compositions CO$_2$/R-32/R-134a/R-1234ze(E) % by weight ▶ | | 0/20/10/70 | 2/20/10/68 | 4/20/10/66 | 6/20/10/64 | 8/20/10/64 | 10/20/10/60 | 12/20/10/68 | 14/20/10/66 |
|---|---|---|---|---|---|---|---|---|---|
| COP (heating) | | 2.20 | 2.22 | 2.24 | 2.25 | 2.26 | 2.27 | 2.28 | 2.28 |
| COP (heating) relative to Reference | | 104.5% | 105.5% | 106.2% | 106.9% | 107.4% | 107.8% | 108.1% | 108.3% |
| Volumetric heating capacity at suction | kJ/m$^3$ | 1119 | 1214 | 1312 | 1413 | 1517 | 1624 | 1732 | 1843 |
| Capacity relative to Reference | | 127.4% | 138.2% | 149.3% | 160.9% | 172.7% | 184.8% | 197.1% | 209.7% |
| | | | | | | | | | |
| Critical temperature | °C | 98.06 | 95.36 | 92.78 | 90.31 | 87.94 | 85.67 | 83.49 | 81.41 |
| Critical pressure | bar | 45.53 | 46.31 | 47.09 | 47.87 | 48.63 | 49.40 | 50.16 | 50.91 |
| | | | | | | | | | |
| Condenser enthalpy change | kJ/kg | 265.2 | 273.1 | 280.3 | 286.8 | 292.9 | 298.6 | 304.0 | 309.0 |
| Pressure ratio | | 14.98 | 14.83 | 14.64 | 14.42 | 14.17 | 13.92 | 13.66 | 13.39 |
| Refrigerant mass flow | kg/hr | 27.1 | 26.4 | 25.7 | 25.1 | 24.6 | 24.1 | 23.7 | 23.3 |
| Compressor discharge temperature | °C | 131.9 | 134.9 | 137.8 | 140.5 | 143.1 | 145.6 | 148.0 | 150.3 |
| Evaporator inlet pressure | bar | 1.06 | 1.14 | 1.22 | 1.31 | 1.40 | 1.50 | 1.61 | 1.71 |
| Condenser inlet pressure | bar | 15.3 | 16.4 | 17.4 | 18.5 | 19.5 | 20.6 | 21.6 | 22.7 |
| Evaporator inlet temperature | °C | -32.2 | -32.8 | -33.5 | -34.2 | -34.8 | -35.5 | -36.2 | -36.9 |
| Evaporator dewpoint | °C | -27.4 | -26.9 | -26.3 | -25.7 | -25.2 | -24.7 | -24.2 | -23.8 |
| Evaporator exit gas temperature | °C | -22.4 | -21.9 | -21.3 | -20.7 | -20.2 | -19.7 | -19.2 | -18.8 |
| Evaporator mean temperature | °C | -29.8 | -29.8 | -29.9 | -29.9 | -30.0 | -30.1 | -30.2 | -30.3 |
| Evaporator glide (out-in) | K | 4.7 | 6.0 | 7.2 | 8.4 | 9.7 | 10.8 | 12.0 | 13.1 |
| Compressor suction pressure | bar | 1.02 | 1.10 | 1.19 | 1.28 | 1.38 | 1.48 | 1.58 | 1.69 |
| Compressor discharge pressure | bar | 15.3 | 16.4 | 17.4 | 18.5 | 19.5 | 20.6 | 21.6 | 22.7 |
| Suction line pressure drop | Pa/m | 213 | 192 | 175 | 159 | 146 | 135 | 124 | 116 |
| Pressure drop relative to reference | | 73.1% | 65.9% | 59.8% | 54.5% | 50.0% | 46.1% | 42.6% | 39.6% |
| Condenser dew point | °C | 52.4 | 53.0 | 53.6 | 54.0 | 54.2 | 54.4 | 54.5 | 54.4 |
| Condenser bubble point | °C | 43.2 | 40.7 | 38.6 | 36.8 | 35.2 | 33.9 | 32.7 | 31.8 |
| Condenser exit liquid temperature | °C | 42.2 | 39.7 | 37.6 | 35.8 | 34.2 | 32.9 | 31.7 | 30.8 |
| Condenser mean temperature | °C | 47.8 | 46.9 | 46.1 | 45.4 | 44.7 | 44.1 | 43.6 | 43.1 |
| Condenser glide (in-out) | K | 9.1 | 12.3 | 15.0 | 17.2 | 19.0 | 20.5 | 21.7 | 22.7 |

**Table 64: Theoretical Performance Data of Selected R-744/R-32/R-134a/R-1234ze(E) blends containing 16-30 % R-744, 20 % R-32 and 10 % R-134a**

| Composition CO$_2$/R-32/R-134a/R-1234ze(E) % by weight | | 16/20/10/54 | 18/20/10/52 | 20/20/10/50 | 22/20/10/48 | 24/20/10/46 | 26/20/10/44 | 28/20/10/42 | 30/20/10/40 |
|---|---|---|---|---|---|---|---|---|---|
| COP (heating) COP (heating) | | 2.29 | 2.29 | 2.29 | 2.29 | 2.29 | 2.29 | 2.29 | 2.29 |
| COP (heating) relative to Reference | | 108.5% | 108.6% | 108.6% | 108.7% | 108.7% | 108.6% | 108.6% | 108.5% |
| Volumetric heating capacity at suction | kJ/m³ | 1956 | 2071 | 2189 | 2309 | 2431 | 2556 | 2684 | 2816 |
| Capacity relative to Reference | | 222.6% | 235.7% | 249.1% | 262.8% | 276.7% | 290.9% | 305.5% | 320.4% |
| Critical temperature | °C | 79.40 | 77.48 | 75.63 | 73.85 | 72.14 | 70.50 | 68.91 | 67.38 |
| Critical pressure | bar | 51.67 | 52.42 | 53.17 | 53.93 | 54.68 | 55.43 | 56.18 | 56.93 |
| Condenser enthalpy change | kJ/kg | 313.8 | 318.3 | 322.6 | 326.8 | 330.7 | 334.5 | 338.1 | 341.5 |
| Pressure ratio | | 13.13 | 12.87 | 12.60 | 12.35 | 12.09 | 11.84 | 11.59 | 11.35 |
| Refrigerant mass flow | kg/hr | 22.9 | 22.6 | 22.3 | 22.0 | 21.8 | 21.5 | 21.3 | 21.1 |
| Compressor discharge temperature | °C | 152.6 | 154.8 | 156.9 | 159.0 | 161.0 | 162.9 | 164.8 | 166.6 |
| Evaporator inlet pressure | bar | 1.83 | 1.94 | 2.06 | 2.19 | 2.32 | 2.45 | 2.59 | 2.74 |
| Condenser inlet pressure | bar | 23.7 | 24.8 | 25.8 | 26.8 | 27.8 | 28.9 | 29.9 | 30.9 |
| Evaporator inlet temperature | °C | -37.5 | -38.1 | -38.7 | -39.3 | -39.8 | -40.3 | -40.7 | -41.1 |
| Evaporator dewpoint | °C | -23.4 | -23.0 | -22.7 | -22.4 | -22.2 | -22.0 | -21.8 | -21.6 |
| Evaporator exit gas temperature | °C | -18.4 | -18.0 | -17.7 | -17.4 | -17.2 | -17.0 | -16.8 | -16.6 |
| Evaporator mean temperature | °C | -30.4 | -30.6 | -30.7 | -30.9 | -31.0 | -31.1 | -31.2 | -31.4 |
| Evaporator glide (out-in) | K | 14.1 | 15.1 | 16.0 | 16.9 | 17.6 | 18.3 | 18.9 | 19.5 |
| Compressor suction pressure | bar | 1.81 | 1.92 | 2.05 | 2.17 | 2.30 | 2.44 | 2.58 | 2.73 |
| Compressor discharge pressure | bar | 23.7 | 24.8 | 25.8 | 26.8 | 27.8 | 28.9 | 29.9 | 30.9 |
| Suction line pressure drop | Pa/m | 108 | 101 | 94 | 88 | 83 | 78 | 74 | 70 |
| Pressure drop relative to reference | | 36.9% | 34.4% | 32.2% | 30.3% | 28.5% | 26.9% | 25.4% | 24.0% |
| Condenser dew point | °C | 54.3 | 54.1 | 53.9 | 53.6 | 53.2 | 52.8 | 52.3 | 51.8 |
| Condenser bubble point | °C | 30.9 | 30.2 | 29.5 | 29.0 | 28.5 | 28.1 | 27.7 | 27.4 |
| Condenser exit liquid temperature | °C | 29.9 | 29.2 | 28.5 | 28.0 | 27.5 | 27.1 | 26.7 | 26.4 |
| Condenser mean temperature | °C | 42.6 | 42.2 | 41.7 | 41.3 | 40.9 | 40.4 | 40.0 | 39.6 |

(continued)

| Composition CO$_2$/R-32/R-134a/R-1234ze(E) % by weight ▶ | | 16/20/10/54 | 18/20/10/52 | 20/20/10/50 | 22/20/10/48 | 24/20/10/46 | 26/20/10/44 | 28/20/10/42 | 30/20/10/40 |
|---|---|---|---|---|---|---|---|---|---|
| Condenser glide (in-out) | K | 23.4 | 24.0 | 24.4 | 24.6 | 24.7 | 24.7 | 24.6 | 24.4 |

**Table 65: Theoretical Performance Data of Selected R-744/R-32/R-134a/R-1234ze(E) blends containing 0-14 % R-744, 20 % R-32 and 20 % R-134a**

| Composition CO$_2$/R-32/R-134a/R-1234ze(E) % by weight ► | | 0/20/20/60 | 2/20/20/58 | 4/20/20/56 | 6/20/20/54 | 8/20/20/52 | 10/20/20/50 | 12/20/20/48 | 14/20/20/46 |
|---|---|---|---|---|---|---|---|---|---|
| COP (heating) | | 2.20 | 2.23 | 2.24 | 2.25 | 2.27 | 2.27 | 2.28 | 2.29 |
| COP (heating) relative to Reference | | 104.6% | 105.5% | 106.3% | 106.9% | 107.4% | 107.8% | 108.1% | 108.4% |
| Volumetric heating capacity at suction | kJ/m³ | 1150 | 1247 | 1347 | 1449 | 1556 | 1664 | 1776 | 1890 |
| Capacity relative to Reference | | 130.9% | 141.9% | 153.3% | 165.0% | 177.0% | 189.4% | 202.1% | 215.1% |
| Critical temperature | °C | 97.47 | 94.79 | 92.23 | 89.78 | 87.43 | 85.19 | 83.03 | 80.97 |
| Critical pressure | bar | 45.91 | 46.68 | 47.46 | 48.23 | 48.99 | 49.76 | 50.52 | 51.28 |
| Condenser enthalpy change | kJ/kg | 266.8 | 274.7 | 281.9 | 288.5 | 294.5 | 300.2 | 305.5 | 310.5 |
| Pressure ratio | | 14.75 | 14.61 | 14.42 | 14.21 | 13.98 | 13.72 | 13.46 | 13.20 |
| Refrigerant mass flow | kg/hr | 27.0 | 26.2 | 25.5 | 25.0 | 24.4 | 24.0 | 23.6 | 23.2 |
| Compressor discharge temperature | °C | 132.9 | 135.9 | 138.8 | 141.5 | 144.1 | 146.6 | 149.0 | 151.3 |
| Evaporator inlet pressure | bar | 1.09 | 1.17 | 1.25 | 1.35 | 1.44 | 1.54 | 1.65 | 1.76 |
| Condenser inlet pressure | bar | 15.6 | 16.6 | 17.7 | 18.7 | 19.8 | 20.9 | 21.9 | 23.0 |
| Evaporator inlet temperature | °C | -32.0 | -32.6 | -33.2 | -33.9 | -34.5 | -35.2 | -35.8 | -36.4 |
| Evaporator dewpoint | °C | -27.7 | -27.1 | -26.5 | -26.0 | -25.5 | -25.0 | -24.5 | -24.1 |
| Evaporator exit gas temperature | °C | -22.7 | -22.1 | -21.5 | -21.0 | -20.5 | -20.0 | -19.5 | -19.1 |
| Evaporator mean temperature | °C | -29.8 | -29.9 | -29.9 | -29.9 | -30.0 | -30.1 | -30.2 | -30.3 |
| Evaporator glide (out-in) | K | 4.3 | 5.5 | 6.7 | 7.9 | 9.1 | 10.2 | 11.3 | 12.4 |
| Compressor suction pressure | bar | 1.05 | 1.14 | 1.23 | 1.32 | 1.42 | 1.52 | 1.63 | 1.74 |
| Compressor discharge pressure | bar | 15.6 | 16.6 | 17.7 | 18.7 | 19.8 | 20.9 | 21.9 | 23.0 |
| Suction line pressure drop | Pa/m | 207 | 187 | 169 | 155 | 142 | 131 | 121 | 112 |
| Pressure drop relative to reference | | 70.8% | 63.9% | 58.0% | 53.0% | 48.6% | 44.8% | 41.4% | 38.5% |
| Condenser dew point | °C | 51.7 | 52.4 | 52.9 | 53.3 | 53.6 | 53.7 | 53.8 | 53.8 |
| Condenser bubble point | °C | 43.5 | 41.0 | 38.9 | 37.1 | 35.5 | 34.2 | 33.0 | 32.0 |
| Condenser exit liquid temperature | °C | 42.5 | 40.0 | 37.9 | 36.1 | 34.5 | 33.2 | 32.0 | 31.0 |
| Condenser mean temperature | °C | 47.6 | 46.7 | 45.9 | 45.2 | 44.5 | 44.0 | 43.4 | 42.9 |
| Condenser glide (in-out) | K | 8.2 | 11.3 | 14.0 | 16.2 | 18.1 | 19.6 | 20.8 | 21.7 |

**Table 66: Theoretical Performance Data of Selected R-744/R-32/R-134a/R-1234ze(E) blends containing 16-30 % R-744, 20 % R-32 and 20 % R-134a**

| Composition CO$_2$/R-32/R-134a/R-1234ze(E) % by weight ► | | 16/20/20/44 | 18/20/20/42 | 20/20/20/40 | 22/20/20/38 | 24/20/20/38 | 26/20/20/34 | 28/20/20/32 | 30/20/20/30 |
|---|---|---|---|---|---|---|---|---|---|
| COP (heating) | | 2.29 | 2.29 | 2.29 | 2.29 | 2.29 | 2.29 | 2.29 | 2.29 |
| COP (heating) relative to Reference | | 108.6% | 108.7% | 108.8% | 108.8% | 108.8% | 108.8% | 108.8% | 108.7% |
| Volumetric heating capacity at suction | kJ/m$^3$ | 2006 | 2125 | 2246 | 2370 | 2496 | 2626 | 2758 | 2894 |
| Capacity relative to Reference | | 228.3% | 241.8% | 255.6% | 269.7% | 284.1% | 298.8% | 313.9% | 329.3% |
| Critical temperature | °C | 78.99 | 77.09 | 75.26 | 73.50 | 71.81 | 70.18 | 68.61 | 67.10 |
| Critical pressure | bar | 52.04 | 52.80 | 53.56 | 54.32 | 55.07 | 55.83 | 56.59 | 57.34 |
| Condenser enthalpy change | kJ/kg | 315.2 | 319.6 | 323.8 | 327.9 | 331.7 | 335.4 | 338.9 | 342.2 |
| Pressure ratio | | 12.93 | 12.67 | 12.41 | 12.15 | 11.89 | 11.64 | 11.39 | 11.14 |
| Refrigerant mass flow | kg/hr | 22.8 | 22.5 | 22.2 | 22.0 | 21.7 | 21.5 | 21.2 | 21.0 |
| Compressor discharge temperature | °C | 153.5 | 155.6 | 157.7 | 159.7 | 161.6 | 163.5 | 165.4 | 167.1 |
| Evaporator inlet pressure | bar | 1.88 | 2.00 | 2.12 | 2.25 | 2.39 | 2.53 | 2.67 | 2.82 |
| Condenser inlet pressure | bar | 24.0 | 25.1 | 26.1 | 27.2 | 28.2 | 29.2 | 30.3 | 31.3 |
| Evaporator inlet temperature | °C | -37.1 | -37.6 | -38.2 | -38.8 | -39.3 | -39.7 | -40.1 | -40.5 |
| Evaporator dewpoint | °C | -23.7 | -23.3 | -23.0 | -22.7 | -22.5 | -22.2 | -22.0 | -21.9 |
| Evaporator exit gas temperature | °C | -18.7 | -18.3 | -18.0 | -17.7 | -17.5 | -17.2 | -17.0 | -16.9 |
| Evaporator mean temperature | °C | -30.4 | -30.5 | -30.6 | -30.7 | -30.9 | -31.0 | -31.1 | -31.2 |
| Evaporator glide (out-in) | K | 13.4 | 14.3 | 15.2 | 16.0 | 16.8 | 17.5 | 18.1 | 18.6 |
| Compressor suction pressure | bar | 1.86 | 1.98 | 2.11 | 2.24 | 2.37 | 2.51 | 2.66 | 2.81 |
| Compressor discharge pressure | bar | 24.0 | 25.1 | 26.1 | 27.2 | 28.2 | 29.2 | 30.3 | 31.3 |
| Suction line pressure drop | Pa/m | 105 | 98 | 92 | 86 | 81 | 76 | 72 | 68 |
| Pressure drop relative to reference | | 35.8% | 33.5% | 31.3% | 29:4% | 27.7% | 26.1% | 24.7% | 23.3% |
| Condenser dew point | °C | 53.7 | 53.5 | 53.3 | 53.0 | 52.6 | 52.2 | 51.8 | 51.3 |
| Condenser bubble point | °C | 31.2 | 30.5 | 29.8 | 29.3 | 28.8 | 28.4 | 28.1 | 27.8 |
| Condenser exit liquid temperature | °C | 30.2 | 29.5 | 28.8 | 28.3 | 27.8 | 27.4 | 27.1 | 26.8 |
| Condenser mean temperature | °C | 42.4 | 42.0 | 41.5 | 41.1 | 40.7 | 40.3 | 39.9 | 39.5 |

(continued)

| Composition CO$_2$/R-32/R-134a/R-1234ze(E) % by weight ▶ | | 16/20/20/44 | 18/20/20/42 | 20/20/20/40 | 22/20/20/38 | 24/20/20/38 | 26/20/20/34 | 28/20/20/32 | 30/20/20/30 |
|---|---|---|---|---|---|---|---|---|---|
| Condenser glide (in-out) | K | 22.5 | 23.0 | 23.4 | 23.7 | 23.8 | 23.8 | 23.7 | 23.5 |

**Table 67: Theoretical Performance Data of Selected R-744/R-32/R-134a/R-1234ze(E) blends containing 0-14 % R-744, 20 % R-32 and 30 % R-134a**

| Composition $CO_2$/R-32/R-134a/R-1234ze(E) % by weight ▶ | | 0/20/30/50 | 2/20/30/48 | 4/20/30/46 | 6/20/30/44 | 8/20/30/42 | 10/20/30/40 | 12/20/30/38 | 14/20/30/36 |
|---|---|---|---|---|---|---|---|---|---|
| COP (heating) | | 2.21 | 2.23 | 2.24 | 2.26 | 2.27 | 2.28 | 2.28 | 2.29 |
| COP (heating) relative to Reference | | 104.7% | 105.7% | 106.4% | 107.0% | 107.5% | 107.9% | 108.3% | 108.5% |
| Volumetric heating capacity at suction | $kJ/m^3$ | 1178 | 1276 | 1378 | 1482 | 1590 | 1702 | 1815 | 1932 |
| Capacity relative to Reference | | 134.1% | 145.2% | 156.8% | 168.7% | 181.0% | 193.6% | 206.6% | 219.9% |
| | | | | | | | | | |
| Critical temperature | °C | 96.89 | 94.24 | 91.70 | 89.28 | 86.96 | 84.74 | 82.61 | 80.57 |
| Critical pressure | bar | 46.18 | 46.96 | 47.74 | 48.51 | 49.29 | 50.06 | 50.83 | 51.60 |
| | | | | | | | | | |
| Condenser enthalpy change | kJ/kg | 268.7 | 276.6 | 283.8 | 290.4 | 296.5 | 302.1 | 307.4 | 312.3 |
| Pressure ratio | | 14.56 | 14.42 | 14.24 | 14.04 | 13.81 | 13.56 | 13.30 | 13.04 |
| Refrigerant mass flow | kg/hr | 26.8 | 26.0 | 25.4 | 24.8 | 24.3 | 23.8 | 23.4 | 23.1 |
| Compressor discharge temperature | °C | 134.0 | 137.1 | 139.9 | 142.7 | 145.3 | 147.7 | 150.1 | 152.3 |
| Evaporator inlet pressure | bar | 1.12 | 1.20 | 1.28 | 1.38 | 1.48 | 1.58 | 1.69 | 1.80 |
| Condenser inlet pressure | bar | 15.8 | 16.8 | 17.9 | 19.0 | 20.0 | 21.1 | 22.2 | 23.2 |
| Evaporator inlet temperature | °C | -31.8 | -32.4 | -33.0 | -33.6 | -34.3 | -34.9 | -35.5 | -36.1 |
| Evaporator dewpoint | °C | -27.9 | -27.4 | -26.8 | -26.3 | -25.7 | -25.2 | -24.8 | -24.3 |
| Evaporator exit gas temperature | °C | -22.9 | -22.4 | -21.8 | -21.3 | -20.7 | -20.2 | -19.8 | -19.3 |
| Evaporator mean temperature | °C | -29.9 | -29.9 | -29.9 | -30.0 | -30.0 | -30.1 | -30.1 | -30.2 |
| Evaporator glide (out-in) | K | 3.9 | 5.1 | 6.2 | 7.4 | 8.5 | 9.6 | 10.7 | 11.8 |
| Compressor suction pressure | bar | 1.08 | 1.17 | 1.26 | 1.35 | 1.45 | 1.56 | 1.67 | 1.78 |
| Compressor discharge pressure | bar | 15.8 | 16.8 | 17.9 | 19.0 | 20.0 | 21.1 | 22.2 | 23.2 |
| Suction line pressure drop | Pa/m | 201 | 181 | 165 | 151 | 138 | 127 | 118 | 109 |
| Pressure drop relative to reference | | 68.8% | 62.1% | 56.4% | 51.5% | 47.3% | 43.6% | 40.3% | 37.4% |
| Condenser dew point | °C | 51.1 | 51.7 | 52.3 | 52.7 | 53.0 | 53.1 | 53.2 | 53.2 |
| Condenser bubble point | °C | 43.8 | 41.2 | 39.1 | 37.3 | 35.7 | 34.4 | 33.2 | 32.2 |
| Condenser exit liquid temperature | °C | 42.8 | 40.2 | 38.1 | 36.3 | 34.7 | 33.4 | 32.2 | 31.2 |
| Condenser mean temperature | °C | 47.4 | 46.5 | 45.7 | 45.0 | 44.3 | 43.8 | 43.2 | 42.7 |
| Condenser glide (in-out) | K | 7.3 | 10.5 | 13.2 | 15.4 | 17.3 | 18.8 | 20.0 | 21.0 |

**Table 68: Theoretical Performance Data of Selected R-744/R-32/R-134a/R-1234ze(E) blends containing 16-30 % R-744, 20 % R-32 and 30 % R-134a**

| Composition $CO_2$/R-32/R-134a/R-1234ze(E) % by weight | | 16/20/30/34 | 18/20/20/32 | 20/20/30/30 | 22/20/30/28 | 24/20/30/26 | 26/20/30/24 | 28/20/30/22 | 30/20/30/20 |
|---|---|---|---|---|---|---|---|---|---|
| COP (heating) | | 2.29 | 2.29 | 2.30 | 2.30 | 2.30 | 2.30 | 2.30 | 2.30 |
| COP (heating) relative to Reference | | 108.7% | 108.8% | 108.9% | 109.0% | 109.0% | 109.0% | 109.0% | 108.9% |
| Volumetric heating capacity at suction | kJ/m³ | 2051 | 2173 | 2297 | 2424 | 2554 | 2686 | 2822 | 2961 |
| Capacity relative to Reference | | 233.4% | 247.3% | 261.4% | 275.9% | 290.7% | 305.7% | 321.2% | 336.9% |
| Critical temperature | °C | 78.61 | 76.73 | 74.93 | 73.19 | 71.52 | 69.91 | 68.36 | 66.86 |
| Critical pressure | bar | 52.37 | 53.14 | 53.91 | 54.67 | 55.44 | 56.21 | 56.97 | 57.74 |
| Condenser enthalpy change | kJ/kg | 316.9 | 321.3 | 325.5 | 329.5 | 333.2 | 336.8 | 340.3 | 343.5 |
| Pressure ratio | | 12.77 | 12.51 | 12.24 | 11.98 | 11.73 | 11.48 | 11.23 | 10.99 |
| Refrigerant mass flow | kg/hr | 22.7 | 22.4 | 22.1 | 21.9 | 21.6 | 21.4 | 21.2 | 21.0 |
| Compressor discharge temperature | °C | 154.5 | 156.6 | 158.6 | 160.6 | 162.5 | 164.4 | 166.2 | 167.9 |
| Evaporator inlet pressure | bar | 1.92 | 2.04 | 2.17 | 2.31 | 2.45 | 2.59 | 2.74 | 2.89 |
| Condenser inlet pressure | bar | 24.3 | 25.4 | 26.4 | 27.5 | 28.5 | 29.6 | 30.6 | 31.7 |
| Evaporator inlet temperature | °C | -36.7 | -37.3 | -37.8 | -38.3 | -38.8 | -39.3 | -39.7 | -40.1 |
| Evaporator dewpoint | °C | -23.9 | -23.6 | -23.2 | -22.9 | -22.7 | -22.5 | -22.3 | -22.1 |
| Evaporator exit gas temperature | °C | -18.9 | -18.6 | -18.2 | -17.9 | -17.7 | -17.5 | -17.3 | -17.1 |
| Evaporator mean temperature | °C | -30.3 | -30.4 | -30.5 | -30.6 | -30.8 | -30.9 | -31.0 | -31.1 |
| Evaporator glide (out-in) | K | 12.8 | 13.7 | 14.6 | 15.4 | 16.2 | 16.8 | 17.4 | 18.0 |
| Compressor suction pressure | bar | 1.90 | 2.03 | 2.16 | 2.29 | 2.43 | 2.58 | 2.73 | 2.88 |
| Compressor discharge pressure | bar | 24.3 | 25.4 | 26.4 | 27.5 | 28.5 | 29.6 | 30.6 | 31.7 |
| Suction line pressure drop | Pa/m | 102 | 95 | 89 | 84 | 79 | 74 | 70 | 66 |
| Pressure drop relative to reference | | 34.9% | 32.6% | 30.5% | 28.7% | 27.0% | 25.4% | 24.0% | 22.7% |
| Condenser dew point | °C | 53.1 | 53.0 | 52.7 | 52.4 | 52.1 | 51.7 | 51.3 | 50.8 |
| Condenser bubble point | °C | 31.4 | 30.7 | 30.0 | 29.5 | 29.0 | 28.6 | 28.3 | 28.0 |
| Condenser exit liquid temperature | °C | 30.4 | 29.7 | 29.0 | 28.5 | 28.0 | 27.6 | 27.3 | 27.0 |
| Condenser mean temperature | °C | 42.3 | 41.8 | 41.4 | 41.0 | 40.6 | 40.2 | 39.8 | 39.4 |

91

(continued)

| Composition $CO_2$/R-32/R-134a/R-1234ze(E) % by weight ► | | 16/20/30/34 | 18/20/20/32 | 20/20/30/30 | 22/20/30/28 | 24/20/30/26 | 26/20/30/24 | 28/20/30/22 | 30/20/30/20 |
|---|---|---|---|---|---|---|---|---|---|
| Condenser glide (in-out) | K | 21.7 | 22.3 | 22.7 | 23.0 | 23.1 | 23.1 | 23.0 | 22.8 |

**Table 69: Theoretical Performance Data of Selected R.744/R-32/R-134a/R-1234ze(E) blends containing 0-14 % R-744, 20 % R-32 and 40 % R-134a**

| Composition $CO_2$/R-32/R-134a/R-1234ze(E) % by weight ▶ | | 0/20/40/40 | 2/20/40/38 | 4/20/40/36 | 6/20/40/34 | 8/20/40/32 | 10/20/40/30 | 12/20/40/28 | 14/20/40/26 |
|---|---|---|---|---|---|---|---|---|---|
| COP (heating) | | 2.21 | 2.23 | 2.24 | 2.26 | 2.27 | 2.28 | 2.28 | 2.29 |
| COP (heating) relative to Reference | | 104.9% | 105.7% | 106.4% | 107.0% | 107.5% | 107.9% | 108.3% | 108.5% |
| Volumetric heating capacity at suction | $kJ/m^3$ | 1202 | 1276 | 1378 | 1482 | 1590 | 1702 | 1815 | 1932 |
| Capacity relative to Reference | | 136.8% | 145.2% | 156.8% | 168.7% | 181.0% | 193.6% | 206.6% | 219.9% |
| | | | | | | | | | |
| Critical temperature | °C | 96.33 | 94.24 | 91.70 | 89.28 | 86.96 | 84.74 | 82.61 | 80.57 |
| Critical pressure | bar | 46.37 | 46.96 | 47.74 | 48.51 | 49.29 | 50.06 | 50.83 | 51.60 |
| | | | | | | | | | |
| Condenser enthalpy change | kJ/kg | 270.8 | 276.6 | 283.8 | 290.4 | 296.5 | 302.1 | 307.4 | 312.3 |
| Pressure ratio | | 14.39 | 14.42 | 14.24 | 14.04 | 13.81 | 13.56 | 13.30 | 13.04 |
| Refrigerant mass flow | kg/hr | 26.6 | 26.0 | 25.4 | 24.8 | 24.3 | 23.8 | 23.4 | 23.1 |
| Compressor discharge temperature | °C | 135.2 | 137.1 | 139.9 | 142.7 | 145.3 | 147.7 | 150.1 | 152.3 |
| Evaporator inlet pressure | bar | 1.14 | 1.20 | 1.28 | 1.38 | 1.48 | 1.58 | 1.69 | 1.80 |
| Condenser inlet pressure | bar | 15.9 | 16.8 | 17.9 | 19.0 | 20.0 | 21.1 | 22.2 | 23.2 |
| Evaporator inlet temperature | °C | -31.7 | -32.4 | -33.0 | -33.6 | -34.3 | -34.9 | -35.5 | -36.1 |
| Evaporator dewpoint | °C | -28.1 | -27.4 | -26.8 | -26.3 | -25.7 | -25.2 | -24.8 | -24.3 |
| Evaporator exit gas temperature | °C | -23.1 | -22.4 | -21.8 | -21.3 | -20.7 | -20.2 | -19.8 | -19.3 |
| Evaporator mean temperature | °C | -29.9 | -29.9 | -29.9 | -30.0 | -30.0 | -30.1 | -30.1 | -30.2 |
| Evaporator glide (out-in) | K | 3.6 | 5.1 | 6.2 | 7.4 | 8.5 | 9.6 | 10.7 | 11.8 |
| Compressor suction pressure | bar | 1.11 | 1.17 | 1.26 | 1.35 | 1.45 | 1.56 | 1.67 | 1.78 |
| Compressor discharge pressure | bar | 15.9 | 16.8 | 17.9 | 19.0 | 20.0 | 21.1 | 22.2 | 23.2 |
| Suction line pressure drop | Pa/m | 196 | 181 | 165 | 151 | 138 | 127 | 118 | 109 |
| Pressure drop relative to reference | | 67.0% | 62.1% | 56.4% | 51.5% | 47.3% | 43.6% | 40.3% | 37.4% |
| Condenser dew point | °C | 50.5 | 51.7 | 52.3 | 52.7 | 53.0 | 53.1 | 53.2 | 53.2 |
| Condenser bubble point | °C | 44.0 | 41.3 | 39.1 | 37.3 | 35.7 | 34.4 | 33.2 | 32.2 |
| Condenser exit liquid temperature | °C | 43.0 | 40.3 | 38.1 | 36.3 | 34.7 | 33.4 | 32.2 | 31.2 |
| Condenser mean temperature | °C | 47.2 | 46.5 | 45.7 | 45.0 | 44.3 | 43.8 | 43.2 | 42.7 |
| Condenser glide (in-out) | K | 6.5 | 10.5 | 13.2 | 15.4 | 17.3 | 18.8 | 20.0 | 21.0 |

**Table 70: Theoretical Performance Data of Selected R-744/R-32/R-134a/R-1234ze(E) blends containing 16-30 % R-744, 20 % R-32 and 40 % R-134a**

| Composition CO$_2$/R-32/R-134a/R-1234ze(E) % by weight ▶ | | 16/20/40/24 | 18/20/40/22 | 20/20/40/20 | 22/20/40/18 | 24/20/40/16 | 26/20/40/14 | 28/20/40/12 | 30/20/40/10 |
|---|---|---|---|---|---|---|---|---|---|
| COP (heating) | | 2.29 | 2.29 | 2.30 | 2.30 | 2.30 | 2.30 | 2.30 | 2.30 |
| COP (heating) relative to Reference | | 108.7% | 108.8% | 108.9% | 109.0% | 109.0% | 109.0% | 109.0% | 108.9% |
| Volumetric heating capacity at suction | kJ/m$^3$ | 2051 | 2173 | 2297 | 2424 | 2554 | 2686 | 2822 | 2961 |
| Capacity relative to Reference | | 233.4% | 247.3% | 261.4% | 275.9% | 290.7% | 305.7% | 321.2% | 336.9% |
| | | | | | | | | | |
| Critical temperature | °C | 78.61 | 76.73 | 74.93 | 73.19 | 71.52 | 69.91 | 68.36 | 66.86 |
| Critical pressure | bar | 52.37 | 53.14 | 53.91 | 54.67 | 55.44 | 56.21 | 56.97 | 57.74 |
| | | | | | | | | | |
| Condenser enthalpy change | kJ/kg | 316.9 | 321.3 | 325.5 | 329.5 | 333.2 | 336.8 | 340.3 | 343.5 |
| Pressure ratio | | 12.77 | 12.51 | 12.24 | 11.98 | 11.73 | 11.48 | 11.23 | 10.99 |
| Refrigerant mass flow | kg/hr | 22.7 | 22.4 | 22.1 | 21.9 | 21.6 | 21.4 | 21.2 | 21.0 |
| Compressor discharge temperature | °C | 154.5 | 156.6 | 158.6 | 160.6 | 162.5 | 164.4 | 166.2 | 167.9 |
| Evaporator inlet pressure | bar | 1.92 | 2.04 | 2.17 | 2.31 | 2.45 | 2.59 | 2.74 | 2.89 |
| Condenser inlet pressure | bar | 24.3 | 25.4 | 26.4 | 27.5 | 28.5 | 29.6 | 30.6 | 31.7 |
| Evaporator inlet temperature | °C | -36.7 | -37.3 | -37.8 | -38.3 | -38.8 | -39.3 | -39.7 | -40.1 |
| Evaporator dewpoint | °C | -23.9 | -23.6 | -23.2 | -22.9 | -22.7 | -22.5 | -22.3 | -22.1 |
| Evaporator exit gas temperature | °C | -18.9 | -18.6 | -18.2 | -17.9 | -17.7 | -17.5 | -17.3 | -17.1 |
| | | | | | | | | | |
| Evaporator mean temperature | °C | -30.3 | -30.4 | -30.5 | -30.6 | -30.8 | -30.9 | -31.0 | -31.1 |
| Evaporator glide (out-in) | K | 12.8 | 13.7 | 14.6 | 15.4 | 16.2 | 16.8 | 17.4 | 18.0 |
| Compressor suction pressure | bar | 1.90 | 2.03 | 2.16 | 2.29 | 2.43 | 2.58 | 2.73 | 2.88 |
| Compressor discharge pressure | bar | 24.3 | 25.4 | 26.4 | 27.5 | 28.5 | 29.6 | 30.6 | 31.7 |
| Suction line pressure drop | Pa/m | 102 | 95 | 89 | 84 | 79 | 74 | 70 | 66 |
| Pressure drop relative to reference | | 34.9% | 32.6% | 30.5% | 28.7% | 27.0% | 25.4% | 24.0% | 22.7% |
| Condenser dew point | °C | 53.1 | 53.0 | 52.7 | 52.4 | 52.1 | 51.7 | 51.3 | 50.8 |
| Condenser bubble point | °C | 31.4 | 30.7 | 30.0 | 29.5 | 29.0 | 28.6 | 28.3 | 28.0 |
| Condenser exit liquid temperature | °C | 30.4 | 29.7 | 29.0 | 28.5 | 28.0 | 27.6 | 27.3 | 27.0 |

(continued)

| Composition CO$_2$/R-32/R-134a/R-1234ze(E) % by weight ▶ | | 16/20/40/24 | 18/20/40/22 | 20/20/40/20 | 22/20/40/18 | 24/20/40/16 | 26/20/40/14 | 28/20/40/12 | 30/20/40/10 |
|---|---|---|---|---|---|---|---|---|---|
| Condenser mean temperature | °C | 42.3 | 41.8 | 41.4 | 41.0 | 40.6 | 40.2 | 39.8 | 39.4 |
| Condenser glide (in-out) | K | 21.7 | 22.3 | 22.7 | 23.0 | 23.1 | 23.1 | 23.0 | 22.8 |

**Table 71: Theoretical Performance Data of Selected R-744/R-32/R-134a/R-1234ze(E) blends containing 0-14 % R-744, 25 % R-32 and 5 % R-134a**

| Composition CO$_2$/R-32/R-134a/R-1234ze(E) % by weight ▶ | | 0/25/5/70 | 2/25/5/68 | 4/25/5/66 | 6/25/5/64 | 8/25/5/62 | 10/25/5/60 | 12/25/5/58 | 14/25/5/56 |
|---|---|---|---|---|---|---|---|---|---|
| COP (heating) | | 2.23 | 2.25 | 2.26 | 2.27 | 2.28 | 2.29 | 2.29 | 2.29 |
| COP (heating) relative to Reference | | 105.7% | 106.5% | 107.2% | 107.7% | 108.1% | 108.4% | 108.7% | 108.8% |
| Volumetric heating capacity at suction | kJ/m$^3$ | 1221 | 1318 | 1418 | 1520 | 1624 | 1732 | 1841 | 1953 |
| Capacity relative to Reference | | 139.0% | 150.0% | 161.3% | 172.9% | 184.9% | 197.1% | 209.5% | 222.3% |
| | | | | | | | | | |
| Critical temperature | °C | 96.21 | 93.71 | 91.30 | 89.00 | 86.78 | 84.66 | 82.62 | 80.65 |
| Critical pressure | bar | 46.83 | 47.63 | 48.42 | 49.20 | 49.98 | 50.75 | 51.52 | 52.29 |
| | | | | | | | | | |
| Condenser enthalpy change | kJ/kg | 275.4 | 282.8 | 289.6 | 295.9 | 301.8 | 307.3 | 312.5 | 317.4 |
| Pressure ratio | | 14.37 | 14.20 | 14.01 | 13.80 | 13.58 | 13.34 | 13.10 | 12.86 |
| Refrigerant mass flow | kg/hr | 26.1 | 25.5 | 24.9 | 24.3 | 23.9 | 23.4 | 23.0 | 22.7 |
| Compressor discharge temperature | °C | 135.4 | 138.2 | 141.0 | 143.7 | 146.2 | 148.7 | 151.0 | 153.3 |
| Evaporator inlet pressure | bar | 1.15 | 1.23 | 1.32 | 1.41 | 1.51 | 1.61 | 1.72 | 1.83 |
| Condenser inlet pressure | bar | 16.1 | 17.1 | 18.1 | 19.2 | 20.2 | 21.2 | 22.2 | 23.3 |
| Evaporator inlet temperature | °C | -32.8 | -33.4 | -34.0 | -34.7 | -35.3 | -35.9 | -36.5 | -37.1 |
| Evaporator dewpoint | °C | -26.9 | -26.4 | -25.9 | -25.4 | -24.9 | -24.5 | -24.0 | -23.7 |
| Evaporator exit gas temperature | °C | -21.9 | -21.4 | -20.9 | -20.4 | -19.9 | -19.5 | -19.0 | -18.7 |
| Evaporator mean temperature | °C | -29.9 | -29.9 | -30.0 | -30.0 | -30.1 | -30.2 | -30.3 | -30.4 |
| Evaporator glide (out-in) | K | 5.9 | 7.0 | 8.2 | 9.3 | 10.4 | 11.5 | 12.5 | 13.5 |
| Compressor suction pressure | bar | 1.12 | 1.20 | 1.29 | 1.39 | 1.49 | 1.59 | 1.70 | 1.81 |
| Compressor discharge pressure | bar | 16.1 | 17.1 | 18.1 | 19.2 | 20.2 | 21.2 | 22.2 | 23.3 |
| Suction line pressure drop | Pa/m | 190 | 173 | 158 | 145 | 133 | 124 | 115 | 107 |
| Pressure drop relative to reference | | 65.1% | 59.1% | 54.0% | 49.6% | 45.7% | 42.3% | 39.3% | 36.6% |
| Condenser dew point | °C | 51.9 | 52.5 | 52.9 | 53.2 | 53.4 | 53.5 | 53.5 | 53.4 |
| Condenser bubble point | °C | 42.2 | 40.0 | 38.1 | 36.5 | 35.1 | 33.9 | 32.8 | 31.9 |
| Condenser exit liquid temperature | °C | 41.2 | 39.0 | 37.1 | 35.5 | 34.1 | 32.9 | 31.8 | 30.9 |
| Condenser mean temperature | °C | 47.1 | 46.2 | 45.5 | 44.8 | 44.2 | 43.7 | 43.1 | 42.6 |
| Condenser glide (in-out) | K | 9.7 | 12.5 | 14.8 | 16.7 | 18.3 | 19.6 | 20.7 | 21.5 |

**Table 72: Theoretical Performance Data of Selected R-744/R-32/R-134a/R-1234ze(E) blends containing 16-30 % R-744, 25 % R-32 and 5 % R-134a**

| Composition CO$_2$/R-32/R-134a/R-1234ze(E) % by weight ▶ | | 16/25/5/54 | 18/25/5152 | 20/25/5/50 | 22/25/5/48 | 24/25/5/46 | 26/25/5/44 | 28/25/5/42 | 30/25/5/40 |
|---|---|---|---|---|---|---|---|---|---|
| COP (heating) | | 2.30 | 2.30 | 2.30 | 2.30 | 2.30 | 2.30 | 2.30 | 2.30 |
| COP (heating) relative to Reference | | 109.0% | 109.0% | 109.1% | 109.1% | 109.1% | 109.0% | 109.0% | 108.9% |
| Volumetric heating capacity at suction | kJ/m$^3$ | 2067 | 2184 | 2303 | 2425 | 2549 | 2677 | 2808 | 2942 |
| Capacity relative to Reference | | 235.3% | 248.6% | 262.1% | 276.0% | 290.1% | 304.6% | 319.5% | 334.8% |
| | | | | | | | | | |
| Critical temperature | °C | 78.77 | 76.95 | 75.20 | 73.52 | 71.90 | 70.33 | 68.83 | 67.37 |
| Critical pressure | bar | 53.05 | 53.82 | 54.58 | 55.34 | 56.10 | 56.86 | 57.62 | 58.38 |
| | | | | | | | | | |
| Condenser enthalpy change | kJ/kg | 322.0 | 326.5 | 330.7 | 334.7 | 338.6 | 342.2 | 345.7 | 349.0 |
| Pressure ratio | | 12.62 | 12.37 | 12.13 | 11.89 | 11.65 | 11.41 | 11.18 | 10.95 |
| Refrigerant mass flow | kg/hr | 22.4 | 22.1 | 21.8 | 21.5 | 21.3 | 21.0 | 20.8 | 20.6 |
| Compressor discharge temperature | °C | 155.5 | 157.7 | 159.7 | 161.8 | 163.7 | 165.6 | 167.4 | 169.2 |
| Evaporator inlet pressure | bar | 1.94 | 2.06 | 2.18 | 2.31 | 2.45 | 2.58 | 2.73 | 2.88 |
| Condenser inlet pressure | bar | 24.3 | 25.3 | 26.3 | 27.3 | 28.3 | 29.4 | 30.4 | 31.4 |
| Evaporator inlet temperature | °C | -37.7 | -38.2 | -38.8 | -39.2 | -39.7 | -40.0 | -40.4 | -40.7 |
| Evaporator dewpoint | °C | -23.3 | -23.0 | -22.7 | -22.5 | -22.3 | -22.1 | -22.0 | -21.8 |
| Evaporator exit gas temperature | °C | -18.3 | -18.0 | -17.7 | -17.5 | -17.3 | -17.1 | -17.0 | -16.8 |
| Evaporator mean temperature | °C | -30.5 | -30.6 | -30.7 | -30.9 | -31.0 | -31.1 | -31.2 | -31.3 |
| Evaporator glide (out-in) | K | 14.4 | 15.2 | 16.0 | 16.7 | 17.4 | 17.9 | 18.4 | 18.9 |
| Compressor suction pressure | bar | 1.92 | 2.04 | 2.17 | 2.30 | 2.43 | 2.57 | 2.72 | 2.87 |
| Compressor discharge pressure | bar | 24.3 | 25.3 | 26.3 | 27.3 | 28.3 | 29.4 | 30.4 | 31.4 |
| Suction line pressure drop | Pa/m | 100 | 94 | 88 | 83 | 78 | 74 | 70 | 66 |
| Pressure drop relative to reference | | 34.2% | 32.0% | 30.1% | 28.3% | 26.7% | 25.2% | 23.9% | 22.6% |
| Condenser dew point | °C | 53.3 | 53.0 | 52.8 | 52.4 | 52.1 | 51.7 | 51.2 | 50.7 |
| Condenser bubble point | °C | 31.1 | 30.4 | 29.8 | 29.3 | 28.8 | 28.5 | 28.1 | 27.9 |
| Condenser exit liquid temperature | °C | 30.1 | 29.4 | 28.8 | 28.3 | 27.8 | 27.5 | 27.1 | 26.9 |
| Condenser mean temperature | °C | 42.2 | 41.7 | 41.3 | 40.9 | 40.5 | 40.1 | 39.7 | 39.3 |
| Condenser glide (in-out) | K | 22.2 | 22.6 | 23.0 | 23.2 | 23.2 | 23.2 | 23.1 | 22.8 |

**Table 73: Theoretical Performance Data of Selected R-744/R-32/R-134a/R-1234ze(E) blends containing 0-14 % R-744, 25 % R-32 and 10 % R-134a**

| Composition $CO_2$/R-32/R-134a/R-1234ze(E) % by weight ▶ | | 0/25/10/65 | 2/25/10/63 | 4/25/10/61 | 6/25/10/59 | 8/25/10/57 | 10/25/10/55 | 12/25/10/53 | 14/25/10/51 |
|---|---|---|---|---|---|---|---|---|---|
| COP (heating) | | 2.23 | 2.25 | 2.26 | 2.27 | 2.28 | 2.29 | 2.29 | 2.30 |
| COP (heating) relative to Reference | | 105.8% | 106.6% | 107.2% | 107.7% | 108.1% | 108.4% | 108.7% | 108.9% |
| Volumetric heating capacity at suction | $kJ/m^3$ | 1237 | 1335 | 1435 | 1538 | 1644 | 1753 | 1864 | 1977 |
| Capacity relative to Reference | | 140.8% | 151.9% | 163.3% | 175.0% | 187.1% | 199.5% | 212.1% | 225.1% |
| Critical temperature | °C | 95.95 | 93.44 | 91.04 | 88.74 | 86.54 | 84.42 | 82.39 | 80.44 |
| Critical pressure | bar | 47.01 | 47.80 | 48.58 | 49.36 | 50.14 | 50.91 | 51.68 | 52.45 |
| Condenser enthalpy change | kJ/kg | 276.2 | 283.6 | 290.4 | 296.7 | 302.5 | 308.0 | 313.2 | 318.0 |
| Pressure ratio | | 14.26 | 14.10 | 13.91 | 13.71 | 13.48 | 13.25 | 13.01 | 12.77 |
| Refrigerant mass flow | kg/hr | 26.1 | 25.4 | 24.8 | 24.3 | 23.8 | 23.4 | 23.0 | 22.6 |
| Compressor discharge temperature | °C | 135.9 | 138.8 | 141.5 | 144.2 | 146.7 | 149.1 | 151.5 | 153.7 |
| Evaporator inlet pressure | bar | 1.17 | 1.25 | 1.34 | 1.43 | 1.53 | 1.63 | 1.74 | 1.85 |
| Condenser inlet pressure | bar | 16.2 | 17.2 | 18.3 | 19.3 | 20.3 | 21.4 | 22.4 | 23.4 |
| Evaporator inlet temperature | °C | -32.7 | -33.3 | -33.9 | -34.5 | -35.1 | -35.7 | -36.3 | -36.9 |
| Evaporator dewpoint | °C | -27.1 | -26.5 | -26.0 | -25.5 | -25.1 | -24.6 | -24.2 | -23.8 |
| Evaporator exit gas temperature | °C | -22.1 | -21.5 | -21.0 | -20.5 | -20.1 | -19.6 | -19.2 | -18.8 |
| Evaporator mean temperature | °C | -29.9 | -29.9 | -30.0 | -30.0 | -30.1 | -30.2 | -30.3 | -30.4 |
| Evaporator glide (out-in) | K | 5.6 | 6.7 | 7.9 | 9.0 | 10.0 | 11.1 | 12.1 | 13.0 |
| Compressor suction pressure | bar | 1.14 | 1.22 | 1.31 | 1.41 | 1.51 | 1.61 | 1.72 | 1.83 |
| Compressor discharge pressure | bar | 16.2 | 17.2 | 18.3 | 19.3 | 20.3 | 21.4 | 22.4 | 23.4 |
| Suction line pressure drop | Pa/m | 187 | 170 | 155 | 143 | 132 | 122 | 113 | 105 |
| Pressure drop relative to reference | | 64.1% | 58.3% | 53.2% | 48.9% | 45.1% | 41.7% | 38.7% | 36.1% |
| Condenser dew point | °C | 51.6 | 52.1 | 52.5 | 52.8 | 53.0 | 53.1 | 53.1 | 53.1 |
| Condenser bubble point | °C | 42.4 | 40.2 | 38.3 | 36.6 | 35.2 | 34.0 | 33.0 | 32.1 |
| Condenser exit liquid temperature | °C | 41.4 | 39.2 | 37.3 | 35.6 | 34.2 | 33.0 | 32.0 | 31.1 |
| Condenser mean temperature | °C | 47.0 | 46.1 | 45.4 | 44.7 | 44.1 | 43.6 | 43.0 | 42.6 |
| Condenser glide (in-out) | K | 9.2 | 11.9 | 14.2 | 16.2 | 17.8 | 19.1 | 20.2 | 21.0 |

**Table 74: Theoretical Performance Data of Selected R-744/R-32/R-134a/R-1234ze(E) blends containing 16-30 % R-744, 25 % R-32 and 10 % R-134a**

| Composition CO$_2$/R-32/R-134a/R-1234ze(E) % by weight ▶ | | 16/25/10/49 | 18/25/10/47 | 20/25/10/45 | 22/25/10/43 | 24/25/10/41 | 26/25/10/39 | 28/25/10/37 | 30/25/10/35 |
|---|---|---|---|---|---|---|---|---|---|
| COP (heating) | | 2.30 | 2.30 | 2.30 | 2.30 | 2.30 | 2.30 | 2.30 | 2.30 |
| COP (heating) relative to Reference | | 109.0% | 109.1% | 109.1% | 109.2% | 109.2% | 109.1% | 109.1% | 109.0% |
| Volumetric heating capacity at suction | kJ/m$^3$ | 2093 | 2212 | 2333 | 2457 | 2584 | 2714 | 2847 | 2983 |
| Capacity relative to Reference | | 238.3% | 251.7% | 265.5% | 279.6% | 294.1% | 308.8% | 324.0% | 339.5% |
| Critical temperature | °C | 78.56 | 76.75 | 75.02 | 73.34 | 71.73 | 70.17 | 68.67 | 67.22 |
| Critical pressure | bar | 53.21 | 53.98 | 54.74 | 55.51 | 56.27 | 57.03 | 57.80 | 58.56 |
| Condenser enthalpy change | kJ/kg | 322.6 | 327.0 | 331.2 | 335.2 | 339.0 | 342.6 | 346.0 | 349.2 |
| Pressure ratio | | 12.52 | 12.28 | 12.03 | 11.79 | 11.55 | 11.31 | 11.08 | 10.84 |
| Refrigerant mass flow | kg/hr | 22.3 | 22.0 | 21.7 | 21.5 | 21.2 | 21.0 | 20.8 | 20.6 |
| Compressor discharge temperature | °C | 155.9 | 158.0 | 160.1 | 162.1 | 164.0 | 165.9 | 167.7 | 169.4 |
| Evaporator inlet pressure | bar | 1.97 | 2.09 | 2.22 | 2.35 | 2.48 | 2.62 | 2.77 | 2.93 |
| Condenser inlet pressure | bar | 24.4 | 25.5 | 26.5 | 27.5 | 28.5 | 29.5 | 30.6 | 31.6 |
| Evaporator inlet temperature | °C | -37.4 | -38.0 | -38.5 | -38.9 | -39.3 | -39.7 | -40.1 | -40.3 |
| Evaporator dewpoint | °C | -23.5 | -23.2 | -22.9 | -22.7 | -22.4 | -22.3 | -22.1 | -22.0 |
| Evaporator exit gas temperature | °C | -18.5 | -18.2 | -17.9 | -17.7 | -17.4 | -17.3 | -17.1 | -17.0 |
| Evaporator mean temperature | °C | -30.5 | -30.6 | -30.7 | -30.8 | -30.9 | -31.0 | -31.1 | -31.2 |
| Evaporator glide (out-in) | K | 13.9 | 14.8 | 15.6 | 16.3 | 16.9 | 17.5 | 18.0 | 18.4 |
| Compressor suction pressure | bar | 1.95 | 2.07 | 2.20 | 2.33 | 2.47 | 2.61 | 2.76 | 2.91 |
| Compressor discharge pressure | bar | 24.4 | 25.5 | 26.5 | 27.5 | 28.5 | 29.5 | 30.6 | 31.6 |
| Suction line pressure drop | Pa/m | 98 | 92 | 87 | 82 | 77 | 73 | 69 | 65 |
| Pressure drop relative to reference | | 33.7% | 31.6% | 29.7% | 27.9% | 26.3% | 24.9% | 23.5% | 22.3% |
| Condenser dew point | °C | 52.9 | 52.7 | 52.4 | 52.1 | 51.8 | 51.3 | 50.9 | 50.4 |
| Condenser bubble point | °C | 31.3 | 30.6 | 30.0 | 29.5 | 29.0 | 28.6 | 28.3 | 28.1 |
| Condenser exit liquid temperature | °C | 30.3 | 29.6 | 29.0 | 28.5 | 28.0 | 27.6 | 27.3 | 27.1 |
| Condenser mean temperature | °C | 42.1 | 41.6 | 41.2 | 40.8 | 40.4 | 40.0 | 39.6 | 39.2 |

| Composition CO$_2$/R-32/R-134a/R-1234ze(E) % by weight ▶ | | 16/25/10/49 | 18/25/10/47 | 20/25/10/45 | 22/25/10/43 | 24/25/10/41 | 26/25/10/39 | 28/25/10/37 | 30/25/10/35 |
|---|---|---|---|---|---|---|---|---|---|
| Condenser glide (in-out) | K | 21.7 | 22.1 | 22.5 | 22.7 | 22.7 | 22.7 | 22.6 | 22.4 |

**Table 75: Theoretical Performance Data of Selected R-744/R-32/R-134a/R-1234ze(E) blends containing 0-14 % R-744, 25 % R-32 and 20 % R-134a**

| Composition $CO_2$/R-32/R-134a/R-1234ze(E) % by weight ▶ | | 0/25/20/55 | 2/25/20/53 | 4/25/20/51 | 6/25/20/49 | 8/26/20/47 | 10/25/20/45 | 12/25/20/43 | 14/25/20/41 |
|---|---|---|---|---|---|---|---|---|---|
| COP (heating) | | 2.23 | 2.25 | 2.26 | 2.27 | 2.28 | 2.29 | 2.29 | 2.30 |
| COP (heating) relative to Reference | | 105.8% | 106.6% | 107.3% | 107.8% | 108.2% | 108.5% | 108.8% | 109.0% |
| Volumetric heating capacity at suction | $kJ/m^3$ | 1266 | 1365 | 1468 | 1573 | 1681 | 1792 | 1906 | 2023 |
| Capacity relative to Reference | | 144.1% | 155.4% | 167.0% | 179.0% | 191.3% | 204.0% | 217.0% | 230.2% |
| | | | | | | | | | |
| Critical temperature | °C | 95.42 | 92.93 | 90.55 | 88.26 | 86.08 | 83.98 | 81.97 | 80.04 |
| Critical pressure | bar | 47.30 | 48.08 | 48.86 | 49.64 | 50.41 | 51.19 | 51.96 | 52.74 |
| | | | | | | | | | |
| Condenser enthalpy change | kJ/kg | 277.9 | 285.3 | 292.1 | 298.4 | 304.2 | 309.7 | 314.8 | 319.6 |
| Pressure ratio | | 14.07 | 13.91 | 13.73 | 13.53 | 13.32 | 13.08 | 12.84 | 12.60 |
| Refrigerant mass flow | kg/hr | 25.9 | 25.2 | 24.6 | 24.1 | 23.7 | 23.2 | 22.9 | 22.5 |
| Compressor discharge temperature | °C | 136.9 | 139.8 | 142.6 | 145.2 | 147.8 | 150.2 | 152.5 | 154.7 |
| Evaporator inlet pressure | bar | 1.20 | 1.28 | 1.37 | 1.47 | 1.57 | 1.67 | 1.78 | 1.90 |
| Condenser inlet pressure | bar | 16.4 | 17.4 | 18.5 | 19.5 | 20.6 | 21.6 | 22.6 | 23.7 |
| Evaporator inlet temperature | °C | -32.4 | -33.0 | -33.6 | -34.2 | -34.8 | -35.3 | -35.9 | -36.4 |
| Evaporator dewpoint | °C | -27.4 | -26.9 | -26.3 | -25.9 | -25.4 | -25.0 | -24.5 | -24.2 |
| Evaporator exit gas temperature | °C | -22.4 | -21.9 | -21.3 | -20.9 | -20.4 | -20.0 | -19.5 | -19.2 |
| Evaporator mean temperature | °C | -29.9 | -29.9 | -30.0 | -30.0 | -30.1 | -30.1 | -30.2 | -30.3 |
| Evaporator glide (out-in) | K | 5.1 | 6.2 | 7.2 | 8.3 | 9.4 | 10.4 | 11.3 | 12.3 |
| Compressor suction pressure | bar | 1.16 | 1.25 | 1.34 | 1.44 | 1.54 | 1.65 | 1.76 | 1.88 |
| Compressor discharge pressure | bar | 16.4 | 17.4 | 18.5 | 19.5 | 20.6 | 21.6 | 22.6 | 23.7 |
| Suction line pressure drop | Pa/m | 182 | 166 | 151 | 139 | 128 | 119 | 110 | 103 |
| Pressure drop relative to reference | | 62.4% | 56.7% | 51.8% | 47.6% | 43.9% | 40.6% | 37.7% | 35.1% |
| Condenser dew point | °C | 50.9 | 51.4 | 51.9 | 52.2 | 52.4 | 52.5 | 52.5 | 52.5 |
| Condenser bubble point | °C | 42.7 | 40.5 | 38.6 | 36.9 | 35.5 | 34.3 | 33.2 | 32.3 |
| Condenser exit liquid temperature | °C | 41.7 | 39.5 | 37.6 | 35.9 | 34.5 | 33.3 | 32.2 | 31.3 |
| Condenser mean temperature | °C | 46.8 | 46.0 | 45.2 | 44.5 | 43.9 | 43.4 | 42.9 | 42.4 |
| Condenser glide (in-out) | K | 8.2 | 11.0 | 13.3 | 15.2 | 16.9 | 18.2 | 19.3 | 20.1 |

**Table 76: Theoretical Performance Data of Selected R-744/R-32/R-134a/R-1234a/R-1234ze(E) blends containing 16-30 % R-744, 25 % R-32 and 20 % R-134a**

| Composition $CO_2$/R-32/R-134a/R-1234ze(E) % by weight | | 16/25/20/39 | 18/25/20/37 | 20/25/20/35 | 22/25/20/33 | 24/25/20/31 | 26/25/20129 | 28/25/20/27 | 30/25/20/25 |
|---|---|---|---|---|---|---|---|---|---|
| COP (heating) | | 2.30 | 2.30 | 2.30 | 2.30 | 2.31 | 2.30 | 2.30 | 2.30 |
| COP (heating) relative to Reference | | 109.1% | 109.2% | 109.3% | 109.3% | 109.3% | 109.3% | 109.3% | 109.2% |
| Volumetric heating capacity at suction | kJ/m³ | 2142 | 2264 | 2389 | 2516 | 2647 | 2780 | 2917 | 3058 |
| Capacity relative to Reference | | 243.8% | 257.7% | 271.9% | 286.4% | 301.2% | 316.4% | 332.0% | 348.0% |
| Critical temperature | °C | 78.18 | 76.39 | 74.67 | 73.02 | 71.42 | 69.88 | 68.40 | 66.96 |
| Critical pressure | bar | 53.51 | 54.28 | 55.05 | 55.82 | 56.59 | 57.36 | 58.13 | 58.90 |
| Condenser enthalpy change | kJ/kg | 324.2 | 328.5 | 332.6 | 336.5 | 340.2 | 343.7 | 347.0 | 350.2 |
| Pressure ratio | | 12.35 | 12.10 | 11.86 | 11.62 | 11.37 | 11.14 | 10.90 | 10.67 |
| Refrigerant mass flow | kg/hr | 22.2 | 21.9 | 21.6 | 21.4 | 21.2 | 20.9 | 20.7 | 20.6 |
| Compressor discharge temperature | °C | 156.9 | 158.9 | 160.9 | 162.9 | 164.7 | 166.6 | 168.3 | 170.0 |
| Evaporator inlet pressure | bar | 2.02 | 2.14 | 2.27 | 2.41 | 2.55 | 2.70 | 2.85 | 3.01 |
| Condenser inlet pressure | bar | 24.7 | 25.8 | 26.8 | 27.8 | 28.9 | 29.9 | 30.9 | 32.0 |
| Evaporator inlet temperature | °C | -37.0 | -37.5 | -38.0 | -38.4 | -38.8 | -39.2 | -39.5 | -39.8 |
| Evaporator dewpoint | °C | -23.8 | -23.5 | -23.2 | -23.0 | -22.7 | -22.5 | -22.4 | -22.2 |
| Evaporator exit gas temperature | °C | -18.8 | -18.5 | -18.2 | -18.0 | -17.7 | -17.5 | -17.4 | -17.2 |
| Evaporator mean temperature | °C | -30.4 | -30.5 | -30.6 | -30.7 | -30.8 | -30.9 | -30.9 | -31.0 |
| Evaporator glide (out-in) | K | 13.2 | 14.0 | 14.8 | 15.5 | 16.1 | 16.7 | 17.1 | 17.6 |
| Compressor suction pressure | bar | 2.00 | 2.13 | 2.26 | 2.40 | 2.54 | 2.68 | 2.84 | 3.00 |
| Compressor discharge pressure | bar | 24.7 | 25.8 | 26.8 | 27.8 | 28.9 | 29.9 | 30.9 | 32.0 |
| Suction line pressure drop | Pa/m | 96 | 90 | 84 | 79 | 75 | 71 | 67 | 63 |
| Pressure drop relative to reference | | 32.8% | 30.8% | 28.9% | 27.2% | 25.6% | 24.2% | 22.9% | 21.7% |
| Condenser dew point | °C | 52.3 | 52.1 | 51.9 | 51.6 | 51.2 | 50.8 | 50.4 | 49.9 |
| Condenser bubble point | °C | 31.5 | 30.8 | 30.2 | 29.7 | 29.3 | 28.9 | 28.6 | 28.3 |
| Condenser exit liquid temperature | °C | 30.5 | 29.8 | 29.2 | 28.7 | 28.3 | 27.9 | 27.6 | 27.3 |
| Condenser mean temperature | °C | 41.9 | 41.5 | 41.1 | 40.6 | 40.3 | 39.9 | 39.5 | 39.1 |

(continued)

| Composition CO$_2$/R-32/R-134a/R-1234ze(E) % by weight ▶ | | 16/25/20/39 | 18/25/20/37 | 20/25/20/35 | 22/25/20/33 | 24/25/20/31 | 26/25/20129 | 28/25/20/27 | 30/25/20/25 |
|---|---|---|---|---|---|---|---|---|---|
| Condenser glide (in-out) | K | 20.8 | 21.3 | 21.6 | 21.8 | 21.9 | 21.9 | 21.8 | 21.6 |

**Table 77: Theoretical Performance Data of Selected R-744/R-32/R-134a/R-1234ze(E) blends containing 0-14 % R-744, 25 % R-32 and 30 % R-134a**

| Composition CO$_2$/R-32/R-134a/R-1234ze(E) % by weight ▶ | | 0/25/30/45 | 2/25/30/43 | 4/25/30/41 | 6/25/30/39 | 8/25/30/37 | 10/25/30/35 | 12/25/30/33 | 14/25/30/31 |
|---|---|---|---|---|---|---|---|---|---|
| COP (heating) | | 2.23 | 2.25 | 2.26 | 2.27 | 2.28 | 2.29 | 2.30 | 2.30 |
| COP (heating) relative to Reference | | 105.9% | 106.7% | 107.4% | 107.9% | 108.3% | 108.6% | 108.9% | 109.1% |
| Volumetric heating capacity at suction | kJ/m$^3$ | 1292 | 1393 | 1497 | 1604 | 1714 | 1828 | 1944 | 2063 |
| Capacity relative to Reference | | 147.0% | 158.5% | 170.3% | 182.6% | 195.1% | 208.0% | 221.2% | 234.8% |
| Critical temperature | °C | 94.91 | 92.44 | 90.08 | 87.82 | 85.65 | 83.58 | 81.59 | 79.68 |
| Critical pressure | bar | 47.50 | 48.28 | 49.07 | 49.85 | 50.63 | 51.42 | 52.20 | 52.98 |
| Condenser enthalpy change | kJ/kg | 279.9 | 287.3 | 294.2 | 300.5 | 306.3 | 311.8 | 316.8 | 321.6 |
| Pressure ratio | | 13.91 | 13.76 | 13.59 | 13.39 | 13.18 | 12.94 | 12.71 | 12.46 |
| Refrigerant mass flow | kg/hr | 25.7 | 25.1 | 24.5 | 24.0 | 23.5 | 23.1 | 22.7 | 22.4 |
| Compressor discharge temperature | °C | 138.1 | 141.0 | 143.8 | 146.4 | 149.0 | 151.3 | 153.6 | 155.8 |
| Evaporator inlet pressure | bar | 1.22 | 1.31 | 1.40 | 1.50 | 1.60 | 1.71 | 1.82 | 1.94 |
| Condenser inlet pressure | bar | 16.6 | 17.6 | 18.7 | 19.7 | 20.8 | 21.8 | 22.9 | 23.9 |
| Evaporator inlet temperature | °C | -32.2 | -32.8 | -33.3 | -33.9 | -34.4 | -35.0 | -35.6 | -36.1 |
| Evaporator dewpoint | °C | -27.7 | -27.1 | -26.6 | -26.2 | -25.7 | -25.2 | -24.8 | -24.4 |
| Evaporator exit gas temperature | °C | -22.7 | -22.1 | -21.6 | -21.2 | -20.7 | -20.2 | -19.8 | -19.4 |
| Evaporator mean temperature | °C | -29.9 | -30.0 | -30.0 | -30.0 | -30.1 | -30.1 | -30.2 | -30.3 |
| Evaporator glide (out-in) | K | 4.6 | 5.6 | 6.7 | 7.7 | 8.8 | 9.8 | 10.7 | 11.7 |
| Compressor suction pressure | bar | 1.19 | 1.28 | 1.37 | 1.47 | 1.58 | 1.69 | 1.80 | 1.92 |
| Compressor discharge pressure | bar | 16.6 | 17.6 | 18.7 | 19.7 | 20.8 | 21.8 | 22.9 | 23.9 |
| Suction line pressure drop | Pa/m | 178 | 162 | 148 | 136 | 125 | 116 | 108 | 100 |
| Pressure drop relative to reference | | 60.8% | 55.3% | 50.5% | 46.4% | 42.8% | 39.6% | 36.8% | 34.3% |
| Condenser dew point | °C | 50.3 | 50.8 | 51.3 | 51.6 | 51.8 | 51.9 | 52.0 | 51.9 |
| Condenser bubble point | °C | 43.0 | 40.7 | 38.8 | 37.1 | 35.7 | 34.4 | 33.4 | 32.5 |
| Condenser exit liquid temperature | °C | 42.0 | 39.7 | 37.8 | 36.1 | 34.7 | 33.4 | 32.4 | 31.5 |
| Condenser mean temperature | °C | 46.6 | 45.8 | 45.0 | 44.4 | 43.7 | 43.2 | 42.7 | 42.2 |
| Condenser glide (in-out) | K | 7.3 | 10.1 | 12.5 | 14.5 | 16.1 | 17.5 | 18.6 | 19.5 |

**Table 78: Theoretical Performance Data of Selected R-744/R-32/R-134a/R-1234ze(E) blends containing 16-30 % R-744, 25 % R-32 and 30 % R-134a**

| Composition CO$_2$/R-32/R-134a/R-1234ze(E) % by weight ▶ | | 16/25/30/29 | 18/25/30/27 | 20/25/30/25 | 22/25/30/23 | 24/26/30/21 | 26/25/30/19 | 28/25/30/17 | 30/25/30/15 |
|---|---|---|---|---|---|---|---|---|---|
| COP (heating) | | 2.30 | 2.31 | 2.31 | 2.31 | 2.31 | 2.31 | 2.31 | 2.31 |
| COP (heating) relative to Reference | | 109.2% | 109.4% | 109.4% | 109.5% | 109.5% | 109.5% | 109.5% | 109.4% |
| Volumetric heating capacity at suction | kJ/m$^3$ | 2185 | 2310 | 2437 | 2567 | 2700 | 2837 | 2976 | 3119 |
| Capacity relative to Reference | | 248.7% | 262.9% | 277.4% | 292.2% | 307.3% | 322.8% | 338.7% . | 354.9% |
| | | | | | | | | | |
| Critical temperature | °C | 77.84 | 76.07 | 74.37 | 72.73 | 71.15 | 69.63 | 68.16 | 66.75 |
| Critical pressure | bar | 53.77 | 54.55 | 55.33 | 56.11 | 56.89 | 57.67 | 58.45 | 59.24 |
| | | | | | | | | | |
| Condenser enthalpy change | kJ/kg | 326.1 | 330.4 | 334.4 | 338.3 | 341.9 | 345.4 | 348.7 | 351.9 |
| Pressure ratio | | 12.21 | 11.97 | 11.72 | 11.48 | 11.24 | 11.01 | 10.77 | 10.54 |
| Refrigerant mass flow | kg/hr | 22.1 | 21.8 | 21.5 | 21.3 | 21.1 | 20.8 | 20.6 | 20.5 |
| Compressor discharge temperature | °C | 157.9 | 160.0 | 162.0 | 163.9 | 165.7 | 167.5 | 169.2 | 170.9 |
| Evaporator inlet pressure | bar | 2.06 | 2.19 | 2.32 | 2.46 | 2.60 | 2.75 | 2.91 | 3.07 |
| Condenser inlet pressure | bar | 25.0 | 26.0 | 27.0 | 28.1 | 29.1 | 30.2 | 31.2 | 32.3 |
| Evaporator inlet temperature | °C | -36.6 | -37.1 | -37.6 | -38.0 | -38.4 | -38.8 | -39.2 | -39.5 |
| Evaporator dewpoint | °C | -24.1 | -23.7 | -23.5 | -23.2 | -23.0 | -22.7 | -22.6 | -22.4 |
| Evaporator exit gas temperature | °C | -19.1 | -18.7 | -18.5 | -18.2 | -18.0 | -17.7 | -17.6 | -17.4 |
| Evaporator mean temperature | °C | -30.3 | -30.4 | -30.5 | -30.6 | -30.7 | -30.8 | -30.9 | -30.9 |
| Evaporator glide (out-in) | K | 12.5 | 13.4 | 14.1 | 14.8 | 15.5 | 16.1 | 16.6 | 17.0 |
| Compressor suction pressure | bar | 2.04 | 2.17 | 2.31 | 2.45 | 2.59 | 2.74 | 2.90 | 3.06 |
| Compressor discharge pressure | bar | 25.0 | 26.0 | 27.0 | 28.1 | 29.1 | 30.2 | 31.2 | 32.3 |
| Suction line pressure drop | Pa/m | 94 | 88 | 82 | 78 | 73 | 69 | 65 | 62 |
| Pressure drop relative to reference | | 32.0% | 30.0% | 28.2% | 26.5% | 25.0% | 23.6% | 22.4% | 21.2% |
| Condenser dew point | °C | 51.8 | 51.6 | 51.4 | 51.1 | 50.8 | 50.4 | 50.0 | 49.5 |
| Condenser bubble point | °C | 31.7 | 31.0 | 30.4 | 29.9 | 29.4 | 29.1 | 28.7 | 28.5 |
| Condenser exit liquid temperature | °C | 30.7 | 30.0 | 29.4 | 28.9 | 28.4 | 28.1 | 27.7 | 27.5 |
| Condenser mean temperature | °C | 41.7 | 41.3 | 40.9 | 40.5 | 40.1 | 39.7 | 39.4 | 39.0 |

EP 2 571 956 B1

(continued)

| Composition CO$_2$/R-32/R-134a/R-1234ze(E) % by weight ▲ | | 16/25/30/29 | 18/25/30/27 | 20/25/30/25 | 22/25/30/23 | 24/26/30/21 | 26/25/30/19 | 28/25/30/17 | 30/25/30/15 |
|---|---|---|---|---|---|---|---|---|---|
| Condenser glide (in-out) | K | 20.2 | 20.7 | 21.0 | 21.2 | 21.3 | 21.3 | 21.2 | 21.0 |

**Table 79: Theoretical Performance Data of Selected R-744/R-32/R-134a/R-1234ze(E) blends containing 0-14 % R-744, 25 % R-32 and 40 % R-134a**

| Composition CO$_2$/R-32/R-134a/R-1234ze(E) % by weight ▶ | | 0/25/40/35 | 2/25/40/33 | 4/25/40/31 | 6/25/40/29 | 8/25/40/27 | 10/25/40/25 | 12/25/40/23 | 14/25/40/21 |
|---|---|---|---|---|---|---|---|---|---|
| COP (heating) | | 2.24 | 2.25 | 2.27 | 2.28 | 2.29 | 2.29 | 2.30 | 2.30 |
| COP (heating) relative to Reference | | 106.1% | 106.9% | 107.5% | 108.0% | 108.4% | 108.8% | 109.0% | 109.2% |
| Volumetric heating capacity at suction | kJ/m$^3$ | 1314 | 1416 | 1522 | 1631 | 1742 | 1858 | 1976 | 2097 |
| Capacity relative to Reference | | 149.5% | 161.2% | 173.2% | 185.6% | 198.3% | 211.4% | 224.9% | 238.7% |
| | | | | | | | | | |
| Critical temperature | °C | 94.41 | 91.96 | 89.63 | 87.40 | 85.26 | 83.21 | 81.24 | 79.35 |
| Critical pressure | bar | 47.61 | 48.41 | 49.20 | 50.00 | 50.80 | 51.60 | 52.40 | 53.19 |
| | | | | | | | | | |
| Condenser enthalpy change | kJ/kg | 282.2 | 289.7 | 296.6 | 302.9 | 308.8 | 314.2 | 319.3 | 324.0 |
| Pressure ratio | | 13.77 | 13.63 | 13.47 | 13.27 | 13.07 | 12.84 | 12.60 | 12.36 |
| Refrigerant mass flow | kg/hr | 25.5 | 24.9 | 24.3 | 23.8 | 23.3 | 22.9 | 22.6 | 22.2 |
| Compressor discharge temperature | °C | 139.4 | 142.3 | 145.1 | 147.7 | 150.3 | 152.6 | 154.9 | 157.1 |
| Evaporator inlet pressure | bar | 1.24 | 1.33 | 1.42 | 1.52 | 1.62 | 1.73 | 1.85 | 1.97 |
| Condenser inlet pressure | bar | 16.7 | 17.7 | 18.8 | 19.9 | 20.9 | 22.0 | 23.0 | 24.1 |
| Evaporator inlet temperature | °C | -32.1 | -32.6 | -33.1 | -33.7 | -34.2 | -34.8 | -35.3 | -35.8 |
| Evaporator dewpoint | °C | -27.9 | -27.4 | -26.9 | -26.4 | -25.9 | -25.5 | -25.1 | -24.7 |
| Evaporator exit gas temperature | °C | -22.9 | -22.4 | -21.9 | -21.4 | -20.9 | -20.5 | -20.1 | -19.7 |
| Evaporator mean temperature | °C | -30.0 | -30.0 | -30.0 | -30.0 | -30.1 | -30.1 | -30.2 | -30.2 |
| Evaporator glide (out-in) | K | 4.1 | 5.2 | 6.2 | 7.2 | 8.3 | 9.3 | 10.2 | 11.2 |
| Compressor suction pressure | bar | 1.21 | 1.30 | 1.40 | 1.50 | 1.60 | 1.71 | 1.83 | 1.95 |
| Compressor discharge pressure | bar | 16.7 | 17.7 | 18.8 | 19.9 | 20.9 | 22.0 | 23.0 | 24.1 |
| Suction line pressure drop | Pa/m | 174 | 158 | 144 | 133 | 122 | | 105 | 98 |
| Pressure drop relative to reference | | 59.4% | 54.0% | 49.4% | 45.4% | 41.9% | 38.8% | 36.0% | 33.6% |
| Condenser dew point | °C | 49.8 | 50.3 | 50.8 | 51.1 | 51.3 | 51.5 | 51.5 | 51.5 |
| Condenser bubble point | °C | 43.2 | 40.9 | 38.9 | 37.2 | 35.8 | 34.5 | 33.4 | 32.5 |
| Condenser exit liquid temperature | °C | 42.2 | 39.9 | 37.9 | 36.2 | 34.8 | 33.5 | 32.4 | 31.5 |
| Condenser mean temperature | °C | 46.5 | 45.6 | 44.8 | 44.2 | 43.5 | 43.0 | 42.5 | 42.0 |
| Condenser glide (in-out) | K | 6.6 | 9.5 | 11.9 | 13.9 | 15.6 | 17.0 | 18.1 | 19.0 |

**Table 80: Theoretical Performance Data of Selected R-744/R-32/R-134a/R-1234ze(E) blends containing 16-30 % R-744, 25 % R-32 and 40 % R-134a**

| Composition CO$_2$/R-32/R-134a/R-1234ze(E) % by weight ▶ | | 16/25/40/19 | 28/25/40/17 | 20/25/40/15 | 22/25/40/13 | 24/25/40/11 | 26/25/40/9 | 28/25/40/7 | 30/25/40/5 |
|---|---|---|---|---|---|---|---|---|---|
| COP (heating) | | 2.31 | 2.31 | 2.31 | 2.31 | 2.31 | 2.31 | 2.31 | 2.31 |
| COP (heating) relative to Reference | | 109.4% | 109.5% | 109.6% | 109.7% | 109.7% | 109.7% | 109.7% | 109.6% |
| Volumetric heating capacity at suction | kJ/m$^3$ | 2221 | 2348 | 2477 | 2609 | 2743 | 2881 | 3021 | 3165 |
| Capacity relative to Reference | | 252.8% | 267.2% | 281.9% | 296.9% | 312.2% | 327.9% | 343.8% | 360.2% |
| Critical temperature | °C | 77.54 | 75.79 | 74.11 | 72.49 | 70.93 | 69.43 | 67.98 | 66.57 |
| Critical pressure | bar | 53.99 | 54.79 | 55.58 | 56.38 | 57.17 | 57.97 | 58.76 | 59.56 |
| Condenser enthalpy change | kJ/kg | 328.5 | 332.8 | 336.8 | 340.7 | 344.3 | 347.8 | 351.1 | 354.2 |
| Pressure ratio | | 12.12 | 11.87 | 11.63 | 11.39 | 11.15 | 10.92 | 10.69 | 10.47 |
| Refrigerant mass flow | kg/hr | 21.9 | 21.6 | 21.4 | 21.1 | 20.9 | 20.7 | 20.5 | 20.3 |
| Compressor discharge temperature | °C | 159.2 | 161.2 | 163.2 | 165.1 | 166.9 | 168.7 | 170.4 | 172.1 |
| Evaporator inlet pressure | bar | 2.09 | 2.22 | 2.36 | 2.50 | 2.64 | 2.79 | 2.95 | 3.11 |
| Condenser inlet pressure | bar | 25.2 | 26.2 | 27.3 | 28.3 | 29.3 | 30.4 | 31.4 | 32.5 |
| Evaporator inlet temperature | °C | -36.4 | -36.9 | -37.3 | -37.8 | -38.2 | -38.6 | -39.0 | -39.3 |
| Evaporator dewpoint | °C | -24.3 | -23.9 | -23.6 | -23.3 | -23.1 | -22.9 | -22.7 | -22.5 |
| Evaporator exit gas temperature | °C | -19.3 | -18.9 | -18.6 | -18.3 | -18.1 | -17.9 | -17.7 | -17.5 |
| Evaporator mean temperature | °C | -30.3 | -30.4 | -30.5 | -30.6 | -30.7 | -30.8 | -30.8 | -30.9 |
| Evaporator glide (out-in) | K | 12.1 | 12.9 | 13.7 | 14.5 | 15.1 | 15.8 | 16.3 | 16.8 |
| Compressor suction pressure | bar | 2.08 | 2.21 | 2.34 | 2.48 | 2.63 | 2.78 | 2.94 | 3.10 |
| Compressor discharge pressure | bar | 25.2 | 26.2 | 27.3 | 28.3 | 29.3 | 30.4 | 31.4 | 32.5 |
| Suction line pressure drop | Pa/m | 92 | 86 | 81 | 76 | 72 | 68 | 64 | 61 |
| Pressure drop relative to reference | | 31.4% | 29.4% | 27.6% | 26.0% | 24.5% | 23.2% | 21.9% | 20.8% |
| Condenser dew point | °C | 51.4 | 51.3 | 51.0 | 50.8 | 50.4 | 50.1 | 49.7 | 49.2 |
| Condenser bubble point | °C | 31.7 | 31.0 | 30.4 | 29.9 | 29.4 | 29.1 | 28.7 | 28.5 |
| Condenser exit liquid temperature | °C | 30.7 | 30.0 | 29.4 | 28.9 | 28.4 | 28.1 | 27.7 | 27.5 |
| Condenser mean temperature | °C | 41.6 | 41.1 | 40.7 | 40.3 | 39.9 | 39.6 | 39.2 | 38.9 |
| Condenser glide (int-out) | K | 19.7 | 20.3 | 20.6 | 20.9 | 21.0 | 21.0 | 20.9 | 20.8 |

**Table 81: Theoretical Performance Data of Selected R-744/R-1234ze(E) blends containing 0-14 % R-744**

| Composition $CO_2$/R-1234ze(E) % by weight ▶ | | 0/100 | 2/98 | 4/96 | 6/94 | 8/92 | 10/90 | 12/88 | 14/86 |
|---|---|---|---|---|---|---|---|---|---|
| COP (heating) | | 1.99 | 2.05 | 2.10 | 2.14 | 2.16 | 2.18 | 2.20 | 2.21 |
| COP (heating) relative to Reference | | 94.4% | 97.4% | 99.6% | 101.3% | 102.5% | 103.5% | 104.3% | 104.9% |
| Volumetric heating capacity at suction | kJ/m3 | 615 | 695 | 778 | 864 | 953 | 1046 | 1141 | 1239 |
| Capacity relative to Reference | | 70.0% | 79.1% | 88.6% | 98.3% | 108.5% | 119.0% | 129.8% | 141.0% |
| | | | | | | | | | |
| Critical temperature | °C | 109.89 | 105.93 | 102.20 | 98.69 | 95.38 | 92.25 | 89.29 | 86.48 |
| Critical pressure | bar | 36.57 | 37.34 | 38.10 | 38.87 | 39.63 | 40.40 | 41.16 | 41.92 |
| | | | | | | | | | |
| Condenser enthalpy change | kJ/kg | 210.2 | 223.7 | 235.1 | 244.8 | 253.2 | 260.5 | 267.2 | 273.2 |
| Pressure ratio | | 18.75 | 18.99 | 19.05 | 18.95 | 18.71 | 18.39 | 18.00 | 17.58 |
| Refrigerant mass flow | kg/hr | 34.2 | 32.2 | 30.6 | 29.4 | 28.4 | 27.6 | 27.0 | 26.4 |
| Compressor discharge temperature | °C | 112.8 | 117.1 | 121.1 | 124.7 | 127.9 | 131.0 | 133.8 | 136.5 |
| Evaporator inlet pressure | bar | 0.65 | 0.69 | 0.74 | 0.80 | 0.87 | 0.95 | 1.03 | 1.11 |
| Condenser inlet pressure | bar | 10.7 | 11.9 | 13.1 | 14.3 | 15.5 | 16.7 | 17.8 | 19.0 |
| Evaporator inlet temperature | °C | -28.9 | -29.6 | -30.3 | -31.1 | -31.9 | -32.7 | -33.6 | -34.5 |
| Evaporator dewpoint | °C | -30.3 | -29.7 | -29.0 | -28.3 | -27.5 | -26.6 | -25.8 | -25.1 |
| Evaporator exit gas temperature | °C | -25.3 | -24.7 | -24.0 | -23.3 | -22.5 | -21.6 | -20.8 | -20.1 |
| Evaporator mean temperature | °C | -29.6 | -29.7 | -29.7 | -29.7 | -29.7 | -29.7 | -29.7 | -29.8 |
| Evaporator glide (out-in) | K | -1.3 | -0.1 | 1.3 | 2.8 | 4.4 | 6.0 | 7.7 | 9.4 |
| Compressor suction pressure | bar | 0.57 | 0.63 | 0.69 | 0.75 | 0.83 | 0.91 | 0.99 | 1.08 |
| Compressor discharge pressure | bar | 10.7 | 11.9 | 13.1 | 14.3 | 15.5 | 16.7 | 17.8 | 19.0 |
| Suction line pressure drop | Pa/m | 462 | 390 | 336 | 294 | 259 | 231 | 208 | 189 |
| Pressure drop relative to reference | | 158.3% | 133.6% | 115.0% | 100.5% | 88.8% | 79.2% | 71.3% | 64.6% |
| Condenser dew point | °C | 53.1 | 55.1 | 56.7 | 58.1 | 59.2 | 60.0 | 60.5 | 60.9 |
| Condenser bubble point | °C | 53.0 | 47.1 | 42.6 | 38.9 | 36.1 | 33.8 | 31.9 | 30.4 |
| Condenser exit liquid temperature | °C | 52.0 | 46.1 | 41.6 | 37.9 | 35.1 | 32.8 | 30.9 | 29.4 |
| Condenser mean temperature | °C | 53.1 | 51.1 | 49.7 | 48.5 | 47.6 | 46.9 | 46.2 | 45.7 |
| Condenser glide (in-out) | K | 0.1 | 7.9 | 14.2 | 19.1 | 23.1 | 26.2 | 28.6 | 30.6 |

**Table 82: Theoretical Performance Data of Selected R-744/R-1234ze(E) blends containing 16-30 % R-744**

| Composition $CO_2$/R-1234ze(E) % by weight ▶ | | 16/84 | 18/82 | 20/80 | 22/78 | 24/76 | 26/74 | 28/72 | 30/70 |
|---|---|---|---|---|---|---|---|---|---|
| COP (heating) | | 2.22 | 2.23 | 2.23 | 2.24 | 2.24 | 2.24 | 2.24 | 2.24 |
| COP (heating) relative to Reference | | 105.4% | 105.7% | 106.0% | 106.2% | 106.3% | 106.3% | 106.3% | 106.2% |
| Volumetric heating capacity at suction | kJ/m3 | 1339 | 1441 | 1545 | 1650 | 1756 . | 1862 | 1969 | 2076 |
| Capacity relative to Reference | | 152.4% | 164.0% | 175.8% | 187.7% | 199.8% | 211.9% | 224.1% | 236.3% |
| | | | | | | | | | |
| Critical temperature | °C | 83.81 | 81.28 | 78.87 | 76.57 | 74.38 | 72.28 | 70.28 | 68.37 |
| Critical pressure | bar | 42.68 | 43.44 | 44.20 | 44.96 | 45.72 | 46.47 | 47.23 | 47.98 |
| | | | | | | | | | |
| Condenser enthalpy change | kJ/kg | 278.7 | 283.9 | 288.9 | 293.6 | 298.1 | 302.5 | 306.8 | 311.0 |
| Pressure ratio | | 17.15 | 16.72 | 16.29 | 15.88 | 15.49 | 15.12 | 14.77 | 14.44 |
| Refrigerant mass flow | kg/hr | 25.8 | 25.4 | 24.9 | 24.5 | 24.2 | 23.8 | 23.5 | 23.1 |
| Compressor discharge temperature | °C | 139.0 | 141.4 | 143.8 | 146.1 | 148.4 | 150.6 | 152.9 | 155.1 |
| Evaporator inlet pressure | bar | 1.20 | 1.29 | 1.39 | 1.49 | 1.60 | 1.70 | 1.81 | 1.92 |
| Condenser inlet pressure | bar | 20.1 | 21.2 | 22.3 | 23.3 | 24.4 | 25.4 | 26.5 | 27.5 |
| Evaporator inlet temperature | °C | -35.5 | -36.5 | -37.6 | -38.7 | -39.7 | -40.8 | -41.9 | -42.9 |
| Evaporator dewpoint | °C | -24.4 | -23.7 | -23.1 | -22.5 | -22.0 | -21.6 | -21.2 | -20.9 |
| Evaporator exit gas temperature | °C | -19.4 | -18.7 | -18.1 | -17.5 | -17.0 | -16.6 | -16.2 | -15.9 |
| Evaporator mean temperature | °C | -29.9 | -30.1 | -30.3 | -30.6 | -30.9 | -31.2 | -31.5 | -31.9 |
| Evaporator glide (out-in) | K | 11.2 | 12.9 | 14.5 | 16.2 | 17.7 | 19.2 | 20.7 | 22.0 |
| Compressor suction pressure | bar | 1.17 | 1.27 | 1.37 | 1.47 | 1.57 | 1.68 | 1.79 | 1.90 |
| Compressor discharge pressure | bar | 20.1 | 21.2 | 22.3 | 23.3 | 24.4 | 25.4 | 26.5 | 27.5 |
| Suction line pressure drop | Pa/m | 172 | 157 | 145 | 134 | 125 | 116 | 109 | 102 |
| Pressure drop relative to reference | | 58.8% | 53.9% | 49.7% | 45.9% | 42.7% | 39.8% | 37.2% | 35.0% |
| Condenser dew point | °C | 61.2 | 61.2 | 61.2 | 61.0 | 60.8 | 60.4 | 60.0 | 59.5 |
| Condenser bubble point | °C | 29.1 | 28.0 | 27.1 | 26.3 | 25.7 | 25.1 | 24.6 | 24.1 |
| Condenser exit liquid temperature | °C | 28.1 | 27.0 | 26.1 | 25.3 | 24.7 | 24.1 | 23.6 | 23.1 |
| Condenser mean temperature | °C | 45.1 | 44.6 | 44.1 | 43.7 | 43.2 | 42.7 | 42.3 | 41.8 |
| Condenser glide (in-out) | | 32.1 | 33.2 | 34.1 | 34.7 | 35.1 | 35.3 | 35.4 | 35.3 |

*Further Performance Data*

The performance of a composition containing 6 % by weight $CO_2$, 10 % by weight R-134a and 84 % by weight R-1234ze(E) was tested in an automotive air conditioning system suitable for use with R-134a. This composition is denoted "Blend" in the results shown below.

The test conditions used were as described in SAE Standard J2765, which is incorporated herein by reference. These conditions are summarised below.

- Ambient air condition 35°C and 40% relative humidity (RH)

- Air off temperature from evaporator controlled to 3°C

- Compressor displacement variable 0-175cc per stroke

- Conventional R-134a expansion valve was replaced with an electronic expansion valve to allow for ease of superheat adjustment

- System used without internal heat exchanger and with equivalent superheat at evaporator exit for all fluids

The results are shown below, in which I, L, M and H refer to idle, low, medium and high speed, and wherein 35 and 45 refer to the ambient temperature in °C.

| Measured cooling capacity (kW) | | | Relative to R-134a |
|---|---|---|---|
| Test point | R134a | Blend | Blend |
| I35 | 4.67 | 4.5 | 96% |
| L35 | 5.86 | 5.66 | 97% |
| M35 | 6.43 | 6.18 | 96% |
| H35 | 6.65 | 6.5 | 98% |
| | | | |
| I45 | 3.81 | 3.64 | 96% |
| L45 | 4.76 | 4.61 | 97% |
| M45 | 5.2 | 5.05 | 97% |
| H45 | 5.41 | 5.33 | 99% |

| Measured Energy Efficiency | (expressed as COP) | | COP relative to R-134a |
|---|---|---|---|
| Test point | R134a | Blend | Blend |
| I35 | 2.87 | 2.62 | 91% |
| L35 | 1.98 | 1.89 | 95% |
| M35 | 1.79 | 1.7 | 95% |
| H35 | 1.4 | 1.36 | 97% |
| | | | |
| I45 | 2.3 | 2.18 | 95% |
| L45 | 1.64 | 1.62 | 99% |
| M45 | 1.48 | 1.45 | 98% |
| H45 | 1.18 | 1.16 | 98% |

The Blend composition of the invention represents a good match of capacity and efficiency for R-134a in an R-134a air-conditioning system across a range of conditions.

*Lubricant Miscibility Data*

The miscibility of a composition of the invention containing about 6 % by weight $CO_2$, about 10 % by weight R-134a and about 84 % by weight R-1234ze(E) (referred to below as Blend) was tested with the polyalkylene glycol (PAG) lubricant YN12 and the polyol ester (POE) lubricant 32H. The results of these experiments were compared to the miscibility of pure R-1234yf with the same lubricants. The results are shown below.

**Miscibility Results for Blend with 32H**

| Temperature deg C | Lubricant Concentration wt% | | | | | |
|---|---|---|---|---|---|---|
| | 4 | 7 | 10 | 20 | 30 | 50 |
| -20 | miscible | miscible | miscible | miscible | miscible | miscible |
| -10 | miscible | miscible | miscible | miscible | miscible | miscible |
| 0 | miscible | miscible | miscible | miscible | miscible | miscible |
| 10 | miscible | miscible | miscible | miscible | miscible | miscible |
| 20 | miscible | miscible | miscible | miscible | miscible | miscible |
| 30 | miscible | miscible | miscible | miscible | miscible | miscible |
| 40 | miscible | miscible | miscible | miscible | miscible | miscible |
| 50 | miscible | miscible | miscible | miscible | miscible | miscible |
| 60 | miscible | miscible | miscible | miscible | miscible | miscible |
| 70 | miscible | miscible | miscible | miscible | miscible | miscible |
| 80 | miscible | miscible | miscible | miscible | miscible | miscible |

**Miscibility Results for 1234yf with 32H**

| Temperature deg C | Lubricant Concentration wt% | | | | | |
|---|---|---|---|---|---|---|
| | 4 | 7 | 10 | 20 | 30 | 50 |
| -20 | miscible | miscible | miscible | miscible | miscible | miscible |
| -10 | miscible | miscible | miscible | miscible | miscible | miscible |
| 0 | miscible | miscible | miscible | miscible | miscible | miscible |
| 10 | slightly opaque | slightly opaque | miscible | miscible | miscible | miscible |
| 20 | slightly opaque | slightly opaque | miscible | miscible | miscible | miscible |
| 30 | slightly opaque | slightly opaque | miscible | miscible | miscible | miscible |
| 40 | slightly opaque | slightly opaque | miscible | miscible | miscible | miscible |
| 50 | slightly opaque | slightly opaque | miscible | miscible | slightly opaque | slightly opaque |
| 60 | slightly opaque | slightly opaque | miscible | miscible | slightly opaque | slightly opaque |

(continued)

| Temperature deg C | Lubricant Concentration wt% | | | | | |
|---|---|---|---|---|---|---|
| | 4 | 7 | 10 | 20 | 30 | 50 |
| 70 | slightly opaque | slightly opaque | miscible | miscible | slightly opaque | slightly opaque |
| 80 | Miscible | slightly opaque | miscible | Opaque 2 layers | Opaque 2 layers | Opaque |

**Miscibility Results for Blend with YN12**

| Temp deg C | Lubricant Concentration wt% | | | | | |
|---|---|---|---|---|---|---|
| | 4 | 7 | 10 | 20 | 30 | 50 |
| -20 | Opaque | Opaque | Opaque | Opaque | Opaque | Opaque |
| -10 | Opaque | Opaque | Opaque | Opaque | slightly opaque | slightly opaque |
| 0 | Opaque | Opaque | slightly opaque | slightly opaque | slightly opaque | slightly opaque |
| 10 | Opaque | Opaque | slightly opaque | slightly opaque | slightly opaque | slightly opaque |
| 20 | Opaque | Opaque | slightly opaque | slightly opaque | slightly opaque | slightly opaque |
| 30 | slightly opaque | Opaque | slightly opaque | slightly opaque | slightly opaque | slightly opaque |
| 40 | slightly opaque | slightly opaque | slightly opaque | slightly opaque | slightly opaque | slightly opaque |
| 50 | very Slighty opaque | very Slighty opaque | slightly opaque | slightly opaque | slightly opaque | slightly opaque |
| 60 | very Slighty opaque | very Slighty opaque | slightly opaque | slightly opaque | slightly opaque | slightly opaque |
| 70 | very Slighty opaque | very Slighty opaque | 2 layers | 2 layers | 2 layers | slightly opaque |
| 80 | 2 layers | 2 layers | 2 layers | 2 layers | 2 layers | 2 layers |

**Miscibility Results for 1234yf with YN12**

| Temperature deg C | Lubricant Concentration wt% | | | | | |
|---|---|---|---|---|---|---|
| | 4 | 7 | 10 | 20 | 30 | 50 |
| -20 | opaque | opaque | 2 layers | opaque | 2 layers | 2 layers |
| -10 | slightly opaque | slightly opaque | 2 layers | opaque | 2 layers | 2 layers |

(continued)

| Temperature deg C | Lubricant Concentration wt% | | | | | |
|---|---|---|---|---|---|---|
| | 4 | 7 | 10 | 20 | 30 | 50 |
| 0 | slightly opaque | opaque | 2 layers | opaque | opaque | opaque |
| 10 | slightly opaque | opaque | 2 layers opaque | 2 layers opaque | 2 layers opaque | 2 layers opaque |
| 20 | opaque | slightly opaque 2 layers | 2 layers opaque | 2 layers | 2 layers opaque | 2 layers opaque |
| 30 | opaque | opaque | 2 layers opaque | 2 layers | 2 layers opaque | 2 layers opaque |
| 40 | clear 2 layers | clear 2 layers | 2 layers clear | 2 layers | 2 layers clear | 2 layers clear |
| 50 | clear 2 layers | clear 2 layers | 2 layers clear | 2 layers | 2 layers clear | 2 layers clear |
| 60 | clear 2 layers | clear 2 layers | 2 layers clear | 2 layers | 2 layers clear | 2 layers clear |
| 70 | clear 2 layers | clear 2 layers | 2 layers clear | 2 layers | 2 layers clear | 2 layers clear |
| 80 | clear 2 layers | clear 2 layers | 2 layers clear | 2 layers | 2 layers clear | 2 layers clear |

The miscibility of further compositions of the invention were tested with the polyalkylene glycol (PAG) lubricant YN12. The lubricant was present in a concentration of 4% w/w. This concentration is representative of the typical oil concentration present in an air conditioning system. The results of these experiments were compared to the miscibility of pure R-1234yf. The results are shown below.

| Temperature / °C | 0 | 10 | 20 | 30 | 40 |
|---|---|---|---|---|---|
| R-1234yf (comparative) | opaque | opaque | opaque | very opaque | opaque |
| | | | | | |
| $CO_2$/R-134a/R-1234ze (15/10/75 % by weight) | slightly opaque | slightly opaque | slightly opaque | very slightly opaque | slightly opaque |
| $CO_2$/R-134a/R-1234ze (25/10/65% by weight) | opaque | slightly opaque | very slightly opaque | ok | |
| $CO_2$/R-32/R-1234ze (4/7/89 % by weight) | opaque | slightly opaque | very slightly opaque | ok | |

The results show that the compositions of the invention have improved miscibility with lubricants compared to the pure fluid R-1234yf.

In summary, the invention provides new compositions that exhibit a surprising combination of advantageous properties including good refrigeration performance, low flammability, low GWP, and/or miscibility with lubricants compared to existing refrigerants such as R-134a and the proposed refrigerant R-1234yf.

The invention is defined by the following claims.

## Claims

1.   A heat transfer composition comprising:

   (i) from about 10 to about 95 % by weight *trans*-1,3,3,3-tetrafluoropropene (R-1234ze(E));
   (ii) from about 4 to about 30 % by weight carbon dioxide (R-744); and
   (iii) from about 3 to about 60 % by weight of a third component comprising difluoromethane (R-32),

and having a critical temperature of greater than about 70°C.

2. A composition according to claim 1 comprising from about 4 to about 28 % R-744 by weight, or from about 8 to about 30 % R-744 by weight, or from about 10 to about 30 % R-744 by weight.

3. A composition according to claim 1 or 2 comprising up to about 50 % by weight of the third component.

4. A composition according to any of claims 1 to 3 wherein the third component comprises from about 2 to about 30 % by weight R-32.

5. A composition according to claim 4 comprising from about 60 to about 91 % by weight R-1234ze(E), from about 4 to about 30 % by weight R-744 and from about 5 to about 30 % by weight R-32.

6. A composition according to claim 5 comprising from about 58 to about 85 % R-1234ze(E), from about 10 to about 28 % by weight R-744 and from about 5 to about 30 % by weight R-32.

7. A composition according to claim 4 comprising from about 50 to about 88 % by weight R-1234ze(E), from about 4 to about 30 % by weight R-744 and from about 2 to about 20 % by weight R-32.

8. A composition according to any of claims 1 to 3 wherein the third component further comprises R-134a.

9. A composition according to claim 8 comprising from about 10 to about 96 % by weight R-1234ze(E), from about 4 to about 30 % by weight R-744, from about 2 to about 30 % by weight R-32 and from about 2 to about 50 by weight R-134a, preferably comprising from about 10 to about 92 % by weight R-1234ze(E), from about 4 to about 30 % by weight R-744, from about 2 to about 25 % by weight R-32 and from about 2 to about 40 % by weight R-134a.

10. A composition according to claim 8 comprising from about 30 to about 81 % by weight R-1234ze(E), from about 10 to about 30 % by weight R-744, from about 5 to about 30 % by weight R-32 and from about 4 to about 10 % by weight R-134a, preferably comprising from about 37 to about 81 % by weight R-1234ze(E), from about 10 to about 28 % by weight R-744, from about 5 to about 25 % by weight R-32 and from about 4 to about 10 % by weight R-134a.

11. A composition according to claim 8 comprising from about 10 to about 75 % by weight R-1234ze(E), from about 10 to about 30 % by weight R-744, from about 5 to about 25 % by weight R-32 and from about 10 to about 50 % by weight R-134a, preferably comprising from about 10 to about 75 % by weight R-1234ze(E), from about 10 to about 28 % by weight R-744, from about 5 to about 25 % by weight R-32 and from about 10 to about 40 % by weight R-134a.

12. A composition according to any of the preceding claims consisting essentially of R-1234ze(E), R-744 and the third component.

13. A composition according to any of claims 1 to 11, further comprising pentafluoroethane (R-125).

14. A composition according to any of the preceding claims, wherein the composition is less flammable than R-32 alone or R-1234yf alone, optionally wherein the composition has:

    (a) a higher flammable limit;
    (b) a higher ignition energy; and/or
    (c) a lower flame velocity

compared to R-32 alone or R-1234yf alone, preferably wherein the composition is non-flammable.

15. A composition according to any of the preceding claims which has a fluorine ratio (F/(F+H)) of from about 0.42 to about 0.7, preferably from about 0.44 to about 0.67.

16. A composition comprising a lubricant and a composition according to any of the preceding claims, optionally wherein the lubricant Is selected from mineral oil, silicone oil, polyalkyl benzenes (PABs), polyol esters (POEs), polyalkylene glycols (PAGs), polyalkylene glycol esters (PAG esters), polyvinyl ethers (PVEs), poly (alpha-olefins) and combinations thereof.

17. A composition according to claim 16 further comprising a stabiliser, optionally, wherein the stabiliser is selected from diene-based compounds, phosphates, phenol compounds and epoxides, and mixtures thereof.

18. A composition comprising a flame retardant and a composition according to any of the preceding claims, optionally wherein the flame retardant is selected from the group consisting of tri-(2-chloroethyl)-phosphate, (chloropropyl) phosphate, tri-(2,3-dibromopropyl)-phosphate, trl-(1,3-dichloropropyl)-phosphate, diammonium phosphate, various halogenated aromatic compounds, antimony oxide, aluminium trihydrate, polyvinyl chloride, a fluorinated iodocarbon, a fluorinated bromocarbon, trifluoro iodomethane, perfluoroalkyl amines, bromo-fluoroalkyl amines and mixtures thereof.

19. A heat transfer device containing a composition as defined in any one of claims 1 to 18, optionally wherein the heat transfer device is a refrigeration device, preferably selected from the group consisting of automotive air conditioning systems residential air conditioning systems, commercial air conditioning systems, residential refrigerator systems, residential freezer systems, commercial refrigerator systems, commercial freezer systems, chiller air conditioning systems, chiller refrigeration systems, and commercial or residential heat pump systems, preferably wherein the heat transfer device is an automobile air-conditioning system, preferably wherein the heat transfer device contains a compressor.

20. Use of a composition defined in any of claims 1 to 18 in a heat transfer device.

21. A blowing agent comprising a composition as defined in any of claims 1 to 18.

22. A foamable composition comprising one or more components capable of forming foam and a composition as defined in any of claims 1 to 18, wherein the one or more components capable of forming foam are selected from polyurethanes, thermoplastic polymers and resins, such as polystyrene, and epoxy resins, and mixtures thereof.

23. A foam comprising a composition as defined in any one of claims 1 to 18.

24. A sprayable composition comprising material to be sprayed and a propellant comprising a composition as defined in any of claims 1 to 18.

25. A method for cooling an article which comprises condensing a composition defined in any of claims 1 to 18 and thereafter evaporating the composition in the vicinity of the article to be cooled.

26. A method for heating an article which comprises condensing a composition as defined in any one of claims 1 to 18 in the vicinity of the article to be heated and thereafter evaporating the composition.

27. A method for extracting a substance from biomass comprising contacting the biomass with a solvent comprising a composition as defined in any of claims 1 to 16, and separating the substance from the solvent.

28. A method of cleaning an article comprising contacting the article with a solvent comprising a composition as defined in any of claims 1 to 18.

29. A method of extracting a material from an aqueous solution or a particulate solid matrix comprising contacting the aqueous solution or the matrix with a solvent comprising a composition as defined in any of claims 1 to 18, and separating the material from the solvent.

30. A mechanical power generation device containing a composition as defined in any of claims 1 to 18, optionally wherein the mechanical power generating device is adapted to use a Rankine Cycle or modification thereof to generate work from heat.

31. A method of retrofitting a heat transfer device comprising the step of removing an existing heat transfer fluid, and introducing a composition as defined in any of claims 1 to 18, optionally wherein the heat transfer device is a refrigeration device, preferably wherein the heat transfer device is an air conditioning system.

32. A method for reducing the environmental impact arising from the operation of a product comprising an existing compound or composition, the method comprising replacing at least partially the existing compound or composition with a composition as defined in any of claims 1 to 18, optionally wherein the product is selected from a heat transfer device, a blowing agent, a foamable composition, a sprayable composition, a solvent or a mechanical power generation device, optionally wherein the product is a heat transfer device, optionally wherein the existing compound or composition is a heat transfer composition, preferably wherein the heat transfer composition is a refrigerant selected from R-134a, R-1234yf, R-152a, R-404A, R-410A, R-507, R-407A, R-407B, R-407D, R-407E and R-407F.

33. A method for preparing a composition as defined in any of claims 1 to 18, and/or a heat transfer device as defined in claim 20, which composition or heat transfer device contains R-134a, the method comprising introducing R-1234ze(E), R-744, the third component, and optionally R-125, a lubricant, a stabiliser and/or a flame retardant, into a heat transfer device containing an existing heat transfer fluid which is R-134a, optionally comprising the step of removing at least some of the existing R-134a from the heat transfer device before introducing the R-1234ze(E), R-744, the third component, and optionally the R-125, the lubricant, the stabiliser and/or the flame retardant.

**Patentansprüche**

1. Wärmetransferzusammensetzung, die Folgendes umfasst:

   (i) etwa 10 bis etwa 95 Gew.-% *trans*-1,3,3,3-Tetrafluorpropen (R-1234ze(E));
   (ii) etwa 4 bis etwa 30 Gew.-% Kohlendioxid (R-744); und
   (iii) etwa 3 bis etwa 60 Gew.-% einer dritten Komponente, die Difluormethan (R-32) umfasst,

   und die eine kritische Temperatur von mehr als etwa 70 °C hat.

2. Zusammensetzung nach Anspruch 1, die etwa 4 bis etwa 28 Gew.-% R-744, oder etwa 8 bis etwa 30 Gew.-% R-744 oder etwa 10 bis etwa 30 Gew.-% R-744 umfasst.

3. Zusammensetzung nach Anspruch 1 oder 2, die bis zu etwa 50 Gew-% der dritten Komponente umfasst.

4. Zusammensetzung nach einem der Ansprüche 1 bis 3, wobei die dritte Komponente etwa 2 bis etwa 30 Gew.-% R-32 umfasst.

5. Zusammensetzung nach Anspruch 4, die etwa 60 bis etwa 91 Gew.-% R-1234ze(E), etwa 4 bis etwa 30 Gew.-% R-744 und etwa 5 bis etwa 30 Gew.-% R-32 umfasst.

6. Zusammensetzung nach Anspruch 5, die etwa 58 bis etwa 85 % R-1234ze(E), etwa 10 bis etwa 28 Gew.-% R-744 und etwa 5 bis etwa 30 Gew.-% R-32 umfasst.

7. Zusammensetzung nach Anspruch 4, die etwa 50 bis etwa 88 Gew.-% R-1234ze(E), etwa 4 bis etwa 30 Gew.-% R-744 und etwa 2 bis etwa 20 Gew.-% R-32 umfasst.

8. Zusammensetzung nach einem der Ansprüche 1 bis 3, wobei die dritte Komponente ferner R-134a umfasst.

9. Zusammensetzung nach Anspruch 8, die etwa 10 bis etwa 96 Gew.-% R-1234ze(E), etwa 4 bis etwa 30 Gew.-% R-744, etwa 2 bis etwa 30 Gew.-% R-32 und etwa 2 bis etwa 50 Gew.-% R-134a umfasst, und die vorzugsweise etwa 10 bis etwa 92 Gew.-% R-1234ze(E), etwa 4 bis etwa 30 Gew.-% R-744, etwa 2 bis etwa 25 Gew.-% R-32 und etwa 2 bis etwa 40 Gew.-% R-134a umfasst.

10. Zusammensetzung nach Anspruch 8, die etwa 30 bis etwa 81 Gew.-% R-1234ze(E), etwa 10 bis etwa 30 Gew.-% R-744, etwa 5 bis etwa 30 Gew.-% R-32 und etwa 4 bis etwa 10 Gew.-% R-134a umfasst, und die vorzugsweise etwa 37 bis etwa 81 Gew.-% R-1234ze(E), etwa 10 bis etwa 28 Gew.-% R-744, etwa 5 bis etwa 25 Gew.-% R-32 und etwa 4 bis etwa 10 Gew.-% R-134a umfasst.

11. Zusammensetzung nach Anspruch 8, die etwa 10 bis etwa 75 Gew.-% R-1234ze(E), etwa 10 bis etwa 30 Gew.-% R-744, etwa 5 bis etwa 25 Gew.-% R-32 und etwa 10 bis etwa 50 Gew.-% R-134a umfasst, und die vorzugsweise etwa 10 bis etwa 75 Gew.-% R-1234ze(E), etwa 10 bis etwa 28 Gew.-% R-744, etwa 5 bis etwa 25 Gew.-% R-32 und etwa 10 bis etwa 40 Gew.-% R-134a umfasst.

12. Zusammensetzung nach einem der vorherigen Ansprüche, die im Wesentlichen aus R-1234ze(E), R-744 und der dritten Komponente besteht.

13. Zusammensetzung nach einem der Ansprüche 1 bis 11, die ferner Pentafluorethan (R-125) umfasst.

14. Zusammensetzung nach einem der vorherigen Ansprüche, wobei die Zusammensetzung weniger flammbar ist als R-32 allein oder R-1234yf allein, wobei die Zusammensetzung optional Folgendes hat:

(a) eine höhere Entflammbarkeitsgrenze;
(b) eine höhere Zündenergie; und/oder
(c) eine geringere Flammengeschwindigkeit

als R-32 allein oder R-1234yf allein, wobei die Zusammensetzung vorzugsweise nicht entflammbar ist.

15. Zusammensetzung nach einem der vorherigen Ansprüche, die ein Fluorverhältnis (F/(F+H)) von etwa 0,42 bis etwa 0,7, vorzugsweise von etwa 0,44 bis etwa 0,67 hat.

16. Zusammensetzung, die ein Schmiermittel und eine Zusammensetzung nach einem der vorherigen Ansprüche umfasst, wobei das Schmiermittel optional ausgewählt ist aus Mineralöl, Silikonöl, Polyalkylbenzolen (PABs), Polyolestern (POEs), Polyalkylenglykolen (PAGs), Polyalkylenglykolestern (PAG-Estern), Polyvinylestern (PVEs), Poly(alphaolefinen) und Kombinationen davon.

17. Zusammensetzung nach Anspruch 16, die ferner einen Stabilisator umfasst, wobei der Stabilisator optional ausgewählt ist aus Dien-basierten Verbindungen, Phosphaten, Phenolverbindungen und Epoxiden sowie Gemischen davon.

18. Zusammensetzung, die ein Flammverzögerungsmittel umfasst, und Zusammensetzung nach einem der vorherigen Ansprüche, wobei das Flammverzögerungsmittel optional ausgewählt ist aus der Gruppe bestehend aus Tri-(2-chlorethyl)-phosphat, (Chlorpropyl)phosphat, Tri-(2,3-dibrompropyl)-phosphat, Tri-(1,3-dichlorpropyl)-phosphat, Diammoniumphosphat, verschiedenen halogenierten aromatischen Verbindungen, Antimonoxid, Aluminiumtrihydrat, Polyvinylchlorid, einem fluorierten Iodkohlenstoff, einem fluorierten Bromkohlenstoff, Trifluoriodmethan, Perfluoralkylaminen, Bromfluoralkylaminen und Gemischen davon.

19. Wärmetransfervorrichtung, die eine Zusammensetzung nach einem der Ansprüche 1 bis 18 enthält, wobei die Wärmetransfervorrichtung optional eine Kühlvorrichtung ist, vorzugsweise ausgewählt aus der Gruppe bestehend aus Fahrzeugklimaanlagen, Heimklimaanlagen, Gewerbeklimaanlagen, Heimkühlanlagen, Heimgefrieranlagen, Gewerbekühlanlagen, Gewerbegefrieranlagen, Chiller-Klimaanlagen, Chiller-Kühlanlagen und Gewerbe- oder Heimwärmepumpsystemen, wobei die Wärmetransfervorrichtung vorzugsweise eine Fahrzeugklimaanlage ist, wobei die Wärmetransfervorrichtung vorzugsweise einen Kompressor enthält.

20. Verwendung einer Zusammensetzung nach einem der Ansprüche 1 bis 18 in einer Wärmetransfervorrichtung.

21. Treibmittel, das eine Zusammensetzung nach einem der Ansprüche 1 bis 18 umfasst.

22. Aufschäumbare Zusammensetzung, die eine oder mehrere Komponenten, die einen Schaum bilden können, und eine Zusammensetzung nach einem der Ansprüche 1 bis 18 beinhaltet, wobei die eine oder mehreren Komponenten, die einen Schaum bilden können, ausgewählt sind aus Polyurethanen, thermoplastischen Polymeren und Harzen, wie Polystyrol, und Epoxidharzen und Gemischen davon.

23. Schaumstoff, der eine Zusammensetzung nach einem der Ansprüche 1 bis 18 umfasst.

24. Sprühbare Zusammensetzung, die zu sprühendes Material und einen Treibstoff umfasst, der eine Zusammensetzung nach einem der Ansprüche 1 bis 18 umfasst.

25. Verfahren zum Kühlen eines Gegenstands, das das Kondensieren einer Zusammensetzung nach einem der Ansprüche 1 bis 18 und danach das Verdampfen der Zusammensetzung in der Nähe des zu kühlenden Gegenstands umfasst.

26. Verfahren zum Erhitzen eines Gegenstands, das das Kondensieren einer Zusammensetzung nach einem der Ansprüche 1 bis 18 in der Nähe des zu erhitzenden Gegenstands und danach das Verdampfen der Zusammensetzung umfasst.

27. Verfahren zum Extrahieren einer Substanz aus Biomasse, das das Inkontaktbringen der Biomasse mit einem Lösungsmittel, das eine Zusammensetzung nach einem der Ansprüche 1 bis 18 umfasst, und das Abscheiden der Substanz von dem Lösungsmittel umfasst.

28. Verfahren zum Reinigen eines Gegenstands, das das Inkontaktbringen des Artikels mit einem Lösungsmittel umfasst, das eine Zusammensetzung nach einem der Ansprüche 1 bis 18 umfasst.

29. Verfahren zum Extrahieren eines Materials aus einer wässrigen Lösung oder einer partikelförmigen Feststoffmatrix, das das Inkontaktbringen der wässrigen Lösung oder der Matrix mit einem Lösungsmittel, das eine Zusammensetzung nach einem der Ansprüche 1 bis 18 umfasst, und das Abscheiden des Materials von dem Lösungsmittel umfasst.

30. Vorrichtung zum Erzeugen von mechanischer Leistung, die eine Zusammensetzung nach einem der Ansprüche 1 bis 18 enthält, wobei die Vorrichtung zum Erzeugen von mechanischer Leistung optional so ausgelegt ist, dass sie einen Rankine-Zyklus oder eine Modifikation davon zum Erzeugen von Arbeit aus Wärme benutzt.

31. Verfahren zum Nachrüsten einer Wärmetransfervorrichtung, das den Schritt des Entfernens eines existierenden Wärmetransferfluids und des Einleitens einer Zusammensetzung nach einem der Ansprüche 1 bis 18 umfasst, wobei die Wärmetransfervorrichtung optional eine Kühlvorrichtung ist, wobei die Wärmetransfervorrichtung vorzugsweise eine Klimaanlage ist.

32. Verfahren zum Reduzieren des Umwelteinflusses, der aus dem Betrieb eines Produkts entsteht, das eine existierende Verbindung oder Zusammensetzung umfasst, wobei das Verfahren das Ersetzen wenigstens eines Teils der vorhandenen Verbindung oder Zusammensetzung durch eine Zusammensetzung nach einem der Ansprüche 1 bis 18 beinhaltet, wobei das Produkt optional ausgewählt ist aus einer Wärmetransfervorrichtung, einem Treibmittel, einer aufschäumbaren Zusammensetzung, einer sprühbaren Zusammensetzung, einem Lösungsmittel oder einer Vorrichtung zum Erzeugen von mechanischer Leistung, wobei das Produkt optional eine Wärmetransfervorrichtung ist, wobei die vorhandene Verbindung oder Zusammensetzung optional eine Wärmetransferzusammensetzung ist, wobei die Wärmetransferzusammensetzung vorzugsweise ein Kältemittel ist, das aus R-134a, R-1234yf, R-152a, R-404A, R-410A, R-507, R-407A, R-407B, R-407D, R407E und R-407F ausgewählt ist.

33. Verfahren zum Herstellen einer Zusammensetzung nach einem der Ansprüche 1 bis 18 und/oder einer Wärmetransfervorrichtung nach Anspruch 20, wobei die Zusammensetzung oder Wärmetransfervorrichtung R-134a enthält, wobei das Verfahren das Einleiten von R-1234ze(E), R-744, der dritten Komponente und optional R-125, einem Schmiermittel, einem Stabilisator und/oder einem Flammverzögerungsmittel in eine Wärmetransfervorrichtung beinhaltet, die ein vorhandenes Wärmetransferfluid enthält, das R-134a ist, und optional den Schritt des Entfernens wenigstens eines Teils des vorhandenen R-134a aus der Wärmetransfervorrichtung vor dem Einleiten des R-1234ze(E), R-744, der dritten Komponente und optional des R-125, des Schmiermittels, des Stabilisators und/oder des Flammverzögerungsmittels umfasst.

## Revendications

1. Composition de transfert de chaleur comprenant :

   (i) entre environ 10 et environ 95 % en poids de *trans*-1,3,3,3-tétrafluoropropène (R-1234ze(E)) ;
   (ii) entre environ 4 et environ 30 % en poids de dioxyde de carbone (R-744) ; et
   (iii) entre environ 3 et environ 60 % en poids d'un troisième composant comprenant du difluorométhane (R-32),

   et ayant une température critique supérieure à 70 °C environ.

2. Composition selon la revendication 1 comprenant entre environ 4 et environ 28 % en poids de R-744, ou entre environ 8 et environ 30 % en poids de R-744, ou entre environ 10 et environ 30 % en poids de R-744.

3. Composition selon la revendication 1 ou 2 comprenant jusqu'à environ 50 % en poids du troisième composant.

4. Composition selon l'une quelconque des revendications 1 à 3, dans laquelle le troisième composant comprend entre environ 2 et environ 30 % en poids de R-32.

5. Composition selon la revendication 4 comprenant entre environ 60 et environ 91 % en poids de R-1234ze(E), entre environ 4 et environ 30 % en poids de R-744 et entre environ 5 et environ 30 % en poids de R-32.

6. Composition selon la revendication 5 comprenant entre environ 58 et environ 85 % en poids de R-1234ze(E), entre environ 10 et environ 28 % en poids de R-744 et entre environ 5 et environ 30 % en poids de R-32.

7. Composition selon la revendication 4 comprenant entre environ 50 et environ 88 % en poids de R-1234ze(E), entre environ 4 et environ 30 % en poids de R-744 et entre environ 2 et environ 20 % en poids de R-32.

8. Composition selon l'une quelconque des revendications 1 à 3, dans laquelle le troisième composant comprend en outre du R-134a.

9. Composition selon la revendication 8 comprenant entre environ 10 et environ 95 % en poids de R-1234ze(E), entre environ 4 et environ 30 % en poids de R-744, entre environ 2 et environ 30 % en poids de R-32 et entre environ 2 et environ 50 % en poids de R-134a, de préférence comprenant entre environ 10 et environ 92 % en poids de R-1234ze(E), entre environ 4 et environ 30 % en poids de R-744, entre environ 2 et environ 25 % en poids de R-32 et entre environ 2 et environ 40 % en poids de R-134a.

10. Composition selon la revendication 8 comprenant entre environ 30 et environ 81 % en poids de R-1234ze(E), entre environ 10 et environ 30 % en poids de R-744, entre environ 5 et environ 30 % en poids de R-32 et entre environ 4 et environ 10 % en poids de R-134a, de préférence comprenant entre environ 37 et environ 81 % en poids de R-1234ze(E), entre environ 10 et environ 28 % en poids de R-744, entre environ 5 et environ 25 % en poids de R-32 et entre environ 4 et environ 10 % en poids de R-134a.

11. Composition selon la revendication 8 comprenant entre environ 10 et environ 75 % en poids de R-1234ze(E), entre environ 10 et environ 30 % en poids de R-744, entre environ 5 et environ 25 % en poids de R-32 et entre environ 10 et environ 50 % en poids de R-134a, de préférence comprenant entre environ 10 et environ 75 % en poids de R-1234ze(E), entre environ 10 et environ 28 % en poids de R-744, entre environ 5 et environ 25 % en poids de R-32 et entre environ 10 et environ 40 % en poids de R-134a.

12. Composition selon l'une quelconque des revendications précédentes, comprenant principalement du R-1234ze(E), du R-744 et le troisième composant.

13. Composition selon l'une quelconque des revendications 1 à 11, comprenant en outre du pentafluoroéthane (R-125).

14. Composition selon l'une quelconque des revendications précédentes, laquelle composition est moins inflammable que le R-32 seul ou le R-1234yf seul, laquelle composition a facultativement :

   (a) une limite d'inflammabilité supérieure ;
   (b) une énergie d'inflammation supérieure ; et/ou
   (c) une vélocité de flamme inférieure

par rapport au R-32 seul ou au R-1234yf seul, laquelle composition est de préférence non inflammable.

15. Composition selon l'une quelconque des revendications précédentes, qui a un rapport du fluor (F/(F+H)) compris entre environ 0,42 et environ 0,7, de préférence entre environ 0,44 et environ 0,67.

16. Composition comprenant un lubrifiant et une composition selon l'une quelconque des revendications précédentes, dans laquelle le lubrifiant est facultativement choisi parmi l'huile minérale, l'huile de silicone, les polyalkylbenzènes (PAB), les esters de polyol (POE), les polyalkylène glycols (PAG), les esters de polyalkylène glycol (esters PAG), les éthers de polyvinyle (PVE), les poly(alpha-oléfines) et leurs combinaisons.

17. Composition selon la revendication 16 comprenant en outre un stabilisateur, dans laquelle le stabilisateur est facultativement choisi parmi les composés à base de diène, les phosphates, les composés phénolés et les époxydes, et leurs mélanges.

**18.** Composition comprenant un ignifugeant et une composition selon l'une quelconque des revendications précédentes, dans laquelle l'ignifugeant est facultativement choisi dans le groupe constitué par le tri-(2-chloroéthyl)-phosphate, le phosphate de chloropropyle, le tri-(2,3-dibromopropyl)-phosphate, le tri-(1,3-dichloropropyl)-phosphate, le phosphate de diammonium, plusieurs composés aromatiques halogénés, l'oxyde d'antimoine, le trihydrate d'alumine, le polychlorure de vinyle, un iodocarbone fluoré, un bromocarbone fluoré, le trifluoro-iodométhane, les amines perfluoroalkylées, les amines bromofluoroalkylées et leurs mélanges.

**19.** Dispositif de transfert de chaleur contenant une composition selon l'une quelconque des revendications 1 à 18, lequel dispositif de transfert de chaleur est facultativement un dispositif de réfrigération, de préférence choisi dans le groupe constitué par les systèmes de climatisation automobiles, les systèmes de climatisation domestiques, les systèmes de climatisation commerciaux, les systèmes de réfrigération domestiques, les systèmes de congélation domestiques, les systèmes de réfrigération commerciaux, les systèmes de congélation commerciaux, les systèmes de climatisation par refroidisseur, les systèmes de réfrigération par refroidisseur et les systèmes de pompe à chaleur commerciaux ou domestiques, lequel dispositif de transfert de chaleur est de préférence un système de climatisation automobile, lequel dispositif de transfert de chaleur contient de préférence un compresseur.

**20.** Utilisation d'une composition selon l'une quelconque des revendications 1 à 18 dans un dispositif de transfert de chaleur.

**21.** Agent d'expansion comprenant une composition selon l'une quelconque des revendications 1 à 18.

**22.** Composition expansible comprenant un ou plusieurs composants capables de former de la mousse et une composition selon l'une quelconque des revendications 1 à 18, dans laquelle le ou les composants capables de former de la mousse sont choisis parmi les polyuréthanes, les polymères et les résines thermoplastiques, notamment le polystyrène, les résines époxydes, et leurs mélanges.

**23.** Mousse comprenant une composition selon l'une quelconque des revendications 1 à 18.

**24.** Composition pulvérisable comprenant une matière à pulvériser et un propulseur comprenant une composition selon l'une quelconque des revendications 1 à 18.

**25.** Procédé de refroidissement d'un article comprenant la condensation d'une composition selon l'une quelconque des revendications 1 à 18 puis l'évaporation de la composition à proximité de l'article à refroidir.

**26.** Procédé de chauffage d'un article comprenant la condensation d'une composition selon l'une quelconque des revendications 1 à 18 à proximité de l'article à refroidir puis l'évaporation de la composition.

**27.** Procédé d'extraction d'une substance à partir de la biomasse comprenant la mise en contact de la biomasse avec un solvant comprenant une composition selon l'une quelconque des revendications 1 à 18, et la séparation de la substance et du solvant.

**28.** Procédé de nettoyage d'un article comprenant la mise en contact de l'article avec un solvant comprenant une composition selon l'une quelconque des revendications 1 à 18.

**29.** Procédé d'extraction d'une matière d'une solution aqueuse ou d'une matrice solide particulaire comprenant la mise en contact de la solution aqueuse ou de la matrice avec un solvant comprenant une composition selon l'une quelconque des revendications 1 à 18, et la séparation de la matière et du solvant.

**30.** Dispositif de production d'énergie mécanique contenant une composition selon l'une quelconque des revendications 1 à 18, lequel dispositif de production d'énergie mécanique est facultativement adapté pour utiliser un cycle de Rankine ou une de ses variantes pour produire un travail à partir de la chaleur.

**31.** Procédé de post-équipement d'un dispositif de transfert de chaleur comprenant l'étape d'élimination d'un liquide de transfert de chaleur existant et l'introduction d'une composition selon l'une quelconque des revendications 1 à 18, dans lequel le dispositif de transfert de chaleur est facultativement un dispositif de réfrigération, dans lequel le dispositif de transfert de chaleur est de préférence un système de climatisation.

**32.** Procédé de réduction de l'impact environnemental dû au fonctionnement d'n produit comprenant un composé ou une composition existant(e), le procédé comprenant le remplacement d'au moins une partie du composé ou de la composition existant(e) par une composition selon l'une quelconque des revendications 1 à 18, dans lequel le produit est facultativement choisi parmi un dispositif de transfert de chaleur, un agent d'expansion, une composition expansible, une composition pulvérisable, un solvant ou un dispositif de production d'énergie mécanique, dans lequel le produit est facultativement un dispositif de transfert de chaleur, dans lequel le composé ou la composition existant(e) est facultativement une composition de transfert de chaleur, dans lequel la composition de transfert de chaleur est de préférence un réfrigérant choisi parmi R-134a, R-1234yf, R-152a, R-404A, R-410A, R-507, R-407A, R-407B, R-407D, R-407E et R-407F.

33. Procédé de préparation d'une composition selon l'une quelconque des revendications 1 à 18, et/ou d'un dispositif de transfert de chaleur selon la revendication 20, laquelle composition ou lequel dispositif de transfert de chaleur contient du R-134a, le procédé comprenant l'introduction de R-1234ze(E), de R-744, du troisième composant et facultativement de R-125, d'un lubrifiant, d'un stabilisateur et/ou d'un ignifugeant, dans un dispositif de transfert de chaleur contenant un liquide de transfert de chaleur existant qui est le R-134a, comprenant facultativement l'étape d'élimination d'au moins une partie du R-134a existant du dispositif de transfert de chaleur avant d'introduire le R-1234ze(E), le R-744, le troisième composant et facultativement le R-125, le lubrifiant, le stabilisateur et/ou l'ignifugeant.

Heating COP of $CO_2$/R134a/R1234ze(E) mixtures legend shows R134a content w/w basis

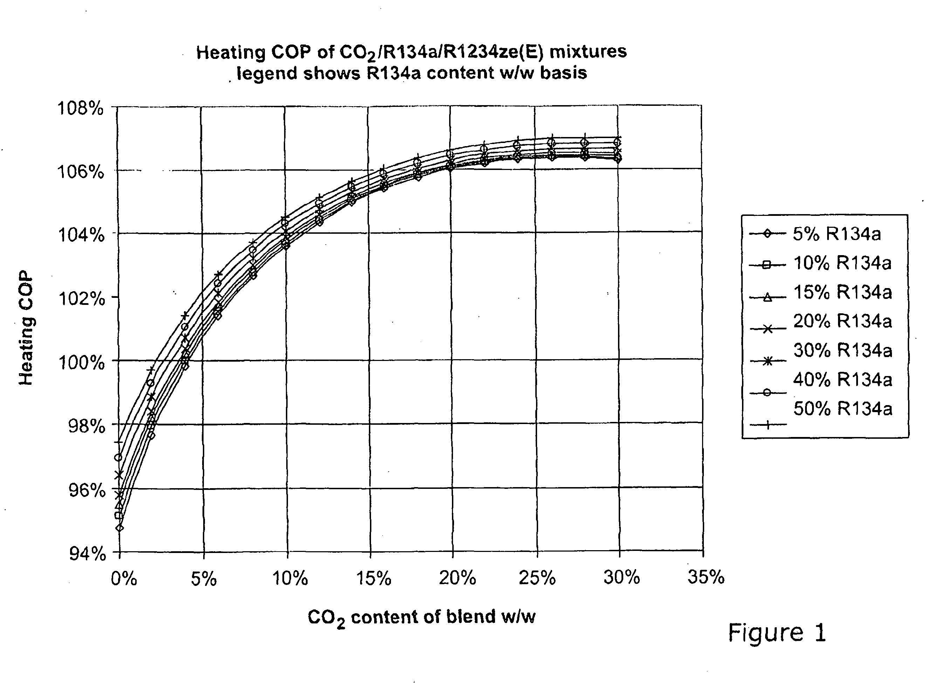

Figure 1

Heating COP of $CO_2$/R32/R1234ze(E) mixtures
legend shows R32 content w/w basis

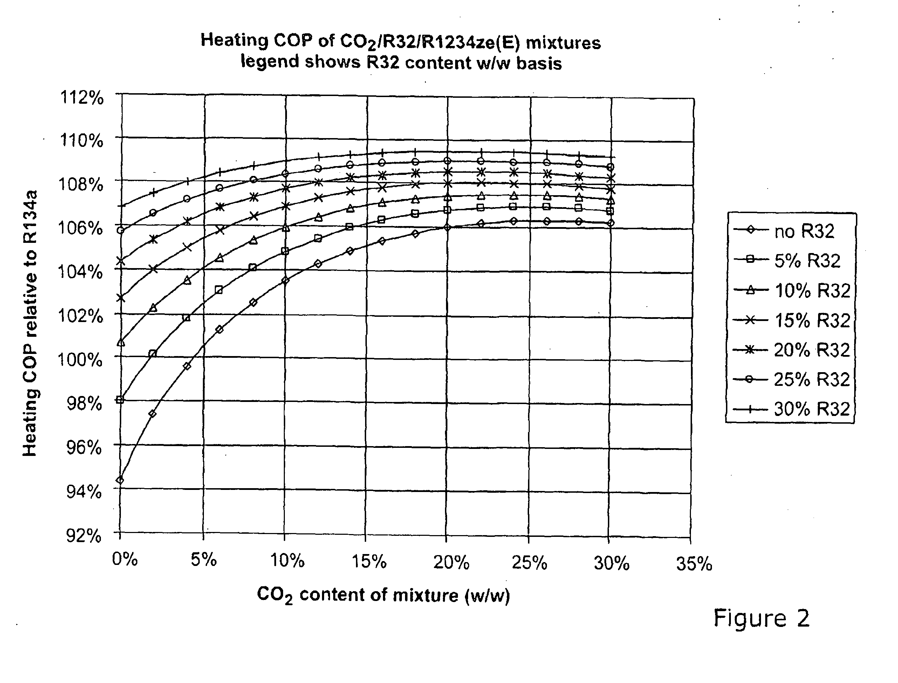

Figure 2

EP 2 571 956 B1

Heating Capacity of $CO_2$/R32/R1234ze(E) mixtures
legend shows R32 content w/w basis

- no R32
- 5% R32
- 10% R32
- 15% R32
- 20% R32
- 25% R32
- 30% R32

Heating Capacity relative to R134a

400%
350%
300%
250%
200%
150%
100%
50%

0%  5%  10%  15%  20%  25%  30%  35%

$CO_2$ content of mixture (w/w)

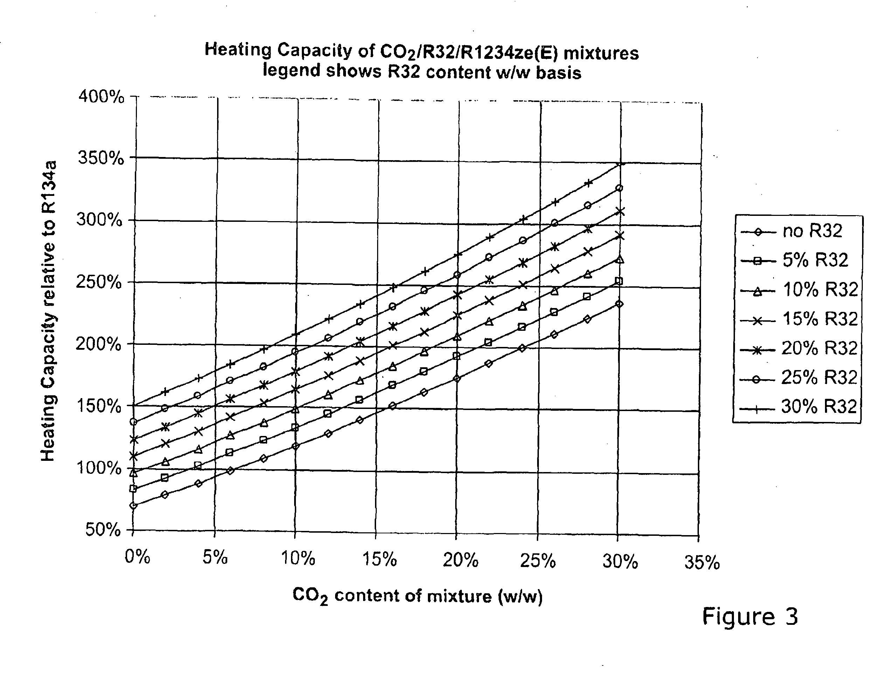

Figure 3

**EP 2 571 956 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009253820 A
- US 2010044619 A
- US 2010025619 A
- US 2006043331 A
- EP 1832640 A
- US 2008099190 A
- WO 2007053697 A

### Non-patent literature cited in the description

- **AD ALTHOUSE et al.** Modern Refrigeration and Air Conditioning. 1988
- **TAKIZAWA et al.** Reaction Stoichiometry for Combustion of Fluoroethane Blends. *ASHRAE Transactions,* 2006, vol. 112 (2
- **R. AKASAKA.** Applications of the simple multi-fluid model to correlations of the vapour-liquid equilibrium of refrigerant mixtures containing carbon dioxide. *Journal of Thermal Science and Technology,* 2009, vol. 159-168 (4), 1
- **R RADERMACHER ; Y HWAN.** Vapor Compression Heat Pumps with refrigerant mixtures. Taylor & Francis, 2005